(19) Europäisches Patentamt
European Patent Office
Office européen des brevets

(11) **EP 2 177 111 A1**

(12) **EUROPEAN PATENT APPLICATION**
published in accordance with Art. 153(4) EPC

(43) Date of publication:
**21.04.2010 Bulletin 2010/16**

(21) Application number: **08790827.3**

(22) Date of filing: **02.07.2008**

(51) Int Cl.:
*A23L 1/03* (2006.01)          *A23C 20/00* (2006.01)
*A23D 7/00* (2006.01)          *A23L 1/19* (2006.01)
*A23L 1/24* (2006.01)          *A23L 1/307* (2006.01)
*A23L 1/31* (2006.01)

(86) International application number:
**PCT/JP2008/062023**

(87) International publication number:
**WO 2009/005107 (08.01.2009 Gazette 2009/02)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.07.2007 PCT/JP2007/063257**
**12.11.2007 JP 2007292797**
**05.06.2008 JP 2008148026**
**05.06.2008 JP 2008148027**

(71) Applicant: **San-Ei Gen F.F.I., INC.**
**Toyonaka-shi, Osaka 561-8588 (JP)**

(72) Inventors:
• **HOSOMI, Tomohiro**
**Toyonaka-shi**
**Osaka 561-8588 (JP)**
• **MITSUNAGA, Kenshi**
**Toyonaka-shi**
**Osaka 561-8588 (JP)**
• **IWAI, Kazumi**
**Toyonaka-shi**
**Osaka 561-8588 (JP)**
• **TOMITA, Chihiro**
**Toyonaka-shi**
**Osaka 561-8588 (JP)**
• **ITO, Daisaku**
**Toyonaka-shi**
**Osaka 561-8588 (JP)**
• **KONDA, Takashi**
**Toyonaka-shi**
**Osaka 561-8588 (JP)**

• **MURAMORI, Kyoko**
**Toyonaka-shi**
**Osaka 561-8588 (JP)**
• **OSHITA, Juri**
**Toyonaka-shi**
**Osaka 561-8588 (JP)**
• **HIRAI, Chiharu**
**Toyonaka-shi**
**Osaka 561-8588 (JP)**
• **NAGAYASU, Keiko**
**Toyonaka-shi**
**Osaka 561-8588 (JP)**
• **WADA, Satoru**
**Toyonaka-shi**
**Osaka 561-8588 (JP)**
• **TOYOIZUMI, Satoshi**
**Toyonaka-shi**
**Osaka 561-8588 (JP)**
• **FUJITA, Yasuyuki**
**Toyonaka-shi**
**Osaka 561-8588 (JP)**
• **NAKAJIMA, Kohei**
**Toyonaka-shi**
**Osaka 561-8588 (JP)**
• **MARUOKA, Hirokazu**
**Toyonaka-shi**
**Osaka 561-8588 (JP)**
• **MIYAWAKI, Aya**
**Toyonaka-shi**
**Osaka 561-8588 (JP)**

(74) Representative: **Müller-Boré & Partner**
**Patentanwälte**
**Grafinger Strasse 2**
**81671 München (DE)**

(54) **PROCESSED FOOD COMPOSITION CONTAINING DEXTRIN**

(57)      The present invention relates to a processed food or beverage composition containing a dextrin having the following characteristics (a) to (d): (a) the dextrin has a blue value within the range of 0.4 to 1.2, (b) having a gel strength of 4 N/cm$^2$ or more as measured after being dissolved in distilled water at 80°C to prepare a 30 wt%

EP 2 177 111 A1

aqueous solution of the dextrin, and then being allowed to stand at 5˚C for 24 hours, (c) having a viscosity of 100 mPa·s or less as measured after being dissolved in distilled water at 25˚C to prepare a 30 wt% aqueous solution of the dextrin, and then being allowed to stand at 25˚C for five minutes; and (d) the ratio (A/B) of the following gel strengths A and B being 2 or less: A: a gel strength (N/cm$^2$) as measured after being dissolved in distilled water at 80˚C to prepare a 30 wt% aqueous solution of the dextrin, and then being allowed to stand at 5˚C for 24 hours, and B: a gel strength (N/cm$^2$) as measured

after being dissolved in distilled water at 25˚C to prepare a 30 wt% aqueous solution of the dextrin, and then being allowed to stand at 5˚C for 24 hours. Examples of the processed food or beverage composition to which the present invention is directed include: fatty tissue substitutes; processed meat foods prepared using the fatty tissue substitutes in place of fat tissue; emulsion-like foods; emulsion foods; cheese-like foods; processed foods which are prepared using the cheese-like foods in place of cheeses; sugar confectioneries; and beverages.

**Description**

TECHNICAL FIELD

The present invention relates to processed food (hereinafter, the term food includes foods and beverages) compositions which contain a dextrin having a specific characteristic. The processed food compositions to which the present invention is directed include fatty tissue substitutes; processed meat foods prepared using the fatty tissue substitutes in place of fatty tissue; emulsion-like foods; emulsion foods; cheese-like foods; processed foods prepared using the cheese-like foods in place of cheeses; sugar confectioneries; and beverages. Note that the emulsion foods include emulsion seasonings; spreads; desserts containing a milk-derived material or vegetable oils and fats, such as puddings (including neutral puddings; and acidic puddings such as fruit juice-containing puddings, cheese-containing puddings and the like), almond jellies, Bavarian creams, pastry creams, custards, mousses and the like; yogurts; frozen desserts such as ice creams, ice milks (low-fat ice creams), lacto-ices (another class of low-fat ice creams in Japan), ice confectioneries and the like; and whipped creams.

BACKGROUND ART

Conventionally, there has been a demand for low-calorie foods having a reduced oils and fats content in view of trends toward health consciousness and prevention of lifestyle diseases.

Attempts have been conventionally made to reduce the fat and cholesterol contents of processed meat foods containing fatty meat, such as, for example, sausage, ham, bacon, salami, meatloaf, hamburg steak (a kind of Salisbury steak in Japan), patty and the like.

As an example of the aforementioned processed meat foods, Patent Document 1 describes a processed meat food in which a meat phase and an aqueous phase including a gelled micro-phase are present as separate phases or a continuous phase. Here, the aqueous phase is formed from at least two gelling agents having a gel melting temperature of 40°C or more and less than 150°C. Examples of one of the two gelling agents include hydrocarbon gelling agents, such as pectin, alginates, carrageenans, hydrolyzed starches and the like. Examples of the other gelling agent include chemically-modified starches, cross-linked starches, hydrolyzed starches, celluloses, cellulose derivatives, and debranched dextrins with a DE of less than five (e.g., "Paselli SA2, N-Oils and fats" etc.). As shown in Experimental Example 1 described later (see existing products 1 and 2), the debranched dextrins ("Paselli SA2, N-Oils and fats") described in Patent Document 1 both have a blue value (a) exceeding 1.2, and a viscosity (25°C) significantly exceeding 100 mPa·s, where the viscosity is a viscosity of a 30 wt% aqueous solution thereof which is prepared using distilled water at 25°C as measured five minutes after the preparation. When a processed meat food is prepared using these dextrins, the viscosity may become higher than necessary during dissolution of the dextrins, which may make it difficult to prepare the food, or the dissolved dextrins may cause during eating of the food after being heated, resulting in lack of natural juiciness.

Also, mayonnaises, dressings and the like are known as emulsion foods which are oils and fats-in-water emulsions. These emulsion foods have specific smoothness, robustness, creaminess, and glossiness, and also have a cloudy appearance.

Also for these emulsion foods, attempts have been conventionally made to reduce the oils and fats content. For example, Patent Document 2 describes that a starch with an amylose content of as high as 40 to 70% is used to prepare fat spread substitutes (fat content: 0 to 30 wt%) mimicking butters, margarines and the like. The starch described in Patent Document 2 has an amylose content (40 to 70 wt%) which corresponds to a blue value (a) of more than 1.2. In this point, the starch described in Patent Document 2 is different from a dextrin used in the present invention. The starch cannot provide robustness or smoothness specific to oils and fats. Moreover, emulsion foods which are prepared using the starch have a gritty mouthfeel or the like, which is different from the mouthfeel of emulsion foods, such as fat spreads and the like.

Patent Documents 3 and 4 describe emulsion foods, such as mayonnaises, dressings, margarines, ice creams and the like, which are prepared using a dextrin (tapioca dextrin), an acid-modified starch or' an enzyme-modified starch in place of the whole or a part of the oils and a fats content. However, none of the documents describes a food product which is prepared using the dextrin or starch and without using oils and fats and has an appearance and a mouthfeel similar to those of emulsion foods.

Patent Documents 5 to 8 describe emulsion foods, such as low-calorie mayonnaises, dressings, margarines, ice creams and the like, which are prepared using a branched dextrin and various polysaccharides. However, none of these documents describes the dextrin of the present invention which has a specific characteristic.

Branched dextrins used in Patent Documents 5 and 6 are recognized as dextrins comparable to Pinedex No. 100 (manufactured by Matsutani Chemical Industry Co., Ltd.) (existing product 3 in Experimental Example 1), according to their production methods or characteristic features. As shown in Experimental Examples 7 and 8 described later, the branched dextrins are not suitable for preparation of fat-free mayonnaises and low-fat mayonnaises.

A branched dextrin used in Patent Document 7 is a dextrin which is joined with alkenyl succinic acid by an ester bond, and has a structure different from that of the dextrin of the present invention. A non-fat mayonnaise which is prepared using the branched dextrin described in Patent Document 7 does not have sufficient shape retentivity or oils and fats enriched properties, and therefore, cannot mimic ordinary mayonnaise. Also, when a low-fat mayonnaise is prepared, then if the content of oils and fats is 50 wt% or less, or is still reduced to 15 wt% or less, sufficient shape retentivity and fattiness are not obtained, so that the low-fat mayonnaise cannot mimic ordinary mayonnaise.

A dextrin described in Patent Document 8 provides lower oils and fats enriched properties than that which is obtained when the dextrin of the present invention is used, and also provides a gritty mouthfeel or a sticky mouthfeel.

Also, mayonnaises are emulsions containing an edible oils and fats at a concentration of as high as about 65 to 80 wt% with respect to the total weight. Emulsions having such a high oils and fats concentration are in a state in which adjacent oil drops contact each other, i.e., a closest packed state. Therefore, the emulsions have a viscosity of as high as 50,000 mPa·s or more in the absence of a thickening agent, such as a starch, a gum substance or the like. On the other hand, a variety of low-fat mayonnaise-like seasonings has been conventionally studied so as to reduce fat and oil. However, oil drops of these low-fat mayonnaise-like seasonings do not have the closest packed state, resulting in a decrease in viscosity and therefore a liquid emulsion. Therefore, a viscosity, a mouthfeel and oils and fats enriched properties specific to mayonnaise cannot be obtained. Also, an increase in the amount of a thickening agent added so as to impart the mayonnaise-specific viscosity or mouthfeel leads to degradation in melting in the mouth, an increase in stickiness or spinnability, and the like, i.e., a mouthfeel different from that of mayonnaise.

Also, there is a demand for calorie-reduced cheeses. Low-fat and fat-free cheese-like foods are being developed.

For example, Patent Document 9 discloses an imitation cheese product in which caseinate contained in cheese is replaced with a previously gelatinized high amylose starch having an amylose content of at least 40% by weight, its derivative, its modified product, its modified derivative product, its cross-linked product or the like. Here, a dextrin having a calcium chloride water fluidity of about 50 or less is described as an example of the high amylose modified starch product, and a dextrin having an ABF value of more than 4 is described as an example of the previously gelatinized high amylose starch. However, if the starch described in Patent Document 9 is used to try to prepare a cheese-like food, the resultant product does not have cheese-specific shape retentivity or a cheese-specific body characteristic, and has a starch-specific sticky mouthfeel or gritty or non-smooth mouthfeel.

Also, Patent Document 10 describes that if 0.25 to 1.0 wt% of a maltodextrin is added to a food product, a cheese-specific flavor, mouthfeel and melting characteristic can be imparted to the product. However, this food product is **characterized in that** 42 to 48% of a skimmed milk cheese is used in combination therewith. Also, the dextrin used in Patent Document 10 is "Paselli SA2 (existing product 1 in Experimental Example 1)," which has a blue value (a) exceeding 1.2 and a viscosity (25°C) significantly exceeding 100 mPa·s, where the viscosity is a viscosity of a 30 wt% aqueous solution thereof is prepared using distilled water at 25°C as measured five minutes after the preparation. In this point, the dextrin used in Patent Document 10 is different from the dextrin used in the present invention. Therefore, a cheese-like food which is prepared using the dextrin used in Patent Document 10 does not have good taste of fat and oil, resulting in a lack of cheese-specific robustness (body).

Also, as cheeses to which a dextrin is added, soft cheeses containing 2 to 15% of a dextrin (Patent Document 11), a cheese to which a cyclodextrin is added (Patent Document 12), and a cheese containing a tapioca dextrin (Patent Document 13) have been proposed. However, the dextrin described in Patent Document 11 has a DE of 5 to 30, which is different from that of a preferred dextrin used in the present invention (DE: 3.5 to 4.5).

Also, the dextrin described in Patent Document 12 is a cyclodextrin, which has a structure different from that of the dextrin of the present invention, and therefore, cannot form gel having sufficient fattiness for cheese-like foods. Also, the dextrin described in Patent Document 13 is obtained from a starch obtained by genetic modification, which does not naturally occur. In this point, the dextrin described in Patent Document 13 is different from the dextrin used in the present invention.

Therefore, when these dextrins are used to try to prepare a cheese-like food, the resultant product is in the form of a paste and lacks the cheese-specific shape retentivity. In addition, when a large amount of the dextrin is added so as to obtain the shape retentivity, the resultant product has a gritty mouthfeel and lacks a cheese-like mouthfeel. Also, when a solid cheese is prepared, the cheese has a hard gummy mouthfeel, and its hardness increases with time. Moreover, as the prices of milk-derived materials have risen, food products have been studied which contain oils and fats (e.g., vegetable oils and fats) or the like in place of milk fat of cheese. However, if the milk fat content of a cheese is reduced, the cheese becomes a paste like a cheese sauce, resulting in a lack of the cheese-specific shape retentivity. Also, a cheese-specific rich and firm mouthfeel is not obtained.

In general, cheeses are melted by heating, and this property is utilized for cooking of gratin, pizza and the like. When the dextrins or starches described in Patent Documents 10 to 13 are used, then if an obtained cheese-like food is heated, the cheese-like food is melted into a liquid state, and therefore, cheese-specific melted states caused by heating (a feel of melted cheese, stringiness of melted cheese) cannot be reproduced.

Also for desserts containing a milk-derived material or vegetable oils and fats, such as puddings, cheese desserts, almond jellies, Bavarian creams, pastry creams, custards, mousses and the like, a reduction in the content of oils and fats derived from milk or vegetable of dairy products is required due to recent trends toward health consciousness and increase in prices of milk-derived materials. However, if the content of oils and fats derived from milk or vegetable of these desserts is reduced, a smooth mouthfeel, richness, body, and shape retentivity specific to milk fats or oils and fats are significantly reduced, the amount of released moisture (syneresis) is increased, and the like, i.e., the mouthfeel, flavor and properties of the desserts are significantly affected. As a technique of imparting richness to these desserts, a technique of using a polysaccharide to improve the mouthfeel of desserts, such as almond jelly and the like is known, for example (Patent Document 14).

Specifically, Patent Document 14 describes that the addition of a polysaccharide imparts dense tissue and appropriate hardness and elasticity to desserts, such as almond jelly and the like. However, as shown in Experimental Examples 26 to 28 described later, it was found that, when conventionally known dextrins (existing products) are used to prepare puddings, richness and oils and fats enriched properties are not obtained, and conversely, problems arose in terms of mouthfeel and flavor of the desserts, such as powderiness, grittiness, starch flavor and the like.

Likewise, attempts have been made to reduce the fat and calorie of yogurt, which is a kind of dessert. To obtain a low-calorie yogurt, a carbohydrate such as sugar or the like is replaced with a low-calorie material such as a high intensity sweetener, sugar alcohol or the like, for example. On the other hand, in order to reduce fat, it is necessary to reduce the content of oils and fats (including oil and fat derived from milk). However, for yogurt, which is prepared by fermenting a milk component, the reduction in the content of oils and fats (including oil and fat derived from milk) has a significant influence on a mouthfeel or a flavor, and therefore, yogurt-specific smoothness or richness is lost, resulting in yogurt having a watery flavor. In this regard, Patent Document 15 describes fermented milk which has oils and fats enriched properties equal to or higher than that of fermented milk which is produced by a commonly used method, and which can be obtained by fermenting a material mixture for fermented milk at 30 to 39˚C, where the dissolved oxygen concentration of the mixture is 5 ppm or less. Also, Patent Document 16 describes a technique of using a processed product which is obtained by subjecting milk to a lipase treatment and/or a fermentation treatment using lactic acid bacteria, so as to compensate for powdery smell or light taste which is caused by skimmed powdered milk which is used to reduce content of oils and fats.

Also, as a technique of reducing the oils and fats content of yogurt using a dextrin, a method of using a dextrin which is prepared by hydrolyzing and debranching a starch (Patent Document 17), and a method of using a combination of a partially hydrolyzed starch (dextrin) and a milk protein (Patent Document 18), are known.

However, the method of Patent Document 15 requires a special step, such as gas replacement using inert gas, membrane separation using a deoxidation membrane, or the like. These steps are not present in an ordinary yogurt production process, and therefore, a complicated and new production line (process) needs to be introduced. Therefore, the method is not suitable for practical use. Also, the method of Patent Document 16 can improve taste or aroma, but not milk-specific richness. Moreover, the techniques described in Patent Documents 15 and 16 both have a problem that the amount of syneresis becomes more significant as the milk fat content of yogurt is reduced. Also, the dextrin described in Patent Document 17 is one which is obtained by further debranching the existing product 1 "PASWLLI SA2 (blue value: 1.42) shown in Experimental Example 1 described later. The dextrin has a problem that powderiness or grittiness becomes more significant as the degree of debranching increases. Also, it is considered that the dextrin described in Patent Document 18 has physical properties close to that of a dextrin (existing product 5) shown in Experimental Example 1 described later. Therefore, even when the dextrin is used, then if the milk fat content of yogurt is reduced, richness significantly decreases, so that a milk-specific mouthfeel or flavor cannot be obtained.

Also for frozen desserts, such as ice cream (milk solid: 15% or more, milk fat: 8% or more), ice milk (milk solid: 10% or more, milk fat: 3% or more), lacto-ice (milk solid: 3% or more), ice confectioneries (frozen desserts (milk solid content: less than 3%)) and the like, there has been a demand for a reduction in oils and fats and calorie due to recent trends toward health consciousness.

As a technique of using a dextrin relating to this, Patent Document 19 discloses a method of adding a starch decomposition product which has a viscosity of about 8 to 35 cp in a 30 wt% aqueous solution and includes saccharides (up to hexasaccharides) at a content of about 30 wt% or less, to a frozen dessert in a percentage of about 15 wt% or less. Also, Patent Document 20 discloses a method of using a pulverized amylose starch hydrolysate. Patent Document 17 discloses a method of using a dextrin which is obtained by hydrolyzing and debranching a starch. Patent Document 3 discloses a method of using a starch which has a dextrose equivalent (DE) of less than 5 and a heat flow viscosity of about 10 seconds or longer in an aqueous dispersion containing 10 to 50 wt% of starch solids at 55˚C, and forms gel having a strength of 25 g or more within 24 hours at 4˚C.

However, the dextrin of Patent Document 19 does not have a property that it is gelled when cooled after being dissolved at a high concentration, which is possessed by the dextrin used in the present invention. Also, the dextrin of Patent Document 19 cannot impart sufficient richness to frozen desserts. The dextrin disclosed in Patent Document 17 is one which is obtained by further debranching the dextrin "Paselli SA2 (blue value 1.42) (existing product 1). When the dextrin of Patent Document 17 is used to prepare a frozen dessert, the frozen dessert has starch flavor, powderiness or grittiness as described above. Also, the dextrin described in Patent Document 3 is similar to the existing product 2 described in Experimental Example 1, i.e., "Instant N-Oils and fats II" (manufactured by Nippon NSC Ltd.). When the content of oils and fats (including oil and fat derived from milk) of a frozen dessert is reduced, sufficient richness cannot be imparted to the frozen dessert, and in addition, the frozen dessert has powderiness, grittiness or the like.

Whipped cream is prepared by whipping cream (material) to demulsifying it and incorporating air into it. However, the foam state of the whipped cream is unstable. After formation of foam, moisture is released with time, so that the original mouthfeel of whipped cream is lost, or the shape retentivity is lost and therefore the commodity value is lowered when it is used as a filling material. In particular, for a whipped cream which is distributed in a frozen state and is thawed in use, moisture contained in the whipped cream is frozen and thawed, and therefore, fat globules formed as a part of the structure of the whipped cream are partially destroyed, so that moisture is significantly released. In addition, when the whipped cream is extruded after being thawed, the ability to be shaped or the melting in the mouth is lowered.

Also for whipped cream, there has been a demand for lower-calorie, lighter, and softer whipped cream as the diversity of preferences or trends toward health consciousness has recently increased. Therefore, the reduction of the oils and fats content has been studied. However, in whipped cream, oils and fats play a role in stabilizing foam. Therefore, when the oils and fats content is reduced, oils and fats-specific richness decreases and the aforementioned shape retentivity also significantly decreases. In addition, moisture release (syneresis) is likely to occur.

In order to achieve the aforementioned syneresis prevention and shape retentivity improvement of whipped cream, a polysaccharide thickener or the like is conventionally added. For example, there are a method of adding gellan gum, preferably native gellan gum, a demulsifying agent and a stable emulsifying agent (Patent Document 21), and a method of adding xanthan gum, guar gum or carboxymethyl cellulose so as to prevent syneresis (Patent Document 22). However, even when a polysaccharide thickener, such as gellan gum, xanthan gum, guar gum or the like, is added, various problems arise, such as an insufficient syneresis preventing effect, a heavy mouthfeel of whipped cream, occurrence of stickiness specific to polysaccharide thickeners, poor flavor release, and the like. There is no method capable of solving all problems, such as prevention of syneresis, maintenance of shape retentivity, and an improvement in a mouthfeel.

On the other hand, an attempt to add a dextrin to whipped cream has been made. For example, there are a frozen whipped cream to which a dextrin, a diglycerol mono-oleic acid ester and lysolecithin are blended to impart the sustainability of tissue (Patent Document 23), a whipped cream to which a starch decomposition product containing 25 wt% or more of sugar components (decasaccharide or more) is blended, where the turbidity of a 30 wt% aqueous solution thereof is 0.2 or less as measured after three days of preservation at 4°C (Patent Document 24), a foaming oil-in-water emulsion having freeze-thaw resistance, which contains a starch decomposition product having a DE within the range of 3 to 42 and an average molecular weight within the range of 400 to 9,000 (Patent Document 25), and a whipping sour cream composition which contains 2 to 10 wt% of a starch decomposition product having a DE of 1 to 7 (Patent Document 26). Also, Patent Documents 3 and 4 describe whipped products which are prepared by replacing a portion of fat and oil with an aqueous dispersion of a modified gelled starch.

However, Patent Document 23 does not describe or suggest a blue value at all, and conventional dextrins do not have the effect of prevention of syneresis or an improvement in a mouthfeel in whipped creams. Also, whereas the dextrin used in the present invention has a turbidity of more than 0.2, the dextrin described in Patent Document 24, which has a turbidity of 0.2 or less, does not have the effect of prevention of syneresis or an improvement in a mouthfeel in whipped creams. The dextrins described in Patent Documents 25 and 26 are comparable to conventionally existing "Pinedex No. 100 (manufactured by Matsutani Chemical Industry Co., Ltd.) (existing product 3 shown in Experimental Example 1) or "Paselli SA2 (manufactured by AVEBE) (existing product 1 shown in Experimental Example 1) according to the definitions of DE, average molecular weight and the like. Also, the dextrins disclosed in Patent Documents 3 and 4 are recognized as being comparable to conventionally existing "N-Oils and fats" (manufactured by Nippon NSC Ltd.), "Paselli SA2 (manufactured by AVEBE), and "C*DELIGHT MD01970 (manufactured by Cargill Japan Limited) (existing products 2, 1 and 4 shown in Experimental Example 1) according to the manufacturing method and characteristic features. However, whipped creams containing these dextrins have problems, such as occurrence of syneresis, a reduction in a mouthfeel, and the like, as shown in Experimental Example 1 described later.

Sugar confectioneries, such as soft candies, caramels, nougats, gummy candies and the like, are made of a saccharide, such as glucose, sucrose or the like, and are produced by dissolving the saccharide in water and boils and fatsing down the solution, followed by shaping (pouring) and drying or cooling. Typically, these sugar confectioneries have a soluble solid content of as high as about 75 to 95 degrees, and therefore, even when a polysaccharide thickener or a gelling agent which can be used in ordinary food products is employed, the viscosity of the solution increases, resulting in difficulty in shaping or pouring. Also, there are problems, such as that a sufficient amount of water required to dissolve a polysaccharide thickener or a gelling agent cannot be prepared, so that the polysaccharide thickener or the gelling agent is not dissolved, that reprecipitation or burning occurs during boils and fatsing down, and the like.

Therefore, there are few gelling agents applicable to sugar confectioneries. At present, examples of gelling agents used in sugar confectioneries include gelatin, carrageenans, gum arabic, pectin, agar and the like. However, for example, gelatin has a low melting point and is melted at about 30˚C, and therefore, is softened and becomes sticky when kept at high temperature, and gelatin-specific flavor is likely to affect the taste of sugar confectioneries. Carrageenans are difficult to remove moisture and require a long time to boils and fats down, has a high gelation temperature and therefore has difficulty in shaping or pouring, cannot be used within an acidic range, and the like. Pectin easily adheres to teeth. Agar, when its soluble solid content is 80 or more, is insoluble and has insufficient shape retentivity, and therefore, is brittle and easy to collapse. Moreover, as sugar confectioneries have a high soluble solid content, if gelling agents are used in combination, the viscosity increases, leading to a deterioration in workability, or one of the gelling agents inhibits gelation of the other, for example.

On the other hand, as a technique of adding a dextrin to sugar confectioneries, a method of producing a caramel by adding starch hydrolysate powder to boils and fatsed-down caramel dough (Patent Document 27), and a method of producing a gummy candy by using a dextrin and an indigestible dextrin (Patent Document 28), are known. Moreover, Patent Document 29 discloses a method of adding a maltodextrin as a hydrophilic colloid to modify the viscoelasticity and glass transition temperature of sugar confectioneries.

However, in the technique disclosed in Patent Document 27, starch hydrolysate powder is added in place of fondant (obtained by boils and fatsing down sugar corn syrup, followed by microcrystallization) used in a production process of caramel, and a dextrin is added to suppress sweetness. Also, Patent Document 28 only discloses a dextrin which is a saccharide substitute, and does not improve the physical properties or characteristics of sugar confectioneries. Likewise, also in the technique of Patent Document 29, a maltodextrin is added to sugar confectioneries which originally have shape retentivity, i.e., Patent Document 29 does not disclose that shape retentivity is imparted to sugar confectioneries by using a dextrin.

Also for beverages, due to recent trends toward health consciousness or increase in prices of milk-derived materials, a reduction in a milk-derived material (e.g., milk, dairy cream, etc.), cacao fat in cocoa and the like, has been studied. However, if the content of fats and oils, such as fats and oils derived from milk, cacao or the like, is reduced in a beverage having a considerably high water content, oils- and fats-specific richness or body is reduced, so that the beverage has a thin mouthfeel or taste, resulting in a lack of satisfaction. Moreover, a number of beverage products in which importance is put on thickness or a mouthfeel have been recently available on the market, and beverages having a characteristic mouthfeel are being developed.

As techniques for beverages containing dextrins, a method of improving taste qualities, such as creaminess, robust taste and the like, of carbonated beverages by adding a starch decomposition product having a DE of 6 to 30 (Patent Document 30), and a method of replacing the whole or a part of a high-calorie material with a specific branched maltodextrin (Patent Document 31), have been disclosed. Also, Patent Document 5 describes coffee milk (a kind of coffee with milk in Japan) as an example of low-calorie food in which a polysaccharide and a branched dextrin are used in combination.

However, all of the starch decomposition products described in Patent Documents 30 to 31 and 5 are dissolved in water at a high concentration as is similar to the dextrin of the present invention, but are not gelled when cooled or, if they can be gelled, their gel strength is considerably low. Therefore, these starch decomposition products have the effect of imparting richness, oils and fats enriched properties, and body to beverages at a considerably low level as compared to the dextrin of the present invention. Also, when the amounts of these starch decomposition products added are increased so as to improve the effect, starch flavor becomes significant, flavor release is worsened, or the like. Moreover, as a material used so as to impart thickness or richness to beverages, polysaccharide thickeners or starches may be contemplated. However, when polysaccharide thickeners or starches are used, viscosity is high during production, leading to a reduction in workability, and a sticky mouthfeel or a gritty mouthfeel. Moreover, an influence of polysaccharide thickener-specific spinnability leads to a slimy (sticky) mouthfeel. Also, for example, flavor release is reduced, depending on the type of a material employed, and therefore, there has been a demand for beverages having a desired mouthfeel without flavor release being affected.

Patent Document 1: Japanese National Phase PCT Laid-Open Publication No. H08-502894

Patent Document 2: Japanese National Phase PCT Laid-Open Publication No. 2000-503208

Patent Document 3: Japanese Examined Patent Application Publication No. H05-37007

Patent Document 4: Japanese Laid-Open Patent Publication No. H06-105652

Patent Document 5: Japanese Laid-Open Patent Publication No. H05-276898

Patent Document 6: Japanese Laid-Open Patent Publication No. 2001-252042

Patent Document 7: International Publication WO2004/045311

Patent Document 8: Japanese National Phase PCT Laid-Open Publication No. H10-507356

Patent Document 9: Japanese Examined Patent Application Publication No. S61-57

Patent Document 10: Japanese Laid-Open Patent Publication No. H06-217691

Patent Document 11: Japanese Laid-Open Patent Publication No. S62-14742

Patent Document 12: Japanese Laid-Open Patent Publication No. S56-75060

Patent Document 13: Japanese National Phase PCT Laid-Open Publication No. 2003-530127

Patent Document 14: Japanese Laid-Open Patent Publication No. H10-290677

Patent Document 15: Japanese Laid-Open Patent Publication No. 2007-104995

Patent Document 16: Japanese Laid-Open Patent Publication No. 2003-250482

Patent Document 17: Japanese National Phase PCT Laid-Open Publication No. 2005-527214

Patent Document 18: Japanese National Phase PCT Laid-Open Publication No. H06-506825

Patent Document 19: Japanese Laid-Open Patent Publication No. H07-50994

Patent Document 20: Japanese National Phase PCT Laid-Open Publication No. H08-502888

Patent Document 21: Japanese Laid-Open Patent Publication No. 2001-245620

Patent Document 22: Japanese Laid-Open Patent Publication No. H06-225720

Patent Document 23: Japanese Laid-Open Patent Publication No. 2003-93006

Patent Document 24: Japanese Laid-Open Patent Publication No. 2004-337166

Patent Document 25: Japanese Laid-Open Patent Publication No. 2004-154092

Patent Document 26: Japanese Laid-Open Patent Publication No. H04-112747

Patent Document 27: Japanese Laid-Open Patent Publication No. H02-154641

Patent Document 28: Japanese Laid-Open Patent Publication No. 2000-116343

Patent Document 29: Japanese National Phase PCT Laid-Open Publication No. 2003-529381

Patent Document 30: Japanese Laid-Open Patent Publication No. 2002-330735

Patent Document 31: Japanese National Phase PCT Laid-Open Publication No. 2004-524849

DISCLOSURE OF THE INVENTION

PROBLEMS TO BE SOLVED BY THE INVENTION

It is an object of the present invention to apply a dextrin having a specific characteristic to food products, and specifically, provide various processed food compositions which are prepared using the dextrin.

More specifically, it is an object of the present invention to provide, as the processed food compositions, fatty tissue substitutes having a mouthfeel (firmness) and juiciness specific to fatty tissue of edible meats, such as beef fat, lard and the like, and processed meat foods containing the fatty tissue substitutes in place of fatty tissue.

Also, it is an object of the present invention to provide, as the processed food compositions, emulsion-like foods having an appearance and a mouthfeel similar to those of emulsion foods which are prepared by emulsifying oils and fats, such as mayonnaise, margarine and the like. More specifically, it is an object of the present invention to provide emulsion-like foods which are food products which do not contain oils and fats, but have smoothness and robustness of oils and fats, and emulsion food-specific cloudiness and surface glossiness.

Moreover, it is an object of the present invention to provide emulsion foods as the processed food compositions. Specifically, the emulsion foods are emulsion seasonings which have a content of oils and fats (0.01 to 50 wt%) lower than an ordinary content of oils and fats (65 to 80 wt%) and have an appearance and a mouthfeel similar to those of mayonnaise, and emulsion seasonings which have a content of oils and fats (0.01 to 25 wt%) lower than an ordinary content of oils and fats (30 to 50 wt%) and have an appearance and a mouthfeel similar to those of emulsified dressing.

Also, it is an object of the present invention to provide, as the emulsion foods, spreads such as margarine, fat spread, butter cream and the like, specifically, a spread which has oils- and fats-specific richness and body, and also a smooth mouthfeel, without the flavor being affected, even when the content of oils and fats (including oil and fat derived from milk) is reduced. Also, it is an object of the present invention to provide spreads which have an ordinary content of oils and fats (including oil and fat derived from milk), but have richness and smoothness similar to those which are obtained when these contents are increased.

Also, it is an object of the present invention to provide, as the emulsion foods, desserts such as puddings (neutral puddings; acidic puddings such as fruit juice-containing puddings, cheese-containing puddings and the like), almond jellies, Bavarian creams, pastry creams, custards, mousses and the like, and particularly, desserts which have oils- and fats-specific richness and body, and also a smooth mouthfeel, without the flavor being affected, even when the content of oils and fats (including oil and fat derived from milk) is reduced. Also, it is an object of the present invention to provide desserts which have an ordinary content of the content of oils and fats (including oil and fat derived from milk), but have richness and smoothness similar to those which are obtained when these contents are increased.

Also, it is an object of the present invention to provide yogurts as the emulsion foods, and particularly, yogurts which have milk fat-specific smoothness and richness, without the flavor being affected, when the milk fat content is reduced or no milk fat is used. Also, it is an object of the present invention to provide yogurts in which syneresis caused by the reduction of the milk fat content or no use of milk fat is suppressed and therefore which has stable physical properties. Moreover, it is an object of the present invention to provide yogurts having a feel of high quality which have a general milk fat content, but have smoothness and richness similar to those which are obtained when the amount of dairy cream, milk or the like is increased.

Also, it is an object of the present invention to provide, as the emulsion foods, frozen desserts such as ice creams, ice milks, lacto-ices, other ice confectioneries and the like, and particularly, frozen desserts having smooth tissue and frozen dessert-specific melting in the mouth, body and flavor even when the milk fat or milk solid is reduced.

Moreover, it is an object of the present invention to provide, as the emulsion foods, whipped creams, and particularly, whipped creams in which syneresis after refrigeration and preservation or after freezing and thawing is suppressed, and which have a good mouthfeel and shape retentivity. Moreover, it is an object of the present invention to provide whipped creams in which significant occurrence of syneresis and a reduction in shape retentivity are suppressed and also oils- and fats-specific richness is provided even when the content of oils and fats is reduced.

Moreover, it is an object of the present invention to provide, as the processed food compositions, cheese-like foods, and particularly, cheese-like foods which contain a reduced milk fat content or no milk fat, but have cheese-specific body, mouthfeel and flavor, and processed foods which contain the cheese-like foods in place of cheeses. More preferably, the cheese-like foods have good shape retentivity and thermal meltability in addition to the aforementioned cheese-specific body, mouthfeel and flavor.

It is an object of the present invention to provide sugar confectioneries as the processed food compositions. Specifically, it is an object of the present invention to provide sugar confectioneries which have viscoelasticity and a smooth mouthfeel without a reduction in workability during production due to an increase in viscosity even when the soluble solid content is high.

It is an object of the present invention to provide beverages as the processed food compositions. Specifically, it is an object of the present invention to provide beverages which have natural richness, oils and fats enriched properties, and a smooth mouthfeel even when the content of oils and fats is reduced or no fat is used. Also, it is an object of the present invention to provide beverages having a characteristic mouthfeel, such as fruit juice beverages having an enhanced concentrated puree-like mouthfeel, beverages having good sharp taste and good flavor release, and the like, which are not achieved in the conventional art.

MEANS FOR SOLVING THE PROBLEMS

The present inventors diligently conducted research toward a solution to the aforementioned problems, and found processed food compositions suitable for aforementioned various purposes, which can be obtained by using a dextrin having the following characteristic (a), preferably a dextrin having the following characteristics (a), (b) and (c), more preferably a dextrin having the following characteristics (a), (b), (c) and (d).
(a) having a blue value within the range of 0.4 to 1.2.
(b) having a gel strength of 4 N/cm$^2$ or more as measured after being dissolved in distilled water at 80˚C to prepare a 30 wt% aqueous solution of the dextrin, and then being allowed to stand at 5˚C for 24 hours; and
(c) having a viscosity of 100 mPa·s or less as measured after being dissolved in distilled water at 25˚C to prepare a 30 wt% aqueous solution of the dextrin, and then being allowed to stand at 25˚C for 5 minutes.
(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours; and
B: a gel strength (N/cm$^2$) as measured after being dissolved in distilled water at 25˚C to prepare a 30 wt% aqueous solution of the dextrin, and then being allowed to stand at 5˚C for 24 hours.

The present invention has been made based on the aforementioned finding, encompassing the following embodiments:

(I) Processed food composition

(I-1) A processed food composition containing a dextrin having the following characteristic (a);

(a) having a blue value within the range of 0.4 to 1.2 as measured under the following conditions:

(a-1) a 1 w/v% aqueous solution of the dextrin is prepared using distilled water at 80˚C, and is then cooled to 25˚C,
(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution; and
(a-3) after the prepared solution is shaken at 25˚C for 30 minutes while being shielded from light, an absorbance at 680 nm of the reaction solution is measured using a spectrophotometer at 25˚C, and the resultant absorbance is considered as the blue value.

(I-2) The processed food composition described in (I-1), in which the dextrin further has the following characteristics (b) and (c);

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours, and
(c) having a viscosity of 100 mPa·s or less as measured after being dissolved in distilled water at 25˚C to prepare a 30 wt% aqueous solution of the dextrin, and then being allowed to stand at 25˚C for 5 minutes.

(I-3) The processed food composition described in (I-2), in which the dextrin further has the following characteristic (d);

(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours, and
B: a gel strength (N/cm$^2$) as measured after being dissolved in distilled water at 25˚C to prepare a 30 wt% aqueous solution of the dextrin, and then being allowed to stand at 5˚C for 24 hours.

In (II) to (XIII) described below, the dextrin having the characteristic (a), the characteristics (a) to (c), or the characteristics (a) to (d) is referred to as a "dextrin (I)."

(II) Fatty tissue substitute and its preparing method

(II-1) The processed food composition of any of (I-1) to (I-3), which is a fatty tissue substitute.

(II-2) The processed food composition described in (II-1), in which the fatty tissue substitute contains 20 to 40 wt% of the dextrin (I).

(II-3) The processed food composition described in (II-1) or (II-2), in which the fatty tissue substitute contains a carrageenan in addition to the dextrin (I).

(II-4) The processed food composition described in (II-3), in which the carrageenan has at least one of the following characteristics (1) to (3):

(1) being soluble in water at 50˚C or less;
(2) a 1.5 wt% aqueous solution of the carrageenan being not gelable at 25˚C; and
(3) containing more than 0 and not more than 0.1 wt% of calcium ions.

(II-5) The processed food composition described in (II-3) or (II-4), in which the processed food composition contains 1 to 10 parts by weight of the carrageenan per 100 parts by weight of the dextrin (I).

(II-6) A method for preparing a fatty tissue substitute, including the step of solidifying, by cooling, an aqueous solution containing any of a dextrin (I) having the following characteristic (a), a dextrin (I) having the following characteristics (a) to (c), or a dextrin (I) having the following characteristics (a) to (d):

(a) having a blue value within the range of 0.4 to 1.2 as measured under the following conditions:

(a-1) a 1 w/v% aqueous solution of the dextrin (I) is prepared using distilled water at 80˚C, and is then cooled to 25˚C,
(a-2) 10 ml of the 1 w/v% aqueous solution of the dextrin (I) (25˚C) is mixed with 10 ml of an aqueous solution containing 20 mg of iodine and 200 mg of potassium iodide, and is then adjusted with distilled water to an amount of 100 ml of prepared solution,
(a-3) after the prepared solution is shaken at 25˚C for 30 minutes while being shielded from light, an absorbance at 680 nm of a reaction solution is measured using a spectrophotometer at 25˚C, and the resultant absorbance is considered as the blue value,

(b) having a gel strength of 4 $N/cm^2$ or more as measured after being dissolved in distilled water at 80˚C to prepare a 30 wt% aqueous solution of the dextrin, and then being allowed to stand at 5˚C for 24 hours; and
(c) having a viscosity of 100 mPa·s or less as measured after being dissolved in distilled water at 25˚C to prepare a 30 wt% aqueous solution of the dextrin, and then being allowed to stand at 25˚C for 5 minutes, and
(d) the ratio (A/B) of the following gel strengths A and B being 2 or less:

A: a gel strength ($N/cm^2$) as measured after being dissolved in distilled water at 80˚C to prepare a 30 wt% aqueous solution of the dextrin, and then being allowed to stand at 5˚C for 24 hours; and
B: a gel strength ($N/cm^2$) as measured after being dissolved in distilled water at 25˚C to prepare a 30 wt% aqueous solution of the dextrin, and then being allowed to stand at 5˚C for 24 hours.

(II-7) The fatty tissue substitute preparation method described in (II-6), in which the aqueous solution contains 20 to 40 wt% of the dextrin (I).

(II-8) The fatty tissue substitute preparation method described in (II-6) or (II-7), in which the aqueous solution further contains a carrageenan.

(II-9) The fatty tissue substitute preparation method described in (II-8), in which the carrageenan has at least one of the following characteristics (1) to (3):

(1) being soluble in water at 50˚C or less;
(2) a 1.5 wt% aqueous solution of the carrageenan being not gelable at 25˚C; and
(3) containing more than 0 and not more than 0.1 wt% of calcium ions.

(II-10) The fatty tissue substitute preparation method described in (II-8) or (II-9), in which the fatty tissue substitute contains 1 to 10 parts by weight of the carrageenan per 100 parts by weight of the dextrin (I).

(III) Processed food containing fatty tissue substitute

(III-1) A processed food containing the fatty tissue substitute described in any of (II-1) to (II-5) in place of the whole or a part of edible meat fatty tissue.

(III-2) The processed food described in (III-1), which is any processed meat food selected from sausage, ham, bacon, salami, meatloaf, hamburg steak, hamburger patty, menchi katsu (a kind of Japanese cutlet), croquette, meatball, tsukune (a kind of Japanese meatball), dumpling (jiaozi,a kind of Chinese dumpling), shaomai (another kind of Chinese dumpling) and steamed meat bun (nikuman, baozi, pork bun).

(IV) Emulsion-like food and its preparation method

(IV-1) The processed food composition described in any of (I-1) to (I-3), which is an emulsion-like food.

(IV-2) The processed food composition described in (IV-1), in which the emulsion-like food is a non-emulsion food containing, in addition to the dextrin (I), at least one polysaccharide selected from the group consisting of xanthan gum, guar gum, locust bean gum, tara gum, tamarind seed gum, bacterial cellulose and native gellan gum, and water.

(IV-3) The processed food composition described in (IV-2), in which the emulsion-like food is a non-emulsion food containing 5 to 30 wt% of the dextrin (I), 0.01 to 0.5 wt% of the total amount of at least one polysaccharide selected from the group consisting of xanthan gum, guar gum, locust bean gum, tara gum, tamarind seed gum, bacterial cellulose and native gellan gum, and 40 to 90 wt% of water.

(IV-4) The processed food composition described in any of (IV-1) to (IV-3), in which the emulsion-like food is a non-emulsion food further containing at least one polysaccharide selected from the group consisting of gum ghatti and gum arabic.

(IV-5) The processed food composition described in (IV-4), in which the emulsion-like food is a non-emulsion food containing 0.05 to 5 wt% of the total amount of at least one polysaccharide selected from the group consisting of gum ghatti and gum arabic.

(IV-6) The processed food composition described in any of (IV-1) to (IV-5), in which the emulsion-like food is a non-emulsion food which does not contain oils and fats, and has an appearance and a mouthfeel similar to those of any of mayonnaise, dressing, sauce, pastry cream, margarine, fat spread, butter cream and cheese, which are prepared by emulsifying oils and fats.

(IV-7) A method for preparing the emulsion-like food described in any of (IV-1) to (IV-5), including the step of cooling a non-emulsion aqueous solution containing any of a dextrin (I) having the following characteristic (a), a dextrin (I) having the following characteristics (a) to (c), or a dextrin (I) having the following characteristics (a) to (d):

(a) having a blue value within the range of 0.4 to 1.2 as measured under the following conditions:

(a-1) a 1 w/v% aqueous solution of the dextrin (I) is prepared using distilled water at 80˚C, and is then cooled to 25˚C,
(a-2) 10 ml of the 1 w/v% aqueous solution of the dextrin (I) (25˚C) is mixed with 10 ml of an aqueous solution containing 20 mg of iodine and 200 mg of potassium iodide, and is then adjusted with distilled water to an amount of 100 ml of prepared solution,
(a-3) after the prepared solution is shaken at 25˚C for 30 minutes while being shielded from light, an absorbance at 680 nm of the reaction solution is measured using a spectrophotometer at 25˚C, and the resultant absorbance is considered as the blue value,

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours; and
(c) having a viscosity of 100 mPa·s or less as measured after being dissolved in distilled water at 25˚C to prepare a 30 wt% aqueous solution of the dextrin, and then being allowed to stand at 25˚C for 5 minutes, and
(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours; and
B: a gel strength (N/cm$^2$) as measured after being dissolved in distilled water at 25˚C to prepare a 30 wt% aqueous solution of the dextrin, and then being allowed to stand at 5˚C for 24 hours.

(IV-8) The preparation method described in (IV-7), in which the aqueous solution further contains at least one polysaccharide selected from the group consisting of xanthan gum, guar gum, locust bean gum, tara gum, tamarind seed gum, bacterial cellulose and native gellan gum.

(IV-9) The preparation method described in (IV-8), in which the aqueous solution is a non-emulsion aqueous solution containing 5 to 30 wt% of the dextrin (I), 0.01 to 0.5 wt% of the total amount of at least one polysaccharide selected from the group consisting of xanthan gum, guar gum, locust bean gum, tara gum, tamarind seed gum, bacterial cellulose and native gellan gum, and 40 to 90 wt% of water.

(IV-10) The preparation method described in any of (IV-7) to (IV-9), in which the aqueous solution is a non-emulsion aqueous solution further containing at least one polysaccharide selected from the group consisting of gum ghatti and gum arabic.

(IV-11) The preparation method described in (IV-10), in which the aqueous solution is a non-emulsion aqueous solution containing 0.05 to 5 wt% of the total amount of at least one polysaccharide selected from the group consisting of gum ghatti and gum arabic.

(IV-12) The preparation method described in any of (IV-7) to (IV-11), which is a method for preparing an emulsion-like food which is a non-emulsion food which does not contain oils and fats, and has an appearance and a mouthfeel similar to those of any of mayonnaise, dressing, sauce, pastry cream, margarine, fat spread, butter cream and cheese, which are prepared by emulsifying oils and fats.

(V) Emulsion food

(V-1) The processed food composition described in any of (I-1) to (I-3), which is an emulsion food.

(V-2) The processed food composition described in (V-1), in which the emulsion food is any selected from the group consisting of emulsion seasonings, spreads, desserts, yogurts, frozen desserts and whipped creams.

(V-3) A method for preparing the emulsion food described in (V-1), including the step of solidifying, by cooling, an aqueous solution containing any of a dextrin (I) having the following characteristic (a), a dextrin (I) having the following characteristics (a) to (c), or a dextrin (I) having the following characteristics (a) to (d):

(a) having a blue value within the range of 0.4 to 1.2 as measured under the following conditions:

(a-1) a 1 w/v% aqueous solution of the dextrin (I) is prepared using distilled water at 80°C, and is then cooled to 25°C,

(a-2) 10 ml of the 1 w/v% aqueous solution of the dextrin (I) (25°C) is mixed with 10 ml of an aqueous solution containing 20 mg of iodine and 200 mg of potassium iodide, and is then adjusted with distilled water to an amount of 100 ml of prepared solution,

(a-3) after the prepared solution is shaken at 25°C for 30 minutes while being shielded from light, an absorbance at 680 nm of a reaction solution is measured using a spectrophotometer at 25°C, and the resultant absorbance is considered as the blue value,

(b) having a gel strength of 4 N/cm$^2$ or more as measured after being dissolved in distilled water at 80°C to prepare a 30 wt% aqueous solution of the dextrin, and then being allowed to stand at 5°C for 24 hours; and

(c) having a viscosity of 100 mPa·s or less as measured after being dissolved in distilled water at 25°C to prepare a 30 wt% aqueous solution of the dextrin, and then being allowed to stand at 25°C for 5 minutes, and

(d) the ratio (A/B) of the following gel strengths A and B being 2 or less:

A: a gel strength (N/cm$^2$) as measured after being dissolved in distilled water at 80°C to prepare a 30 wt% aqueous solution of the dextrin, and then being allowed to stand at 5°C for 24 hours; and

B: a gel strength (N/cm$^2$) as measured after being dissolved in distilled water at 25°C to prepare a 30 wt% aqueous solution of the dextrin, and then being allowed to stand at 5°C for 24 hours.

(V-a) Emulsion seasoning

(V-a-1) The processed food composition described in (V-1), in which the emulsion food is an emulsion seasoning containing 0.1 to 20 wt% of the dextrin (I).

(V-a-2) The processed food composition described in (V-1), in which the emulsion food is an emulsion seasoning containing, in addition to the dextrin (I), at least one selected from the group consisting of xanthan gum, guar gum, locust bean gum, tara gum, tamarind seed gum, bacterial cellulose and native gellan gum.

(V-a-2) The processed food composition described in (V-1), in which the emulsion food is an emulsion seasoning containing 0.01 to 50 wt% of oils and fats.

(V-a-3) The processed food composition described in (V-1), in which the emulsion food is a mayonnaise-like emulsion seasoning which contains 0.01 to 50 wt% of oils and fats and has an appearance and a mouthfeel similar to those of mayonnaise.

(V-a-4) The processed food composition described in (V-1), in which the emulsion food is a dressing-like emulsion seasoning containing 0.01 to 25 wt% of oils and fats.

(V-b) Spread

(V-b-1) The processed food composition described in (V-1), in which the emulsion food is a spread containing 10 to 60 wt% of the total amount of oils and fats (including oil and fat derived from milk).
(V-b-2) The processed food composition described in (V-1), in which the emulsion food is a spread containing 5 to 30 wt% of the dextrin (I).
(V-b-3) The processed food composition described in (V-1), in which the emulsion food is a spread containing, in addition to the dextrin (I), at least one polysaccharide selected from the group consisting of xanthan gum, guar gum, locust bean gum, tara gum, tamarind seed gum, bacterial cellulose, gum ghatti and native gellan gum.
(V-b-4) The processed food composition described in (V-b-3), in which the emulsion food is a spread containing 0.01 to 5 wt% of the total amount of polysaccharide.

(V-c) Dessert prepared using milk-derived material or vegetable oils and fats

(V-c-1) The processed food composition described in (V-1), in which the emulsion food is any dessert selected from the group consisting of puddings, almond jellies, Bavarian creams, pastry creams, custards and mousses.
(V-c-2) The processed food composition described in (V-c-1), in which the emulsion food is a dessert containing 0.1 to 20 wt% of the dextrin (I).
(V-c-3) The processed food composition described in (V-c-1), in which the emulsion food is a dessert containing, in addition to the dextrin (I), at least one selected from the group consisting of polysaccharide thickeners, gelling agents and milk proteins.

(V-d) Yogurt

(V-d-1) The processed food composition described in (V-1), in which the emulsion food is a yogurt.
(V-d-2) The processed food composition described in (V-1), in which the emulsion food is a low-fat yogurt having a milk fat content of 0.5 wt% or more and less than 3 wt%, or a fat-free yogurt having a milk fat content of less than 0.5 wt%.
(V-d-3) The processed food composition described in (V-1), in which the emulsion food is a yogurt containing 0.05 to 10 wt% of the dextrin (I).
(V-d-4) The processed food composition described in (V-1), in which the emulsion food is a yogurt containing, in addition to the dextrin (I), at least one selected from the group consisting of gum ghatti, gum arabic, tara gum, tamarind seed gum and guar gum.
(V-d-5) The processed food composition described in (V-1), in which the emulsion food is a yogurt containing high methoxyl pectin in addition to the dextrin (I).

(V-e) Frozen dessert

(V-e-1) The processed food composition described in (V-1), in which the emulsion food is any frozen dessert selected from the group consisting of ice creams, ice milks, lacto-ices and ice confectioneries, which are prepared using a milk-derived material.
(V-e-2) The processed food composition described in (V-1), in which the emulsion food is a frozen dessert containing 0.1 to 10 wt% of the dextrin (I).
(V-e-3) The processed food composition described in (V-1), in which the emulsion food is a frozen dessert containing, in addition to the dextrin (I), at least one selected from the group consisting of guar gum, tara gum, tamarind seed gum, carrageenans, xanthan gum, locust bean gum and native gellan gum.

(V-f) Whipped cream

(V-f-1) The processed food composition described in (V-1), in which the emulsion food is a whipped cream containing 0.5 to 10 wt% of the dextrin (I).
(V-f-2) The processed food composition described in (V-1), in which the emulsion food is a whipped cream containing, in addition to the dextrin (I), at least one selected from the group consisting of polyglycerol esters of fatty acids having an iodine value of 10 to 45, monoglycerol esters of fatty acids having an iodine value of 44 to 120, and hydroxypropyl cellulose.

(VI) Cheese-like food and its preparing method

(VI-1) The processed food composition described in any of (I-1) to (I-3), which is a cheese-like food.

(VI-2) The processed food composition described in (VI-1), in which the cheese-like food contains 10 to 50 wt% of the dextrin (I).

(VI-3) The processed food composition described in (VI-1) or (VI-2), in which the cheese-like food contains, in addition to the dextrin, at least one selected from the group consisting of whey protein, methyl cellulose, curdlan and deacylated gellan gum.

(VI-4) The processed food composition described in (VI-3), in which the cheese-like food contains 0.01 to 10 wt% of the total amount of at least one selected from the group consisting of whey protein, methyl cellulose, curdlan and deacylated gellan gum.

(VI-5) The processed food composition described in any of (VI-1) to (VI-4), in which the cheese-like food further contains, in addition to the dextrin (I), at least one polysaccharide selected from the group consisting of carrageenans, xanthan gum, gum ghatti and native gellan gum.

(VI-6) The processed food composition described in (VI-5), in which the carrageenan has at least one of the following characteristics (1) to (3):

(1) being soluble in water at 50°C or less;
(2) a 1.5 wt% aqueous solution of the carrageenan being not gelable at 25°C; and
(3) containing more than 0 and not more than 0.1 wt% of calcium ions.

(VI-7) The processed food composition described in (VI-5) or (VI-6), in which the total content of the at least one polysaccharide selected from the group consisting of carrageenans, xanthan gum, gum ghatti and native gellan gum is 0.01 to 5 wt%.

(VI-8) The processed food composition described in any of (VI-1) to (VI-7), in which the cheese-like food is a processed food containing no milk fat or 20 wt% or less of milk fat, and has an appearance, a flavor and a mouthfeel similar to those of cheese containing more than 20 wt% of milk fat.

(VI-9) A method for preparing the cheese-like food described in any of (VI-1) to (VI-8), including the step of solidifying, by cooling, an aqueous solution containing any of a dextrin (I) having the following characteristic (a), a dextrin (I) having the following characteristics (a) to (c), or a dextrin (I) having the following characteristics (a) to (d):

(a) having a blue value within the range of 0.4 to 1.2 as measured under the following conditions:

(a-1) a 1 w/v% aqueous solution of the dextrin is prepared using distilled water at 80°C, and is then cooled to 25°C,
(a-2) 10 ml of the 1 w/v% aqueous solution of the dextrin (25°C) is mixed with 10 ml of an aqueous solution containing 20 mg of iodine and 200 mg of potassium iodide, and is then adjusted with distilled water to an amount of 100 ml of prepared solution,
(a-3) after the prepared solution is shaken at 25°C for 30 minutes while being shielded from light, an absorbance at 680 nm of a reaction solution is measured using a spectrophotometer at 25°C, and the resultant absorbance is considered as the blue value,

(b) having a gel strength of 4 $N/cm^2$ or more as measured after being dissolved in distilled water at 80°C to prepare a 30 wt% aqueous solution of the dextrin, and then being allowed to stand at 5°C for 24 hours,
(c) having a viscosity of 100 mPa·s or less as measured after being dissolved in distilled water at 25°C to prepare a 30 wt% aqueous solution of the dextrin, and then being allowed to stand at 25°C for 5 minutes, and
(d) the ratio (A/B) of the following gel strengths A and B being 2 or less:

A: a gel strength ($N/cm^2$) as measured after being dissolved in distilled water at 80°C to prepare a 30 wt% aqueous solution of the dextrin, and then being allowed to stand at 5°C for 24 hours, and
B: a gel strength ($N/cm^2$) as measured after being dissolved in distilled water at 25°C to prepare a 30 wt% aqueous solution of the dextrin, and then being allowed to stand at 5°C for 24 hours.

(VI-10) The preparation method described in (VI-9), in which the aqueous solution contains 10 to 50 wt% of the dextrin (I).

(VI-11) The preparation method described in (VI-10), in which the aqueous solution contains, in addition to the dextrin (I), at least one selected from the group consisting of whey protein, methyl cellulose, curdlan and deacylated gellan gum.

(VI-12) The preparation method described in (VI-11), in which the aqueous solution contains 0.01 to 10 wt% of the total amount of at least one selected from the group consisting of whey protein, methyl cellulose, curdlan and deacylated gellan gum.

(VI-13) The preparation method described in any of (VI-9) to (VI-12), in which the aqueous solution further contains, in addition to the dextrin, at least one polysaccharide selected from the group consisting of carrageenans, xanthan gum, gum ghatti and native gellan gum.

(VI-14) The processed food composition described in (VI-13), in which the carrageenan has at least one of the following characteristics (1) to (3):

(1) being soluble in water at 50˚C or less;
(2) a 1.5 wt% aqueous solution of the carrageenan being not gelable at 25˚C; and
(3) containing more than 0 and not more than 0.1 wt% of calcium ions.

(VI-15) The preparation method described in (VI-13) or (VI-14), in which the total content of the at least one polysaccharide selected from the group consisting of carrageenans, xanthan gum, gum ghatti and native gellan gum is 0.01 to 5 wt%.

(VI-16) The preparation method described in any of (VI-9) to (VI-15), which is a method for preparing a cheese-like food which is a processed food containing no milk fat or 20 wt% or less of milk fat, and has an appearance, a flavor and a mouthfeel similar to those of cheese containing more than 20 wt% of milk fat.

(VII) Processed food containing cheese-like food as cheese substitute

(VII-1) A processed food containing the cheese-like food described in any of (VI-1) to (VI-8) in place of the whole or a part of cheese.

(VII-2) The processed food described in (VII-1), which is any selected from breads, cakes, mousses, pizzas, pies, gratins, lasagnas, dorias (a kind of Japanese dish), risottos, sauces, soups, cheese fondues, hamburgs, hamburgers, salads, pork cutlets and spreads.

(VIII) Sugar confectionery

(VIII-1) The processed food composition described in any of (I-1) to (I-3), which is a sugar confectionery.

(VIII-2) The processed food composition described in any of (I-1) to (I-3), in which the sugar confectionery has at least one of the following characteristics (1) and (2) :

(1) the sugar confectionery has a moisture content of 15 to 30%, and
(2) the sugar confectionery has a soluble solid content of 70 to 85%, more preferably 75 to 85%.

(VIII-3) The processed food composition described in any of (I-1) to (I-3), in which the sugar confectionery is a soft candy, a caramel, a nougat or a gummy candy.

(VIII-4) The processed food composition described in (VIII-1), in which the sugar confectionery contains 4 to 40 wt% of the dextrin (I).

(VIII-5) The processed food composition described in (VIII-1), in which the sugar confectionery contains, in addition to the dextrin (I), at least one selected from the group consisting of psyllium seed gum, carrageenans, gum ghatti and tamarind seed gum.

(IX) Beverages

(IX-1) The processed food composition described in any of (I-1) to (I-3), which is a beverage.

(IX-2) The processed food composition described in (IX-1), in which the beverage is a milk-containing beverage selected from milk, a milk beverage containing 3% or more of milk solid (the sum of the milk solid not fat and the milk fat content), a lactic acid beverage, coffee with milk and cocoa, a fruit juice-containing beverage, a vegetable juice-containing beverage, or a soft beverage.

(IX-3) The processed food composition described in (IX-1), in which the beverage is a milk-containing beverage having a content of fat and oil of 1.5 wt% or less.

(IX-4) The processed food composition described in (IX-1), in which the beverage contains 0.2 to 10 wt% of the dextrin (I).

(IX-5) The processed food composition described in (IX-1), in which the beverage is a milk-containing beverage containing 0.2 to 2 wt% of the dextrin (I).

(IX-6) The processed food composition described in (IX-1), in which the beverage contains bacterial cellulose in addition to the dextrin (I).

(X) Method for enhancing richness of emulsion food

(X-1) A method for enhancing richness of an emulsion food, including the step of adding, to the emulsion food any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80˚C, and is then cooled to 25˚C,
(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution,
(a-3) after the prepared solution is shaken at 25˚C for 30 minutes while being shielded from light, an absorbance at 680 nm of the reaction solution is measured using a spectrophotometer at 25˚C, and the resultant absorbance is considered as the blue value,

(b) having a gel strength of 4 $N/cm^2$ or more as measured after being dissolved in distilled water at 80˚C to prepare a 30 wt% aqueous solution of the dextrin, and then being allowed to stand at 5˚C for 24 hours,
(c) having a viscosity of 100 mPa·s or less as measured after being dissolved in distilled water at 25˚C to prepare a 30 wt% aqueous solution of the dextrin, and then being allowed to stand at 25˚C for 5 minutes, and
(d) the ratio (A/B) of the following gel strengths A and B being 2 or less:

A: a gel strength ($N/cm^2$) as measured after being dissolved in distilled water at 80˚C to prepare a 30 wt% aqueous solution of the dextrin, and then being allowed to stand at 5˚C for 24 hours, and
B: a gel strength ($N/cm^2$) as measured after being dissolved in distilled water at 25˚C to prepare a 30 wt% aqueous solution of the dextrin, and then being allowed to stand at 5˚C for 24 hours.

(X-2) The method described in (X-1), in which the emulsion food is any selected from the group consisting of emulsion seasonings, spreads, desserts, yogurts, frozen desserts and whipped creams.
(X-3) The method described in (X-1), in which the emulsion food is a mayonnaise-like emulsion seasoning which contains 0.01 to 50 wt% of oils and fats and has an appearance and a mouthfeel similar to those of mayonnaise.
(X-4) The method described in (X-1), in which the emulsion food is a dressing-like emulsion seasoning containing 0.01 to 25 wt% of oils and fats.
(X-5) The method described in (X-1), in which the emulsion food is a spread containing 10 to 60 wt% of the total amount of oils and fats (including oil and fat derived from milk).
(X-6) The method described in (X-1), in which the emulsion food is any dessert selected from the group consisting of puddings, almond jellies, Bavarian creams, pastry creams, custards and mousses.
(X-7) The method described in (X-1), in which the emulsion food is a low-fat yogurt having a milk fat content of 0.5 wt% or more and less than 3 wt%, or a fat-free yogurt having a milk fat content of less than 0.5 wt%.
(X-8) The method described in (X-1), in which the emulsion food is any frozen dessert selected from the group consisting of ice creams, ice milks, lacto-ices and ice confectioneries, which are prepared using a milk-derived material.

(XI) Method for preventing syneresis of emulsion food

(XI-1) A method for preventing syneresis of an emulsion food selected from the group consisting of whipped creams, yogurts and desserts, including the step of adding, any of a dextrin having the following characteristic (a), a dextrin having the following characteristics (a) to (c), or a dextrin having the following characteristics (a) to (d), to the emulsion food:

(a) having a blue value within the range of 0.4 to 1.2 as measured under the following conditions:

(a-1) a 1 w/v% aqueous solution of the dextrin is prepared using distilled water at 80˚C, and is then cooled to 25˚C,
(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution,
(a-3) after the prepared solution is shaken at 25˚C for 30 minutes while being shielded from light, an absorbance at 680 nm of the reaction solution is measured using a spectrophotometer at 25˚C, and the resultant absorbance is considered as the blue value,

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours,
(c) having a viscosity of 100 mPa·s or less as measured after being dissolved in distilled water at 25˚C to prepare a 30 wt% aqueous solution of the dextrin, and then being allowed to stand at 25˚C for five minutes, and
(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours, and
B: a gel strength (N/cm$^2$) as measured after being dissolved in distilled water at 25˚C to prepare a 30 wt% aqueous solution of the dextrin, and then being allowed to stand at 5˚C for 24 hours.

(XI-2) The method described in (XI-1), in which the emulsion food is any dessert selected from the group consisting of puddings, almond jellies, Bavarian creams, pastry creams, custards and mousses.

(XII) Method for enhancing robustness of fruit juice or vegetable juice of beverage

(XII-1) A method for enhancing robustness of fruit juice or vegetable juice of a fruit juice- or vegetable juice-containing beverage, including the step of adding, any of a dextrin having the following characteristic (a), a dextrin having the following characteristics (a) to (c), or a dextrin having the following characteristics (a) to (d), to the beverage:

(a) having a blue value within the range of 0.4 to 1.2 as measured under the following conditions:

(a-1) a 1 w/v% aqueous solution of the dextrin is prepared using distilled water at 80˚C, and is then cooled to 25˚C,
(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution,
(a-3) after the prepared solution is shaken at 25˚C for 30 minutes while being shielded from light, an absorbance at 680 nm of a reaction solution is measured using a spectrophotometer at 25˚C, and the resultant absorbance is considered as the blue value,

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours,
(c) having a viscosity of 100 mPa·s or less as measured after being dissolved in distilled water at 25˚C to prepare a 30 wt% aqueous solution of the dextrin, and then being allowed to stand at 25˚C for 5 minutes, and
(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours, and
B: a gel strength (N/cm$^2$) as measured after being dissolved in distilled water at 25˚C to prepare a 30 wt% aqueous solution of the dextrin, and then being allowed to stand at 5˚C for 24 hours.

(XIII) Method for improving shape retentivity of sugar confectionery

(XIII-1) A method for improving shape retentivity of a sugar confectionery, including the step of adding, to the sugar confectionery, any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80˚C, and is then cooled to 25˚C,
(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to 100 ml,
(a-3) after the prepared solution is shaken at 25˚C for 30 minutes while being shielded from light, an absorbance at 680 nm of a reaction solution is measured using a spectrophotometer at 25˚C, and the resultant absorbance is considered as the blue value,

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours,

(c) having a viscosity of 100 mPa·s or less as measured after being dissolved in distilled water at 25˚C to prepare a 30 wt% aqueous solution of the dextrin, and then being allowed to stand at 25˚C for 5 minutes, and

(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours, and

B: a gel strength (N/cm$^2$) as measured after being dissolved in distilled water at 25˚C to prepare a 30 wt% aqueous solution of the dextrin, and then being allowed to stand at 5˚C for 24 hours.

(XIII-2) The method described in (XIII-1), in which the sugar confectionery has at least one of the following characteristics (1) and (2):

(1) the sugar confectionery has a moisture content of 15 to 30%, and
(2) the sugar confectionery has a soluble solid content of 70 to 85%, more preferably 75 to 85%.

(XIII-3) The method described in (XIII-1), in which the sugar confectionery is a soft candy, a caramel, a nougat or a gummy candy.

## ADVANTAGEOUS EFFECTS OF THE INVENTION

According to the present invention, it is possible to provide a processed food in which importance is put on the presence of fat, particularly a fatty tissue substitute useful for preparation of processed meat foods. According to the fatty tissue substitute of the present invention, a sufficient fatty tissue-specific mouthfeel and juiciness can be imparted to low-calorie and low-fat processed meat foods. In other words, a low-calorie and low-fat processed meat food which contains the fatty tissue substitute of the present invention in place of the whole or a part of edible meat fatty tissue, can have a fatty tissue-specific mouthfeel and juiciness.

According to the present invention, it is possible to provide an emulsion-like food which does not contain oils and fats and is not subjected to homogenization or the like, but has an appearance (emulsion-specific cloudiness and surface glossiness), a mouthfeel (smoothness and robustness), and a feel in use which are similar to those of emulsion foods which are prepared by emulsifying oils and fats. The emulsion-like food of the present invention does not contain oils and fats and therefore has a low calorie value.

According to the present invention, it is possible to provide an emulsion seasoning (emulsion food) which has a content of oils and fats reduced to 50 wt% or less, but has a viscosity, oils and fats enriched properties and smoothness which are similar to those of general mayonnaises containing 65 to 80 wt% of oils and fats. The emulsion seasoning of the present invention has a low content of oils and fats, but has an appearance (mayonnaise-specific cloudiness and surface glossiness) and a mouthfeel (smoothness and robustness) which are similar to those of mayonnaise, and has a lower calorie value than that of mayonnaise due to the low content of oils and fats. Likewise, according to the present invention, it is possible to provide an emulsion seasoning (emulsion food) which has a content of oils and fats reduced to 25 wt% or less, but has oils and fats enriched properties and smoothness which are similar to those of general emulsified dressings which contain 30 to 50 wt% of oils and fats. The emulsion seasoning of the present invention has a low content of oils and fats, but has an appearance (emulsified dressing-specific cloudiness and surface glossiness) and a mouthfeel (smoothness and robustness) which are similar to those of emulsified dressing, and has a lower calorie value than that of emulsified dressing due to the low content of oils and fats.

According to the present invention, it is possible to impart oils and fats-specific richness and body and moreover a smooth mouthfeel to desserts, such as puddings (neutral puddings; acidic puddings such as fruit juice-containing puddings, cheese-containing puddings and the like), almond jellies, Bavarian creams, pastry creams, custards, mousses and the like, without the flavor being affected, even when the content of oils and fats (including oil and fat derived from milk) is reduced. Also, when the content of oils and fats (including oil and fat derived from milk) is not reduced, it is possible to impart sufficient richness and a smooth mouthfeel which are similar to those which are obtained when the content of the content of oils and fats (including oil and fat derived from milk) is increased, without increasing the milk fat content of milk, dairy cream or the like, or the oils and fats content of refined coconut oil or the like, whereby desserts (emulsion foods) having a milk-rich mouthfeel and flavor can be provided.

According to the present invention, it is possible to impart a milk fat-specific smooth mouthfeel and richness to yogurt, which is a kind of emulsion food, without the flavor being affected, even when the milk fat content is reduced or no milk fat is used. Also, when the milk fat content is not reduced, it is possible to impart smoothness and richness which are similar to those which are obtained when the milk fat content is increased, without increasing the milk fat content of dairy cream, milk or the like, whereby yogurt having a milk-rich mouthfeel or flavor can be provided. Moreover, it is possible to suppress the syneresis and the reduction in shape retentivity which significantly occurs when the milk fat content is reduced.

According to the present invention, it is possible to impart an oils- and fats-specific smooth mouthfeel (melting in the mouth) and richness to frozen desserts (emulsion foods) which are made from milk, such as ice creams, ice milks, lacto-ices, ice confectioneries and the like, without the flavor being affected, even when the content of oils and fats (including oil and fat derived from milk) is reduced or no oils and fats (including oil and fat derived from milk) is used. Also, when the milk fat content is not reduced, it is possible to impart smoothness and richness which are similar to those which are obtained when the milk fat content is increased, without increasing the milk fat content of dairy cream, milk or the like, whereby frozen desserts having a milk-rich mouthfeel and flavor can be provided.

According to the present invention, it is possible to provide a whipped cream in which syneresis can be significantly suppressed, which is conventionally difficult to prevent in conventional whipped creams, particularly a whipped cream in which syneresis during refrigeration or after freezing and thawing can be significantly suppressed. The whipped cream has high richness, a smooth mouthfeel and excellent shape retentivity in addition to the effect of preventing of syneresis. Also, according to the present invention, it is possible to provide a whipped cream having a feel of high quality in which syneresis is suppressed, and in addition, which has stable physical properties (e.g., shape retentivity, etc.) and also richness and oils and fats enriched properties, even when the oils and fats content is reduced.

According to the present invention, it is possible to provide a cheese-like food having a mouthfeel and a flavor which are similar to those of ordinary cheeses even when the milk fat content is reduced. The cheese-like food of the present invention has a low milk fat content, but has a cheese-specific flavor and mouthfeel, and also has a lower calorie value than that of ordinary cheeses due to the low milk fat content.

According to the present invention, it is possible to provide a sugar confectionery having a high soluble solid content, such as a soft candy, a caramel, a nougat, a gummy candy or the like, which overcomes the problem that an increase in the viscosity during production leads to a reduction in the workability, and has an appropriate viscoelasticity and a specific oil- and fat-like smooth mouthfeel.

Also, according to the present invention, it is possible to provide a beverage which does not have stickiness and has natural richness and fattiness and a smooth mouthfeel. Also, according to the present invention, it is possible to provide a beverage which has an enhanced feel of thick (rich) puree which is not conventionally obtained, but does not have stickiness and has a sharp mouthfeel, and a beverage having good flavor release.

## BEST MODE FOR CARRYING OUT THE INVENTION

### I. Dextrin

A dextrin used in the present invention has the following characteristic (a):

(a) having a blue value (absorbance at 680 nm) within the range of 0.4 to 1.2.

The blue value is a value which is obtained as an absorbance at 680 nm of a starch-iodine reaction solution, based on the fact that a blue color is generally exhibited as a result of the reaction of starch with iodine (specifically, amylose contained in starch reacts with iodine). Although the blue value is generally used so as to evaluate the amylose content of starch, the blue value is herein used as a index indicating the amylose content of a dextrin.

In the present invention, the blue value of a dextrin can be calculated by the following method. As used hereinafter, the "blue value" refers to a value which is calculated by the method.

(1) A 1 w/v% aqueous solution of a dextrin is prepared using distilled water at 80˚C, and is then cooled to 25˚C.
(2) Ten ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution.
(3) After the prepared solution is shaken at 25˚C for 30 minutes while being shielded from light, the absorbance at 680 nm of the reaction solution is measured using a spectrophotometer at 25˚C.

The dextrin used in the present invention has a blue value within the range of 0.4 to 1.2 as described above, preferably within the range of 0.5 to 0.9, and more preferably within the range of 0.6 to 0.8.

Conventionally known dextrins have a blue value of less than 0.4 (e.g., "Pinedex #100 manufactured by Matsutani Chemical Industry Co., Ltd. ("existing product 3 in Experimental Example 1): 0.32, "Dextrin NSD-C" manufactured by Nissi CO., LTD. ("existing product 5 in Experimental Example 1): 0.11, and "Pinedex #3 manufactured by Matsutani Chemical Industry Co., Ltd. ("existing product 6 in Experimental Example 1): 0.04), or a blue value of more than 1.2 (e.g., "PASELLI SA2 manufactured by AVEBE ("existing product 1 in Experimental Example 1): 1.42, "Instant N-Oils and fats II" manufactured by Nippon NSC Ltd. ("existing product 2 in Experimental Example 1): 1.74, and "C*DELIGHT MD01970 manufactured by Cargill Japan Limited ("existing product 4 in Experimental Example 1: 1.54). In this point, conventionally known dextrins are different from the dextrin used in the present invention.

The dextrin used in the present invention preferably further has the following characteristics (b) and (c):

> (b) having a gel strength of 4 N/cm$^2$ or more as measured after being dissolved in distilled water at 80°C to prepare a 30 wt% aqueous solution of the dextrin, and then being allowed to stand at 5°C for 24 hours, and
> (c) having a viscosity of 100 mPa·s or less as measured after being dissolved in distilled water at 25°C to prepare a 30 wt% aqueous solution of the dextrin, and then being allowed to stand at 25°C for 5 minutes.

The gel strength (b) can be obtained as follows. A 30 wt% aqueous solution of the dextrin is prepared using distilled water at 80°C and is then allowed to stand at 5°C for 24 hours, thereby obtaining a gel product (object to be measured). A load is applied to the gel product at 5°C using a plunger having a diameter of 3 mm at a plunger rate of 60 mm/min. A load (N/cm$^2$) when the gel product is ruptured by the force of the plunger is defined as the gel strength. The gel strength is usually measured using a rheometer. As used hereinafter, the "gel strength" refers to a value calculated by the method. Note that the thickness of the gel product (object to be measured) does not affect the resultant gel strength, and therefore, is not particularly limited.

The upper limit of the gel strength is not limited, and is usually 20 N/cm$^2$, for example. The gel strength (b) is preferably 5 to 20 N/cm$^2$, more preferably 6 to 10 N/cm$^2$.

The viscosity (c) can be obtained as follows. A 30 wt% aqueous solution of the dextrin is prepared using distilled water at 25°C and is then allowed to stand at 25°C for 5 minutes. Thereafter, the viscosity is obtained by one-minute measurement using a BL type rotating viscometer (rotor No. 2) at 25°C, where the frequency of rotation is 12 rpm. As used hereinafter, the "viscosity" refers to a value calculated by the method.

The lower limit of the viscosity is not limited and is usually 20 mPa·s, for example. The viscosity (c) is preferably 20 to 70 mPa·s, more preferably 30 to 65 mPa·s.

As described above, the gel strength (b) and the viscosity (c) of the dextrin used in the present invention are preferably 4 N/cm$^2$ or more and 100 mPa·s or less, respectively. For conventionally known dextrins, even when the gel strength (b) thereof is 4 N/cm$^2$ or more, the viscosity (c) thereof is more than 100 mPa·s (e.g., "PASELLI SA2 manufactured by AVEBE ("existing product 1 in Experimental Example 1: (b) 4.8 and (c) 235, "Instant N-Oils and fats II" manufactured by Nippon NSC Ltd. ("existing product 2 in Experimental Example 1: (b) 4.8 and (c) 48,000, and "C*DELIGHT MD01970 manufactured by Cargill Japan Limited ("existing product 4 in Experimental Example 1: (b) 6.9 and (c) 220), or even when a preparation is prepared under the condition (b), the preparation is liquid, but does not form a gel (e.g., "Pinedex #100 manufactured by Matsutani Chemical Industry Co., Ltd. ("existing product 3 in Experimental Example 1, "Dextrin NSD-C" manufactured by Nissi CO., LTD. ("existing product 5 in Experimental Example 1, and "Pinedex #3 manufactured by Matsutani Chemical Industry Co., Ltd. ("existing product 6 in Experimental Example 1). In this point, conventionally known dextrins are different from the dextrin used in the present invention.

Moreover, the dextrin used in the present invention preferably has the following characteristic (d) in addition to the characteristics (a), (b) and (c);

> (d) the ratio (A/B) of the following gel strengths A and B being 2 or less:

> > A: a gel strength (N/cm$^2$) as measured after being dissolved in distilled water at 80°C to prepare a 30 wt% aqueous solution of the dextrin, and then being allowed to stand at 5°C for 24 hours, and
> > B: a gel strength (N/cm$^2$) as measured after being dissolved in distilled water at 25°C to prepare a 30 wt% aqueous solution of the dextrin, and then being allowed to stand at 5°C for 24 hours.

The gel strengths A and B can be obtained as follows. Thirty wt% aqueous solutions of the dextrin are prepared using distilled water at 80°C and 25°C, respectively, and are then allowed to stand at 5°C for 24 hours. Next, a load is applied to the resultant gel products (objects to be measured) at 5°C using a plunger having a diameter of 3 mm at a plunger rate of 60 mm/min. Loads (N/cm$^2$) when the gel products are ruptured by the force of the plunger are defined as the respective gel strengths.

The lower limit of the ratio (A/B) of the gel strengths thus obtained is not limited and is generally one, for example. The ratio (A/B) of the gel strengths is preferably 1 to 2, more preferably 1 to 1.6, and even more preferably 1.3 to 1.6.

If the dextrin used in the present invention has the aforementioned characteristics, the type, DE value (dextrose equivalent), molecular weight and the like of a starch from which the dextrin is derived, are not particularly limited.

Examples of a starch which is a material for the dextrin include starches of potato, corn, sweet potato, wheat and rice, sago, tapioca and the like. The starch which is a material for the dextrin is preferably potato starch.

The DE value generally refers to a measure indicating how much a starch is decomposed, i.e., the percentage of dextrins and reducing sugars (glucose, maltose, etc.) produced by hydrolysis of a starch. The amount of all reducing sugars is calculated as glucose (dextrose) and expressed as a percentage (wt%) of the total dry solids. The larger the DE value is, the larger the reducing sugar content becomes and the smaller the dextrin content becomes. Conversely, the smaller the DE value is, the smaller the reducing sugar content becomes and the larger the dextrin content becomes. In the present invention, a dextrin is used which has a DE value which is usually, but not limited to, 2 to 5, preferably 3 to 5, and more preferably 3.5 to 4.5.

A dextrin having such a property can be obtained by hydrolysis of a starch which is a material. Examples of a method for hydrolysis of a starch include, but are not limited to, decomposition by an enzyme treatment, decomposition by an acid treatment and the like. The starch hydrolysis method is preferably decomposition by an enzyme treatment (enzymatic decomposition).

An example of a method for preparing the dextrin is as follows. Specifically, a starch containing heat-resistant $\alpha$-amylase (preferably, potato starch emulsion) is heated within the range of 70 to 100˚C, preferably within the range of 90 to 100˚C. Thereafter, the degree of progress of the enzyme decomposition is monitored using the blue value (absorbance at 680 nm) as a measure. When the blue value reaches within the desired range of 0.4 to 1.2, preferably within the range of 0.5 to 0.9, the enzyme treatment is arrested by addition of hydrochloric acid. Also, for the dextrin having a blue value within such a range, it can be determined whether or not the gel strength (b) is 4 N/cm$^2$ or more, whether or not the viscosity (c) is 100 mPa·s or less, and whether or not the ratio (A/B) of the gel strengths is 2 or less, by preparation and measurement of a 30 wt% aqueous solution in accordance with the aforementioned methods.

II. Processed food compositions

Processed food compositions to which the present invention is directed are food products which are prepared using the dextrins having the specific characteristic or characteristics described in (I) above. The processed foods include fatty tissue substitutes and processed meat foods which are prepared using the fatty tissue substitutes; emulsion-like foods which do not contain oils and fats, but have an appearance, a mouthfeel and a feel in use which are similar to those of emulsion foods containing oils and fats; emulsion foods; and cheese-like foods which contain no milk fat or a small amount of milk fat, but have an appearance, a mouthfeel and a feel in use which are similar to those of cheese, and processed foods which are prepared using the cheese-like foods, which will be described later. The emulsion foods include emulsion seasonings similar to mayonnaise, emulsion seasonings similar to ordinary emulsified dressings; spreads; emulsion foods prepared using a milk-derived material, e.g., puddings (including neutral puddings; acidic puddings such as fruit juice-containing puddings, cheese-containing puddings and the like), desserts containing a milk-derived material or vegetable oils and fats, such as cheese desserts containing cheese, almond jellies, Bavarian creams, pastry creams, custards, mousses and the like; yogurts; frozen desserts, such as ice creams, ice milks, lacto-ices, ice confectioneries (ice confectioneries containing milk or oils and fats) and the like; and whipped creams.

The processed foods also include ice confectioneries (ice confectioneries which does not contain milk or oils and fats); sugar confectioneries such as soft candies, caramels, nougats, nougats and the like; beverages; nama-chocolate-like food products (nama-chocolate is a kind of ganache in Japan), foie gras-like food products, tsuyus (a kind of soup in Japan), soups, miso soups and the like which are gel during chilled transport and are liquid when heated for eating, and the like.

These processed foods will be specifically described hereinafter. As used herein, the term "dextrin" refers to the dextrins having the specific characteristic(s) described in (I) above unless otherwise specified (also simply referred to as the "dextrin (I)").

(II-1) Fatty tissue substitute

As used herein, the term "fatty tissue" refers to fat (fatty tissue) of edible meats, such as pork, beef, chicken, horse meat, sheep meat, whale meat and the like (lard, beef fat, chicken fat, horse fat, sheep fat, whale fat). These fatty tissues are usually solids and not dissolved, i.e., has shape retentivity, at room temperature (25˚C). In this point, the fatty tissues are different from oils and fats, which are liquids (fluids) or semi-fluids at the temperature. In this sense, oils and fats, which take a liquid form at an ordinary temperature, are not included in the fatty tissue described in the present invention.

The fatty tissue substitute of the present invention is prepared using the dextrin described in (I) above, and are solids at room temperature (25˚C) like the aforementioned edible meat fatty tissue (i.e., the solids are not dissolved, exhibiting shape retentivity), and become semi-fluids or liquids (fluids) when heated, particularly at 50˚C or more.

In contrast to this, when a dextrin having a blue value of less than 0.4 is used in place of the dextrin (I), a mouthfeel (elasticity) similar to that of fatty tissue cannot be obtained, and a robust flavor specific to fatty tissue cannot be obtained, which are problems. Also, when a dextrin having a blue value of more than 1.2 is used in place of the dextrin (I), grittiness emerges, a flavor is degraded due to starch-derived flavor, and collapse occurs, and therefore, a mouthfeel (elasticity) similar to that of fatty tissue cannot be obtained, which is a problem.

Also, when a dextrin having a gel strength of less than 4 $N/cm^2$ is used in place of the dextrin (I), it may be difficult to obtain a mouthfeel (elasticity) similar to that of fatty tissue. Also, when the fatty tissue substitute is minced by a mixer, the fatty tissue substitute is cut into fine pieces which in turn become a paste, and as a result, it may be difficult to obtain a mouthfeel (elasticity) similar to that of fatty tissue as described above. Also, when a dextrin having a viscosity exceeding 100 mPa·s is used, unpleasant stickiness may be exhibited and it may be difficult to obtain a mouthfeel similar to that of fatty tissue. Moreover, when a dextrin having a viscosity of less than 20 mPa·s is used, it may be difficult to obtain a robust flavor specific to fatty tissue.

The fatty tissue substitute of the present invention can be obtained by preparing an aqueous solution containing the dextrin (I), followed by solidification by cooling. As the dextrin (I) is dissolved in at least water at 1 to 100˚C preferably by stirring, the aqueous solution can be prepared at the temperature. Also, the aqueous solution has a characteristic that it is solidified when it is allowed to stand at about 40˚C or less, preferably 25˚C or less, and more preferably 10˚C or less. The lower the temperature is within a range in which the solution is not frozen, the higher the rate of solidification becomes.

The amount of the dextrin (I) used in this case is 20 to 40 wt%, preferably 25 to 35 wt%, per final fatty tissue substitute (100 wt%), for example.

Note that the fatty tissue substitute of the present invention can be prepared using, in addition to the dextrin (I), at least one polysaccharide selected from carrageenans, guar gum, deacylated gellan gum, native gellan gum, xanthan gum, tara gum, locust bean gum, tamarind seed gum and mannan. Preferably, a carrageenan is used.

As the carrageenans, there are those of kappa type, lambda type and iota type. In the present invention, any of these carrageenans may be used. Among them, iota carrageenan is preferably used. Also, the carrageenans used in the present invention are preferably water-soluble, that is the carrageenans can be thoroughly dissolved in water by mixing and optionally stirring.

The water-soluble carrageenans preferably have, for example, at least one of the following characteristics (1) to (3), more preferably at least two of the characteristics (1) to (3), and particularly preferably all the characteristics (1) to (3).

(1) The carrageenan is soluble in water at 50˚C or less.

A preferred carrageenan used in the present invention is a water-soluble carrageenan which is thoroughly dissolved in water at 50˚C or less, more preferably a carrageenan which is dissolved in water at 5 to 40˚C, and even more preferably a carrageenan which is dissolved in water at 5 to 30˚C. Conventionally known general-purpose carrageenans are usually not dissolved in water unless being heated at 60˚C or more. In this point, conventionally known general-purpose carrageenans are different from the aforementioned carrageenan. The method of dissolving the carrageenan in water is not particularly limited. The carrageenan may be dissolved in water by optionally stirring using any stirring means, such as a whisk or the like.

(2) A 1.5 wt% aqueous solution of the carrageenan is not gelable at 25˚C.

A preferred carrageenan of the present invention is a water-soluble carrageenan whose 1.5 wt% aqueous solution is not gelable at 25˚C, more preferably a water-soluble carrageenan whose 1.8 wt% aqueous solution is not gelable at 25˚C, and even more preferably a water-soluble carrageenan whose 2.5 wt% aqueous solution is not gelable at 25˚C. For conventionally known general-purpose carrageenans, a 1.5 wt% aqueous solution thereof is gelable at 25˚C. In this point, conventionally known general-purpose carrageenans are different from the aforementioned carrageenan.

Here, the presence or absence of gelation can be evaluated by measuring a viscosity at 25˚C. Specifically, the viscosity of an object to be measured (a 1.5 to 2.5 wt% aqueous solution of the carrageenan) is measured at 25˚C by one-minute measurement using a BL type rotating viscometer (rotor No. 2) (manufactured by TOKYO KEIKI INC.), where the frequency of rotation is 12 rpm. The presence or absence of gelation is determined, depending on whether or not the viscosity is 4,000 mPa·s or less. In this case, when the viscosity is 4,000 mPa·s or less, it can be determined that gelation is absent, and when the viscosity is more than 4,000 mPa·s, it is determined that gelation is present. A preferable water-soluble carrageenan has a viscosity of 1,500 mPa·s or less as measured under the aforementioned conditions.

(3) The carrageenan contains more than 0 and not more than 0.1 wt% of calcium ions.

A preferred carrageenan used in the present invention is a water-soluble carrageenan containing more than 0 and not more than 0.1 wt% of calcium ions, more preferably a water-soluble carrageenan containing more than 0 and not more than 0.05 wt% of calcium ions.

Note that water-soluble iota carrageenan having the characteristics (1) to (3) is commercially available (e.g., "GEL RICH(trademark) No. 3 manufactured by San-Ei Gen F.F.I., Inc.).

The carrageenan is preferably used at a rate of 1 to 10 parts by weight, more preferably 3 to 6 parts by weight, per 100 parts by weight of the dextrin (I). Here, if the carrageenan content is extremely higher than 10 parts by weight

per 100 parts by weight of the dextrin (I), the viscosity of an aqueous solution for preparing a fatty tissue substitute is considerably high, so that, for example, many bubbles are incorporated, resulting in a deterioration in workability when the fatty tissue substitute is prepared.

The amount of the dextrin (I) blended to the fatty tissue substitute is 20 to 40 wt%, preferably 25 to 35 wt%, per fatty tissue substitute (100 wt%), for example. The amount of the carrageenan blended to the fatty tissue substitute is 0.1 to 4 wt%, preferably 0.5 to 2 wt%, per fatty tissue substitute (100 wt%), for example.

Guar gum is a neutral polysaccharide derived from a leguminous plant, in which $\alpha$-D-galactose is linked, as a side chain, by a 1,6 linkage to the main chain backbone of $\beta$-1,4-D-mannan. Guar gum is applied as a thickening agent to sauces, noodles, ice creams and the like in the food industry. The ratio of mannose and galactose in guar gum is about 2:1. The side chain content of guar gum is higher than those of other industrially produced galactomannans (tara gum and locust bean gum). Guar gum is also highly water-soluble. Note that purified guar gum and unpurified guar gum can both be used. Examples of commercially available guar gum products include "VIS-TOP(trademark) D-20 and "VIS-TOP(trademark) D-2029 manufactured by San-Ei Gen F.F.I., Inc., and the like.

Deacylated gellan gum is obtained by deacylating a fermented polysaccharide produced by Sphingomonas elodea. This polysaccharide is a straight chain of four repeating sugar units: D-glucose, D-glucuronic acid, D-glucose and L-rhamnose. Note that examples of commercially available products of deacylated gellan gum include GEL UP (trademark) K-S manufactured by San-Ei Gen F.F.I., Inc., "KELCOGEL" manufactured by CP Kelco, and the like.

Native gellan gum is a macromolecular polysaccharide (the melting point and the solidifying point: 65 to 70˚C) derived from a microorganism, which is available as a pre-deacylation precursor of gellan gum which is a polysaccharide (molecular weight: about 600,000 to 700,000) composed of two D-glucose molecules, one D-gluconic acid molecule and one L-rhamnose molecule (Japanese Laid-Open Patent Publication No. S55-79397). In native gellan gum, D-glucose units are linked by (1→3) linkages, and a glyceryl group is linked by an ester bond to D-glucose at the C2 position, and an acetyl group is linked by an ester bond to the C6 position (degree of substitution: about 50%). The native gellan gum is generally produced by culture of a microorganism. Specifically, for example, Sphingomonas elodea (former name: Pseudomonus elodea: ATCC31461) or an equivalent strain is inoculated in a liquid medium containing 3% of glucose, 0.05% of $KH_4NO_3$, 0.01% of $MgSO_4 \cdot 7H_2O$, 0.09% of $NH_4NO_3$, and a minor portion of organic component as a nitrogen source. The resultant medium is cultured at about 30˚C for about 50 hours under aerobic conditions. Mucilaginous substance produced on the surface of the microorganism is isolated and recovered from the resultant culture without deacylation.

As native gellan gum is derived from natural origin, its structure may vary depending on the microorganism which produces it or the purification conditions. Therefore, native gellan gum used in the present invention is not univocally defined based on any specific structural formula (Sanderson, G. R., FOOD GELS, ed. Peter Harris, Elsevier Science Publishiers LTD., England, 1990, p. 204), and may be any substance having properties equivalent to those of the native gellan gum which is produced by the aforementioned method using the microorganism (ATCC31461). Examples of commercially available native gellan gum products include "KELCOGEL LT 100 , "KELCOGEL HT" and "KELCOGEL HM" manufactured by CP Kelco, and the like.

Xanthan gum is a fermented polysaccharide produced by the microorganism Xanthomonasu campestris, which is an anionic polysaccharide in which a side chain composed of D-mannose, D-glucuronic acid and D-mannose is linked to the main chain backbone of $\beta$-1,4-D-glucan. D-mannose linked to the main chain is acetylated at the C6 position, and the terminal D-mannose has pyruvic acid and acetal linked thereto. Xanthan gum is commercially available. Specific examples of commercially available xanthan gum include "SAN ACE(trademark)", "SAN ACE(trademark) S", "SAN ACE (trademark) E-S" and "SAN ACE(trademark) C" manufactured by San-Ei Gen F.F.I., Inc., and the like.

Tara gum is a polysaccharide having an average molecular weight of about 200,000 to 300,000 derived from a leguminous plant of the genus Coulterae, in which $\beta$-D-mannose units are linked by $\beta$-1,4 linkages in the main chain, and a side chain of $\alpha$-D-galactose is linked by an $\alpha$-1,6 linkage to the main chain. The ratio of the mannose and the galactose is about 3:1. An example of commercially available tara gum products is "VIS-TOP(trademark) D-2101 manufactured by San-Ei Gen F.F.I., Inc.

Locust bean gum is a neutral polysaccharide derived from a leguminous plant in which D-galactose is linked as a side chain by an $\alpha$-1,6 linkage to the main chain backbone of $\beta$-1,4-D-mannan. The ratio of the mannose and the galactose in locust bean gum is about 4:1. Purified locust bean gum and unpurified locust bean gum are both applicable. Examples of commercially available locust bean gum products include "VIS-TOP(trademark) D-171 and "VIS-TOP(trademark) D-2050 manufactured by San-Ei Gen F.F.I., Inc., and the like.

Tamarind seed gum contains a polysaccharide derived from seeds of tamarind as a major component. Examples of commercially available tamarind seed gum products include "VIS-TOP(trademark) D-2032 and "VIS-TOP(trademark) D-2033 manufactured by San-Ei Gen F.F.I., Inc.

Mannan is a storage polysaccharide contained in tubers of AmorphophalluskonjacK.Koch of the family Araceae. The ratio of D-glucose and D-mannose in mannan is about 2:3, where D-glucose and D-mannose are linked by $\beta$-1,4 linkages. An example of commercially available mannan products is "VIS-TOP(trademark) D-2131(D)" manufactured by San-Ei Gen F.F.I., Inc.

The additive amount of at least one polysaccharide selected from the group consisting of guar gum, deacylated gellan gum, native gellan gum, xanthan gum, tara gum, locust bean gum, tamarind seed gum and mannan, to the fatty tissue substitute is 0.1 to 5 wt%, preferably 0.3 to 2 wt%, for example.

When the dextrin (I) is used in combination with the polysaccharides such as a carrageenan et al., the fatty tissue substitute of the present invention can be obtained by preparing an aqueous solution containing the dextrin (I) and the polysaccharide in the aforementioned percentages, followed by solidification by cooling. For example, when a carrageenan is used, the aqueous solution can be prepared, but is not particularly limited to, at 5 to 100°C, as the carrageenan is dissolved usually in water at the temperature, preferably by stirring. Also, the aqueous solution has the property of solidifying when it is allowed to stand at a temperature of 40°C or less, preferably 25°C or less, and more preferably 10°C or less.

The aqueous solution containing the dextrin (I) and the polysaccharide can be prepared by, but is not particularly limited to, the following methods:

(1) a method of dissolving in water a mixture of powder of the polysaccharide and the dextrin (I) which is previously prepared,
(2) a method of adding the polysaccharide to an aqueous solution in which the dextrin (I) is dissolved, followed by stirring and mixing,
(3) a method of adding the dextrin (I) to an aqueous solution in which the polysaccharide is dissolved, followed by stirring and mixing, and
(4) a method of separately preparing an aqueous solution of the dextrin (I) and an aqueous solution of the polysaccharide before mixing the aqueous solutions.

Among the aforementioned methods, the method (1) is preferable. The method (1) can be used to prepare a smoother fatty tissue substitute having higher workability.

A thickening agent, a gelling agent, an emulsifying agents, an aroma chemical, a sweetener, a colorant or the like can be added to the fatty tissue substitute of the present invention as appropriate, as long as the advantages of the present invention are not hindered.

The fatty tissue substitute of the present invention can be processed into any various shapes in use. Specifically, the fatty tissue substitutes may be cut, sheared, minced or ground manually or mechanically (by a food cutter, a silent cutter, a mincer, etc., for example) into any shape. When the fatty tissue substitute is minced into pieces, each piece preferably has a diameter of 0.5 to 10 mm, more preferably about 3 to 5 mm, although not particularly limited to this. By using the fatty tissue substitute minced into pieces having such a size for preparation of, particularly, processed meat foods, such as coarse-ground sausage, hamburg and the like, a fatty tissue-specific mouthfeel, juiciness and oils and fats enriched properties can be imparted to the processed meat foods.

When the fatty tissue substitute is sheared or minced using a machine, the fatty tissue substitute is preferably prepared using the dextrin (I) and a carrageenan. In this case, a processed product does not completely becomes a paste, and includes solid pieces cut out from the fatty tissue substitute, whereby a mouthfeel specific to fatty tissue (fat), such as lard, beef fat or the like, can be imparted to processed meat foods, such as coarse-ground sausage, hamburg and the like.

The fatty tissue substitute thus prepared is in a solid state at room temperature (25°C) like edible meat fatty tissue, and has the property of becoming semi-fluid or liquid (fluid) when heated, particularly at 50°C or more, as described above. In addition, when the fatty tissue substitute is cooled back to about room temperature (25°C), the fatty tissue substitute is solidified to a solid state again. Therefore, when the fatty tissue substitute of the present invention is blended as a substitute for fatty tissue (fat), such as lard, beef fat or the like, to processed meat foods, juiciness (a feel of meat juice) similar to that of fatty tissue, or fatty tissue-specific richness or firmness (mouthfeel), can be imparted to the processed meat foods.

Also, the fatty tissue substitute of the present invention can be prepared at temperature which is room temperature or less, and can be easily handled at the temperature. This is a significant advantage when the fatty tissue substitute of the present invention is used as a material for processed meat foods which are produced and managed at low temperature. Specifically, there is often no heating equipment in an processing area where processed meat products, such as ham, sausage and the like, are produced and managed at a temperature of as low as 10°C or less (temperature of the product) before a heat treatment. The fatty tissue substitute of the present invention can be produced using the existing equipment without newly introducing heating equipment to the processing area, and therefore, can be directly used as a material for producing the processed meat foods.

(II-2) Processed foods prepared using fatty tissue substitute

The present invention is directed to processed foods in which the whole or a part of the fatty tissue of edible meat which is originally blended thereto is replaced with the fatty tissue substitute.

Specifically, examples of the processed foods include processed meat foods, such as sausage, ham, bacon, salami, meatloaf, hamburg, hamburger patty, menchi katsu, croquette, meatball, tsukune, dumpling, shaomai and steamed meat bun. Among them, a preferred processed meat food is sausage for which importance is put on the presence (mouthfeel) and juiciness of fatty tissue, particularly coarse-ground sausage. Here, coarse-ground sausage to which the present invention is directed generally refers to sausage which includes fatty tissue solids of edible meat. The type of meat for the sausage and its production method are not particularly limited.

The processed foods of the present invention can be prepared using generally used material and method, except that the aforementioned fatty tissue substitute is used in place of fatty tissue. For example, hamburg, meatball and the like can be prepared by a method of mincing the fatty tissue substitute of the present invention which is previously prepared, in a manner similar to that of ground meat, before mixing it with other materials. Also, sausage can be prepared by a method of adding the fatty tissue substitute of the present invention in place of the whole or a part of fatty tissue, such as lard or the like, when the fatty tissue is added. Moreover, ham can be prepared by, for example, a method of dissolving the fatty tissue substitute of the present invention in a pickle solution and injecting the resultant solution into a material meat.

Moreover, coarse-ground sausage can be prepared using a generally used material and method, except that the fatty tissue substitute is used in place of fatty tissue. For example, coarse-ground sausage can be prepared by, but is not particularly limited to, the following method:

(1) initially, curing agents, such as common salt, sodium nitrite, sodium ascorbate, polymeric phosphate and the like, are added to and mixed with meat and the fatty tissue substitute of the present invention, and the mixture is allowed to stand in a refrigerator overnight, and
(2) thereafter, seasonings, such as ice-cold water, sodium casein, sugar, potassium sorbate, a flavoring and the like, are added to the mixture, followed by mixing. The resultant mixture is stuffed into a sausage casing, followed by a heat treatment.

Examples of meat used include, but are not particularly limited to, any edible meats, such as beef, pork, chicken, duck meat, sheep meat, horse meat and the like. Typically, beef or pork is used.

As described above, by using the fatty tissue substitute of the present invention in place of fatty tissue generally used (the whole or a part of fat tissue), depending on the type of a processed meat product, a processed food including the fatty tissue substitute of the present invention in place of fatty tissue can be prepared.

The percentage of the fatty tissue substitute in the processed food of the present invention can be adjusted as appropriate, depending on the type of the processed food and the amount of fatty tissue which is originally blended thereto. The percentage of the fatty tissue substitute per processed food (100 wt%) is preferably 1 to 50 wt%, more preferably 5 to 20 wt%, for example. Likewise, for coarse-ground sausage, the percentage of the fatty tissue substitute per coarse-ground sausage (100 wt%) is preferably 1 to 50 wt%, more preferably 5 to 20 wt%, for example.

By using the fatty tissue substitute of the present invention in the aforementioned percentages, juiciness and richness (fattiness) specific to processed meat foods can be imparted to processed meat foods, such as coarse-ground sausage and the like. Also, as the fatty tissue substitute of the present invention basically includes the dextrin, or the dextrin (I) and a carrageenan which is described above, as a major ingredient, processed meat foods which contain the fatty tissue substitute of the present invention in place of fatty tissue, have the aforementioned juiciness and richness (fattiness) specific to processed meat foods, but have a low calorie value and a low fat content.

Note that a thickening agent, a gelling agent, an emulsifying agents, an aroma chemical, a sweetener, a colorant or the like can be added to the fatty tissue substitute of the present invention as appropriate, as long as the advantages of the present invention are not hindered.

(II-3) Emulsion-like foods

Emulsion-like foods to which the present invention is directed are non-emulsion processed foods which are prepared using the dextrin described in (I) above, and which do not contain oils and fats, but have an appearance, a mouthfeel and a feel in use which are similar to those of emulsion foods which are prepared by emulsifying oils and fats.

Note that the aforementioned emulsion foods include dressings, mayonnaises, sauces, pastry creams, spreads (butters, margarines, fat spreads, butter creams) and cheeses. Also, the aforementioned feel in use includes a feel of a spread or the like which is felt when you pick it up with a knife, and a feel of the spread which is felt when you spread it on bread or the like (feel-in-spreading).

Note that the aforementioned dressings, mayonnaises, pastry creams, butters, margarines and fat spreads include those defined in the Japanese Agricultural Standards Association (JAS) shown in Table 1.

[Table 1]

| | Definition |
|---|---|
| Dressing | The following products are defined as dressing: 1. oil-in-water type semi-solid or liquid emulsion seasonings or separated liquid seasonings prepared by adding common salt, sugars, spices and the like to edible vegetable oils and fats (excluding flavoring edible oils, the same is true in the description which follows) and vinegar or citrus fruit juice (these are referred to hereinafter as "essential materials"), which are mainly used for salad. 2. seasonings described in (1) above that additionally contain small pieces of pickles. |
| Semi-solid dressing | Dressing having a viscosity of 30 Pa·s or more. |
| Emulsion liquid dressing | Dressing that is emulsion liquid and has a viscosity of less than 30 Pa·s. |
| Salad creamy dressing | Semi-solid dressing which contains egg yolk and starch or a thickener, and does not contain materials other than the essential materials, egg yolk, egg white, starches, protein hydrolysates, common salt, sugars, spices, emulsifiers, thickeners, seasonings (amino acids, etc.), acidulants and colorants. |
| Mayonnaise | Semi-solid dressing which contains egg yolk or whole egg, and does not contain materials other than the essential materials, egg yolk, egg white, protein hydrolysates, common salt, sugars, spices, seasonings (amino acids, etc.) and acidulants. |
| Pastry cream | Edible paste product sterilized by heating, which contains, as major ingredients, wheat flour, starches, nuts or their processed products, cocoa, chocolate, coffee, fruit flesh, fruit juice, root vegetables, beans, and vegetables, and additionally contains sugar, oils and fats, powdered milk, egg and the like, and is stuffed into or applied onto bread or confectionery. |
| Butter | Product which is prepared by churning milk fat components of cream separated from milk into an aggregation, and contains no oils and fats (vegetable oils and fats, etc.) other than milk fats |
| Margarine | Plastic or fluid product that is prepared by adding water or the like to edible oils and fats (containing no milk fat, or not containing milk fat as a major ingredient, the same is true in the description that follows), followed by emulsification, with or without kneading while rapidly cooling, and has a content of oils and fats (percentage by weight of the edible oils and fats in the product) of 80% or more. |
| Fat spread | The following products that have a content of oils and fats of less than 80%: 1. plastic or fluid product that is prepared by adding water or the like to edible oils and fats, followed by emulsification, with or without kneading while rapidly cooling. 2. plastic product that is prepared by adding water or the like to edible oils and fats, followed by emulsification, adding a flavoring material, such as fruit, a processed product of fruit, chocolate, nut paste or the like, and kneading while rapidly cooling, where the percentage of the flavoring material in the overall materials is lower than the oils and fats content. |

Also, the aforementioned cheeses include natural cheeses (non-matured (fresh) cheeses, matured cheeses), processed cheeses and cheese spreads. Non-matured cheeses are natural cheeses which are generally produced without a maturing step. Examples of non-matured cheeses include creams (generally: 33 wt%), mozzarellas (generally: 44 wt%) and the like (note that a value in the parentheses indicates a standard milk fat content, the same is true in the description which follows). Matured cheeses are natural cheeses which are generally produced via a maturing step. Examples of matured cheeses include Cheddar (generally: 33.8 wt%), Gouda (generally: 29 wt%), Edam (generally: 25 wt%), Emmental (generally: 33.6 wt%), Camembert (generally: 24.7 wt%) and the like.

The amount of the dextrin (I) blended to the emulsion-like food of the present invention is generally 5 to 30 wt%, preferably 8 to 20 wt%, and more preferably 10 to 16 wt%, for example.

In contrast to this, when a dextrin having a blue value of less than 0.4 is used in place of the dextrin (I), cloudiness and oils and fats enriched properties specific to emulsion foods cannot be obtained, resulting in a watery emulsion-like food. Also, when a dextrin having a blue value of more than 1.2 is used in place of the dextrin (I), the resultant emulsion-like food has grittiness or strong starch-derived flavor, resulting in poor flavor. Also, when a dextrin having a gel strength of less than 4 N/cm$^2$ is used in place of the dextrin (I), a large amount of the dextrin is required to prepare an emulsion-like food, likely leading to a gritty mouthfeel, or an influence on a feel in use. Also, when a dextrin having a viscosity significantly exceeding 100 mPa·s is used, the prepared emulsion-like food may have a reduced mouthfeel or smoothness in use, and may have unpleasant stickiness. Moreover, when a dextrin having a viscosity significantly exceeding less than 20 mPa·s is used, it may be difficult to obtain robustness and oils and fats enriched properties specific to emulsion foods.

The emulsion-like food of the present invention is preferably prepared using, in addition to the dextrin (I), at least one polysaccharide selected from xanthan gum, guar gum, locust bean gum, tara gum, tamarind seed gum, bacterial cellulose and native gellan gum. More specifically, the emulsion-like food of the present invention can be obtained by preparing an aqueous solution containing the dextrin (I) and at least one of the aforementioned polysaccharides, followed by cooling. A preferable polysaccharide is xanthan gum.

In the present invention, among the aforementioned polysaccharides, it is preferable to use xanthan gum having an acetyl group content of 0 to 1%. If the xanthan gum is used, then particularly when an emulsion-like food similar to an acidic emulsion food, such as mayonnaise, dressing or the like, is prepared, syneresis with time or a change in viscosity with time is suppressed in the emulsion-like food, resulting in high stability during preservation, as compared to when xanthan gum having an acetyl group content of about 2 to 6% is used. The xanthan gum is commercially available. Examples of commercially available xanthan gum include "SAN ACE(trademark) NXG-C" and "SAN ACE (trademark) NXG-S" manufactured by San-Ei Gen F.F.I., Inc., and the like.

As used herein, the term "bacterial cellulose" refers to considerably fine fibrous cellulose which is isolated and recovered from acetic acid bacteria which are industrially cultured with aeration while being stirred. For example, the bacterial cellulose can be produced by carrying out culturing using a method described in Japanese Laid-Open Patent Publication No. S61-212295, Japanese Laid-Open Patent Publication No. H03-157402, or Japanese Laid-Open Patent Publication No. H09-121787, and appropriately purifying the resultant bacterial cellulose as required. Examples of commercially available bacterial cellulose products include "SAN ARTIST(trademark) PX" and "SAN ARTIST(trademark) PG" manufactured by San-Ei Gen F.F.I., Inc., and the like.

The percentages of the dextrin (I) and the aforementioned polysaccharide used in preparation of the emulsion-like food of the present invention can be adjusted as appropriate, depending on the type of an emulsion-like food to be prepared. Specifically, the percentage of the dextrin (I) in the emulsion-like food (100 wt%) is 5 to 30 wt%, preferably 10 to 20 wt%, for example, and the percentage of the total amount of polysaccharide(s) is 0.01 to 0.5 wt%, preferably 0.05 to 0.2 wt%, for example, although the present invention is not limited to this. Also, the percentage of water contained in the emulsion-like food (100 wt%) is 40 to 90 wt%, more preferably 60 to 80 wt%, for example.

The emulsion-like food of the present invention may basically contain the dextrin (I) and water, preferably the dextrin (I), at least one of the aforementioned polysaccharides and water, and its production method is not particularly limited. Typically, the emulsion-like food of the present invention can be prepared by dissolving, in water, the dextrin (I) and another food product material(s) required for preparation of the emulsion-like food, or the dextrin (I), at least one of the aforementioned polysaccharides and another food product material(s) required for preparation of the emulsion-like food, followed by cooling. An aqueous solution containing the dextrin (I) and the aforementioned polysaccharide can be prepared by, but is not particularly limited to, any of the following methods (1) to (4):

(1) a method of dissolving in water a mixture of powder of the polysaccharide and the dextrin (I) which is previously prepared,
(2) a method of adding the polysaccharide to an aqueous solution in which the dextrin (I) is dissolved, followed by stirring and mixing,
(3) a method of adding the dextrin (I) to an aqueous solution in which the polysaccharide is dissolved, followed by stirring and mixing, and
(4) a method of separately preparing an aqueous solution of the dextrin (I) and an aqueous solution of the polysaccharide before mixing the aqueous solutions.

Among the aforementioned methods, the method (1) is preferable. By cooling an aqueous solution prepared by these methods in a refrigerator (e.g., about 5°C), an emulsion-like food which does not contain oils and fats, but has an oil- and fat-specific smooth and robust mouthfeel and moreover emulsion-specific cloudiness and surface glossiness, can be obtained without homogenization (emulsification).

Note that, as water used in preparation of the aqueous solution, various kinds of water can be used, including tap water, distilled water, ion-exchanged water (pure water), mineral water containing minerals and the like.

The emulsion-like food of the present invention may further contain at least one selected from the group consisting of gum ghatti and gum arabic, in addition to the aforementioned dextrin (I) and polysaccharides. By using gum ghatti and/or gum arabic, fluidity can be imparted to the emulsion-like food, whereby the gelation of the emulsion-like food can be suppressed, and as a result, it is possible to prepare liquid, semi-liquid (paste-like or cream-like) and solid emulsion-like foods which also have sufficient smoothness and creaminess.

Gum ghatti is a gum substance which contains as a major component a polysaccharide which is obtained by dying secretory fluid from a trunk of Anogeissus Latifolia WALL., and is generally used as a food thickener (food additive). Generally, gum ghatti is a water-soluble gum substance which is dissolved up to about 30 wt% at room temperature or by heating at a temperature higher than room temperature. Gum ghatti is commercially available. An example of commercially available gum ghatti is "GHATTIFOLIA SD" manufactured by San-Ei Gen F.F.I., Inc.

Gum arabic is a water-soluble heteropolysaccharide which is contained in tree sap of a plant of the genus Acacia in the family Fabaceae. Although the molecular structure of gum arabic has not been clarified, it is known that gum arabic contains galactose, arabinose, rhamnose and glucuronic acid as constituent sugars, and a small amount of proteins. Also, it has been reported that the average molecular weight is 200,000 to 580,000. Examples of gum arabic used in the field of the food industry include, but are not particularly limited to, those derived from Acacia senegal and Acacia seyal. An example of commercially available gum arabic product is "GUMARABIC SD" manufactured by San-Ei Gen F.F.I., Inc., for example.

The amount of gum ghatti and/or gum arabic blended to the emulsion-like food of the present invention can be adjusted as appropriate, depending on the type of an emulsion-like food to be prepared or a material used in combination therewith. Generally, the total amount of gum ghatti and gum arabic per emulsion-like food (100 wt%) is 0.05 to 5 wt%, more preferably 0.1 to 1 wt%.

In the emulsion-like food of the present invention, crystallization of the dextrin (I) which may occur during long-term preservation can be significantly suppressed by further using a surfactant. As a result, a smooth mouthfeel and a feel in use can be maintained for a long period of time. Here, examples of the surfactant include, but are not limited to, those which are used as ordinary food emulsifying agents, such as monoglycerides of organic acids (e.g., citric acid, succinic acid, lactic acid, etc.), polyglycerides of organic acids, glycerol esters of fatty acids, polyglycerol esters of fatty acids, sucrose esters of fatty acids, sorbitan esters of fatty acids, propylene glycol esters of fatty acids, lecithin and the like. The surfactant is preferably at least one selected from the group consisting of glycerol esters of fatty acids, monoglyceride citrates and monoglyceride succinates, more preferably at least one selected from the group consisting of monoglyceride citrates and monoglyceride succinates. Also, the total additive amount of the surfactant per emulsion-like food (100 wt%) is preferably 0.01 to 0.5 wt%, more preferably 0.05 to 0.2 wt%, for example.

Moreover, a thickening agent, a gelling agent, an emulsifying agent, an aroma chemical, a sweetener, a colorant or the like can be added to the emulsion-like food of the present invention as appropriate, as long as the advantages of the present invention are not hindered.

Emulsion-like foods to which the present invention is directed include food products which do not contain oils and fats and are prepared without necessarily requiring homogenization or the like. The emulsion-like foods have an appearance (emulsion-specific cloudiness and surface glossiness), a mouthfeel (smoothness and robustness of oils and fats) and a feel in use which are similar to those of emulsion foods which are prepared by emulsifying oils and fats (mayonnaises, dressings, sauces, pastry creams, spreads (butters, margarines, fat spreads, butter creams, etc.), etc.). Also, the emulsion-like foods do not contain oils and fats, and therefore have a low calorie value. Moreover, the emulsion-like foods of the present invention have good stability even in a low-pH region of, for example, pH 4 to 2.8.

Oil- and fat-free emulsion-like foods to which the present invention is directed include "mayonnaise-like seasonings" having an appearance, a mouthfeel and a feel in use similar to those of mayonnaise, and "dressing-like seasonings" having an appearance, a mouthfeel and a feel in use similar to those of emulsified dressing. The "mayonnaise-like seasonings" and "dressing-like seasonings" can be prepared by the following method.

(1) Initially, the dextrin (I), and optionally, at least one polysaccharide selected from xanthan gum, guar gum, locust bean gum, tara gum, tamarind seed gum, bacterial cellulose and native gellan gum, sugar, gum ghatti and/or gum arabic, and an emulsifying agent are added to water as appropriate, and are then dissolved at 70 to 90°C for about 5 to 30 minutes while heating.

(2) Seasonings, such as vinegar, fruit juice, salt and the like, are added to the resultant mixture as appropriate, and the mixture is poured into a container, which is then sealed while the temperature is maintained (hot-fill packaging), followed by cooling in a refrigerator.

Also, the oil- and fat-free emulsion-like foods to which the present invention is directed include "margarine-like food products" having an appearance, a mouthfeel and a feel in use which are similar to those of margarines, such as margarine, fat spread and the like. The "margarine-like food products" can be prepared by the following method.

Initially,: the dextrin (I), and optionally, at least one polysaccharide selected from xanthan gum, guar gum, locust bean gum, tara gum, tamarind seed gum, bacterial cellulose and native gellan gum, and common salt are added to water as appropriate, and are then dissolved at 70 to 90˚C for about 5 to 30 minutes while heating, and water is then added so that the total amount becomes 100 wt%. Thereafter, the prepared aqueous solution is poured into a container by hot-fill packaging, and is then cooled to room temperature, followed by cooling in a refrigerator (5˚C) for three days.

Also, the oil- and fat-free emulsion-like foods to which the present invention is directed include "pastry cream-like food products" having an appearance, a mouthfeel and a feel in use which are similar to those of pastry cream. The "pastry cream-like food products" can be prepared by adding, to water, the dextrin (I), and optionally, at least one polysaccharide selected from xanthan gum, guar gum, locust bean gum, tara gum, tamarind seed gum, bacterial cellulose and native gellan gum, gum ghatti and/or gum arabic, an emulsifying agent and the like, and then adding, to the resultant mixture, components such as starch, wheat flour, carbon hydrate, a protein material and the like, followed by stirring while heating, to gelatinize and swell the wheat flour and the starch.

Moreover, the oil- and fat-free emulsion-like foods to which the present invention is directed include "cheese-like foods" having an appearance and a mouthfeel which are similar to those of cheese. The cheese-like foods can be prepared by adding, to water, the dextrin (I), and optionally, at least one polysaccharide selected from xanthan gum, guar gum, locust bean gum, tara gum, tamarind seed gum, bacterial cellulose and native gellan gum, gum ghatti and/or gum arabic and the like, followed by dissolution and then cooling. Note that, when the cheese-like foods are prepared, at least one select from the group consisting of whey protein, methyl cellulose, curdlan and deacylated gellan gum is preferably used in combination therewith. These can be added in a manner similar to that of the aforementioned polysaccharides, in addition to the dextrin (I), to prepare the cheese-like foods.

Note that the technique of the emulsion-like foods provided by the present invention can be applied to compositions, such as cosmetic products and the like, in addition to food products. Specifically, by using the dextrin (I), or preferably the dextrin (I) and at least one polysaccharide selected from xanthan gum, guar gum, locust bean gum, tara gum, tamarind seed gum, bacterial cellulose and native gellan gum, it is possible to prepare compositions similar to emulsions, which have oil- and fat-specific smoothness, and emulsion-specific cloudiness and surface glossiness, without using oils and fats (or without necessarily requiring homogenization).

Specifically, for example, cosmetic products which do not contain oils and fats, but have an appearance and a characteristic similar to those of emulsions, can be prepared by adding, to water, the dextrin (I), and optionally, at least one polysaccharide selected from xanthan gum, guar gum, locust bean gum, tara gum, tamarind seed gum, bacterial cellulose and native gellan gum, gum ghatti and/or gum arabic, an emulsifying agent and the like, dissolving the mixture at 70 to 90˚C for 5 to 30 minutes while heating, and adding other components, such as a preservative, a colorant and the like, to the mixture as appropriate, followed by deaeration, filtration, cooling and the like, and then pouring the mixture into a container.

### (II-4) Emulsion foods

The present invention provides emulsion foods which are prepared using the dextrin described in (I) above. Emulsion foods to which the present invention is directed include food products which are prepared using a milk-derived material, such as, for example, desserts such as puddings (neutral puddings; acidic puddings such as fruit juice-containing puddings, cheese-containing puddings and the like), almond jellies, Bavarian creams, pastry creams, custards, mousse and the like, yogurts, frozen desserts such as ice creams, ice milks, lacto-ices, ice confectioneries and the like, whipped creams and milk chocolates; and food products which are prepared using oils and fats, such as, for example, mayonnaise-like seasonings, dressings, sauces, spreads (margarines, fat spreads, cheese spreads, butter creams, etc.) and the like.

The dextrin (I) can replace oils and fats (including oil and fat derived from milk) which are generally blended to the aforementioned various emulsion foods. Therefore, by using the dextrin (I), the aforementioned various emulsion foods can be prepared using a smaller amount of oils and fats (including oil and fat derived from milk) than a general blend amount. As a result, low-calorie and low-fat (low-oils and fats) emulsion foods can be provided. For example, low-calorie and low-fat emulsion foods to which the present invention is directed include mayonnaise-like emulsion seasonings or spreads (margarines, fat spreads, cheese spreads, butter creams, etc.), which contain a smaller amount of oils and fats than that of ordinary mayonnaises or spreads defined by the Japanese Agricultural Standards Association, but have an appearance and a mouthfeel (smoothness, robustness, etc.) which are similar to those of ordinary mayonnaises or spreads.

In contrast to this, when a dextrin having a blue value of less than 0.4 is used in place of the dextrin (I), oils and fats enriched properties specific to emulsion foods cannot be obtained, resulting in a watery emulsion-like food. Also, when a dextrin having a blue value of more than 1.2 is used in place of the dextrin (I), the emulsion-like food has grittiness or strong starch-derived flavor, resulting in poor flavor. Also, when a dextrin having a gel strength of less than 4 N/cm$^2$ is used in place of the dextrin (I), a large amount of the dextrin is required to prepare an emulsion-like food, likely leading to gritty mouthfeel, or an influence on a feel in use. Also, when a dextrin having a viscosity significantly exceeding 100 mPa·s is used, the prepared emulsion-like food may have a reduced mouthfeel and smoothness in use, and may have unpleasant stickiness. Moreover, when a dextrin having a viscosity significantly falling below 20 mPa·s is used, it may be difficult to obtain robustness and oils and fats enriched properties specific to emulsion foods.

Also, by using the dextrin (I), it is possible to prepare emulsion foods which have a mouthfeel (richness, oils and fats enriched properties, body and a smooth mouthfeel) and a flavor (a milk-rich flavor, etc.) which are similar to those which are obtained when the content of oils and fats (including oil and fat derived from milk) is increased, without increasing the content of oils and fats (including oil and fat derived from milk). In this regard, the present invention also provides a method of preparing emulsion foods, particularly a method of enhancing a mouthfeel, such as richness, oils and fats enriched properties, body or the like, and a milk-rich flavor of the emulsion foods by using the dextrin (I).

(II-4-1) Emulsion seasonings

Emulsion seasonings to which the present invention is directed include mayonnaises, dressings and sauces which contain oils and fats. Preferable emulsion seasonings are mayonnaises, dressings and sauces having a low oils and fats content (low-fat emulsion seasonings). More preferable emulsion seasonings are mayonnaise-like seasonings having a low content of oils and fats (low-fat mayonnaise-like seasonings), and dressings having a low content of oils and fats (low-fat dressings).

Whereas mayonnaise (Japanese Agricultural Standard) generally contains 65 to 80 wt% of oils and fats, low-fat mayonnaise-like seasonings to which the present invention is directed have an oils and fats content of 50 wt% or less, preferably 40 wt% or less, and more preferably 15 wt% or less. Note that the lower limit of the oils and fats content is, for example, but is not particularly limited to, 0.01 wt%. As described above, the low-fat mayonnaise-like seasonings of the present invention have a low content of oils and fats, but have an appearance (cloudiness and surface glossiness), a mouthfeel (including smoothness and melting in the mouth), robustness (oils and fats enriched properties) and a viscosity which are similar to those of ordinary mayonnaises. This is achieved by using the dextrin described in (I) above.

As used herein, the term "viscosity" refers to a viscosity which is measured by one-minute measurement at 25°C using a Brookfield viscometer, where the frequency of rotation is 5 rpm. Under this condition, ordinary mayonnaises containing 65 to 80 wt% of oils and fats have a viscosity of 80,000 to 180,000 mPa·s, and the low-fat mayonnaise-like seasonings of the present invention can be prepared to have a viscosity similar to this.

The percentage of the dextrin (I) used in formation of the low-fat mayonnaise-like seasonings of the present invention having the aforementioned characteristics, can be adjusted as appropriate generally within the range of 0.1 to 20 wt%, preferably within the range of 0.5 to 10 wt%, and more preferably within the range of 1 to 8 wt%, depending on the oils and fats content of the low-fat mayonnaise-like seasoning. A low-fat mayonnaise-like seasoning similar to ordinary mayonnaises can be prepared using a smaller amount of the dextrin (I) if the amount of oils and fats blended to the low-fat mayonnaise-like seasoning is larger.

Likewise, although emulsified dressings, such as Thousand Island dressing and the like, generally contain 30 to 50 wt% of oils and fats, low-fat dressings to which the present invention is directed have an oils and fats content of 25 wt% or less, preferably 20 wt% or less. Note that the lower limit of the oils and fats content is, for example, but is not particularly limited to, 0.01 wt%.

As described above, the low-fat dressings of the present invention have a low content of oils and fats, but have an appearance (cloudiness and surface glossiness), a mouthfeel (including smoothness and melting in the mouth), and robustness (oils and fats enriched properties) which are similar to dressings whose oils and fats content is not reduced. This is achieved by using the dextrin described in (I) above.

The percentage of the dextrin (I) used in preparation of the low-fat dressings of the present invention having the aforementioned characteristics, can be adjusted as appropriate generally within the range of 0.1 to 20 wt%, preferably within the range of 0.5 to 10 wt%, and more preferably within the range of 1 to 8 wt%, depending on the oils and fats content of the low-fat dressing.

On the other hand, even for emulsified dressings having an oils and fats content of 30 to 50 wt%, higher richness and a feel of high quality can be imparted thereto by adding about 1 to 3 wt% of the dextrin (I).

Note that the low-fat emulsion seasonings of the present invention, such as low-fat mayonnaise-like seasonings, low-fat dressings and the like, preferably contain the aforementioned additive amount of the dextrin (I). Preferably, as the oils and fats content of the low-fat emulsion seasoning is decreased, the additive amount of the dextrin (I) is increased. Also, in this case, the low-fat emulsion seasonings of the present invention are prepared using, in addition to the dextrin (I), at least one polysaccharide selected from xanthan gum, guar gum, locust bean gum, tara gum, tamarind seed gum, bacterial cellulose and native gellan gum. More specifically, the low-fat emulsion seasonings of the present invention can be prepared by preparing an aqueous solution containing the dextrin (I) and at least one of the aforementioned polysaccharides and cooling the aqueous solution.

The additive amounts of these polysaccharides to the low-fat emulsion seasoning are not particularly limited, and can be adjusted as appropriate, depending on the content of dextrin (I) or oils and fats of the low-fat emulsion seasoning. As a preferred additive amount, the total amount of the polysaccharide(s) per low-fat emulsion seasoning is 0.01 to 5 wt%, preferably 0.03 to 3 wt%, and more preferably 0.05 to 1.5 wt%, for example.

An example of the polysaccharides is preferably xanthan gum. Particularly, it is preferable to use xanthan gum having an acetyl group content of 0% to 1%. If this xanthan gum is used, then even when an emulsion seasoning having a pH of as low as 2.8 to 3.4 is prepared, it is possible to obtain a low-fat emulsion seasoning whose syneresis with time and change in viscosity with time are suppressed, resulting in high stability of preservation, as compared to when xanthan gum having an acetyl group content of about 2 to 6% is used. Note that, as the xanthan gum used here, the xanthan gum described in (II-3) above can be similarly used.

Moreover, at least one of gum ghatti and gum arabic may be blended to the low-fat emulsion seasonings of the present invention. By using gum ghatti and/or gum arabic, fluidity can be imparted to the low-fat emulsion seasonings, whereby the gelation of the low-fat emulsion seasonings can be suppressed. As a result, it is possible to obtain liquid or semi-liquid (paste or cream) emulsion seasonings having sufficient smoothness and creaminess. As the gum ghatti and gum arabic used here, the gum ghatti and gum arabic described in (II-3) above can be similarly used.

The amount of gum ghatti and/or gum arabic blended to the low-fat emulsion seasoning of the present invention can be adjusted as appropriate, depending on a material used in preparation of the emulsion seasoning. Generally, the total amount of gum ghatti and gum arabic per low-fat emulsion seasoning (100 wt%) is 0.05 to 5 wt%, more preferably 0.1 to 1 wt%.

In the low-fat emulsion seasonings of the present invention, crystallization of the dextrin (I) which may occur during long-term preservation can be significantly suppressed by further using an emulsifying agent. As a result, a smooth mouthfeel and a feel in use can be maintained over a long period of time. Here, examples of the emulsifying agent include, but are not particularly limited to, any ordinary edible emulsifying agents, such as monoglycerides of organic acids (e.g., citric acid, succinic acid, lactic acid, etc.), polyglycerides of organic acids, glycerol esters of fatty acids, polyglycerol esters of fatty acids, sucrose esters of fatty acids, sorbitan esters of fatty acids, propylene glycol esters of fatty acids, lecithin and the like. The emulsifying agent is preferably at least one selected from the group consisting of glycerol esters of fatty acids, monoglycerides of citric acid and monoglycerides of succinic acid, more preferably at least one selected from the group consisting of monoglycerides of citric acid and monoglycerides of succinic acid. Also, the total additive amount of the emulsifying agent per low-fat emulsion seasoning (100 wt%) is preferably 0.01 to 0.5 wt%, more preferably 0.05 to 0.2 wt%, for example.

Moreover, a thickening agent, a gelling agent, an aroma chemical, a sweetener, a colorant or the like can be added to the emulsion seasonings of the present invention as appropriate, as long as the advantages of the present invention are not hindered.

As described above, the low-fat mayonnaise-like seasonings to which the present invention is directed have an appearance, a mouthfeel, richness (oils and fats enriched properties) and a viscosity which are similar to those of ordinary mayonnaises, and in addition, shape retentivity which is the same as or higher than that of ordinary mayonnaises. Therefore, the low-fat mayonnaise-like seasonings of the present invention can maintain their shapes for a long time when they are extruded by squeezing a container (shape retentivity, the ability to be shaped).

The low-fat mayonnaise-like seasonings of the present invention can be prepared by, but is not limited to, the following method:

The dextrin (I) and sugar, and optionally a polysaccharide, are added to water, and the mixture is stirred, followed by cooling to 25˚C. Thereafter, egg yolk is mixed with the mixture, and common salt, sodium L-glutamate and brewed vinegar are added and mixed thereto. Vegetable oils and fats are added little by little while stirring, followed by emulsification using a colloid mill.

Likewise, the low-fat dressings to which the present invention is directed have a reduced oils and fats content, but have an appearance, a mouthfeel and richness (oils and fats enriched properties) which are comparable to those of dressing whose oils and fats content is not reduced. The low-fat dressings of the present invention can be prepared using, but is not limited to, a method similar to that of the aforementioned low-fat mayonnaise-like seasonings.

(II-4-2) Spreads

Generally, butter, which is a type of spread, contains 80 wt% or more of milk fat, and margarine (Japanese Agricultural Standard), which is also a type of spread, contains 80 wt% or more of oils and fats. Spreads to which the present invention is directed are low-fat spreads which preferably have a lower content of oils and fats (including oil and fat derived from milk) than those of these spreads (butter and margarine), specifically, 60 wt% or less, preferably 40 wt% or less, and more preferably 20 wt% or less. Note that the lower limit of the content of oils and fats (including oil and fat derived from milk) is, for example, but is not particularly limited to, 10 wt%. Similarly to the foregoing, the low-fat spreads of the present invention contain a lower content of oils and fats (including oil and fat derived from milk) than those of ordinary spreads (butter and margarine), but have an appearance (cloudiness and surface glossiness), a mouthfeel (including smoothness and melting in the mouth) and richness (oils and fats enriched properties) which are similar to those of ordinary butters or margarines. This is achieved by using the dextrin described in (I) above.

The percentage of the dextrin (I) used in preparation of the low-fat spreads can be adjusted as appropriate generally within the range of 5 to 30 wt%, depending on the content of oils and fats (including oil and fat derived from milk) of the low-fat spread. A spread similar to ordinary butters or margarines can be prepared using a smaller amount of the dextrin (I) if the amount of oils and fats (including oil and fat derived from milk) blended to the low-fat spread is larger.

On the other hand, as the amount of oils and fats (including oil and fat derived from milk) blended to the low-fat spread is decreased, it is preferable to increase the blend amount of the dextrin (I). Also, in this case, in addition to the dextrin (I), at least one polysaccharide selected from xanthan gum, guar gum, locust bean gum, tara gum, tamarind seed gum, bacterial cellulose, gum ghatti and native gellan gum may be blended. As the polysaccharide, at least one selected from the group consisting of xanthan gum, guar gum, gum ghatti and locust bean gum is preferable, particularly preferably xanthan gum. As the polysaccharide used here, the polysaccharides described in (II-3) above can be similarly used.

The percentages of the dextrin (I) and the polysaccharide(s) used in preparation of the low-fat spreads of the present invention can be adjusted as appropriate, depending on the type of a low-fat spread to be prepared. Specifically, the percentage of the dextrin (I) per low-fat spread (100 wt%) is, for example, but is not limited to, 5 to 30 wt%, preferably 10 to 20 wt%. The percentage of the total amount polysaccharide(s) is, for example, but is not limited to, 0.01 to 5 wt%, preferably 0.05 to 2 wt%.

In the low-fat spreads of the present invention, crystallization of the dextrin (I) which may occur during long-term preservation can be significantly suppressed by further using an emulsifying agent. As a result, a smooth mouthfeel and a feel in use can be maintained for a long period of time. Here, examples of the emulsifying agent include, but are not particularly limited to, any ordinary edible emulsifying agents, such as monoglycerides of organic acids (e.g., citric acid, succinic acid, lactic acid, etc.), polyglycerides of organic acids, glycerol esters of fatty acids, polyglycerol esters of fatty acids, sucrose esters of fatty acids, sorbitan esters of fatty acids, propylene glycol esters of fatty acids, lecithin and the like. The emulsifying agent is preferably at least one selected from the group consisting of glycerol esters of fatty acids, monoglycerides of citric acid and monoglycerides of succinic acid, more preferably at least one selected from the group consisting of monoglycerides of citric acid and monoglycerides of succinic acid. Also, the total additive amount of the emulsifying agent per low-fat spread (100 wt%) is preferably 0.01 to 0.5 wt%, more preferably 0.05 to 0.2 wt%, for example.

Moreover, a thickening agent, a gelling agent, an aroma chemical, a sweetener, a colorant or the like can be added to the low-fat spreads of the present invention as appropriate, as long as the advantages of the present invention are not hindered.

The low-fat spreads of the present invention can be prepared by, for example, but is not limited to, the following method:

An aqueous solution in which the dextrin (I), a polysaccharide, common salt and a colorant are added and dissolved with stirring, is added to vegetable oils and fats in which an emulsifying agent and lecithin are dissolved, followed by mixing by stirring. The mixture is emulsified using a homomixer, followed by mixing while cooling. Thus, the low-fat spread is obtained. Also, a low-fat spread of the present invention can be prepared by mixing an oil- and fat-free spread which is obtained by cooling an aqueous solution in which the dextrin (I), a polysaccharide, common salt and colorant are added and dissolved with stirring, with an ordinary margarine.

The low-fat spreads thus obtained may be directly provided as emulsion foods (spread products). In addition, if the low-fat spreads are used as materials for production of confectioneries and breads, it is possible to provide low-fat and low-calorie confectioneries and breads.

(II-4-3) Desserts

Desserts to which the present invention is directed include desserts which are usually prepared using a milk-derived material or vegetable oils and fats, such as puddings (neutral puddings; acidic puddings such as fruit juice-containing puddings, cheese-containing puddings and the like), almond jellies, Bavarian creams, pastry creams, custards, mousses and the like.

The desserts, even when the content of oils and fats (including oil and fat derived from milk, dairy products such as dairy cream or cheese, and refined coconut oil) is reduced, have a dairy product-specific flavor, and also fattiness, richness, body and a smooth mouthfeel which are provided by oils and fats (including oil and fat derived from milk). This is achieved by using the dextrin described in (I). Also, by using the dextrin (I) in preparation of these desserts, oils and fats enriched properties, richness and body can be enhanced as if the amount of oils and fats (including oil and fat derived from milk) were increased, without increasing such an amount, and a smoother mouthfeel can be imparted, and a milk-rich mouthfeel can also be imparted. Moreover, syneresis which significantly occurs when the milk fat content is reduced can be suppressed by using the dextrin (I), whereby desserts having stable physical properties can be prepared. In this regard, when the aforementioned desserts are prepared, the present invention also provides a method for preventing syneresis in the desserts using the dextrin (I). Also, by using the dextrin (I) in desserts such as pastry cream and the like, appropriate shape retentivity can be imparted to the desserts.

In contrast to this, when a dextrin having a blue value of less than 0.4 is used in place of the dextrin (I), sufficient oils and fats enriched properties and richness cannot be obtained. Also, when a dextrin having a blue value of more than 1.2 is used in place of the dextrin (I), a resultant product has significant grittiness and powderiness and strong starch-derived flavor, resulting in a reduction in flavor. Also, when a dextrin having a gel strength of less than 4 N/cm$^2$ is used in place of the dextrin (I), sufficient oils and fats enriched properties and richness may not be imparted. Also, when a dextrin having a viscosity of higher than 100 mPa·s is used, the dessert may have significant grittiness and powderiness. Also, when a dextrin having a viscosity of lower than 20 mPa·s is used, sufficient oils and fats enriched properties and richness may not be obtained.

The percentage of the dextrin (I) used in formation of the desserts of the present invention can be adjusted as appropriate, depending on the type of the dessert, a required mouthfeel or the like. The percentage of the dextrin (I) is generally 0.1 to 20 wt%, preferably 0.5 to 10 wt%, for example. As the additive amount of the dextrin (I) increases, the effect of imparting oils and fats enriched properties and richness also increases. Typically, as low as 0.1 to 5 wt% of the dextrin (I) can attain desired oils and fats enriched properties, richness and body. Thus, even when the content of oils and fats (including oil and fat derived from milk) is reduced by 1 wt% or further about 5 wt%, it is possible to prepare desserts having oils and fats enriched properties and richness comparable to those which are obtained when the content of oils and fats (including oil and fat derived from milk) is not reduced. Also, in addition to the case where the content of oils and fats (including oil and fat derived from milk) is reduced, by adding the dextrin (I), the oils and fats enriched properties, richness and body of desserts can be enhanced without increasing the content of oils and fats (including oil and fat derived from milk), and moreover, desserts having a smooth mouthfeel and a feel of high quality can be prepared.

Moreover, in addition to the dextrin (I), polysaccharide thickeners, gelling agents or milk proteins described below can be blended to the desserts of the present invention.

Examples of the polysaccharide thickeners and the gelling agents include agar, alginic acids (alginic acid, alginate), carrageenans, xanthan gum, bacterial cellulose, native gellan gum, deacylated gellan gum, macrophomopsis gum, curdlan, pullulan, galactomannans (guar gum, locust bean gum, tara gum, cassia gum, etc.), tamarind seed gum, psyllium seed gum, glucomannan, gum tragacanth, gum karaya, gum arabic, gum ghatti, pectin, water-soluble hemicellulose, soybean polysaccharides, cellulose derivatives such as methyl cellulose (MC), hydroxypropyl cellulose (HPC), hydroxypropyl methyl cellulose (HPMC), carboxymethyl cellulose (CMC) sodium, hydroxyethyl cellulose (HEC) and the like, processed/chemically-modified starch, unprocessed starch (raw starch), gelatin and the like. The total additive amount of the polysaccharide thickener or gelling agent per dessert (100 wt%) is generally 0.01 to 5 wt%, preferably 0.05 to 3 wt%, and more preferably 0.1 to 1 wt%.

Examples of the milk proteins include whey and/or casein. The additive amount of the milk protein per dessert (100 wt%) is generally 0.1 to 5 wt%, preferably 0.3 to 3 wt%, and more preferably 0.5 to 2 wt%.

The desserts of the present invention can be prepared by a generally employed technique, except for blending of the dextrin (I) and optionally the aforementioned polysaccharide thickeners, gelling agents and milk proteins. In general, a pudding is prepared by adding, to water, a milk component (whole condensed milk, skimmed condensed milk, whole powdered milk, skimmed powdered milk (skim milk powder), etc.), oils and fats and the dextrin (I), and optionally, egg, protein and a gelling agent, and dissolving them while heating, followed by cooling (unbaked pudding) or baking in an oven (baked pudding). Note that the dextrin (I) is preferably added, for example, in a step in which the milk component and the like are added to water or in a step in which the gelling agent is added to water.

Also, almond jellies, Bavarian creams, mousses and the like can be similarly prepared by adding the dextrin (I) in a step in which a milk component, a gelling agent or the like is added. Also, pastry creams and custards can be prepared by, for example, but is not particularly limited to, the following method. A mixture of water, a milk component (whole condensed milk, skimmed condensed milk, whole powdered milk, skimmed powdered milk, etc.), oils and fats and the dextrin (I), and optionally, egg, protein, a gelling agent, starch and the like, is subjected to homogenization with stirring at 8,000 rpm for 5 minutes. The mixture is dissolved with stirring while heating at 90˚C for 10 minutes, and is then adjusted with water so that the total amount becomes 100%. The solution was poured into a container, followed by cooling.

(II-4-4) Yogurts

Typically, yogurt contains 3 to 5 wt% of milk fat. Yogurt having a milk fat content of 0.5 wt% or more and less than 3 wt% is generally called "low-fat yogurt," and yogurt having a milk fat content of less than 0.5 wt% are generally called "fat-free yogurt." However, when the milk fat content is less than 3 wt%, particularly 1.5 wt% or less, and moreover 0.5 wt% or less, i.e., milk fat is decreased, a yogurt-specific smooth mouthfeel is impaired, and also richness is lost, resulting in watery taste or flavor. In addition, the reduction in the milk fat content causes significant syneresis. In this regard, when the aforementioned yogurt is prepared, the present invention provides a method for preventing syneresis in the yogurt using the dextrin (I).

In contrast to this, by using the dextrin described in (I) above, yogurts of the present invention have a yogurt-specific flavor, and richness and a smooth mouthfeel even when the milk fat content (milk, dairy cream, etc.) is reduced to less than 3 wt% (low-fat yogurt) or 0.5 wt% or less (fat-free yogurt). Also, by using the dextrin (I) in preparation of yogurts, it is possible to obtain yogurts which have enhanced richness and body and a milk-rich high-quality flavor and a smooth mouthfeel which are similar to those which are obtained when milk fat is increased, without increasing milk fat. Moreover, syneresis which significantly occurs when the milk fat content is reduced can be suppressed by using the dextrin (I), whereby yogurt having stable physical properties can be provided.

On the other hand, when a dextrin having a blue value of less than 0.4 is used in place of the dextrin (I), sufficient oils and fats enriched properties and richness cannot be obtained. In this case, if the oils and fats content of yogurt is reduced, the yogurt has a watery mouthfeel. Also, when a dextrin having a blue value of more than 1.2 is used in place of the dextrin (I), a resultant product has significant grittiness and powderiness and strong starch-derived flavor, resulting in a reduction in flavor. Also, when a dextrin having a gel strength of less than 4 N/cm$^2$ is used, sufficient oils and fats enriched properties and richness may not be imparted. Also, when a dextrin having a viscosity of higher than 100 mPa·s is used, a resultant product may have significant grittiness and powderiness. Also, when a dextrin having a viscosity of lower than 20 mPa·s is used, sufficient oils and fats enriched properties and richness may not be obtained.

The percentage of the dextrin (I) used in formation of the yogurts of the present invention can be adjusted as appropriate, depending on a required mouthfeel and richness. The percentage of the dextrin (I) is generally 0.05 to 10 wt%, preferably 0.1 to 8 wt%, and more preferably 0.1 to 5 wt%, for example. When the additive amount of the dextrin (I) is less than 0.05 wt%, the effect of imparting richness may not be sufficiently exhibited. When the additive amount is larger than 10 wt%, a resultant product may have an extremely heavy mouthfeel. Note that, if the dextrin (I) is added in an amount corresponding to 0.3 to 1.5 wt%, preferably 0.5 to 1 wt% when yogurt is prepared, then even when the milk fat content is reduced by 1 wt%, oils and fats enriched properties, richness and a smooth mouthfeel substantially the same as those which are obtained when the milk fat content is not reduced, can be obtained. In other words, the blending of 0.3 to 1.5 wt%, preferably 0.5 to 1 wt%, of the dextrin (I) can replace the blending of 1 wt% of milk fat.

In the present invention, at least one polysaccharide selected from the group consisting of gum ghatti, gum arabic, tara gum, tamarind seed gum and guar gum is preferably used in combination with the dextrin (I). As a result, the smoothness of the yogurt can be further improved.

The total additive amount of the at least one polysaccharide selected from the group consisting of gum ghatti, gum arabic, tara gum, tamarind seed gum and guar gum is 0.05 to 1 part by weight, preferably 0.1 to 0.5 parts by weight, per part by weight of the dextrin (I) blended to the yogurt.

Also, in the present invention, by using HM pectin (high methoxyl pectin) in combination with the dextrin (I), the shape retentivity can be further improved, the syneresis can be further suppressed, and the richness can be further increased. HM pectin preferably has a degree of esterification of 50% or more, preferably 60% or more. An example of commercially available HM pectin products is "SM-666 manufactured by San-Ei Gen F.F.I., Inc. The additive amount of HM pectin is 0.05 to 3 parts by weight, preferably 0.1 to 2 parts by weight, per part by weight of the dextrin blended to the yogurt, for example.

Yogurts to which the present invention is directed include all types of yogurts which are obtained by fermenting a milk-derived material, i.e., including soft yogurt (stirred yogurt) which is prepared by a method (bulk fermentation method) of fermenting materials in a tank before pouring the produced fermented milk into a container, hard yogurt (set yogurt) which is prepared by a method (in-package fermentation method) of pouring a mixture material of material milk, lactic acid bacteria and the like into a container before fermenting the mixture material in the container, and the like. Also, the form of the yogurt of the present invention is not particularly limited and includes drinkable yogurt, frozen yogurt and the like.

In preparation of the yogurts of the present invention, the method of adding the dextrin (I) is not particularly limited as long as the dextrin is contained in the final yogurt, and various methods can be used. Typically, soft yogurt is prepared by a method (bulk fermentation method) of fermenting materials in a tank before pouring the produced fermented milk into a container. Hard yogurt is prepared by a method (in-package fermentation method) of pouring a mixture material of material milk, lactic acid bacteria and the like into a container before fermenting the mixture material in the container. For example, an aqueous solution in which the dextrin (I) is dissolved is previously prepared, the aqueous solution is added to fermented milk after fermentation, and the mixture is poured into a container. Alternatively, the aforementioned aqueous solution is added to a mixture solution of material milk, lactic acid bacteria and the like, followed by fermentation in a container. Note that, as the material milk of the yogurts, animal milks such as cow's milk, goat's milk, sheep's milk and the like, skimmed powdered milk, whole powdered milk, sweetened whole condensed milk, sweetened skimmed condensed milk, dairy cream and the like are preferably used.

(II-4-5) Frozen desserts

Frozen desserts to which the present invention is directed are prepared using a milk-derived material. Examples of the frozen desserts include ice creams, ice milks, lacto-ices and ice confectioneries containing oils and fats (including oil and fat derived from milk).

Typically, when the content of oils and fats (including oil and fat derived from milk) of frozen desserts is reduced, oils and fats enriched properties, richness and body specific to oils and fats (including oil and fat derived from milk) are reduced, or the tissue of the frozen desserts themselves becomes rough, so that a smooth mouthfeel is reduced. However, when an attempt is made to compensate for a reduced the content of oils and fats (including oil and fat derived from milk) with a substitute, the melting in the mouth or the flavor is degraded, which is a problem.

In contrast to this, if frozen desserts are produced using the dextrin described in (I) above, then even when the content of oils and fats (including oil and fat derived from milk) is reduced, oils and fats enriched properties, richness and body specific to oils and fats (including oil and fat derived from milk) can be obtained, and the smoothness of the tissue itself of the frozen dessert can be improved, while keeping the melting in the mouth of the frozen desserts. Moreover, the dextrin (I) does not have dextrin-specific starch flavor, and therefore, can be used to prepare desired frozen desserts without impairing the flavor of the frozen desserts.

Therefore, by using the dextrin (I), even lacto-ices (milk fat content: less than 3%) can have oils and fats enriched properties, richness and body, and melting in the mouth which are comparable to those of ice milk (milk fat content: 3% or more and less than 8%) and ice cream (milk fat content: 8% or more), which have a higher milk fat content, and even ice milks can have oils and fats enriched properties, richness and body, and melting in the mouth which are comparable to those of ice cream, which has a higher milk fat content. Also, by blending the dextrin (I) to ice creams, the ice creams can have a smoother mouthfeel and higher oils and fats enriched properties, richness and body, and a feel of high quality.

In contrast to this, when a dextrin having a blue value of less than 0.4 is used in place of the dextrin (I), richness and body cannot be obtained. Also, when a dextrin having a blue value of more than 1.2 is used in place of the dextrin (I), a resultant product has richness and body, but at the same time, has stickiness, resulting in a poor mouthfeel (poor melting in the mouth). Also, when a dextrin having a gel strength of less than 4 $N/cm^2$ is used, a resultant tissue may lack body (richness). Likewise, when a dextrin having a viscosity of higher than 100 mPa·s is used, body (richness) may be imparted, but stickiness may also be imparted, resulting in tissue having poor melting in the mouth.

The percentage of the dextrin (I) blended to the frozen desserts can be adjusted as appropriate, depending on the type of a frozen dessert to be prepared, a required mouthfeel or the like. The percentage of the dextrin (I) is generally 0.1 to 10 wt%, preferably 0.1 to 3 wt%, for example. Moreover, the dextrin described in (I) above is considerably advantageous in the capability of imparting sufficient richness to frozen desserts in an additive amount of as low as 0.1 to 1 wt%.

In the present invention, at least one polysaccharide selected from the group consisting of guar gum, tara gum, tamarind seed gum, carrageenans, xanthan gum, native gellan gum and locust bean gum is preferably used in combination with the dextrin (I). At least one selected from the group consisting of guar gum and tara gum is preferable. The dextrin (I) imparts richness during a later part of the time that the frozen dessert is eaten, and the polysaccharides, particularly guar gum and tara gum, impart richness during an earlier part of the time. Therefore, by using the polysaccharide(s) in combination with the dextrin (I), richness caused by the dextrin (I) is enhanced, resulting in a more preferable mouthfeel.

The frozen desserts of the present invention can be prepared using a commonly used method, except for blending of the dextrin (I). Typically, ice creams, ice milks and lacto-ices can be prepared by adding fructose-glucose syrup, a milk component (skimmed powdered milk, etc.), sugar, a stabilizer, an emulsifying agent and the like to water, stirring the mixture while heating, and adding oils and fats (refined coconut oil, etc.) to the mixture, followed by homogenizing, aging and freezing as appropriate. The resultant mixture is poured into a container, followed by cooling. The frozen desserts of the present invention can be prepared by adding the dextrin (I) when adding fructose-glucose syrup, a milk component (skimmed powdered milk, etc.), sugar, a stabilizer, an emulsifying agent and the like to water.

Also, ice confectioneries, e.g., ice pops, and popsicles are prepared by adding skimmed powdered milk, oils and fats, fructose-glucose syrup, sugar, stabilizer and the like, each as appropriate, to water, stirring the mixture while heating, aging the mixture, pouring the mixture into a container, and cooling the mixture. Also, sherbets are prepared by freezing after the aging step, pouring the mixture into a container, and cooling the mixture. In the present invention, by adding the dextrin (I) when adding fructose-glucose syrup, sugar, stabilizer and the like to water, squeaking can be suppressed for popsicles or ice pops, and smoothness can be imparted to sherbets.

(II-4-6) Whipped creams

Most conventional whipped creams have an oils and fats content of 40 to 50 wt%. The oils and fats play a role in stabilizing foam. Therefore, if the oils and fats content of a whipped cream is reduced to less than 35 wt% so as to reduce calorie and content of oils and fats, the shape retentivity of the whipped cream is significantly reduced, and also significant syneresis occurs.

However, when the dextrin described in (I) above is used in production of whipped creams, then even if the oils and fats content is reduced to 20 to 35 wt%, further 25 wt% or less, good shape retentivity can be maintained, and syneresis during refrigeration and freezing/thawing can be prevented. In this regard, when the aforementioned whipped cream is prepared, the present invention provides a method for preventing syneresis by using the dextrin (I).

Also, when the dextrin described in (I) above is used in production of whipped creams, then even if the oils and fats content is reduced to 20 to 35 wt%, further 25 wt% or less, it is possible to prepare whipped creams which have oil- and fat-specific richness, and have richness and a mouthfeel which are comparable to those of whipped creams having an ordinary oils and fats content (40 wt% or more). Moreover, by blending the dextrin (I) to whipped creams having an ordinary oils and fats content (40 wt% or more), it is possible to prepare whipped creams which have higher richness and therefore a feel of high quality.

In contrast to this, when a dextrin having a blue value of less than 0.4 is used in place of the dextrin (I), sufficient shape retentivity and richness cannot be obtained. Also, when a dextrin having a blue value of more than 1.2 is used, syneresis cannot be sufficiently suppressed, and a resultant product has a gritty mouthfeel. Also, when a dextrin having a gel strength of less than 4 N/cm$^2$ is used, sufficient shape retentivity and richness may not be obtained. Likewise, when a dextrin having a viscosity of higher than 100 mPa·s is used, a resultant product may have a considerably high viscosity and therefore may be difficult to handle, and the prepared whipped cream may have low shape retentivity.

The percentage of the dextrin (I) blended to the whipped creams of the present invention can be adjusted as appropriate, depending on a component (oils and fats, etc.) or its content of the whipped creams. The percentage of the dextrin (I) is generally 0.5 to 10 wt%, preferably 1 to 8 wt%, and more preferably 2 to 6 wt%. When the additive amount of the dextrin to the whipped creams is smaller than 0.5 wt%, satisfactory shape retentivity and richness may not be obtained. When the additive amount of the dextrin is larger than 10 wt%, a resultant product tends to have a considerably high viscosity and therefore be difficult to whip.

The whipped creams of the present invention preferably contain, in addition to the dextrin (I), at least one selected from the group consisting of polyglycerol esters of fatty acids having an iodine value of 10 to 45, monoglycerol esters of fatty acids having an iodine value of 44 to 120, and hydroxypropyl cellulose. By using at least one selected from the group consisting of the aforementioned polyglycerol esters of fatty acids, monoglycerol esters of fatty acids and hydroxypropyl cellulose in combination with the dextrin (I), the whipping time can be reduced and the overrun can be improved. Also, by the aforementioned combination, the whipped creams themselves have finer texture and an improved mouthfeel and moreover become glossier. Moreover, even after a freezing and thawing step in which syneresis is likely to occur, the syneresis of the whipped creams can be significantly suppressed.

Note that the aforementioned iodine values of glycerol esters of fatty acids indicate the amount of unsaturated fatty acid in oils and fats. If the amount of unsaturated fatty acid is large, the iodine value is high. Specifically, the iodine value is represented by the amount of iodine ($I_2$=254) in grams which can be added to 100 g of oils and fats. In the present invention, it is desirable to use polyglycerol esters of fatty acids having an iodine value of 10 to 45, preferably 16 to 42, and monoglycerol esters of fatty acids having an iodine value of 44 to 120, preferably 44 to 55.

The hydroxypropyl cellulose used in the present invention is non-ionic water-soluble cellulose ether which is made from cellulose (pulp), which occur widely in nature, and is obtained by treating the cellulose with sodium hydroxide, followed by reaction with an etherifying agent, such as propylene oxide or the like. Examples of commercially available hydroxypropyl cellulose products include KLUCEL NUTRA (trademark, the same is true in the description which follows) series and AeroWhip series manufactured by Hercules Inc.

Whipped creams to which the present invention is directed include both whipped creams which are prepared using creams (milk creams) derived from milk (raw milk, cow's milk, etc.), such as dairy creams and the like, and whipped creams (so-called synthetic creams (non-milk creams)) which are prepared using fat other than milk fat.

The whipped creams of the present invention can further contain additives, such as dairy products, sweeteners, oils and fats, emulsifying agents, egg yolk, stabilizers (polysaccharide thickeners, etc.), aroma chemicals, preservatives, antioxidants, vitamins, minerals and the like, as appropriate, as long as the advantages of the present invention are not affected. Examples of the dairy products include milk, powdered milk, condensed milk, skimmed milk, cheeses, fermented milk and the like.

Examples of the sweeteners include sugar, fructose, glucose, corn syrup, reduced corn syrup, honey, isomerized sugar, invert sugar, oligosaccharides (isomaltooligosaccharides, reduced xylooligosaccharides, reduced gentiooligosaccharides, xylooligosaccharides, gentiooligosaccharides, nigerooligosaccharides, theandeoligosaccharides, soybean oligosaccharides, etc.), trehalose, sugar alcohols (maltitol, erythritol, sorbitol, palatinit, xylitol, lactitol, etc.), coupling sugar corn syrup (coupling sugar), aspartame, acesulfame potassium, sucralose, alitame, neotame, licorice extracts (glycyrrhizin), saccharin, sodium saccharin, stevia extracts, stevia powder and the like.

Examples of the oils and fats include vegetable oils and fats, butters, milk fats, separated oils and fats thereof, hydrogenated oils and fats, transesterified oils and fats and the like. Examples of the vegetable oils and fats include margarines, shortenings, coconut oil, palm oil, soybean oil, canola oil, cottonseed oil, corn oil, sunflower oil, olive oil, safflower oil, palm kernel oil and the like.

Examples of the emulsifying agents include glycerol esters of fatty acids (monoglycerol esters of fatty acids, diglycerol esters of fatty acids, monoglycerides of organic acids, polyglycerol esters of fatty acids, polyglycerin condensed ricinoleates) other than the aforementioned polyglycerol esters of fatty acids and monoglycerol esters of fatty acids, sucrose esters of fatty acids, sorbitan esters of fatty acids, propylene glycol esters of fatty acids, stearoyl lactylate, yucca extracts, saponin, lecithin, polysorbate and the like.

As the stabilizer, at least one selected from agar, pectin, carrageenans, xanthan gum, locust bean gum, gellan gum, tamarind seed gum, tara gum, guar gum, alginic acid, alginate sodium, pullulan, soybean polysaccharides, CMC, microcrystalline cellulose, bacterial cellulose, microfibrous cellulose, methyl cellulose, hydroxypropyl methyl cellulose, gum tragacanth, gum karaya, gum arabic, curdlan, rhamsan gum, wellan gum, psyllium seed gum, macrophomopsis gum, gum ghatti, starches, processed/chemically-modified starches and the like, can be used. Microcrystalline cellulose is preferable.

As the microcrystalline cellulose used in the present invention, a microcrystalline cellulose preparation which is a composite which contains microcrystalline cellulose and a dispersant or a disintegrant in specific percentages, can be preferably used. For example, the microcrystalline cellulose preparation is produced by a method of mixing and homogenizing fine cellulose which is obtained by pulverizing pulp with a dispersant or a disintegrant to a uniform slurry, followed by drying. Specifically, those described in Japanese Examined Patent Application Publication No. S40-14174, Japanese Examined Patent Application Publication No. S62-43661, Japanese Laid-Open Patent Publication No. H06-335365 and the like can be used. As the dispersant or the disintegrant, carboxymethyl cellulose sodium, carrageenans, gum karaya, xanthan gum, gellan gum, indigestible dextrins, pectin and the like can be used. Also, the crystalline particles of the microcrystalline cellulose have an average particle diameter of 20 $\mu$m or less, preferably 10 $\mu$m or less, and more preferably 5 $\mu$m or less. The microcrystalline cellulose preparation used in the present invention is commercially available. Examples of the microcrystalline cellulose preparation include CEOLUS products manufactured by Asahi Kasei Corporation, Avicel products manufactured by FMC Corporation, and the like. The additive amount of the microcrystalline cellulose to the whipped creams is preferably 0.1 to 0.5 wt%, more preferably 0.2 to 0.4 wt%.

The whipped creams of the present invention can be produced by a commonly used method of previously adding and dissolving the dextrin (I) and optionally at least one selected from the group consisting of specific polyglycerol esters of fatty acids, monoglycerol esters of fatty acids, and hydroxypropyl cellulose, and optionally lecithin and microcrystalline cellulose to water, adding oils and fats including milk fat derived from dairy cream, etc., followed by emulsification. Alternatively, the whipped creams of the present invention can be produced by mixing an aqueous phase portion which is previously obtained by adding and dissolving the dextrin of the present invention and optionally hydroxypropyl cellulose, with an oil phase portion which is obtained by dissolving a specific polyglycerol ester of a fatty acid and monoglycerol esters of fatty acids in oils and fats, followed by emulsification. The dextrin of the present invention can be dissolved in water at a temperature of at least 1 to 100°C, preferably by stirring, and therefore, the aforementioned aqueous solution can be prepared at the temperature. As a whipping method, those conventionally used can be used. For example, whipping can be carried out using a commercially available machine or industrial machine capable of whipping (e.g., an industrial stirrer, a whisk, a home hand mixer, etc.).

The whipped creams of the present invention can be in the form of aerosol cream which is obtained by pouring whipping cream into an aerosol container before enclosing propellant gas therein. For example, the aerosol cream can be produced by pouring whipping cream into an aerosol container, and filling the container with at least one selected from carbon dioxide gas, nitrogen gas, laughing gas, LPG, LNG and the like, as propellant gas, under pressure.

(II-5) Cheese-like foods

Cheese-like foods of the present invention are prepared using the dextrin described in (I) above. The cheese-like foods include food products which contain no milk fat or only 20 wt% or less of milk fat, but have an appearance, a flavor and a mouthfeel (body and a mouthfeel) which are similar to those of ordinary cheeses containing more than 20 wt% of milk fat. Here, cheeses to which the present invention is directed include natural cheeses (non-matured cheeses, matured cheeses), processed cheeses and cheese spreads.

Non-matured cheeses are natural cheeses which are generally produced without a maturing step. Examples of non-matured cheeses include creams (generally: 33 wt%), mozzarellas (generally: 44 wt%) and the like (note that a value in the parentheses indicates a standard milk fat content, the same is true in the description which follows). Matured cheeses are natural cheeses which are generally produced via a maturing step. Examples of matured cheeses include Cheddar (generally: 33.8 wt%), Gouda (generally: 29 wt%), Edam (generally: 25 wt%), Emmental (generally: 33.6 wt%), Camembert (generally: 24.7 wt%) and the like.

Processed cheeses are generally produced by mixing, heating, dissolving and kneading one or more natural cheeses with or without addition of an additive (molten salt, etc.), a spice, a seasoning and a food product. Processed cheeses are most popular in Japan. Cheese spreads are generally produced by mixing, heating, dissolving and kneading one or more natural cheeses with or without addition of water, oils and fats, a flavoring material, molten salt and the like, and their hardness is adjusted so that they can be easily spread on bread and the like.

The cheese-like foods of the present invention can be prepared using the dextrin (I). In contrast to this, when a dextrin having a blue value of less than 0.4 is used in place of the dextrin (I), the hardness is insufficient, and a cheese-specific flavor cannot be obtained, which are problems. Also, when a dextrin having a blue value of more than 1.2 is used in place of the dextrin (I), a resultant product has grittiness, and strong starch-derived flavor which degrades a flavor, and collapses into small pieces, and therefore, a mouthfeel similar to that of cheese cannot be obtained, which is a problem.

Also, when a dextrin having a gel strength of less than 4 $N/cm^2$ is used, it may be difficult to obtain a mouthfeel similar to that of cheese. Also, when a dextrin having a viscosity significantly exceeding 100 mPa·s is used, a resultant product may have a considerably high viscosity and it may be difficult to obtain a mouthfeel similar to that of cheese. Moreover, when a dextrin having a viscosity significantly falling below 20 mPa·s is used, a resultant product may have insufficient hardness and it may be difficult to obtain a cheese-specific mouthfeel.

The cheese-like foods of the present invention can be prepared by preparing an aqueous solution containing the dextrin (I) and then solidifying the aqueous solution by cooling. As the dextrin (I) can be dissolved in water at 1 to 100°C, preferably by stirring, the aforementioned aqueous solution can be prepared at the temperature. Also, the aqueous solution has the property of solidifying when allowed to stand at a temperature of about 40°C or less, preferably 25°C or less, and more preferably 10°C or less.

The amount of the dextrin (I) used per final cheese-like food (100 wt%) is 10 to 50 wt%, preferably 15 to 40 wt%, and more preferably 20 to 35 wt%, for example.

The cheese-like foods of the present invention preferably contain, in addition to the dextrin (I), at least one selected from the group consisting of whey protein, methyl cellulose, curdlan and deacylated gellan gum, preferably at least one selected from whey protein and curdlan, and more preferably whey protein. By containing at least one of these components, it is possible to prepare cheese-like foods which have good shape retentivity in a non-heated state (room temperature, etc.), and exhibit thermal meltability specific to cheese when they are heated by an oven or the like.

The blend amount of whey protein, methyl cellulose, curdlan or deacylated gellan gum blended to the cheese-like foods can be adjusted as appropriate, depending on a material used therein. The total amount of these components per final cheese-like food (100 wt%) is generally 0.01 to 10 wt%, preferably 0.05 to 5 wt%, and more preferably 0.1 to 3 wt%, for example. Specifically, the amount of whey protein per final cheese-like food (100 wt%) is 0.5 to 5 wt%, preferably 1 to 4 wt%, and more preferably 2 to 3 wt%, for example. The amount of curdlan is 0.1 to 5 wt%, preferably 0.5 to 3 wt%, and more preferably 1 to 2 wt%, for example. The amount of methyl cellulose is 0.01 to 3 wt%, preferably 0.02 to 2 wt%, and more preferably 0.1 to 1 wt%, for example. The amount of deacylated gellan gum is 0.01 to 2 wt%, preferably 0.02 to 1 wt%, and more preferably 0.03 to 0.5 wt%, for example.

Here, as the whey protein, various whey proteins can be used. A preferable whey protein is a material prepared from cow's milk-derived whey, more preferably a whey protein containing 80 wt% or more of whey proteins on a dry basis. Examples of the whey proteins include a whey protein concentrate (WPC) and a whey protein isolate (WPI). Among them, a whey protein having high gelling power is preferably used. A specific example of the whey protein is one which has a gel strength (curd strength) of 10 $N/cm^2$ or more, more preferably 12 $N/cm^2$ or more, after an aqueous solution containing 15 wt% of a whey protein is heated to 80°C and then cooled to 4°C. The upper limit of the gel strength (curd strength) is, but is not limited to, generally 50 $N/cm^2$, more preferably 20 $N/cm^2$.

Note that whey proteins having the aforementioned property are commercially available. An example of the whey proteins is "MILPRO No. 142 manufactured by San-Ei Gen F.F.I., Inc.

Also, methyl cellulose is cellulose in which a hydroxyl group in the backbone is substituted with a methoxyl group. Methyl cellulose can be prepared by converting cellulose to alkali cellulose using sodium hydroxide, and then causing the alkali cellulose to react with methyl chloride. The degree of substitution (DS) by a methoxyl group of existing methyl cellulose is generally 1.4 to 2, and the methyl cellulose has the property of being dissolved in cold water at about 10°C. In the present invention, particularly, it is preferable to use methyl cellulose having a viscosity in a 2% aqueous solution of 40 to 10,000 mPa·s, preferably 80 to 4,000 mPa·s, and more preferably 300 to 2,000 mPa·s (measured at 20°C using a BL type rotating viscometer at 60 rpm). Methyl cellulose having the aforementioned property is commercially available. Examples of commercially available methyl cellulose include "SM-400 and "SM-1500 manufactured by Shin-Etsu Chemical Co., Ltd.

Curdlan is a microbial polysaccharide produced by a soils and fats bacterium and has the property of being solidified by heating. This polysaccharide is a straight-chain glucan in which glucose units are linked together by β-1,3-glucosidic linkages.

The cheese-like foods of the present invention basically contain the dextrin (I), preferably the dextrin (I) and at least one selected from the group consisting of whey protein, methyl cellulose, curdlan and deacylated gellan gum.

The preparation method is not particularly limited. For example, the cheese-like foods can be prepared by dissolving, in water, the dextrin (I) and optionally at least one selected from the group consisting of whey protein, methyl cellulose, curdlan and deacylated gellan gum, and other components, followed by cooling. Note that the cheese-like foods are preferably sterilized before cooling for the purpose of food hygiene or stability of preservation.

Note that, by using the dextrin (I), the cheese-like foods of the present invention can be prepared without a heat treatment other than a sterilization step. Therefore, it is possible to prevent a flavor or a savor from being reduced due to heating. Also, a heating step is not required, and therefore, the cheese-like foods of the present invention can be produced using a simple and economical production process.

Also, the cheese-like foods of the present invention can contain, in addition to the dextrin (I), at least one polysaccharide selected from carrageenans, xanthan gum, native gellan gum, guar gum, tara gum, tamarind seed gum, soybean polysaccharides, agar, locust bean gum, pectin, alginic acid, alginates, glucomannan, cassia gum, psyllium seed gum, gum tragacanth, gum karaya, gum arabic, gum ghatti, rhamsan gum, wellan gum, macrophomopsis gum, pullulan, microcrystalline cellulose, microfibrous cellulose, bacterial cellulose, hydroxypropyl cellulose, carboxymethyl cellulose, hydroxypropyl methyl cellulose, hydroxyethyl cellulose and water-soluble hemicellulose. A preferable polysaccharide is at least one selected from the group consisting of carrageenans, xanthan gum, native gellan gum, guar gum, tara gum, locust bean gum and tamarind seed gum, more preferably at least one selected from the group consisting of carrageenans, xanthan gum, gum ghatti and native gellan gum. By adding these polysaccharides, the stability of preservation is advantageously improved while preventing a mouthfeel, such as hardness, elasticity or the like, from changing with time.

The blend amounts of these polysaccharides to the cheese-like foods can be adjusted as appropriate, depending on the types of the polysaccharides. The blend amount per cheese-like food (100 wt%) is generally 0.01 to 5 wt%, preferably 0.05 to 3 wt%, and more preferably 0.1 to 1.5 wt%.

Note that, as the aforementioned carrageenans, carrageenans of any of kappa type, lambda type and iota type may be used. Among these, it is preferable to use iota carrageenan. The carrageenan used in the present invention is preferably a water-soluble carrageenan which has the property of being thoroughly dissolved in water by mixing with water, optionally by stirring.

Preferable examples of the water-soluble carrageenan include water-soluble carrageenans having at least one of the following characteristics (1) to (3) described in (II-1) above, more preferably those having at least two of the following characteristics (1) to (3), and particularly preferably those having all of the following characteristics (1) to (3):

(1) being soluble in water at 50°C or less;
(2) a 1.5 wt% aqueous solution of the carrageenan being not gelable at 25°C; and
(3) containing more than 0 and not more than 0.1 wt% of calcium ions.

Note that an example of the water-soluble iota carrageenan having the characteristics (1) to (3) is "GEL RICH (trademark) No. 3 manufactured by San-Ei Gen F.F.I., Inc.

In the present invention, among xanthan gums, a xanthan gum having an acetyl group content (described above) of 0 to 1% is preferably used. By preparing a cheese-like food using the xanthan gum, the cheese-like food can obtain a mouthfeel, such as hardness, elasticity or the like, which is not likely to change with time, and high stability of preservation, as compared to when a xanthan gum having an acetyl group content of about 2 to 6% is used. The xanthan gum is also commercially available. Examples of the xanthan gum include "SAN ACE (trademark) NXG-C" and "SAN ACE(trademark) NXG-S" manufactured by San-Ei Gen F.F.I., Inc. and the like.

According to the present invention, by using the dextrin (I), cheese-like foods having cheese-specific body and mouthfeel can be prepared without milk fat or with milk fat in the standard amount or less. In other words, cheese-like foods to which the present invention is directed include food products which contain no fat, but have cheese-specific body and mouthfeel, and food products which contain 20 wt% or less of milk fat, further 5 wt% or less, which is lower than that of ordinary cheeses, but have cheese-specific body and mouthfeel. Therefore, the cheese-like foods of the present invention can replace cheeses. By using the cheese-like foods of the present invention in place of cheeses, it is possible to provide low-calorie and fat-free or low-fat processed foods. Likewise, by using the dextrin (I), milk fat can be replaced with the dextrin (I), and it is possible to provide cheese-like foods having a mouthfeel (body, mouthfeel) and an appearance which are similar to those of cheese, by using a low-cost material, such as a vegetable oils and fats or the like.

Also, a thickening agent, a gelling agent, an emulsifying agent, an aroma chemical, a sweetener, a colorant, oils and fats and the like may be added to the cheese-like foods of the present invention as appropriate, as long as the advantages of the present invention are not hindered.

As the emulsifying agents, the aforementioned emulsifying agents can be similarly used.

The oils and fats can be selected as appropriate, depending on a cheese-like food to be prepared. Examples of the oils and fats include vegetable oils and fats such as soybean oil, canola oil, cottonseed oil, corn oil, coconut oil, palm oil and the like, animal oils and fats such as beef fat, lard and the like, separated fats thereof, transesterified fats thereof, and the like. These can be used singly or in combination of two or more thereof. Also, in order to impart a flavor, milk, skimmed milk, skimmed concentrated milk, creams, yogurts, condensed milk, sweetened condensed milk, skimmed powdered milk, whole powdered milk, buttermilk, cheeses and the like can be blended to the cheese-like foods of the present invention.

The form of the cheese-like foods of the present invention is not particularly limited, and includes solid, powder and paste.

(II-6) Processed foods prepared using cheese-like foods

Processed foods to which the present invention is directed are those in which the whole or a part of cheese which is originally blended to cheese-containing food products is replaced with the aforementioned cheese-like foods.

The aforementioned cheese-containing food products are processed foods which contain cheese or are prepared using cheese as a material. Examples of the cheese-containing food products include breads, cakes, mousses, pizzas, gratins, lasagnas, dorias, risottos, sauces, soups, cheese fondues, hamburgs, hamburgers, salads, fried food products (pork cutlets, etc.), spreads and the like.

The processed foods of the present invention can be prepared using a generally used material and method, except that the aforementioned cheese-like foods are used in place of cheese. For example, unbaked cheese cakes and the like can be prepared using the cheese-like foods (cream cheese-like foods) in place of ordinary cream cheeses (milk fat content: 33 wt%) when mixing materials. As an example, a cream cheese-like food containing 0% of milk fat is prepared as follows.

The dextrin (I) and optionally a polysaccharide are added to and dissolved in water at 85°C while stirring. Next, common salt is added to and dissolved in the mixture. The mixture is adjusted with citric acid to pH 3.8, followed by addition of a colorant and an aroma chemical. The mixture is adjusted with water so that the total amount becomes 100%. The thus-obtained prepared solution is poured into a container, followed by sterilization by heating to 85°C, and then cooling to room temperature.

Next, 100 g of the cream cheese-like food of the present invention thus prepared is returned to room temperature (25°C) and is therefore softened, followed by successively adding and mixing 100 g of dairy cream, 25 g of sugar and 7.5% of lemon juice. Moreover, a previously prepared solution of 3.5 g of gelatin in 25 g of water is added and mixed. The mixture is poured into a cake pan, followed by cooling for three hours or longer.

Thus, by using the cheese-like foods of the present invention in place of ordinary cheeses, depending on the types of the processed foods, it is possible to obtain processed foods in which cheeses are replaced with the cheese-like foods of the present invention. The processed foods thus obtained have a flavor, body and a mouthfeel which are similar to those which are obtained when genuine cheeses are used.

The percentages of the cheese-like foods in the processed foods of the present invention can be adjusted as appropriate, depending on the types of the processed foods and the amounts of cheeses which are originally blended thereto. For example, the percentages of the cheese-like foods per processed food (100 wt%) are preferably 1 to 50 wt%, more preferably 5 to 20 wt%.

As described above, the cheese-like foods of the present invention basically contain the dextrin (I), or the dextrin and at least one polysaccharide selected from the group consisting of carrageenans, xanthan gum, native gellan gum, guar gum, tara gum, tamarind seed gum, soybean polysaccharide, agar, locust bean gum, pectin, alginic acid, alginates, glucomannan, cassia gum, psyllium seed gum, gum tragacanth, gum karaya, gum arabic, gum ghatti, rhamsan gum, wellan gum, macrophomopsis gum, pullulan, microcrystalline cellulose, microfibrous cellulose, bacterial cellulose, hydroxypropyl cellulose, carboxymethyl cellulose, hydroxypropyl methyl cellulose, hydroxyethyl cellulose and water-soluble hemicellulose, and do not contain fat. Therefore, processed foods in which the cheese-like foods of the present invention are used in place of cheeses have the aforementioned cheese-specific flavor and taste, body and mouthfeel, and also have a low calorie value and a low fat content.

Note that a thickening agent, a gelling agent, an emulsifying agent, an aroma chemical, a sweetener, a colorant or the like can be added to the processed foods of the present invention as required, as long as the advantages of the present invention are not hindered.

(II-7) Sugar confectioneries

Sugar confectioneries to which the present invention is directed refer to those which are made from a saccharide, such as glucose, sucrose or the like, and are produced by dissolving the saccharide in water, boils and fatsing down the solution, and molding (pouring into a mold) the resultant solution, followed by solidification by drying or cooling. Specific examples of the sugar confectioneries include soft candies, caramels, nougats, gummy candies and the like. Gummy candies are preferable.

Although a gelling agent is generally essentially required for preparation of sugar confectioneries having a high sugar content, such as gummy candies and the like, so as to maintain the shape retentivity, there are not many gelling agents which can be used in the presence of a high sugar content, and such gelling agents are conventionally limited to gelatin, carrageenans, pectin and agar. However, even when these gelling agents are used in place of the dextrin (I), then if these gelling agents are used in combination of two or more thereof, or another polysaccharide is used in combination therewith, the viscosity increases, resulting in a deterioration in workability during pouring.

In contrast to this, when the dextrin described in (I) above is used, the shape retentivity can be maintained without using a gelling agent. Also, even when the dextrin (I) and another polysaccharide are used in combination, the problem that an increase in viscosity deteriorates workability during pouring does not arise. As a result, it is possible to obtain gummy candies having a variety of mouthfeel sensations.

Moreover, the sugar confectioneries of the present invention which are prepared using the dextrin (I) have the following advantages.

(1) As the viscosity is low during preparation of the sugar confectioneries, the workability is good.
(2) Even when the dextrin (I) is used singly (a gelling agent is not blended), the sugar confectioneries can have shape retentivity.
(3) A desired viscoelasticity or a specific fat- and oil-like smooth mouthfeel can be imparted to the sugar confectioneries.
(4) As the dextrin (I) has low interaction with other gelling agents, the workability is not reduced when another gelling agent is used in combination with the dextrin (I).

On the other hand, when a dextrin having a blue value of less than 0.4 is used in place of the dextrin (I), shape retentivity cannot be obtained, and therefore, it is not possible to obtain sugar confectioneries, such as gummy candies and the like. Also, when a dextrin having a blue value of more than 1.2 is used, only sugar confectioneries which have shape retentivity, but have grittiness and lack smoothness or have starch-specific flavor are obtained. Also, when a dextrin having a gel strength of less than 4 N/cm$^2$ is used, shape retentivity may not be obtained and solidification may not occur. Also, when a dextrin having a viscosity exceeding 100 mPa·s is used, workability during preparation may be reduced, or starch-specific roughness may impair smoothness.

The blend amount of the dextrin in the sugar confectioneries of the present invention can be adjusted as appropriate, depending on the types of the sugar confectioneries to be obtained, a required mouthfeel or the like. The blend amount of the dextrin is generally 5 to 40 wt%, preferably 10 to 25 wt%, and more preferably 15 to 20 wt%, for example.

By using the dextrin (I), sugar confectioneries having shape retentivity, such as gummy candies and the like, can be prepared without using gelatin, a carrageenan, pectin or agar, which are conventionally essentially required. In the present invention, other polysaccharides can be used in combination with the dextrin. Thus, gummy candies having various mouthfeel sensations can be prepared. Here, the polysaccharide(s) is preferably, for example, at least one selected from the group consisting of psyllium seed gum, carrageenans, gum ghatti and tamarind seed gum, and is more preferably psyllium seed gum and/or a carrageenan.

For example, sugar confectioneries having a mouthfeel similar to that of nama-caramel (cream-rich caramel) can be prepared using the dextrin (I) in combination with psyllium seed gum.

Cream-rich caramel is a kind of caramel which is prepared by mixing and dissolving water and a saccharide and boils and fatsing down the mixture, adding a dairy product and a hydrogenated oils to the mixture, further adding fondant to the mixture, followed by kneading and graining. Cream-rich caramel is soft and have considerably good melting in the mouth (mouthfeel). Cream-rich caramel has less chewing ability and adhesiveness as compared to ordinary caramels, and have softness similar to that of ganache (cream-rich chocolate), and considerably good melting in the mouth (mouthfeel). However, as cream-rich caramel is prepared using an increased amount of material milk or dairy cream so as to impart the softness and the good melting in the mouth (mouthfeel), it is generally necessary to refrigerate cream-rich caramels at 10˚C or less, and the storage life thereof is about 30 days, i.e., considerably short.

In contrast to this, according to the present invention, by using psyllium seed gum in combination with the dextrin (I) to prepare sugar confectioneries which can be preserved at room temperature, a mouthfeel similar to that of cream-rich caramel can be imparted to the sugar confectioneries. Specifically, although gummy candies have elasticity (mouthfeel), it is possible to obtain cream-rich caramel-like gummy candies which are soft and have good melting in the mouth (mouthfeel) and low adhesiveness by blending the dextrin (I) and psyllium seed gum thereto. Moreover, the gummy candies can be distributed at room temperature, and therefore, it is possible to provide sugar confectioneries which have a mouthfeel similar to that of cream-rich caramel and can be distributed at room temperature.

Note that psyllium seed gum is naturally occurring plant gum which is produced from seeds of, mainly, <u>Plantagoovata</u> <u>Forskal</u> or the like of Planta plants (Plantaginaceae). In the present invention, any existing psyllium seed gums can be used. Such a preparation is commercially available. An example of commercially available psyllium seed gum is "VIS-TOP(trademark) D-2074 manufactured by San-Ei Gen F.F.I., Inc. Although psyllium seed gum cannot impart shape retentivity to gummy candies on its own, it is possible to impart shape retentivity by using psyllium seed gum in combination with the dextrin (I). The additive amount of psyllium seed gum in sugar confectioneries is 0.5 to 2.0 wt%, preferably 0.8 to 1.5 wt%, and more preferably 0.8 to 1.0 wt%, for example.

Also, by using a carrageenan in addition to the dextrin (I) in preparation of sugar confectioneries, a mochi (mochi is a Japanese rice cake)-like mouthfeel similar to that of uiro (a Japanese steamed cake) or the like can be imparted to the sugar confectioneries. Uiro is a kind of sugar confectionery which is prepared by adding sugar to powder of rice, warabi (Pteridium aquilinum), wheat flour or the like, and steaming the mixture, and has a mochi-like mouthfeel.

The carrageenan used here is a carrageenan which can be used at a high sugar concentration, preferably iota carrageenan or a combination of iota carrageenan and kappa carrageenan. Examples of commercially available carrageenan products include "GEL RICH(trademark) No. 1, "GEL RICH(trademark) No. 3 and "GEL RICH(trademark) No. 4 manufactured by San-Ei Gen F.F.I., Inc. and the like. The additive amounts of the carrageenans in the sugar confectioneries are 0.5 to 4.0 wt%, preferably 0.5 to 2.0 wt%, and more preferably 0.8 to 1.2 wt%, for example.

The sugar confectioneries of the present invention can be prepared using a commonly used method for producing sugar confectioneries, except that the dextrin (I) is blended thereto, or preferably, the dextrin (I) and a polysaccharide, such as psyllium seed gum, a carrageenan or the like, are blended thereto. For example, gummy candies can be prepared as follows. A powder mixture of the dextrin (I) and sugar, corn syrup and water are mixed together, and the mixture is boils and fatsed down to a predetermined sugar concentration. Thereafter, an acidulant, an aroma chemical, a colorant and the like are added to the mixture, which is then poured into a starch mold, followed by drying to a predetermined moisture content. On the other hand, when a polysaccharide, such as psyllium seed gum, a carrageenan or the like, is used in combination with the dextrin (I), the polysaccharide, such as psyllium seed gum, a carrageenan or the like, is dispersed in water and is dissolved by boils and fatsing, and a powder mixture of the dextrin (I) and sugar, and corn syrup are added to the mixture, which is then boils and fatsed down to a predetermined sugar concentration. Next, an acidulant, an aroma chemical, a colorant and the like are added to the mixture, which is then poured into a starch mold, followed by drying to a predetermined moisture content.

Soft candies are prepared as follows. A powder mixture of the dextrin (I) and sugar is added to measured amounts of water and corn syrup, followed by thorough dissolution. A vegetable oils and fats, an emulsifying agent, water and the like are added to the mixture, followed by boils and fatsing down to remove moisture to a predetermined content. Next, gelatin is added to the mixture, followed by thorough mixing and emulsification using a horizontal kneader. Fondant is added to the mixture, allowing sugar crystallization to occur. An acid, an aroma chemical, a colorant and the like are added to the mixture, followed by cooling. Also, when a polysaccharide is used in combination with the dextrin (I), for example, measured amounts of a carrageenan and corn syrup are dispersed, and thereafter, water is added to the mixture and the carrageenan is dissolved by boils and fatsing. A powder mixture of the dextrin (I) and sugar is then added to the mixture, followed by thorough dissolution. A vegetable oils and fats, an emulsifying agent, water and the like are added to the mixture, which is then boils and fatsed down to remove moisture to a predetermined content, followed by thorough mixing and emulsification using a horizontal kneader. Fondant is added to the mixture, allowing sugar crystallization to occur. An acid, an aroma chemical, a colorant and the like are added to the mixture, followed by cooling.

As described above, the sugar confectioneries of the present invention are not particularly limited and are any sugar confectioneries that are made from a saccharide, such as glucose, sucrose or the like, and are prepared by dissolving the saccharide in water and boils and fatsing down the solution, followed by shaping (pouring) and then solidification by drying or cooling. The sugar confectioneries preferably have at least one of the following characteristics (1) and (2):

(1) having a moisture content of 15 to 30%; and
(2) having a soluble solid content of 70 to 85%, more preferably 75 to 85%.

The dextrin (I) can impart a desired viscoelasticity and fat- and oil-like smooth mouthfeel to sugar confectioneries, and therefore, even when the additive amount of a sugar component, oils and fats or the like is reduced, it is possible to provide sugar confectioneries which have a mouthfeel comparable to that which is obtained before the reduction.

(II-8) Beverages

Beverages to which the present invention is directed include milk-containing beverages such as milk, milk beverages containing 3% or more of and milk solids (including non-fat milk solids and milk fat components), lactic acid beverages(a lactic acid beverages), milk coffee, cocoa and the like; fruit juice-containing beverages; vegetable juice-containing beverages; and soft beverages.

As beverages have a high moisture content, if fats and oils components or non-fat milk solids are reduced in the beverages, richness and body which are imparted by these components are reduced, resulting in a thin mouthfeel or taste, and therefore, a lack of satisfaction. This phenomenon becomes significant when milk fat components or non-fat milk solids are reduced particularly in beverages containing milk components as major components or containing milk components (e.g., milk-containing beverages such as milk, milk beverages, lactic acid beverages, milk coffee, cocoa and the like).

In contrast to this, by using the dextrin described in (I) above in preparation of the aforementioned beverages, desired richness and body can be imparted to the beverages even if the fats and oils content of the beverages is 1.5 wt% or less, or further, less than 0.5 wt%. Also, the use of the dextrin (I) makes it possible to obtain low-fat milk (milk fat content: 0.5 wt% or more and 1.5 wt% or less) having richness and milk fattiness which are comparable to those of milk (milk fat content: 3 wt% or more). Moreover, the use of the dextrin (I) makes it possible to obtain fat-free milk (milk fat content: less than 0.5 wt%) having richness and milk fattiness which are comparable to those of low-fat milk.

Also, by using the dextrin (I), beverages can be prepared whose oils and fats enriched properties and richness are enhanced, to which a smooth mouthfeel can be imparted, and which have a feel of high quality and a milk-rich mouthfeel, even if the milk fat content and the milk solid not fat are not increased.

Also, if fruit juice-containing beverages or vegetable juice-containing beverages containing fruits (strawberries, bananas, etc.) or vegetable purees are prepared using the dextrin (I), the mouthfeel and flavor of the purees (robustness of fruit juices or vegetable juices) can be enhanced, thereby making it possible to provide beverages having the mouthfeel and flavor of thick puree. Conventionally, the mouthfeel of thick puree is imparted to a beverage by increasing the viscosity of the beverage using a polysaccharide thickener or the like. However, the use of a polysaccharide thickener disadvantageously leads to the occurrence of polysaccharide-specific stickiness, the occurrence of viscosity, or the like, resulting in a degradation in flavor release. In contrast to this, fruit juice-containing beverages or vegetable juice-containing beverages which are prepared using the dextrin (I) are excellent in terms of an enhanced feel of thick (rich) puree, a sharp mouthfeel without stickiness, and good flavor release.

The blend amount of the dextrin to beverages can be adjusted as appropriate, depending on the types of the beverages or a required mouthfeel and richness. The blend amount of the dextrin is generally 0.2 to 10 wt%, preferably 0.5 to 7 wt%, and more preferably 1 to 5 wt%, for example. If the blend amount of the dextrin is less than 0.2 wt%, it may be difficult to obtain the effect of enhancing richness and a feel of puree. Also, if the blend amount of the dextrin is more than 10 wt%, a resultant beverage has a considerably heavy mouthfeel and is difficult to drink.

Note that, when beverages containing milk components as major components or containing milk components are prepared using the dextrin (I) in an amount corresponding to 0.2 to 2 wt%, preferably 0.3 to 1 wt%, even if the milk fat content is reduced by 1 wt%, milk fattiness, richness and a smooth mouthfeel can be obtained which are substantially the same as those which are obtained before the reduction. In other words, the blending of 0.2 to 2 wt%, preferably 0.3 to 1 wt%, of the dextrin (I) can replace the blending of 1 wt% of milk fat.

The beverages of the present invention can also be prepared using bacterial cellulose in addition to the dextrin described in (I) above. The use of bacterial cellulose in combination with the dextrin (I) can increase the stability of the beverages. More specifically, a tendency of the dextrin (I) to precipitate with time can be suppressed by using bacterial cellulose in combination therewith, although the tendency varies depending on the recipes, preservation temperatures or forms of the beverages. Also, the use of bacterial cellulose in combination with the dextrin (I) makes it possible to impart higher richness to the beverages than when the dextrin (I) is used singly.

The blend amount of bacterial cellulose to the beverages is 0.005 to 0.4 wt%, preferably 0.01 to 0.2 wt%, for example. Also, the blend ratio of bacterial cellulose to the dextrin (I) is 0.1 to 100 parts by weight, preferably 1 to 10 parts by weight, per 100 parts by weight of the dextrin (I) blended to the beverages, for example.

The method of adding the dextrin (I) to the beverages is not particularly limited if the dextrin is contained in the final beverage. Various methods can be used. For example, a solution in which the dextrin (I) is dissolved may be added to the beverages, the dextrin (I) in a powdered form may be added to and dissolved in the beverage along with an emulsifying agent, a thickening agent and the like, and the like.

Examples

The present invention will be specifically described hereinafter by way of examples and comparative examples. Note that the present invention is not limited to these. Also, as used herein, "parts" means "parts by weight" and "%" means "wt%" unless otherwise specified. As used herein, products with a mark "*" indicate those which are manufactured by San-Ei Gen F.F.I., Inc., and a mark "‡" is an abbreviation of "registered trademark" of San-Ei Gen F.F.I., Inc.

Preparation Examples 1 to 3 : Preparation of dextrin

Potato starch was poured into water at 70˚C, followed by stirring, to obtain a suspension. Heat-resistant α-amylase was added to and mixed in the suspension, and thereafter, the mixture suspension was allowed to react at 70 to 100˚C. The degree of decomposition was evaluated using a blue value (absorbance at 680 nm) as a measure.

Note that the blue value was obtained by the following method.

(1) An aqueous solution containing the dextrin at a concentration of 1 w/v% is prepared and cooled to 25˚C.

(2) Ten ml of the 1 w/v% aqueous solution of the dextrin (25˚C) is mixed with 10 ml of an aqueous solution containing 20 mg of iodine and 200 mg of potassium iodide, and the mixture solution is adjusted with distilled water to 100 ml.

(3) After the thus-obtained prepared solution is shaken at 25˚C for 30 minutes while being shielded from light, an absorbance at 680 nm of the reaction solution is measured using a spectrophotometer at 25˚C.

In this case, when the blue value (absorbance at 680 nm) reached within a desired range of 0.4 to 1.2, preferably within the range of 0.5 to 0.9, hydrochloric acid was added to the reaction solution, followed by heated to 90˚C, to inactivate the enzyme (heat-resistant $\alpha$-amylase), thereby arresting the reaction.

Dextrin solutions having a blue value of 0.66, 0.60 and 0.83 were prepared in this manner. The dextrin solutions were subjected to the aforementioned enzymatic reaction, followed by decolorization and filtration using active carbon and pearlite, and then spray drying into powder. The powder was used in experiments described below. Dextrins (powder) having a blue value of 0.66, 0.60 and 0.83 are referred to hereinafter as dextrins of Preparation Examples 1 to 3.

Experimental Example 1 Characteristics of dextrins

For the dextrins prepared in Preparation Examples 1 to 3, the following characteristics (a) to (d) were measured. Also, for comparison, the characteristics (a) to (d) of existing dextrins were similarly measured (an existing product 1: "PASELLI SA2 (manufactured by AVEBE), an existing product 2: "Instant N-Oils and fats II"(manufactured by Nippon NSC Ltd.), an existing product 3: Pinedex #100 (manufactured by Matsutani Chemical Industry Co., Ltd.), an existing product 4: "C*DELIGHT MD01970 (manufactured by Cargill Japan Limited), an existing product 5: "Dextrin NSD-C" (manufactured by Nissi CO., LTD.), an existing product 6: "Pinedex #3 (manufactured by Matsutani Chemical Industry Co., Ltd.)).

(a) Blue value:

An absorbance (680 nm) of a reaction solution is measured by the following method.

(1) A 1 w/v% aqueous solution of a dextrin is prepared using distilled water at 80˚C, and is then cooled to 25˚C.

(2) 10 ml of the 1 w/v% aqueous solution of the dextrin (25˚C) is mixed with 10 ml of an aqueous solution containing 20 mg of iodine and 200 mg of potassium iodide (0.2 w/v% of iodine and 2 w/v% of potassium iodide), and is then adjusted with distilled water to an amount of 100 ml prepared solution.

(3) After the prepared solution is shaken at 25˚C for 30 minutes while being shielded from light, the absorbance at 680 nm of the reaction solution is measured using a spectrophotometer at 25˚C.

(b) Gel(Jelly) strength (N/cm$^2$):

A gel strength (N/cm$^2$) is measured after being dissolved in distilled water at 80˚C to prepare a 30 wt% aqueous solution of a dextrin, and then being allowed to stand at 5˚C for 24 hours, by the following method,

A load is applied to the object to be measured at 5˚C using a plunger having a diameter of 3 mm at a plunger rate of 60 mm/min. When the object to be measured is ruptured, a load (N/cm$^2$) of the object is measured.

(c) Viscosity (mPa·s):

A 30 wt% aqueous solution of a dextrin is prepared using distilled water at 25˚C. After being allowed to stand at 25˚C for 5 minutes, a viscosity (mPa·s) of the solution is measured by one-minute measurement using a BL type rotating viscometer (equipped with rotor Nos. 1 to 4) at 25˚C, where the rotational speed is 12 rpm. Note that the range of the viscosity which can be measured under these conditions are: 0 to 500 mPa·s for rotor No. 1; 0 to 2,500 mPa·s for rotor No. 2; 0 to 10,000 mPa·s for rotor No. 3; and 0 to 50,000 mPa·s for rotor No. 4.

(d) Ratio of gel strengths (A/B)

The ratio (A/B) of gel strengths A and B measured under the following conditions is obtained. Note that the gel strength is measured by the method described in (b) above.

A: a gel strength (N/cm$^2$) as measured after being dissolved in distilled water at 80°C to prepare a 30 wt% aqueous solution of the dextrin, and then being allowed to stand at 5°C for 24 hours; and

B: a gel strength (N/cm$^2$) as measured after being dissolved in distilled water at 25°C to prepare a 30 wt% aqueous solution of the dextrin, and then being allowed to stand at 5°C for 24 hours.

The results are shown in Table 2.

[Table 2]

| Dextrin | F. Ex. 1 | F. Ex. 2 | F. Ex. 3 | Existing product 1 | Existing product 2 | Existing product 3 | Existing product 4 | Existing product 5 | Existing product 6 |
|---|---|---|---|---|---|---|---|---|---|
| | | | | PASELLI SA2 AVEBE | Instant N-Oils and fats II Nippon NSC Ltd. | Pinedex #100 Matsutani Chemical Industry Co., Ltd. | C*DELIGHT MD01970 Cargill Japan Limited | Dextrin NSD-C Nissi CO., LTD. | Pinedex #3 Matsutani Chemical Industry Co., Ltd. |
| (a) Blue value (λ680 nm) | 0.66 | 0.60 | 0.83 | 1.42 | 1.74 | 0.32 | 1.54 | 0.11 | 0.04 |
| (b) Gel strength (N/cm$^2$) | 6.8 | 6.1 | 8.0 | 4.8 | 4.8 | liquid, incapable measurement | 6.9 | liquid, incapable | liquid, incapable |
| (c) Viscosity (mPa·s) | 55 | 50 | 69 | 235 | 48,000 | 130 | 220 | measurement 30 | measurement 9 |
| (d) Gel strength ratio (A/B) | 1.3 | 1.3 | 1.5 | - | 0.58 | - | 2.16 | - | - |
| Gel strength A (N/cm$^2$) | 6.8 | 6.1 | 8.0 | 4.8 | 4.8 | liquid, incapable measurement | 6.9 | liquid, incapable | liquid, incapable |
| Gel strength B | 5.2 | 4.7 | 5.3 | paste, incapable measurement | 8.3 | liquid, incapable measurement | 3.2 | measurement liquid, incapable measurement | measurement liquid, incapable measurement |
| DE value | 3.8 | 4.2 | 3.5 | 3.2 | NA | 3.6 | NA | 9.0 | 25 |

F. Ex. = Preparation Example

Experimental Example 2 Preparation of fatty tissue substitute (1)

It was studied whether or not a fatty tissue substitute can be prepared using various dextrins (Preparation Example 1 and the existing products 1 to 5) shown in Table 2.

Specifically, the dextrins shown in Table 2 (Preparation Example 1 and the existing products 1 to 5) were each added to water at 70˚C, following by dissolution with stirring, to prepare a 35% dextrin-containing aqueous solution. Next, the resulting dextrin-containing aqueous solution was poured into a container and was then cooled in a refrigerator (5˚C) for 24 hours. The suitability as a fatty tissue substitute of the products thus obtained was evaluated in terms of appearance, property (Fattiness/richness), easiness to mince, and taste and smell.

A product (Example 2-1) prepared using the dextrin of Preparation Example 1 had a white appearance similar to that of fatty tissue (fat), was neither liquid nor semi-liquid and had appropriate hardness at room temperature (25˚C). And the product(Example 2-1) had excellent workability when it was processed into ground (minced) material or the like using a machine. Also, the product did not have dextrin-specific starch flavor or unpleasant taste, and was useful as an edible fatty tissue substitute.

On the other hand, products (Comparative Examples 2-3 and 2-5) prepared using the dextrins of the existing products 3 and 5 were all liquid even when cooled to 1˚C, and therefore, were not able to be a substitute for fatty tissue (fat). Also, fatty tissue substitutes (Comparative Examples 2-1, 2-2 and 2-4) prepared using the dextrins of the existing products 1, 2 and 4 were all solid at room temperature (25˚C), but (i) had a high viscosity when dissolving dextrins, resulting in poor workability during preparationpreparation, (ii) had grittiness and lacked a smooth mouthfeel, (iii) had a slight light brown appearance and lacked an appearance similar to that of fatty tissue (fat), (iv) collapsed into small pieces when tried to be minced by mechanical processing, and the like. Thus, the products were not suitable for a fatty tissue substitute. Also, products prepared using the dextrins of the existing products 1 to 3 had strong starch-specific flavor and were not suitable for foods.

Experimental Example 3 Preparation of fatty tissue substitute (2)

It was studied whether or not a fatty tissue substitute can be prepared using the dextrins of Preparation Example 1 or the existing products 1 to 5 in combination with a carrageenan. Specifically, initially, 33 parts of the dextrin (powder) and 1.7 parts of the carrageenan (powder) were mixed and were added to water at 50˚C to a total amount of 100 parts, followed by stirring for 10 minutes, to prepare an aqueous solution containing the dextrin and the carrageenan. Thereafter, the resulting aqueous solution was poured into a container and was then cooled in a refrigerator (5˚C) for 24 hours (Example 3-1 and Comparative Examples 3-1 to 3-5). Also, as a control for comparison, a carrageenan-containing aqueous solution was prepared in a manner similar to that described above, except that no dextrin was used, and instead, glucose was used (the total solid content was adjusted), and was then cooled in a refrigerator (5˚C) for 24 hours (Comparative Example 3-0, no dextrin was used).

Note that, as the aforementioned carrageenan, a carrageenan (GEL RICH‡ No. 3[*]) satisfying the following characteristics (1) to (3) was used:

(1) being soluble in water at 50˚C or less;
(2) a 1.5 wt% aqueous solution of the carrageenan being not gelable at 25˚C; and
(3) containing more than 0 and not more than 0.1 wt% of calcium ions.

The suitability as a fatty tissue substitute of the aforementioned products (preparations) was evaluated in terms of (i) fattiness and richness, (ii) easiness to mince, (iii) flavor, and (iv) overall evaluation. Note that (i) fattiness and richness, and (ii) easiness to mince were evaluated in accordance with criteria described below. Also, the overall evaluation was carried out in a comprehensive manner from (i) to (iii), where, of all the preparations, one which is the most suitable for a fatty tissue substitute was given a score of 10 (good), and one which is the least suitable was given a score of 1 (poor).

(1) Fattiness and richness

A mouthfeel of each preparation when it is eaten is evaluated on a scale of 1 to 10. Specifically, of all the preparations, one which has a mouthfeel which is the closest to that which is obtained when fatty tissue is used, is given a score of 10 (good), and one which has a mouthfeel which is the most different from that which is obtained when fatty tissue is used, is given a score of 1 (poor).

(2) Easiness to mince

Easiness to mince of each preparation when it is processed into a ground (minced) material is evaluated on a scale of 1 to 10. Specifically, of all the preparations, one which is processed into the most uniform and clear grains is given a score of 10 (good), and one which collapses into small pieces or which is apt to adhere to an apparatus and therefore which is processed into the most non-uniform grains, is given a score of 1 (poor).
The results are shown in Table 3.
[Table 3]

| | Dextrin | Fattiness/ richness | Easiness to mince | Flavor | Overall evaluation |
|---|---|---|---|---|---|
| Example 3-1 | Preparation Example 1 | 10 | 10 | good | 10 |
| Comparative Example 3-0 | no use | 1 | 1 | good | 1 |
| Comparative Example 3-1 | Existing product 1 | 4 | 7 | starch - derived flavor | 3 |
| Comparative Example 3-2 | Existing product 2 | too viscosious to prepare when dissolved at room temperature | | | 1 |
| Comparative Example 3-3 | Existing product 3 | 3 | 2 | starch-derived flavor | 2 |
| Comparative Example 3-4 | Existing product 4 | 4 | 5 | starch-derived flavor | 3 |
| Comparative Example 3-5 | Existing product 5 | 2 | 1 | good | 2 |

As shown above, the product (Example 3-1) which was prepared using the dextrin of Preparation Example 1 in combination with the carrageenan, had a white and fatty tissue (fat)-like appearance, and was not liquid or semi-liquid and had appropriate hardness at room temperature (25°C), and also had excellent workability when it was processed into a ground (minced) material or the like using a machine. Also, the product did not have dextrin-specific starch-derived flavor and was suitable for an edible fatty tissue substitute.

Experimental Example 4 Coarse-ground sausage in which fat is replaced

A coarse-ground sausage was prepared using the fatty tissue substitute (Example 3-1) prepared in Experimental Example 3 in place of lard. Specifically, according to a recipe shown in Table 4, common salt, polymeric phosphate, sodium nitrite and L-sodium ascorbate were added to and mixed with the fatty tissue substitute (Example 3-1) and pork, and the mixture was allowed to stand in a refrigerator (5°C) overnight. Next, ice-cold water, sodium casein, spices, sugar and potassium sorbate were added to the mixture, followed by mixing. Thereafter, the resultant preparation was stuffed into a sheep intestine by a commonly used method, followed by heating. Thus, the coarse-ground sausage (Example 4-1) was prepared. Also, for comparison, a coarse-ground sausage (control example) was similarly prepared using 10 kg of lard in place of 10 kg of the aforementioned fatty tissue substitute (Example 3-1).
[Table 4]

| Recipe of coarse-ground ground sausage (kg) | |
|---|---|
| Pork | 70.0 |
| Fat tissue substitute (Example 3-1) | 10.0 |
| Ice-cold water | 20.0 |
| Common salt | 1.7 |

(continued)

| Recipe of coarse-ground ground sausage (kg) | |
|---|---|
| Polymeric phosphate | 0.3 |
| Sodium nitrite | 0.012 |
| L-sodium ascorbate | 0.08 |
| Sodium casein | 1.0 |
| Sugar | 1.2 |
| Spices | 0.9 |
| Potassium sorbate | 0.2 |

The resulting coarse-ground sausages (Example 4-1 and the control example) were eaten after being boils and fatsed in hot water at 80°C for 5 minutes. When the coarse-ground sausage of Example 4-1 was eaten, the fatty tissue substitute was melted out along with meat juice in the mouth, and therefore, it was confirmed that the coarse-ground sausage has coarse-ground sausage-specific richness and juiciness of fatty tissue which are comparable to those of the ordinary coarse-ground sausage (control example) which was prepared using lard. In this regard, it was confirmed that the preparation of Example 3-1 is suitable for a fatty tissue substitute.

Experimental Example 5 Preparation of corn-flavor chicken sausage in which fat is replaced

(1) Preparation of sweet corn-flavor fatty tissue substitute (Example 5-1)

A sweet corn-flavor fatty tissue substitute (Example 5-1) was prepared according to a recipe shown in Table 5. Specifically, a mixture of the dextrin of Preparation Example 1 and a carrageenan (GEL RICH‡ No. 3[*]) was added to water, followed by mixing while stirring. Thereafter, soy milk powder, supersweet corn powder (manufactured by Knorr Trading Co., Ltd.), a sweet corn flavor (aroma chemical) and a colorant were added and then dissolved with stirring. The resultant aqueous solution was poured into a container, and was then cooled in a refrigerator (5°C). Thus, the sweet corn-flavor fatty tissue substitute (Example 5-1) was obtained.
[Table 5]

| Recipe of sweet corn-flavor fat tissue substitute (kg) | |
|---|---|
| Dextrin (Preparation Example 1) | 30.0 |
| Carrageenan (GEL RICH‡ No. 3*) | 1.0 |
| Soy milk powder | 2.0 |
| Supersweet corn powder | 3.0 |
| Sweet corn flavor | 0.3 |
| Colorant | 0.05 |
| Water | balance |
| Total | 100.0 |

(2) Preparation of corn-flavor chicken sausage in which fat is replaced (Example 5-2)

A corn-flavor chicken sausage (Example 5-2) was prepared according to a recipe shown in Table 6 using the aforementioned sweet corn-flavor fatty tissue substitute (Example 5-1). Specifically, chicken breast, ice-cold water, common salt, polymeric phosphate, sodium nitrite, L-sodium ascorbate, sugar and spices were successively added, followed by cutting. Next, the sweet corn-flavor fatty tissue substitute prepared in (1) was added, followed by slight cutting. A whipped composition described in the recipe of Table 6 was added, followed by slight cutting and then kneading. The resultant material was stuffed into a sheep intestine by a commonly used method, followed by heating. Thus, the corn-flavor chicken sausage (Example 5-2) was prepared. Note that the whipped composition was prepared by adding a mixture of whey protein and a carrageenan to water, whipping the mixture using a hand mixer, adding processed starch to the mixture, and whipping the mixture again.

[Table 6]

| Recipe of corn-flavor chicken sausage (kg) | | |
|---|---|---|
| Chicken breast | | 65.0 |
| Sweet corn-flavor fat tissue substitute (Example 5-1) | | 15.0 |
| Ice-cold water | | 35.0 |
| Whipped composition | modified starch | 8.0 |
| | Whey protein | 8.0 |
| | Carrageenan (GEL RICH‡ No. 3*) | 0.3 |
| | Water | 83.7 |
| Common salt | | 1.5 |
| Polymeric phosphate | | 0.3 |
| Sodium nitrite | | 0.012 |
| L-sodium ascorbate | | 0.08 |
| Sugar | | 0.5 |
| Spices | | 5.8 |

For comparison, a corn-flavor chicken sausage (control example) was similarly prepared using 15 kg of a fat processed product which was prepared by mixing a composition having a recipe described below at room temperature, in place of 15 kg of the aforementioned sweet corn-flavor fatty tissue substitute (Example 5-1).

<Recipe of fat processed product (kg)>

| | |
|---|---|
| Lard (5-mm ground pork fat) | 94.65 (%) |
| Soy milk powder | 2.00 |
| Supersweet corn powder | 3.00 |
| Sweet corn flavor | 0.30 |
| colorant | 0.05 |
| Total | 100.00 (%) |

When the resulting corn-flavor chicken sausage (Example 5-2) was boils and fatsed and eaten, the fatty tissue substitute (Example 5-1) was melted out along with meat juice in the mouth, and therefore, it was confirmed that the corn-flavor chicken sausage has richness and juiciness of fat which are comparable to those of the corn-flavor chicken sausage (control example) which was prepared using lard. Moreover, it was confirmed that, by using a fatty tissue substitute to which a sweet corn-flavor is previously imparted like the fatty tissue substitute of Example 5-1, a sausage can be obtained to which a rich corn taste is imparted as compared to when a corn-flavor seasoning is mixed into a sausage.

Experimental Example 6 Hamburg in which fat is replaced

A hamburg in which fat is replaced was prepared according to a recipe described below. Specifically, a dextrin (Preparation Example 3), a carrageenan and guar gum were gradually added to water while stirring, followed by dissolution with stirring at 70˚C for 10 minutes. The solution was poured into a container, and was then allowed to stand in a refrigerator for 24 hours until the solution solidified and turned to white. Thus, the fatty tissue substitute (Example 6-1) was prepared.

<Recipe of fatty tissue substitute>

| Dextrin (Preparation Example 3) | 37.0 (kg) |
|---|---|
| Carrageenan | 1.5 |
| Guar gum | 1.2 |
| Water | balance |
| Total | 100.0 kg |

Next, a hamburg was prepared using the aforementioned fatty tissue substitute (Example 6-1). Specifically, materials of a recipe described below were mixed together, the mixture (90 g) was shaped, and the shaped mixture was cooked using a portable electric griddle at 180°C for one minute for each surface. Next, the shaped mixture was cooked by steaming until the center of the mixture reached a temperature of 75°C. Thus, the hamburg in which fat is replaced (Example 6-2) was prepared. On the other hand, as a control for comparison, a hamburg (control example) was prepared using lard in place of the fatty tissue substitute.

[Table 7]

| <Recipe of hamburg> (kg) | | |
|---|---|---|
| | Example 6-2 | Control Example |
| Beef round (5-mm ground meat) | 25.0 | 25.0 |
| Pork leg (5-mm ground meat) | 20.0 | 20.0 |
| Pork fat (5-mm ground meat) | - | 15.0 |
| Fat tissue substitute (Example 6-1) | 15.0 | - |
| Granular soybean protein (with 3-fold water) | 10.0 | 10.0 |
| Onion (sautéed) | 10.0 | 10.0 |
| Nama-panko (a kind of non-dried bread crumb in Japan) | 5.0 | 5.0 |
| Water | 15.0 | 15.0 |
| Common salt | 0.4 | 0.4 |
| Preservative | 0.5 | 0.5 |
| Trehalose | 1.5 | 1.5 |
| Dried konjac processed product (SAN SMART‡ 400*) | 0.5 | 0.5 |
| Seasoning | 0.2 | 0.2 |
| Spices | 0.3 | 0.3 |

The hamburg (Example 6-2) prepared according to the aforementioned recipe had a calorie value which was lower by about 40% than that of the hamburg of the control example, but had a juicy mouthfeel which was not much different from that of the hamburg of the control example. Therefore, it was confirmed that, by using the fatty tissue substitute (Example 6-1), a low-fat hamburg can be prepared without impairing a taste or a mouthfeel.

Experimental Example 7 Preparation of emulsion-like composition (mayonnaise-like composition) containing no oils and fats (1)

It was studied whether an emulsion-like composition which has a property and a mouthfeel which are similar to those of emulsion foods, such as mayonnaise and the like, can be prepared using the dextrins of Preparation Example 1 or the existing products 1 to 5 and without oils and fats.

Specifically, 15% of each dextrin (Preparation Example 1 or the existing products 1 to 5) was added to water at 80°C, followed by stirring, to prepare a dextrin-containing aqueous solution. After the total amount thereof was adjusted by water, the aqueous solution was poured into a container, followed by cooling in a refrigerator (5°C) for three days, to obtain a cloudy paste-like composition (Example 7-1 and Comparative Examples 7-1 to 7-5). Each prepared composition was evaluated in terms of appearance and mouthfeel. Also, the particle size distribution of crystalline particles of the dextrin which were generated in each composition was measured, from which a particle diameter (a median diameter and an average particle diameter) and a standard deviation were calculated. The results are shown in Table 8.

Note that the particle size distribution was measured using a laser diffraction particle size distribution analyzer (SALD-2100 manufactured by Shimadzu Corporation, measurement absorbance range: 0.01 to 0.2, refractive index: 1.70 to 0.20i). Also, as a control for comparison, a particle diameter and a particle size distribution of oils and fats particles in a commercially available mayonnaise (manufactured by Q.P. Corporation) (control example) were measured.

[Table 8]

| | Dextrin | Appearance | Mouthfeel | Crystalline particle | | |
|---|---|---|---|---|---|---|
| | | | | Median diameter ($\mu$m) | Average particle diameter ($\mu$m) | Standard deviation |
| Example 7-1 | Preparation Example 1 | cloudy | smooth | 3.06 | 2.73 | 0.30 |
| Comparative Example 7-1 | Existing product 1 | cloudy | gritty | 370.83 | 204.04 | 0.63 |
| Comparative Example 7-2 | Existing product 2 | brownish cloudy | gritty | 414.46 | 317.55 | 0.47 |
| Comparative Example 7-3 | Existing product 3 | transparent | smooth | - | - | |
| Comparative Example 7-4 | Existing product 4 | cloudy | slightly gritty | 4.30 | 3.03 | 0.70 |
| Comparative Example 7-5 | Existing product 5 | transparent | smooth | - | - | - |
| Control Example commercially available mayonnaise | - | - | - | 2.44 | 2.46 | 0.17 |

The composition (Example 7-1) which was prepared using the dextrin of Preparation Example 1 did not contain oils and fats, but had emulsion food-specific cloudiness and a smooth mouthfeel. Also, the crystalline particles have a median diameter and an average particle diameter which are both about 2 to 3 $\mu$m. This particle diameter is approximate to that of emulsion particles (crystalline microparticles) in mayonnaise, which contains oils and fats and has a smooth mouthfeel. The crystalline particles having such a particle diameter are considered to impart a smooth mouthfeel and oils and fats enriched properties to the processed food composition. Moreover, the crystalline particles of the composition (Example 7-1) which was prepared using the dextrin of Preparation Example 1 also had a standard deviation of as small as 0.30. From this, it was confirmed that an emulsion-like composition having an emulsion food-specific property and mouthfeel can be prepared using the dextrin of Preparation Example 1 and without using oils and fats.

On the other hand, the compositions (Comparative Examples 7-1 and 7-2) which were prepared using the dextrins of the existing products 1 and 2 had a median diameter and an average particle diameter which were both as large as about 200 to 400 $\mu$m, and had grittiness. Moreover, their standard deviations were also as large as 0.47 and 0.63, respectively. The composition (Comparative Example 7-4) which was prepared using the dextrin of the existing product 4 had a median diameter and an average particle diameter which were both as small as about 3 to 4 $\mu$m, but had a standard deviation of 0.70, i.e., a wide crystalline particle distribution, and therefore, there were large crystalline particles which impart grittiness and too small crystalline particles which cannot impart oils and fats enriched properties, resulting in a lack of sufficient smoothness and oils and fats enriched properties. Also, the compositions (Comparative Examples 7-3 and 7-5) which were prepared using the dextrins of the existing products 3 and 5 remained translucent after as long as three days of cooling, and even the particle diameter of the dextrin failed to be measured.

Experimental Example 8 Preparation of emulsion-like composition (dressing-like composition) containing no oils and fats (2)

It was studied whether or not an emulsion-like composition which has a property and a mouthfeel which are similar to those of emulsion foods, can be obtain using the dextrins of Preparation Example 1 and the existing product 1 to 3 in combination with xanthan gum and without using oils and fats. Specifically, initially, 15% of each dextrin (Preparation Example 1, the existing products 1 to 3) and 0.1% of xanthan gum (SAN ACE‡ NXG-S*) were added to water at 80˚C, followed by stirring, to prepare an aqueous solution containing the dextrin and the xanthan gum. Thereafter, the thus-prepared aqueous solution was poured into a container, followed by cooling in a refrigerator (5˚C), to prepare a cloudy liquid composition. Also, as a control for comparison, 0.2% of an emulsifying agent, 0.4% of xanthan gum (SAN ACE‡ NXG-S*) and 64.4% of water were mixed together, and 35% of salad oil was gradually added to the mixture little by little while stirring. The resultant mixture was homogenized using a colloid mill to prepare a cloudy liquid emulsion composition (control example containing no dextrin).

These compositions (Example 8-1 and Comparative Examples 8-1 to 8-3) which were prepared using the dextrins of Preparation Example 1 and the existing products 1 to 3 and without using oils and fats, and the emulsion composition (control example) which was prepared using oils and fats and without using a dextrin, were evaluated in terms of (1) smoothness, (2) richness and oils and fats enriched properties, (3) cloudiness, (4) glossiness, and (5) taste. Note that this evaluation was carried out on a scale of 1 to 10, where the control for comparison has a score of 10, and the ranking of scores from highest to lowest is 10, 9, 8, , and 1.

The results are shown in Table 9.

[Table 9]

| | Dextrin | Smoothness | Richness/ oils and fats enriched properties | Cloudiness | Glossiness | Taste |
|---|---|---|---|---|---|---|
| Example 8-1 | Preparation Example 1 | 10 | 9 | 9 | 10 | 9 |
| Comparative Example 8-1 | Existing product 1 | 3 | 6 | 7 | 4 | 2 |
| Comparative Example 8-2 | Existing product 2 | 6 | 3 | 7 | 6 | 6 |
| Comparative Example 8-3 | Existing product 3 | 7 | 2 | 1 | 5 | 3 |
| Control Example | no use | 10 | 10 | 10 | 10 | 10 |

As a result, the composition (Example 8-1) which was prepared using the dextrin of Preparation Example 1 had emulsion-specific smoothness, richness and oils and fats enriched properties, cloudiness, and glossiness which are comparable to those of the emulsion composition (the control for comparison), and did not contain oils and fats, but had a property similar to that of the emulsion composition (emulsion-like composition). Moreover, regarding taste and smell, it was confirmed that the composition of Example 8-1 does not have dextrin-specific starch flavor (smell and taste) and is satisfactory, and can be used as an edible emulsion-like composition. In contrast to this, the composition which was prepared using the dextrin of the existing product 3 was transparent and did not have emulsion-specific cloudiness. Also, the compositions which were prepared using the dextrins of the existing products 1 to 3 did not have emulsion composition-specific richness or glossiness, and in addition, had a gritty mouthfeel (Comparative Examples 8-1 to 8-3), strong dextrin-specific starch-derived flavor (Comparative Example 8-1) and the like. From this, it was confirmed that a composition which has a property similar to that of emulsion compositions cannot be obtained using the dextrins of the existing products.

Experimental Example 9 Preparation of non-emulsion mayonnaise-like seasoning containing no oils and fats (1)

Non-oils and fats seasonings (Examples 9-1 to 9-5) were prepared using the dextrins of the Preparation Examples 1 to 3 and without using oils and fats. Specifically, seasonings shown in Table 10 were added to water at 80˚C, followed by dissolution by heating for 10 minutes. Next, 3.5% of vinegar (using brewed vinegar having an acidity of 10%), 2% of straight lemon juice, 2.5% of common salt and 0.3% of sodium L-glutamate were added to the mixture, followed by stirring for two minutes, and thereafter, the mixture was adjusted with water so that the total amount becomes 100%. Thereafter, the thus-prepared aqueous solution was poured into a container by hot-fill packaging and was then cooled to room temperature, followed by cooling in a refrigerator (5°C).

On the other hand, for comparison, a seasoning (Comparative Example 9-3) was prepared in a similar manner, except that the dextrin of the existing product 3 (Pinedex #100 (manufactured by Matsutani Chemical Industry Co., Ltd.)) was used in place of the dextrin of Preparation Example 1.

[Table 10]

|  | Example | | | | | Comparative Example |
|---|---|---|---|---|---|---|
|  | 9-1 | 9-2 | 9-3 | 9-4 | 9-5 | 9-3 |
| Dextrin (Preparation Example 1) | 14 | - | - | 14 | 14 | - |
| Dextrin (Preparation Example 2) | - | 13 | - | - | - | - |
| Dextrin (Preparation Example 3) | - | - | 15 | - | - | - |
| Dextrin (existing product 3) | - | - | - | - | - | 14 |
| Xanthan gum[1] | 0.1 | 0.15 | 0.07 | 0.1 | 0.1 | 0.1 |
| Gum ghatti[2] | - | - | - | 0.3 | 0.3 | - |
| Sugar | 3 | 3 | 3 | 3 | 3 | 3 |
| Emulsifier (monoglyceride of succinate) | - | - | - | - | 0.05 | - |
| Total amount is adjusted with water | 100 | 100 | 100 | 100 | 100 | 100 |
| 1) SAN ACE‡ NXG-S*<br>2) Gum ghatti SD* | | | | | | |

The seasonings (Example 9-1 to 9-5) which were prepared using the dextrins of Preparation Examples 1 to 3 did not contain oils and fats or egg yolk, but had all property of cloudiness, smoothness, oils and fats enriched properties, and adhesiveness when they are spread on food products, and had a property, a flavor and a mouthfeel which are similar to those of mayonnaise (mayonnaise-like seasonings). Among them, the seasoning (Example 9-4) which was prepared using xanthan gum and gum ghatti in combination with the dextrin of Preparation Example 1, had a smoother mouthfeel. Also, the seasoning (Example 9-5) which was prepared using the dextrin of Preparation Example 1, xanthan gum and gum ghatti, and an emulsifying agent (a monoglyceride of succinate), was a mayonnaise-like seasoning having excellent stability of preservation which did not solidify or increase its viscosity even after long-term preservation, and had a smooth mouthfeel for a long period of time. This result means that the dextrin of Preparation Example 1 can be used to prepare a mayonnaise-like seasoning having an appearance, a flavor and a mouthfeel similar to those of mayonnaise, without using oils and fats or egg yolk. In other words, according to the present invention, it is possible to provide a low-calorie and low-fat mayonnaise-like seasoning which does not contain an allergen, such as egg or the like, and therefore, does not cause an allergy.

On the other hand, when the dextrin of the existing product 3 was used in place of the dextrin of Preparation Example 1, a mayonnaise-specific cloudy solution failed to be obtained, and therefore, a seasoning similar to mayonnaise failed to be prepared (Comparative Example 9-3).

Experimental Example 10 Preparation of non-emulsion mayonnaise-like seasoning containing no oils and fats (2)

Non-oils and fats seasonings (Example 10-1 and Comparative Examples 10-1 to 10-5) were prepared according to a recipe described below using the dextrins of Preparation Example 1 and the existing products 1 to 5 and without using oils and fats. Also, for comparison, a seasoning (Comparative Example 10-0: no dextrin was used) was similarly prepared using 14% of glucose (the total solid content was adjusted) in place of 14% of the dextrin.

<Recipe of non-oils and fats seasoning>

| | |
|---|---|
| Dextrin | 14.0 (%) |
| Sugar | 7.0 |

(continued)

| | |
|---|---|
| Apple cider vinegar | 7.0 |
| Brewed vinegar | 4.5 |
| Lemon juice | 2.0 |
| Common salt | 4.0 |
| Gum ghatti | 0.3 |
| Xanthan gum | 0.1 |
| Sodium L-glutamate | 0.2 |
| Carotene colorant | 0.1 |
| Water | balance |
| Total | 100.0% |

Specifically, sugar, xanthan gum (SAN ACE‡ NXG-S*), gum ghatti (gum ghatti SD*) and the dextrin were added to water while stirring, and were dissolved with stirring while heating at 80˚C for 10 minutes. Next, apple cider vinegar, brewed vinegar, lemon juice, common salt, sodium L-glutamate and a carotene colorant were added to the mixture, which was then adjusted with water so that the total amount becomes 100%. Thereafter, the thus-prepared solution was poured into a container by hot-fill packaging and was then cooled to room temperature, followed by cooled in a refrigerator (5˚C).

The seasonings thus obtained were evaluated in terms of (1) richness and oils and fats enriched properties, (2) appearance, (3) mouthfeel, (4) flavor, and (5) overall evaluation. Note that the evaluation was carried out on a scale of 1 to 10 for (1) richness and oils and fats enriched properties and (5) overall evaluation. Specifically, for (1) richness and oils and fats enriched properties, of the obtained seasonings, one which had the thickest paste and had high richness and oils and fats enriched properties was given a score of 10 (good), and one which had the lowest richness and oils and fats enriched properties was given a score of 1 (poor). Also, for (5) overall evaluation, of the obtained seasonings, which were evaluated in a comprehensive manner, one which was the most similar to mayonnaise was given a score of 10 (good), and one which was the least similar to mayonnaise was given a score of 1 (poor). The results are shown in Table 11.

[Table 11]

| | | Dextrin | oils and fats enriched propertie | Appearance (FIG. 1) | Mouthfeel | Flavor | Overall evaluation |
|---|---|---|---|---|---|---|---|
| Example 10-1 | | Preparation Example 1 | 10 | like cloudiness mayonnaise- | smooth mayonnaise-like | good | 10 |
| Comparative Example 10-1 | | Existing product 1 | 3 | aggregation/ separation | gritty | starch-derived flavor | 2 |
| Comparative Example 10-2 | | Existing product 2 | 3 | aggregation/ separation | gritty | good | 3 |
| Comparative Example 10-3 | | Existing product 3 | 2 | translucent | liquid | starch-derived flavor | 2 |
| Comparative Example 10-4 | | Existing product 4 | 3 | aggregation/ separation | gritty | starch-derived flavor | 2 |
| Comparative Example 10-5 | | Existing product 5 | 1 | translucent | liquid | good | 1 |

(continued)

|  | Dextrin | oils and fats enriched propertie | Appearance (FIG. 1) | Mouthfeel | Flavor | Overall evaluation |
|---|---|---|---|---|---|---|
| Comparative Example 10-0 | no use | 1 | transparent | Liquid | Good | 1 |

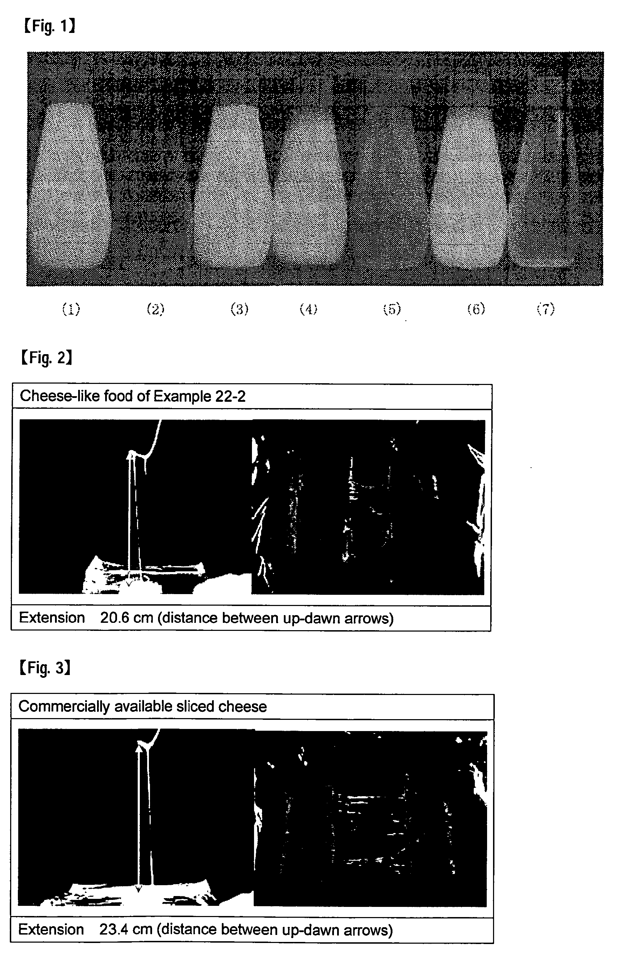

Also, appearances are shown in FIG. 1. In FIG. 1, (1), (3), (4), (5), (6) and (7) indicate the non-oils and fats seasonings (Example 10-1 and Comparative Examples 10-1 to 10-5) which were prepared using (1) the dextrin of Preparation Example 1, (3) the dextrin of the existing product 1, (4) the dextrin of the existing product 2, (5) the dextrin of the existing product 3, (6) the dextrin of the existing product 4, and (7) the dextrin of the existing product 5, respectively. Also, (2) indicates the non-oils and fats seasoning (Comparative Example 10-0) which was prepared without using a dextrin.

As can be seen from FIG. 1, the non-oils and fats seasoning (Example 10-1) which was prepared using the dextrin of Preparation Example 1 was uniformly cloudy, resulting in an appearance which is similar to that of mayonnaise, and also had a smooth mouthfeel similar to that of mayonnaise, and therefore, was similar to mayonnaises in terms of property, appearance and mouthfeel (mayonnaise-like seasoning). On the other hand, when the other dextrins (the existing products 1 to 5) were used, the resultant products did not have a cloudy appearance, and aggregation and separation occurred therein, and therefore, the products were different from mayonnaise in at least an appearance. Thus, a seasoning similar to mayonnaises failed to be prepared (Comparative Examples 10-1 to 10-5).

Experimental Example 11 Preparation of emulsion-like dressing containing no oils and fats (1)

A non-oils and fats dressing (Example 11-1) was prepared using the dextrin of Preparation Example 1. Specifically, initially, 10% of the dextrin of Preparation Example 1, 0.12% of xanthan gum (SAN ACE‡ NXG-S*), and 3% of sugar were added to water at 80˚C, followed by dissolution by heating for 10 minutes. Next, 10% of vinegar (using brewed vinegar having an acidity of 10%) and 2.5% of common salt were added to the mixture, followed by stirring for two minutes, and thereafter, the mixture was adjusted with water so that the total amount becomes 100%. Thereafter, the thus-prepared aqueous solution was poured into a container by hot-fill packaging and was then cooled to room temperature, followed by cooling in a refrigerator (5˚C) for three days.

The dressing thus obtained (emulsion-like dressing) did not contain oils and fats, but had richness and oils and fats enriched properties, cloudiness, and glossiness which are similar to those of emulsion-type oils and fats-containing dressings.

Experimental Example 12 Preparation of emulsion-like dressing containing no oils and fats (2)

Non-oils and fats dressings (Example 12-1 and Comparative Examples 12-1 to 12-5) were prepared according to a recipe described below using the dextrins of Preparation Example 1 and the existing products 1 to 5. Also, for comparison, a non-oils and fats dressing (Comparative Example 12-0: no dextrin was used) was similarly prepared using 8% of glucose (the total solid content was adjusted) in place of 8% of the dextrin.

<Recipe of non-oils and fats dressing>

| | |
|---|---|
| Dextrin | 8.0 (%) |
| Sugar | 6.0 |
| Brewed vinegar | 10.0 |
| Common salt | 3.0 |
| Xanthan gum | 0.1 |
| Sodium L-glutamate | 0.5 |
| SAN ARTIST‡ PX* | 0.8 |
| Aroma chemical | 0.1 |
| Water | balance |
| Total | 100.0% |

Specifically, sugar, SAN ARTIST‡ PX* (bacterial cellulose-containing preparation), xanthan gum (SAN ACE‡ NXG-S*) and the dextrin (Preparation Example 1, the existing products 1 to 5) were added to water while stirring, followed by dissolution at room temperature with stirring for 10 minutes. Next, brewed vinegar, common salt, sodium L-glutamate and an aroma chemical were added to the mixture, which was then adjusted with water so that the total amount becomes 100%. Thereafter, the thus-prepared solution was heated to 90°C, was then poured into a container by hot-fill packaging, and was then cooled to room temperature, followed by cooling in a refrigerator (5°C).

The dressings thus obtained were evaluated in terms of (1) richness and oils and fats enriched properties, (2) appearance, (3) mouthfeel, (4) flavor, and (5) overall evaluation. Note that the evaluation was carried out on a scale of 1 to 10 for (1) richness and oils and fats enriched properties and (5) overall evaluation. Specifically, for (1) richness and oils and fats enriched properties, of the obtained dressings, one which had the highest richness and oils and fats enriched properties was given a score of 10 (good), and one which had the lowest richness and oils and fats enriched properties was given a score of 1 (poor). Also, for (5) overall evaluation, of the obtained dressings, which were evaluated in a comprehensive manner, one which was the most similar to genuine emulsion-type dressing was given a score of 10 (good), and one which was the least similar to genuine emulsion-type dressing was given a score of 1 (poor).

The results are shown in Table 12.

[Table 12]

| | Dextrin | Richness/ oils and fats enriched properties | Appearance | Mouthfeel | Flavor | Overall evaluation |
|---|---|---|---|---|---|---|
| Example 12-1 | Preparation Example 1 | 10 | emulsion-like cloudiness, glossiness | smooth mouthfeel | good | 10 |
| Comparative Example 12-1 | Existing product 1 | 6 | slightly brownish cloudiness, gel, no fluidity | Gel | starch-derived flavor | 1 |
| Comparative Example 12-2 | Existing product 2 | 3 | slightly brownish cloudiness | sticky, poor melting in the mouth | good | 3 |
| Comparative Example 12-3 | Existing product 3 | 2 | translucent | smooth mouthfeel | starch-derived flavor | 4 |
| Comparative Example 12-4 | Existing product 4 | 5 | emulsion-like cloudiness | Gel | starch-derived flavor | 4 |
| Comparative Example 12-5 | Existing product 5 | 1 | translucent | smooth mouthfeel | good | 2 |
| Comparative Example 12-0 | no use | 1 | translucent | Liquid | good | 1 |

Experimental Example 13 Preparation of fat spread-like food product containing no oils and fats (1)

A fat spread-like food product (Example 13-1) was prepared using the dextrin of Preparation Example 1 and without using oils and fats. Specifically, initially, 20% of the dextrin of Preparation Example 1, 0.5% of guar gum, and 4% of common salt were added to water at 80°C, followed by dissolution by heating for 10 minutes. The mixture was then adjusted with water so that the total amount becomes 100%. Thereafter, the thus-prepared aqueous solution was poured into a container by hot-fill packaging and was then cooled to room temperature, followed by cooling in a refrigerator (5°C) for three days. The food product thus prepared (Example 13-1) was a fat spread-like food product which did not contain oils and fats, but had richness and oils and fats enriched properties, cloudiness, and glossiness which are similar to those of fat spread containing 50% of oils and fats.

Experimental Example 14 Preparation of fat spread-like food product containing no oils and fats (2)

Food products (Example 14-1 and Comparative Examples 14-1 to 14-5) were prepared according to a recipe described below using the dextrins of Preparation Example 1 and the existing products 1 to 5 and without using oils and fats. Also, for comparison, a food product (Comparative Example 14-0, no dextrin was used) was similarly prepared using 20% of glucose (the total solid content was adjusted) in place of 20% of the dextrin.
<Recipe of fat spread-like food product>

| | |
|---|---|
| Dextrin | 20.0 (%) |
| Common salt | 4.0 |
| Guar gum | 0.5 |
| Carotene colorant | 0.1 |
| Aroma chemical | 0.1 |
| Water | balance |
| Total | 100.0% |

Specifically, sugar, guar gum and each dextrin (Preparation Example 1, the existing products 1 to 5) were added to water while stirring, followed by dissolution with stirring at 80°C for 10 minutes. Next, common salt, a carotene colorant and an aroma chemical were added to the mixture, which was then adjusted with water so that the total amount becomes 100%. Thereafter, the thus-prepared solution was heated to 90°C, and was then poured into a container by hot-fill packaging, followed by cooling to room temperature.
The food products thus obtained were evaluated in terms of (1) richness and oils and fats enriched properties, (2) appearance, (3) mouthfeel, (4) flavor, and (5) overall evaluation. Note that the evaluation was carried out on a scale of 1 to 10 for (1) richness and oils and fats enriched properties and (5) overall evaluation. Specifically, for (1) richness and oils and fats enriched properties, of the obtained food products, one which was the most rich paste and had the highest richness and oils and fats enriched properties was given a score of 10 (good), and one which had the lowest richness and oils and fats enriched properties was given a score of 1 (poor). Also, for (5) overall evaluation, of the obtained food products, which were evaluated in a comprehensive manner, one which was the most similar to fat spread was given a score of 10 (good), and one which was the least similar to fat spread was given a score of 1 (poor). The results are shown in Table 13.
[Table 13]

| | | Richness/oils and fats enriched properties | Appearance | Mouthfeel | Flavor | Overall evaluation |
|---|---|---|---|---|---|---|
| | Dextrin | | | | | |
| Example 14-1 | Preparatio n Example 1 | 10 | emulsion-like cloudiness, fat spread-like | smooth, glossy, good spreadability | good | 10 |
| Comparative Example 14-1 | Existing product 1 | 4 | emulsion-like cloudiness, fat spread-like | stickiness, poor melting in the mouth, gritty | starch-derived flavor | 5 |
| Comparative Example 14-2 | Existing product 2 | 3 | emulsion-like cloudiness, fat spread-like | stickiness, poor melting in the mouth | good | 5 |
| Comparative Example 14-3 | Existing product 3 | 2 | translucent | low-viscosity liquid | starch-derived flavor | 2 |

(continued)

|  | Dextrin | Richness/oils and fats enriched properties | Appearance | Mouthfeel | Flavor | Overall evaluation |
|---|---|---|---|---|---|---|
| Comparative Example 14-4 | Existing product 4 | 5 | emulsion-like cloudiness, fat spread-like | stickiness, poor melting in the mouth | starch-derived flavor | 4 |
| Comparative Example 14-5 | Existing Product 5 | 1 | transparent | low-viscosity liquid | good | 1 |
| Comparative Example 14-0 | no use | 1 | transparent | low-viscosity liquid | good | 1 |

The fat spread (Example 14-1) which was prepared using the dextrin of Preparation Example 1 was a food product (fat spread-like food product) which did not contain oils and fats, but had richness and oils and fats enriched properties, cloudiness, and glossiness which are similar to those of fat spread, which is an emulsion food containing oils and fats. On the other hand, the food products (Comparative Examples 14-1 to 14-5) which were prepared using the dextrins of the existing products (existing products 1 to 5) failed to reproduce even the shape retentivity of fat spread (Comparative Examples 14-3 and 14-5), and failed to impart oils and fats enriched properties as compared to when the dextrin of Preparation Example 1 was used (Comparative Examples 14-1 to 14-5). Moreover, the food products which were prepared using the dextrins of the existing products (existing products 1 to 5) had a heavy mouthfeel, such as stickiness, poor melting in the mouth and the like.

Experimental Example 15 Preparation of fat spread-like food product containing no oils and fats (3)

A fat spread-like food product was prepared using the dextrin of the Preparation Example 3 and without using oils and fats. Specifically, the dextrin and sugar were added to water, followed by dissolution with stirring while heating at 80°C for 10 minutes. Next, common salt, whey protein, xanthan gum, guar gum, an aroma chemical and a colorant were added and mixed by stirring. The mixture was adjusted with a 50% citric acid aqueous solution to pH 3.7. The resultant mixture was poured into a container, followed by sterilization by boils and fatsing at 85°C for 30 minutes. Thereafter, the mixture was cooled in a refrigerator for 72 hours. Thus, the fat spread-like food product (Example 15-1) which does not contain oils and fats was prepared (cream cheese-flavor fat spread-like food product).
<Recipe of fat spread-like food product>

| | |
|---|---|
| Dextrin (Preparation Example 3) | 18.0 (kg) |
| Sugar | 7.5 |
| Common salt | 0.5 |
| Whey protein | 0.7 |
| Xanthan gum | 0.06 |
| Guar gum | 0.04 |
| Aroma chemical | 0.2 |
| Colorant | 0.1 |
| 50% citric acid aqueous solution | proper amount |
| Water | balance |
| Total | 100.0 (kg) |

The cream cheese-flavor fat spread-like food product thus obtained (Example 15-1) did not contain oils and fats, but had excellent fattiness and richness riceness and oils and fats enriched properties, and moreover, a physical property of being easily spread on crackers.

Experimental Example 16 Low-fat mayonnaise-like seasoning containing low amount of oils and fats

Low-fat mayonnaise-like seasonings (Examples 16-1 to 16-4) were prepared according to a recipe described below using the dextrin of Preparation Example 1. Also, for comparison, seasonings (Comparative Examples 16-1 to 16-7) were similarly prepared according to the recipe without using a dextrin (see Table 14). Also, for comparison, seasonings (Comparative Examples 16-8 to 16-16) were similarly prepared using the dextrin of the existing product 1 (PASELLI SA2 manufactured by AVEBE) or the existing product 3 (Pinedex #100 manufactured by Matsutani Chemical Industry Co., Ltd.) described in Experimental Example 1 in place of the dextrin of Preparation Example 1 (see Table 15).
[Table 14]

| | Example | | | | Comparative Example | | | | | | |
|---|---|---|---|---|---|---|---|---|---|---|---|
| | 16-1 | 16-2 | 16-3 | 16-4 | 16-1 | 16-2 | 16-3 | 16-4 | 16-5 | 16-6 | 16-7 |
| Vegetable oils and fats | 50.0 | 35.0 | 15.0 | 50.0 | 75.0 | 50.0 | 50.0 | 35.0 | 35.0 | 15.0 | 15.0 |
| Egg yolk | 9.0 | 9.0 | 9.0 | 9.0 | 9.0 | 9.0 | 9.0 | 9.0 | 9.0 | 9.0 | 9.0 |
| Brewed Vinegar | 4.2 | 4.2 | 4.2 | 4.2 | 4.2 | 4.2 | 4.2 | 4.2 | 4.2 | 4.2 | 4.2 |
| Common salt | 1.5 | 1.5 | 1.5 | 1.5 | 1.5 | 1.5 | 1.5 | 1.5 | 1.5 | 1.5 | 1.5 |
| Sugar | 2.5 | 2.5 | 2.5 | 2.5 | 2.5 | 2.5 | 2.5 | 2.5 | 2.5 | 2.5 | 2.5 |
| L-glutamate Na | 0.3 | 0.3 | 0.3 | 0.3 | 0.3 | 0.3 | 0.3 | 0.3 | 0.3 | 0.3 | 0.3 |
| Xanthan gum[1] | 0.3 | 0.5 | 1.2 | - | - | - | 0.7 | - | 1.0 | - | 1.5 |
| Dextrin (Preparation Example 1) | 3.0 | 5.0 | 10 | 5.0 | - | - | - | - | - | - | - |
| 1) xanthan gum: SAN ACE‡ NXG-S* | | | | | | | | | | | |

[Table 15]

| | Comparative Example | | | | | | | | |
|---|---|---|---|---|---|---|---|---|---|
| | 16-8 | 16-9 | 16-10 | 16-11 | 16-12 | 16-13 | 16-14 | 16-15 | 16-16 |
| Vegetable oils and fats | 50.0 | 50.0 | 50.0 | 35.0 | 35.0 | 35.0 | 15.0 | 15.0 | 15.0 |
| Egg yolk | 9.0 | 9.0 | 9.0 | 9.0 | 9.0 | 9.0 | 9.0 | 9.0 | 9.0 |
| Brewed Vinegar | 4.2 | 4.2 | 4.2 | 4.2 | 4.2 | 4.2 | 4.2 | 4.2 | 4.2 |
| Common salt | 1.5 | 1.5 | 1.5 | 1.5 | 1.5 | 1.5 | 1.5 | 1.5 | 1.5 |
| Sugar | 2.5 | 2.5 | 2.5 | 2.5 | 2.5 | 2.5 | 2.5 | 2.5 | 2.5 |
| L-glutamate Na | 0.3 | 0.3 | 0.3 | 0.3 | 0.3 | 0.3 | 0.3 | 0.3 | 0.3 |
| Xanthan gum[1] | 0.3 | 0.3 | 0.7 | 0.5 | 0.5 | 1.0 | 1.2 | 1.2 | 1.5 |
| Dextrin (Existing product 1) | 3.0 | - | - | 5.0 | - | - | 10.0 | - | - |
| Dextrin (Existing product 3) | - | 3.0 | 3.0 | - | 5.0 | 5.0 | - | 10.0 | 10.0 |
| 1) xanthan gum: SAN ACE‡ NXG-S* | | | | | | | | | |

<Preparation method>

1) A dextrin and sugar are added to water and are then dissolved with stirring at 80˚C for 10 minutes.
2) This mixture is cooled to 25˚C, and egg yolk is mixed thereto, and thereafter, common salt, sugar, sodium L-glutamate and brewed vinegar are added and mixed.
3) A vegetable oils and fats is added thereto little by little while stirring.
4) This mixture is emulsified using a colloid mill.
5) The emulsion thus prepared is cooled at 5°C for 3 days.

The emulsion seasonings thus obtained were evaluated in terms of (1) richness and oils and fats enriched properties, (2) flavor, (3) ability to be shaped, and (4) viscosity. Note that, for (1) richness and oils and fats enriched properties and (3) ability to be shaped, evaluation was carried out on a scale of 1 to 10, where the seasoning of Comparative Example 1 (ordinary mayonnaise) having an oils and fats content of 75% was used as a reference (score: 10). For (4) viscosity, evaluation was carried out by one-minute measurement at 25°C using a Brookfield viscometer, where the frequency rotation was 5 rpm. The results are shown in Table 16.

[Table 16]

| | Richness/ oils and fats enriched properties | Ability to be shaped | Flavor | Viscosity (mPa·s) | Finding |
|---|---|---|---|---|---|
| Example 16-1 | 10 | 10 | good | 114,000 | The oils and fats content was 50%, but characteristics similar to those of ordinary mayonnaise (Comparative Example 1) were possessed. |
| Example 16-2 | 9 | 10 | good | 113,000 | The oils and fats content was 35%, but characteristics similar to those of ordinary mayonnaise were possessed. |
| Example 16-3 | 9 | 10 | good | 109,000 | The oils and fats content was 15%, but characteristics similar to those of ordinary mayonnaise were possessed. |
| Example 16-4 | 10 | 10 | good | 111,000 | Xanthan gum was not used, but characteristics similar to those of ordinary mayonnaise were possessed. |

(continued)

| | Richness/ oils and fats enriched properties | Ability to be shaped | Flavor | Viscosity (mPa·s) | Finding |
|---|---|---|---|---|---|
| Comparative Example 16-1 | 10 | 10 | good | 110,000 | Typical mayonnaise (oils and fats content: 75%) |
| Comparative Example 16-2 | 4 | 2 | good | 41,000 | The oils and fats content lower than that of ordinary mayonnaise led to a reduction in the viscosity, resulting in an reduction in the ability to be shaped and robustness/ richness (oils and fats enriched properties) |
| Comparative Example 16-3 | 6 | 4 | good | 108,000 | When xanthan gum was used to adjust the viscosity to be the same as that of ordinary mayonnaise, the stickiness became high and the melting in the mouth was degraded. In addition, robustness and richness were not obtained. |
| Comparative Example 16-4 | 3 | 2 | good | 26,000 | The oils and fats content lower than that of ordinary mayonnaise led to a reduction in the viscosity, resulting in a reduction in the ability to be shaped and the robustness/ richness. |

(continued)

| | Richness/ oils and fats enriched properties | Ability to be shaped | Flavor | Viscosity (mPa·s) | Finding |
|---|---|---|---|---|---|
| Comparative Example 16-5 | 4 | 3 | good | 112,000 | When xanthan gum was added to Comparative Example 4 to adjust the viscosity to be the same as that of ordinary mayonnaise, the stickiness became high, and the melting in the mouth was degraded. In addition, robustness and richness were not obtained. |
| Comparative Example 16-6 | 2 | 1 | good | 9,9000 | The oils and fats content lower than that of ordinary mayonnaise led to a reduction in the viscosity, resulting in a reduction in the ability to be shaped and the robustness/ richness. |
| Comparative Example 16-7 | 3 | 2 | good | 67,000 | When the oils and fats content was 15% or less, then even if xanthan gum was additionally used, the viscosity failed to be adjusted to be the same as that of ordinary mayonnaise. |

(continued)

| | Richness/ oils and fats enriched properties | Ability to be shaped | Flavor | Viscosity (mPa·s) | Finding |
|---|---|---|---|---|---|
| Comparative Example 16-8 | 6 | 4 | slight starch - derived flavor | 108,000 | Even when the viscosity was adjusted to be the same as that of ordinary mayonnaise, the ability to be shaped and robustness/ richness were not obtained. Moreover, there were grittiness, starch-derived flavor, and poor melting in the mouth. |
| Comparative Example 16-9 | 4 | 2 | good | 34,000 | No mayonnaise-specific viscosity was obtained. |
| Comparative Example 16-10 | 6 | 3 | good | 108,000 | When xanthan gum was used to adjust the viscosity to be the same as that of ordinary mayonnaise, the stickiness became high and the melting in the mouth was degraded. In addition, robustness and richness were not obtained. |

(continued)

| | Richness/ oils and fats enriched properties | Ability to be shaped | Flavor | Viscosity (mPa·s) | Finding |
|---|---|---|---|---|---|
| Comparative Example 16-11 | 5 | 4 | starch - derived flavor | 111,000 | Even when the viscosity was adjusted to be the same as that of ordinary mayonnaise, the ability to be shaped and robustness/ richness were not obtained. Moreover, there were grittiness, starch-derived flavor, and poor melting in the mouth. |
| Comparative Example 16-12 | 3 | 2 | good | 21,000 | No mayonnaise-specific viscosity was obtained. |
| Comparative Example 16-13 | 5 | 3 | good | 110,000 | When xanthan gum was used to adjust the viscosity to be the same as that of ordinary mayonnaise, the stickiness became high and the melting in the mouth was degraded. In addition, robustness and richness were not obtained. |

(continued)

| | Richness/ oils and fats enriched properties | Ability to be shaped | Flavor | Viscosity (mPa·s) | Finding |
|---|---|---|---|---|---|
| Comparative Example 16-14 | 5 | 4 | starch - derive d flavor | 105,000 | Even when the viscosity was adjusted to be the same as that of ordinary mayonnaise, the ability to be shaped and robustness/ richness were not obtained. Moreover, there were grittiness, starch-derived flavor, and poor melting in the mouth. |
| Comparative Example 16-15 | 3 | 2 | good | 7,000 | No mayonnaise-specific viscosity was obtained. |
| Comparative Example 16-16 | 4 | 2 | good | 26,000 | Even when xanthan gum was additionally used, no mayonnaise-specific viscosity was obtained. |

Experimental Example 17 Preparation of low-fat dressing containing low amount of oils and fats

A low-fat dressing was prepared using the dextrin of Preparation Example 3. Specifically, sugar, dextrin, gum ghatti, tamarind seed gum and xanthan gum were added to water, followed by stirring at room temperature for 10 minutes. Common salt, brewed vinegar and L-glutamic acid Na were then added, followed by stirring for 5 minutes. Moreover, egg yolk was added, followed by stirring 1 minute, and thereafter, oil was gradually added while stirring using a homomixer (9,000 rpm) for 5 minutes. After deaeration, the mixture was poured into a container. Thus, the low-fat dressing (Example 17-1) was prepared. On the other hand, as a control for comparison, a dressing (control example) containing 35% of oil was prepared.

[Table 17]

| <Recipe of low-fat dressing> | | |
|---|---|---|
| | Example 17-1 | Control Example |
| Sugar | 5.0 | 5.0 |
| Common salt | 2.5 | 2.5 |
| Brewed Vinegar (acidity: 10%) | 5.5 | 5.5 |
| L-glutamate Na | 0.4 | 0.4 |

(continued)

| <Recipe of low-fat dressing> | | |
|---|---|---|
| | Example 17-1 | Control Example |
| Salad oil | 20.0 | 35.0 |
| Egg yolk | 0.4 | 0.4 |
| Xanthan gum (SAN ACE‡ NXG-S*) | 0.22 | 0.18 |
| Dextrin (Preparation Example 3) | 8.0 | - |
| Gum ghatti | 0.1 | - |
| Tamarind seed gum | 0.3 | - |
| Water | balance | balance |
| Total amount | 100.0 | 100.0 |

The dressing of Example 17-1 was a low-fat dressing which had a fat content which is smaller by 15% than that of the dressing (control example) containing 35% of oil, but had oils and fats enriched properties and body which are similar to those of the control example.

Experimental Example 18 Preparation of cheese-like food (1)

Food products were prepared according to a recipe of Table 18 using the dextrins of Preparation Example 1 and the existing products 1 to 3. Specifically, in the recipe of Table 18, each dextrin (Preparation Example 1, the existing products 1 to 3) was added to and dissolved in a skimmed powdered milk-containing aqueous solution which was prepared by dissolving skimmed powdered milk in water. Next, cheese powder, common salt, a colorant and an aroma chemical were added and mixed to the solution, which was then poured into a container, followed by sterilization at 85°C for one hour and then cooling. Thus, the food products were prepared.

[Table 18]

| Recipe | Part |
|---|---|
| Dextrin (Preparation Example 1, Existing products 1 to 3) | 30.0 |
| Skimmed powdered milk | 5.0 |
| Cheese powder | 5.0 |
| Common salt | 1.3 |
| Colorant (carotene base 9400SV*) | 0.1 |
| Aroma chemical (cheese oil E-10*) | 0.2 |
| Water | 58.4 |
| Total | 100.0 |

The food product (Example 18-1) which was prepared using the dextrin of Preparation Example 1 did not contain oils and fats (including oil and fat derived from milk), but had cheese-specific body and oils and fats enriched properties and mouthfeel, and also had a cheese-specific flavor, i.e., was a food product similar to cheese (cheese-like food). In contrast to this, the food products (Comparative Examples 18-1 to 18-3) which were prepared using the existing dextrins (existing products 1 to 3) failed to be similar to cheese due to the following problems: strong dextrin-specific starch-derived flavor which significantly impairs cheese flavor, and a gritty mouthfeel which lacks a mouthfeel similar to that of cheese (Comparative Example 18-1); a high viscosity of the dextrin which prevents preparation of a food product having a mouthfeel similar to that of cheese (Comparative Example 18-2); and a pasty state lacking cheese-specific shape retentivity, and a lack of a cheese-specific oils and fats enriched properties or mouthfeel (Comparative Example 18-3).

Experimental Example 19 Preparation of cheese-like food (2)

A food product was prepared according to Table 19 described below. Specifically, in the recipe of Table 19, the dextrin of Preparation Example 1 and whey protein (MILPRO‡ NO. 142*) were added to and dissolved in a skimmed powdered milk-containing aqueous solution which was prepared by dissolving skimmed powdered milk in water. Cheese powder, common salt, a colorant, an aroma chemical, a sucralose-containing preparation and a seasoning were added and mixed to the solution, and the mixture solution was then poured into a container, followed by sterilization at 85°C for one hour and then cooling. The container was allowed to stand at 5°C for 72 hours. Thus, the food product was prepared (Example 19-1).

[Table 19]

| Recipe | Part |
|---|---|
| Dextrin (Preparation Example 1) | 27.0 |
| Whey protein (MILPRO‡ No. 142*) | 2.0 |
| Skimmed powdered milk | 5.0 |
| Cheese powder | 5.0 |
| Common salt | 1.3 |
| Colorant (carotene base 9400SV*) | 0.1 |
| Aroma chemical (cheese oil E-10*) | 0.2 |
| Sucralose-containing formulation[3)] | 0.01 |
| Seasoning (SAN LIKE‡ cheese enhancer 1111P*) | 0.2 |
| Water | 59.19 |
| Total | 100.0 |
| [3)]SANSWEET‡ SU-100*: sucralose content 15% | |

The food product thus prepared (Example 19-1) did not contain oils and fats (including oil and fat derived from milk), and contained as small as 5% of cheese, but had cheese-specific body and a good mouthfeel, and thus was a food product similar to cheese (cheese-like food). Also, the cheese-like food had good cheese-specific shape retentivity at room temperature, and was melted by heating for three minutes in a toaster oven, providing a cheese-specific feel of melting and stringiness.

Experimental Example 20 Preparation of cheese-like food (3)

A food product was prepared according to Table 20. Specifically, in the recipe of Table 20, the dextrin of Preparation Example 1, methyl cellulose, xanthan gum and a carrageenan were added to and dissolved in water. Moreover, common salt, a colorant, an aroma chemical, a sucralose-containing preparation and a seasoning were added and mixed to the solution, which was then poured into a container, followed by sterilization at 85°C for one hour and then cooling. Thus, the food product was prepared (Example 20-1).

[Table 20]

| Recipe | Part |
|---|---|
| Dextrin (Preparation Example 1) | 25.0 |
| Methyl cellulose | 0.5 |
| Xanthan gum (SAN ACE‡ NXG-S*) | 0.1 |
| Carrageenan (GEL RICH‡ No. 3*) | 1.0 |
| Common salt | 1.3 |

(continued)

| Recipe | Part |
|---|---|
| Colorant (carotene base 9400SV*) | 0.1 |
| Aroma chemical (cheese oil E-10*) | 0.2 |
| Sucralose-containing formulation[4)] | 0.01 |
| Seasoning (SAN LIKE‡ cheese enhancer 1111P*) | 0.2 |
| Seasoning (SAN LIKE‡ AMINOBASE V*) | 0.3 |
| Water | 71.29 |
| Total | 100.0 |
| [4)]SANSWEET‡ SU-100*: sucralose content 15% | |

The food product thus prepared (Example 20-1) was a soft-type cheese-like food which did not contain cheese or oils and fats (including oil and fat derived from milk), but had cheese-specific body and a good mouthfeel, and moreover, a good cheese flavor. Moreover, when the resulting cheese-like food was eaten after three months of preservation in a refrigerator, a cheese-specific flavor and a smooth mouthfeel were still present.

Experimental Example 21 Preparation of cheese-like food (4)

Food products (Example 21-1 and Comparative Examples 21-1 to 21-5) were prepared according to a recipe and a method described below using the dextrins of Preparation Example 1 and the existing products 1 to 5. It was studied whether the food products are similar to cheese in terms of (1) richness and oils and fats enriched properties, (2) appearance, (3) mouthfeel, and (4) flavor. Also, for comparison, a food product (Comparative Example 21-0, no dextrin was used) was similarly prepared using 30% of glucose (the total solid content was adjusted) in place of 30% of the dextrin.

<Recipe of cheese-like food (imitation cheese)>

| | |
|---|---|
| Dextrin | 30.0 (%) |
| Skimmed powdered milk | 5.0 |
| Cheese powder | 5.0 |
| Common salt | 1.3 |
| Carotene colorant | 0.1 |
| Aroma chemical | 0.2 |
| Water | 58.4 |
| Total | 100.0% |

Specifically, skimmed powdered milk was added to and dissolved in water while stirring. Next, the dextrin was added to and dissolved in the solution. Next, cheese powder, common salt, a carotene colorant and an aroma chemical were added to the mixture solution, which was then adjusted with water so that the total amount becomes 100%. Thereafter, the thus-obtained prepared solution was poured into a container, followed by sterilization by heating at 85°C for one hour and then cooling to room temperature.

The food products thus obtained were evaluated in terms of (1) richness and oils and fats enriched properties, (2) appearance, (3) mouthfeel, (4) flavor, and (5) overall evaluation. The evaluation was carried out on a scale of 1 to 10 for (1) richness and oils and fats enriched properties and (5) overall evaluation. Specifically, for (1) richness and oils and fats enriched properties, of the obtained food products, one which had the highest richness and oils and fats enriched properties was given a score of 10 (good), and one which had the lowest richness and oils and fats enriched properties was given a score of 1 (poor). Also, for (5) overall evaluation, of the obtained food products, which were evaluated in a comprehensive manner, one which was the most similar to cheese was given a score of 10 (good), and one which was the least similar to cheese was given a score of 1 (poor). The results are shown in Table 21.

[Table 21]

| | Dextrin | oils and fats enriched propertie | Appearance | Mouthfeel | Flavor | Overall evaluation |
|---|---|---|---|---|---|---|
| Example 21-1 | Preparation Example 1 | 10 | cheese-like cloudiness, solid | smooth and cheese-specific mouthfeel | good | 10 |
| Comparative Example 21-1 | Existing product 1 | 5 | cheese-like cloudiness, solid | gritty, stickiness, poor melting the mouth | starch-derived in flavor | 4 |
| Comparative Example 21-2 | Existing product 2 | too viscosious to formulate when dissolved at room temperature | | | | 1 |
| Comparative Example 21-3 | Existing product 3 | 3 | low cloudiness, paste | stickiness | starch-derived flavor | 2 |
| Comparative Example 21-4 | Existing product 4 | 4 | cheese-like cloudiness, poor solid | stickiness, melting the mouth | starch-in derived flavor | 3 |
| Comparative Example 21-5 | Existing product 5 | | 1 low cloudiness, liquid | low-viscosity liquid | Good | 1 |
| Comparative Example 21-0 | no use | 1 | low cloudiness, liquid | low-viscosity liquid | good | 1 |

The food product (Example 21-1) which was prepared using the dextrin of Preparation Example 1 was a cheese-like food which did not contain oils and fats (including oil and fat derived from milk), but had cheese-specific body and a good mouthfeel, and moreover, a good cheese flavor.

Experimental Example 22 Preparation of cheese-like food (5)

A cheese-like food (Example 22-2) was prepared according to a recipe described below using the dextrin of Preparation Example 2. Specifically, skimmed powdered milk, a starch, trisodium citrate and a seasoning were added to a mixture of Gouda cheese, palm oil and water, followed by dissolution with stirring while heating at 85°C for 10 minutes. Next, common salt, a dextrin (Preparation Example 2), gum ghatti, xanthan gum and an aroma chemical were added and dissolved in the solution, which was then adjusted with water so that the total amount becomes 100 kg, followed by deaeration and shaping and then cooling. Thus, the cheese-like food (Example 22-2) was prepared.

<Recipe of cheese-like food>

| | |
|---|---|
| Gouda cheese | 30.0 (kg) |
| Palm oil | 5.0 |
| Skimmed powdered milk | 7.0 |
| Common salt | 0.5 |
| Starch | 4.0 |
| Trisodium citrate | 2.0 |
| Seasoning | 0.3 |
| Dextrin (Preparation Example 2) | 10.5 |
| Xanthan gum | 0.1 |
| Gum ghatti | 2.0 |

(continued)

| | |
|---|---|
| Aroma chemical | 0.07 |
| Water | 38.53 |
| Total | 100.0 kg |

The cheese-like food thus prepared (Example 22-2) and a commercially available sliced cheese were used to carry out the following experiment.

(1) Stretch test (1)

1. 10 grams of each of the cheese-like food (Example 22-2) and the commercially available sliced cheese was placed on aluminum foil and was cut into pieces of about 5 mm × 2 cm.
2. The cheese-like food and the cheese were heated in a 1000-W toaster oven for 3 minutes.
3. The aluminum foil on which the cheese-like food or the cheese was placed was removed from the toaster oven. The cheese-like food or the cheese was lifted using an L-shaped bent spatula to evaluate the stretch thereof.

The aforementioned evaluation was repeatedly carried out five times for each of the cheese-like food and the cheese, to calculate their average stretches (cm). As a result, the cheese-like food (Example 22-2) had an average stretch of 20.6 cm, and the commercially available cheese had an average stretch of 23.4 cm, i.e., both of them had almost the same stretch.

(2) Stretch test (2)

1. The cheese-like food (Example 22-2) and the commercially available sliced cheese were placed on bread.
2. The bread was heated in a 1000-W toaster oven for 3 minutes.
3. The bread with a slit which was previously created therein was removed from the toaster oven. The left and right parts along the slit were laterally pulled apart. In this case, the stretches of the cheese-like food and the cheese were compared.

The result of the cheese-like food (Example 22-2) is shown in FIG. 2, and the result of the commercially available sliced cheese is shown in FIG. 3. As can be seen from these figures, the cheese-like food of Example 22-2 has the physical property of being satisfactorily melted by heating, and the ability to stretch was as excellent as that of the commercially available sliced cheese which can melt smoothly.

Experimental Example 23 Cream cheese-like food

A cream cheese-like food (Example 23-1) was prepared according to Table 22 described below. Specifically, in the recipe of Table 22, a dextrin (Preparation Example 1), xanthan gum, native gellan gum, deacylated gellan gum and trisodium citrate were added to and dissolved in water at 85°C. Moreover, common salt was added to the solution, which was then adjusted with citric acid to pH 3.8. A colorant and an aroma chemical were then added and mixed to the solution. The mixture solution was poured into a container, followed by sterilization at 85°C for one hour and then cooling.

[Table 22]

| Recipe | Part |
|---|---|
| Dextrin(Preparation Example 1) | 25.0 |
| Native gellan gum (KELCOGEL HM*) | 0.1 |
| Xanthan gum (SAN ACE‡ NXG-S*) | 0.1 |
| Deacylated gellan gum (KELCOGEL*) | 0.04 |
| Trisodium citrate | 0.01 |
| Common salt 0.7 | |

(continued)

| Recipe | Part |
|---|---|
| Colorant (carotene base NO.9400SV*) | 0.5 |
| Aroma chemical (cream cheese flavor NO.72563*) | 0.2 |
| Water | 73.8 |
| Total | 100.0 |

The food product thus prepared (Example 23-1) did not contain cheese or oils and fats, but had cream cheese-specific body, good melting in the mouth and flavor, and spreadability. Also, the food product (cream cheese-like food) still had a cream cheese-specific flavor and smooth mouthfeel which are similar to those of cream cheese even after three months of refrigeration. The food product can be used as a material for unbaked cheese cake or cream cheese sauce for desserts, in place of cream cheese.

Experimental Example 24 Processed food (unbaked cheese cake) containing cheese-like food

A cake (Example 24-1) was prepared according to a recipe shown in Table 23 using the cream cheese-like food (Example 23-1) prepared in Experimental Example 23. Note that, in the recipe of Table 23, gelatin was previously prepared by being dissolved in water by using a microwave oven. Next, the cream cheese-like food (Example 23-1) was softened by allowing it to stand at room temperature for two hours. Granulated sugar, dairy cream, lemon juice and the gelatin solution were successively added and mixed to the cream cheese-like food. Next, the mixture was poured into a container, followed by cooling in a refrigerator for three hours.

[Table 23]

| Recipe | Part |
|---|---|
| Cream cheese-like food product prepared in Example 23-1 | 38.2 |
| Gelatin | 1.5 |
| Water | 9.6 |
| Dairy cream | 38.2 |
| Granulated sugar | 9.6 |
| Lemon fruit juice (straight) | 2.9 |
| Total | 100.0 |

The cake thus prepared (Example 24-1) did not contain cheese and had a small fat content, but had a flavor, robustness and a smooth mouthfeel which are similar to those of unbaked cheese cake. Also, the cream cheese-like food (Example 23-1) prepared in Experimental Example 23, when returned to room temperature, had soften tissue like cream cheese, and had good workability in terms of stirring and mixing, and therefore, was easy to handle. Moreover, the calorie value and the cholesterol value of the cake prepared here were lower by about 30% and about 45%, respectively, than those of an unbaked cheese cake which was prepared using an ordinary cream cheese (lipid: 33%, protein: 8.2%, carbonhydrate: 2.3%, ash content: 1%, moisture: 55.5%, calorie: 346 kcal).

Experimental Example 25 Preparation of cream cheese-like food (2)

Food products (Example 25-1 and Comparative Examples 25-1 to 25-5) were prepared according to a recipe and a method described below using the dextrins of Preparation Example 1 and the existing products 1 to 5. It was studied whether the food products are similar to cream cheese in terms of (1) richness and oils and fats enriched properties, (2) appearance, (3) mouthfeel, and (4) flavor. Also, for comparison, a food product (Comparative Example 25-0, no dextrin was used) was similarly prepared using 25% of glucose (the total solid content was adjusted) in place of 25% of the dextrin.
<Recipe>

| Dextrin | 25.00 (%) |
|---|---|
| Native gellan gum | 0.10 |
| Xanthan gum | 0.10 |
| Deacylated gellan gum | 0.04 |
| Common salt | 0.70 |
| Trisodium citrate | 0.01 |
| Citric acid | proper amount |
| Carotene colorant | 0.05 |
| Aroma chemical | 0.20 |
| Water | balance |
| Total | 100.00 (%) |

Specifically, a dextrin (Preparation Example 1, the existing products 1 to 5), native gellan gum, xanthan gum, deacylated gellan gum and trisodium citrate were added to and dissolved in water at 85°C while stirring. Next, a food product wad added to and dissolved in the solution, which was then adjusted with citric acid to pH 3.8. A colorant and an aroma chemical were then added to the solution, which was then adjusted with water so that the total amount becomes 100%. Thereafter, the thus-prepared solution was poured into a container, followed by sterilization by heating 85°C for 30 minutes and then cooling to room temperature.

Each of the food products thus obtained (Example 25-1 and Comparative Examples 25-1 to 25-5) was evaluated in terms of (1) richness and oils and fats enriched properties, (2) appearance, (3) mouthfeel, (4) flavor, and (5) overall evaluation. The evaluation was carried out on a scale of 1 to 10 for (1) richness and oils and fats enriched properties and (5) overall evaluation. Specifically, for (1) richness and oils and fats enriched properties, of the obtained food products, one which had the highest richness and oils and fats enriched properties was given a score of 10 (good), and one which had the lowest richness and oils and fats enriched properties was given a score of 1 (poor). Also, for (5) overall evaluation, of the obtained food products, which were evaluated in a comprehensive manner, one which was the most similar to cream cheese was given a score of 10 (good), and one which was the least similar to cream cheese was given a score of 1 (poor). The results are shown in Table 24.

[Table 24]

| | Dextrin | Richness/ oils and fats enriched properties | Appearance | Mouthfeel | Flavor | Overall evaluation |
|---|---|---|---|---|---|---|
| Example 25-1 | Preparation Example 1 | 10 | cheese-like cloudiness, solid | smooth, spreadable and cream cheese-like mouthfeel | good | 10 |
| Comparative Example 25-1 | Existing product 1 | 5 | cheese-like cloudiness, solid | gritty, stickiness, poor melting in the mouth | starch-derived flavor | 4 |
| Comparative Example 25-2 | Existing product 2 | 2 | cheese-like cloudiness, solid | gritty, stickiness, poor melting in the mouth | starch-derived flavor | 3 |
| Comparative Example 25-3 | Existing product 3 | 3 | low cloudiness, paste | liquid, not cream cheese-like | starch-derived flavor | 2 |

(continued)

| | Dextrin | Richness/ oils and fats enriched properties | Appearance | Mouthfeel | Flavor | Overall evaluation |
|---|---|---|---|---|---|---|
| Comparative 25-4 | Example Existing product 4 | 4 | cheese-like cloudiness, solid | gritty, stickiness, poor melting in the mouth | starch-derived flavor | 3 |
| Comparative Example 25-5 | Existing product 5 | 1 | low cloudiness, liquid | liquid, not cream cheese-like | good | 1 |
| Comparative Example 25-0 | no use | 1 | low cloudiness, liquid | liquid, not cream cheese-like | good | 1 |

The food product (Example 25-1) which was prepared using the dextrin of Preparation Example 1 did not contain cheese or fat, but had cream cheese-specific body, good melting in the mouth and good flavor, and spreadability (cream cheese-like food). The food product can be used as a material for unbaked cheese cake or cream cheese sauce for desserts, in place of cream cheese.

Experimental Example 26 Preparation of cream cheese-like food (3)

A cream cheese-like food (Example 26-3) was prepared according to a recipe described below using the dextrin of Preparation Example 3. Specifically, skimmed powdered milk and whey protein were added to water, followed by dissolution with stirring for five minutes. Moreover, common salt, a dextrin (Preparation Example 3), xanthan gum and gum ghatti were added to the solution, followed by dissolution with stirring for five minutes. An aroma chemical, and palm oil was previously heated to 40˚C, were gradually added to the mixture which was stirred and heated to 40˚C, followed by dissolution with stirring for five minutes. A 50 w/w% lactic acid aqueous solution was added to the mixture, followed by stirring while heating to 90˚C. Thereafter, the resultant mixture was poured into a container, followed by cooling. Thus, the cream cheese-like food (Example 26-3) was prepared. The cream cheese-like food thus obtained had smoothness and spreadability which are similar to those of genuine cream cheese, and moreover, was applicable to cakes (baked cheese cakes) or sweets which require a baking step.
<Recipe of cream cheese-like food>

| | |
|---|---|
| Palm oil | 30.0 (kg) |
| Skimmed powdered milk | 5.0 |
| Milk serum protein | 6.0 |
| Common salt | 0.7 |
| Dextrin (Preparation Example 3) | 14.5 |
| Xanthan gum | 1.0 |
| Gum ghatti | 0.3 |
| Aroma chemical | 0.1 |
| 50 w/w% lactic acid aqueous solution | 0.55 |
| Water | 41.85 |
| Total | 100.00 (kg) |

Experimental Example 27 Preparation of chocolate pudding (neutral dessert)

Chocolate puddings (Example 27-1 and Comparative Examples 27-1 to 27-5) were prepared according to a recipe described below using the dextrins of Preparation Example 1 and the existing products 1 to 5. Also, for comparison, a chocolate pudding (Comparative Example 27-0, no dextrin was used) was similarly prepared using 4% of glucose (the total solid content was adjusted) in place of 4% of the dextrin.
<Recipe of chocolate pudding>

| | |
|---|---|
| Dextrin | 4.0 (%) |
| Dairy cream | 15.0 |
| Sugar | 12.0 |
| Chocolate | 10.0 |
| Skimmed powdered milk | 3.0 |
| Cocoa powder | 1.0 |
| Gelling agent (GEL UP‡ PI-2069*) | 4.0 |
| Emulsifying agent (HOMOGEN‡ DM*) | 0.1 |
| Aroma chemical | 0.1 |
| Water | balance |
| Total | 100.0% |

Specifically, the components other than an aroma chemical were added to water, dairy cream and chocolate while stirring, followed by dissolution with stirring while heating at 80˚C for 10 minutes. The aroma chemical was added to the solution, which was then adjusted with water so that the total amount becomes 100%. The solution was homogenized using a homogenizer (150 kgf/cm$^2$) The resultant solution was poured into a container, followed by cooling. Note that, of the aforementioned components, the gelling agent (GEL UP‡ PI-2069*) is a mixture of locust bean gum, pectin, agar and sodium methaphosphate (the same is true in the description which follows), and the emulsifying agent (HOMOGEN‡ DM*) is a glycerol esters of fatty acids.

Each of the chocolate puddings thus obtained was evaluated in terms of (1) richness and oils and fats enriched properties, (2) mouthfeel, (3) flavor, and (5) overall evaluation. The evaluation was carried out on a scale of 1 to 10 for (1) richness and oils and fats enriched properties and (5) overall evaluation. Specifically, for (1) richness and oils and fats enriched properties, of the obtained puddings, one which had the highest richness and oils and fats enriched properties was given a score of 10 (good), and one which had the lowest richness and oils and fats enriched properties was given a score of 1 (poor). Also, for (5) overall evaluation, of the obtained puddings, which were evaluated in a comprehensive manner from (1) to (3), one which was the best was given a score of 10 (good), and one which was the worst was given a score of 1 (poor). The results are shown in Table 25.

[Table 25]

| | Dextrin | Richness/ oils and fats enriched properties | Mouthfeel | Flavor | Overall evaluation |
|---|---|---|---|---|---|
| Example 27-1 | Preparation Example 1 | 10 | smooth | good | 10 |
| Comparative Example 27-1 | Existing product 1 | 4 | gritty | starch-derived flavor | 3 |
| Comparative Example 27-2 | Existing product 2 | 4 | stickiness, poor melting in the mouth | good | 4 |
| Comparative Example 27-3 | Existing product 3 | 3 | slightly gritty | starch-derived flavor | 2 |
| Comparative Example 27-4 | Existing product 4 | 4 | stickiness, poor melting in the mouth | starch-derived flavor | 3 |
| Comparative Example 27-5 | Existing product 5 | 2 | slightly watery | good | 2 |
| Comparative Example 27-0 | no use | 1 | watery | good | 1 |

The chocolate pudding (Example 27-1) which was prepared using the dextrin of Preparation Example 1 did not contain egg yolk or oil, but had a pudding-specific flavor and good smooth melting in the mouth.

Experimental Example 28 Preparation of baked pudding (neutral dessert)

Baked puddings (Example 28-1 and Comparative Examples 28-1 to 28-5) were prepared according to a recipe described below using the dextrins of Preparation Example 1 and the existing products 1 to 5. Also, for comparison, a baked pudding (Comparative Example 28-0, no dextrin was used) was similarly prepared using 2% of glucose (the total solid content was adjusted) in place of 2% of the dextrin.

<Recipe of baked pudding>

| | |
|---|---|
| Dextrin | 2.0 (%) |
| Milk | 30.0 |
| Dairy cream | 5.0 |
| Sugar | 10.0 |
| Whole powdered milk | 2.0 |
| frozen whole egg with sugar | 12.0 |
| frozen egg yolk with sugar | 12.0 |
| Water | balance |
| Total | 100.0% |

Specifically, sugar, whole powdered milk and a dextrin (Preparation Example 1, the existing products 1 to 5) were added to water, milk and dairy cream while stirring, followed by dissolution with stirring while heating at 80°C. The solution was cooled to 50°C. Next, frozen whole egg with sugar and frozen egg yolk with sugar were added to the solution, followed by thorough mixing. Next, the mixture solution was homogenized using a homogenizer (150 kgf/cm$^2$). The resultant solution was then poured into a container, followed by baking in an oven at 155°C for 50 minutes.

Each of the baked puddings thus obtained (Example 28-1, Comparative Examples 28-1 to 28-5 and Comparative Example 28-0) was evaluated in terms of (1) richness, (2) mouthfeel, (3) flavor, and (4) overall evaluation. The evaluation was carried out on a scale of 1 to 10 for (1) richness and oils and fats enriched properties and (5) overall evaluation. Specifically, for (1) richness and oils and fats enriched properties, of the obtained puddings, one which had the highest richness and oils and fats enriched properties was given a score of 10 (good), and one which had the lowest richness and oils and fats enriched properties was given a score of 1 (poor). Also, for (5) overall evaluation, of the obtained puddings, which were evaluated in a comprehensive manner from (1) to (3), one which was the best was given a score of 10 (good), and one which was the worst was given a score of 1 (poor). The results are shown in Table 26.

[Table 26]

| | Dextrin | Richness/ oils and fats enriched properties | Mouthfeel | Flavor | Overall evaluation |
|---|---|---|---|---|---|
| Example 28-1 | Preparation Example 1 | 10 | smooth | good | 10 |
| Comparative Example 28-1 | Existing product 1 | 4 | stickiness, poor melting in the mouth | starch-derived flavor | 3 |
| Comparative Example 28-2 | Existing product 2 | 4 | stickiness, poor melting in the mouth | good | 4 |
| Comparative Example 28-3 | Existing product 3 | 3 | slightly gritty | starch-derived flavor | 2 |

(continued)

| | Dextrin | Richness/ oils and fats enriched properties | Mouthfeel | Flavor | Overall evaluation |
|---|---|---|---|---|---|
| Comparative Example 28-4 | Existing product 4 | 4 | stickiness, poor melting in the mouth | starch-derived flavor | 3 |
| Comparative Example 28-5 | Existing product 5 | 2 | slightly watery | good | 2 |
| Comparative Example 28-0 | no use | 1 | watery | good | 1 |

The baked pudding (Example 28-1) which was prepared using the dextrin of Preparation Example 1 did not contain egg yolk, but had pudding-specific robustness and flavor, and good smooth melting in the mouth.

Experimental Example 29 Pudding (neutral dessert) (2)

Puddings were prepared according to a recipe described below using the dextrins of Preparation Example 2 and the existing products 1 to 5. Specifically, a mixture of sugar, skimmed powdered milk, a gelling agent, an emulsifying agent and a dextrin (Preparation Example 2, the existing products 1 to 5) was added to water, dairy cream and banana puree while stirring, followed by dissolution with stirring while heating at 80°C for 10 minutes. Next, a colorant and an aroma chemical were added to the solution, which was then adjusted with water so that the total amount becomes 100%, followed by homogenization at 150 kgf/cm$^2$. Thereafter, the mixture solution was poured into a container, followed by cooling. Thus, the puddings (Example 29-2 and Comparative Examples 29-1 to 29-5) were prepared. Note that, in the recipe described below, GEL UP‡ PI-954(D)[*] is a gelling agent containing a carrageenan, locust bean gum and gellan gum as major components. Also, as a control for comparison, a pudding (control example) was similarly prepared using a double amount of dairy cream and without using a dextrin.
<Recipe of pudding>

| Sugar | 10.0 (%) |
|---|---|
| Dairy cream | Table 27 |
| Skimmed powdered milk | 6.0 |
| Banana puree | 1.0 |
| Gelling agent (GEL UP‡ PI-954(D)[*]) | 0.8 |
| Emulsifying agent | 0.1 |
| Dextrin | Table 27 |
| Colorant | 0.01 |
| Aroma chemical | 0.1 |
| Water | balance |
| Total | 100.0% |

The puddings thus obtained were evaluated in terms of (1) richness and oils and fats enriched properties, (2) mouthfeel, (3) flavor, (4) shape retentivity, (5) syneresis, and (6) overall evaluation. The evaluation was carried out on a scale of 1 to 10 for (1) richness and oils and fats enriched properties, (3) shape retentivity, (5) syneresis and (6) overall evaluation. Specifically, for (1) richness and oils and fats enriched properties, of the obtained puddings, one which had the highest richness and oils and fats enriched properties was given a score of 10 (good), and one which had the lowest richness and oils and fats enriched properties was given a score of 1 (poor). Also, for (3) shape retentivity, of the obtained puddings, one which had the highest shape retentivity was given a score of 10 (good), and one which had the lowest shape retentivity was given a score of 1 (poor). Also, for (5) syneresis, of the obtained puddings, one which had the smallest syneresis was given a score of 10 (good), and one which had the largest syneresis was given a score of 1 (poor). Also, for (6) overall evaluation, of the obtained puddings, which were evaluated in a comprehensive manner from (1) to (5), one which was the best was given a score of 10 (good), and one which was the worst was given a score of 1 (poor). The results are shown in Table 27.

[Table 27]

| | | Example 29-2 | Control Example | Comparative Example | | | | |
|---|---|---|---|---|---|---|---|---|
| | | | | 29-1 | 29-2 | 29-3 | 29-4 | 29-5 |
| | Dairy cream | 5 | 10 | 5 | 5 | 5 | 5 | 5 |
| Dextrin | Preparation Example 2 | 1.8 | - | - | - | - | - | - |
| | Existing product 1 | - | - | 1.8 | - | - | - | - |
| | Existing product 2 | - | - | - | 1.8 | - | - | - |
| | Existing product 3 | - | - | - | - | 1.8 | - | - |
| | Existing product 4 | - | - | - | - | - | 1.8 | - |
| | Existing product 5 | - | - | - | - | - | - | 1.8 |
| Evaluation | Richness/ oils and fats enriched properties | 10 | 10 | 4 | 3 | 4 | 2 | 1 |
| | Mouthfeel | smooth | smooth | gritty | stickiness, poor melting in the mouth | slightly watery | stickiness, poor melting in the mouth | watery |
| | Flavor | good | good | starch-derived flavor | starch-derived flavor | good | starch-derived flavor | good |
| | Shape retentivity | 9 | 10 | 9 | 8 | 3 | 6 | 1 |
| | syneresis | 10 | 10 | 5 | 5 | 3 | 6 | 2 |
| | Overall evaluation | 10 | 10 | 4 | 3 | 4 | 4 | 3 |

According to Table 27, when the conventional dextrins (existing products 1 to 5) were used, then if the amount of dairy cream was half of that of Comparative Example 29-1 to 29-5), a mouthfeel was significantly affected as compared to the pudding, specifically a significant decrease in richness, and in addition, a gritty mouthfeel, stickiness and poor melting in the mouth, and the like. Moreover, the shape retentivity was reduced, and the syneresis failed to be prevented (Comparative Examples 29-1 to 29-5). On the other hand, when the dextrin of the present invention (Preparation Example 2) was used, even if the additive amount of dairy cream was half of that of the control example, a pudding which had a flavor which was not affected, and had richness comparable to that of the pudding of the control example, was successfully prepared (Example 29-1). Moreover, the pudding had a smooth mouthfeel, and the syneresis was significantly prevented.

Experimental Example 30 Preparation of mango pudding (neutral dessert)

A mango pudding (neutral dessert) (Example 30-3) was prepared according to a recipe described below using the dextrin of Preparation Example 3. Specifically, sugar, skimmed powdered milk, coconut milk powder, a gelling agent (GEL UP‡ PI-983(F)*), and a powder mixture of the dextrin, guar gum and tara gum were added to water, milk and dairy cream while stirring, followed by dissolution with stirring at 80°C for 10 minutes. Mango puree, a colorant and an aroma chemical were added to the solution, which was then adjusted with water so that the total amount becomes 100%. Thereafter, the mixture solution was poured into a container, followed by cooling. Thus, the mango pudding was prepared. Note that the gelling agent (GEL UP‡ PI-983(F)*) is a preparation containing locust bean gum, xanthan gum and deacylated gellan gum. Also, as a control example, a mango pudding was similarly prepared using dairy cream and without using a dextrin, guar gum or tara gum. Also, as a comparative example, a mango pudding was similarly prepared using none of a dextrin, guar gum, tara gum and dairy cream.

[Table 28]

| <Recipe of mango pudding> | | | |
|---|---|---|---|
| | Control Example | Comparative Example | Example 30-3 |
| Milk | 20.0 | 20.0 | 20.0 |
| Sugar | 10.0 | 10.0 | 10.0 |
| Skimmed powdered milk | 5.0 | 5.0 | 5.0 |
| Dairy cream | 5.0 | - | - |
| Mango puree | 3.0 | 3.0 | 3.0 |
| Coconut milk powder | 0.5 | 0.5 | 0.5 |
| Gelling agent (GEL UP‡ PI-983(F)*) | 0.8 | 0.8 | 0.8 |
| Dextrin (Preparation Example 3) | - | - | 1.3 |
| Guar gum | - | - | 0.07 |
| Tara gum | - | - | 0.07 |
| Colorant | 0.05 | 0.05 | 0.05 |
| Aroma chemical (mango flavor NO. 76358*) | 0.15 | 0.15 | 0.15 |
| Aroma chemical (ST flavor NO. 9207(N)*) | 0.03 | 0.03 | 0.03 |
| Water | balance | balance | balance |
| Total | 100.0 | 100.0 | 100.0 |

As compared to the pudding of the control example containing 5% of dairy cream, the pudding of the comparative example which did not contain dairy cream was considerably light and had a mouthfeel having poor robustness or richness. On the other hand, the pudding of Example 30-3 containing the dextrin, guar gum and tara gum in place of dairy cream had a mouthfeel which is substantially the same as that of the pudding of the control example.

Experimental Example 31 Preparation of almond jelly (annin-tofu)

Almond jellies (Examples 31-3-1 to 31-3-3) were prepared according to a recipe described below using the dextrin of Preparation Example 3. Also, for comparison, almond jellies (Comparative Examples 31-0-1 and 31-0-2, no dextrin was used) were similarly prepared without using a dextrin.

Specifically, sugar, skimmed powdered milk, almond powder, a gelling agent, an emulsifying agent and the dextrin were added to water, milk and dairy cream while stirring, followed by dissolution with stirring at 90°C for 10 minutes. An aroma chemical was added to the solution, which was then adjusted with water so that the total amount becomes 100%, followed by homogenization at 150 kgf/cm$^2$. The mixture solution was then poured into a container, followed by cooling. Thus, the almond jelly was prepared. Note that, in the recipe, GEL UP‡ PI-983(F)$^*$ is a preparation containing gelatin and agar as major components.

<Recipe of almond jelly>

| | |
|---|---|
| Milk | see Table 29 |
| Dairy cream | 10.0 (%) |
| Sugar | 10.0 |
| Skimmed powdered milk | 4.0 |
| Almond powder | 1.0 |
| Gelling agent (GEL UP‡ PI-983(F)$^*$) | 0.8 |
| Emulsifying agent | 0.1 |
| Aroma chemical | 0.1 |
| Dextrin (Preparation Example 3) | see Table 29 |

(continued)

| Glucose | see Table 29 |
|---|---|
| Water | balance |
| Total | 100.0% |

The almond jellies thus obtained were evaluated in terms of (1) richness and oils and fats enriched properties, (2) mouthfeel, and (3) overall evaluation. The evaluation was carried out on a scale of 1 to 10 for (1) richness and oils and fats enriched properties and (3) overall evaluation. Specifically, for (1) richness and oils and fats enriched properties, of the obtained almond jellies, one which had the highest richness and oils and fats enriched properties was given a score of 10 (good), and one which had the lowest richness and oils and fats enriched properties was given a score of 1 (poor). Also, for (3) overall evaluation, of the obtained almond jellies, which were evaluated in a comprehensive manner from (1) and (2), one which was the most similar to the almond jelly of Comparative Example 31-2 and tasted delicious was given a score of 10 (good), and one which was the most similar to the almond jelly of Comparative Example 31-1 and tasted awful was given a score of 1 (poor).

[Table 29]

| | | Example 31-3-1 | Example 31-3-2 | Example 31-3-3 | Comparative Example 31-0-1 | Comparative Example 31-0-2 |
|---|---|---|---|---|---|---|
| Milk | | 20 | 20 | 20 | 20 | 50 |
| Glucose | | - | - | - | 1 | 3.5 |
| Dextrin(Preparation Example 3) | | 0.2 | 0.5 | 1 | - | - |
| Evaluation | Richness/ oils and fats enriched properties | 7 | 8 | 10 | 1 | 10 |
| | Mouthfeel | smooth, good melting in the mouth | smooth, good melting in the mouth | smooth, slightly high body | watery | smooth, good melting in the mouth |
| | Overall evaluation | 8 | 9 | 10 | 1 | 10 |

According to Table 29, by using the dextrin of Preparation Example 3, the almond jellies (Examples 31-3-1 to 31-3-3) was prepared which contained as low as 0.2 to 1% of the dextrin, but had richness comparable to that of the almond jelly (Comparative Example 31-0-2) which was prepared by a commonly used method using 50% of milk. Moreover, the prepared almond jellies of Examples 31-3-1 to 31-3-3 were smooth and had good melting in the mouth, and had a high commodity value, though they had a low content of oils and fats.

Experimental Example 32 Preparation of cheese-containing dessert (acidic dessert)

Cheese-containing desserts (Example 32-1 and Comparative Examples 32-1 to 32-5) were prepared according to a recipe described below using the dextrins of Preparation Example 1 and the existing products 1 to 5. Also, for comparison, a cheese-containing dessert (Comparative Example 32-0, no dextrin was used) was similarly prepared using 4.5% of glucose (the total solid content was adjusted) in place of 4.5% of the dextrin. Note that, in the recipe, "Simplesse 100 is a protein in the form of microparticles which is obtained by partially thermally denaturing whey protein. Simplesse 100 can be obtained by heating whey protein to the denaturing temperature or higher of the protein while applying a high shear force is applied thereto (the same is true in the description which follows).

<Recipe of cheese dessert (acidic dessert)>

| Dextrin | 4.5 (%) |
|---|---|
| Cream cheese | 10.0 |

(continued)

| | |
|---|---|
| Simplesse 100* | 8.0 |
| Sugar | 6.0 |
| Vegetable oils and fats | 2.0 |
| Gelling agent (GEL UP‡ PI-2069*) | 0.6 |
| Emulsifying agent (HOMOGEN‡ DM*) | 0.1 |
| Citric acid | 0.3 |
| Sucralose | 0.005 |
| Aroma chemical | 0.1 |
| Water | balance |
| Total | 100.0% |

Specifically, sugar, a gelling agent, an emulsifying agent, the dextrin and sucralose were added to water while stirring. Moreover, cream cheese, Simplesse 100* and a vegetable oils and fats were added, followed by dissolution with stirring while heating to 40°C for 10 minutes. Citric acid was added to the solution, followed by heating at 90°C for 10 minutes. Thereafter, an aroma chemical was added to the solution, which was then adjusted with water so that the total amount becomes 100%. Next, the solution was homogenized using a homogenizer (150 kgf/cm$^2$). The resultant solution was poured into a container, followed by cooling.

The desserts thus obtained were evaluated in terms of (1) richness and oils and fats enriched properties, (2) mouthfeel, and (3) flavor. The evaluation was carried out on a scale of 1 to 10 for (1) richness and oils and fats enriched properties. Specifically, for (1) richness and oils and fats enriched properties, of the obtained desserts, one which had the highest richness and oils and fats enriched properties was given a score of 10 (good), and one which had the lowest richness and oils and fats enriched properties was given a score of 1 (poor). The results are shown in Table 30.

[Table 30]

| | Dextrin | Richness/ oils and fats enriched properties | Mouthfeel | Flavor |
|---|---|---|---|---|
| Example 32-1 | Preparation Example 1 | 10 | smooth | good |
| Comparative Example 32-1 | Existing product 1 | 4 | gritty | starch-derived flavor |
| Comparative Example 32-2 | Existing product 2 | 4 | stickiness, poor melting in the mouth | good |
| Comparative Example 32-3 | Existing product 3 | 3 | slightly gritty | starch-derived flavor |
| Comparative Example 32-4 | Existing product 4 | 4 | stickiness, poor melting in the mouth | starch-derived flavor |
| Comparative Example 32-5 | Existing product 5 | 2 | slighty watery | good |
| Comparative Example 32-0 | no use | 1 | watery | good |

As a result, by using the dextrin of Preparation Example 1, a dessert which had good richness and flavor, and a smooth mouthfeel was successfully prepared (Example 32-1).

Experimental Example 33 Preparation of_cheese-containing dessert (acidic dessert) (2)

A cheese-containing dessert (Example 33-3) was prepared according to a recipe described below using the dextrin of Preparation Example 3. Specifically, sugar, skimmed powdered milk, a gelling agent, an emulsifying agent, and a powder mixture of the dextrin (Preparation Example 3), pectin, locust bean gum, guar gum and agar were added to water, cream and cream cheese while stirring, followed by dissolution with stirring at 80˚C for 10 minutes. Citric acid and an aroma chemical were added to the solution, which was then adjusted with water so that the total amount becomes 100%, followed by homogenization at 14,700 kPa (150 kgf/cm$^2$). The resultant solution was poured into a container, followed by cooling. Thus, the cheese-containing dessert was prepared. Note that the gelling agent (GEL UP$^‡$ J-4021$^*$) is a preparation containing pectin, locust bean gum and guar gum. Also, as a control for comparison, a cheese-containing dessert (control example) was similarly prepared using a double amount of cream cheese and none of the dextrin (Preparation Example 3), pectin, locust bean gum, guar gum and agar.

[Table 31]

| <Recipe of cheese-containing dessert> (kg) | | |
|---|---|---|
| | Control Example | Example 33-3 |
| Sugar | 10.0 | 10.0 |
| Cream (milk fat: 45%) | 5.0 | 5.0 |
| Skimmed powdered milk | 2.0 | 2.0 |
| Cream cheese | 10.0 | 5.0 |
| Gelling agent (GEL UP$^‡$ J-4021*) | 1.0 | - |
| Dextrin (Preparation Example 3) | - | 2.0 |
| Pectin | - | 0.3 |
| Locust bean gum | - | 0.25 |
| Guar gum | - | 0.05 |
| Agar | - | 0.1 |
| Emulsifier | 0.1 | 0.1 |
| Citric acid (anhydride) | 0.18 | 0.2 |
| Aroma chemical | 0.15 | 0.17 |
| Water | balance | balance |
| Total | 100.0 | 100.0 |

The cheese-containing dessert of Example 33-3 contained as low as 5% of cream cheese, but had oils and fats enriched properties and richness which are similar to those of the cheese-containing dessert of the control example containing 10% of cream cheese.

Experimental Example 34 Preparation of low-fat yogurt (1)

In order to evaluate physical properties of yogurts depending on the difference between dextrins, yogurts were prepared according to a recipe described below using dextrins (Preparation Example 1 and the existing products 1 to 5).

Specifically, skimmed powdered milk, whole powdered milk, sugar, a gelling agent and each dextrin were poured into water and milk, followed by dissolution at 70˚C, homogenization (150 kgf/cm 2) sterilization at 90˚C for 10 minutes, and cooling to 40˚C. Next, a culture (BIFIDUS yogurt BB536 manufactured by MORINAGA MILK INDUSTRY CO., LTD.) was added in an amount corresponding to 3% of the total amount of the preparation. Thereafter, the preparation was poured into a container, followed by fermentation to pH 4.5 in a constant temperature room at 40˚C. Thus, the low-fat yogurts were prepared. Note that, in the recipe described below, GEL UP$^‡$ YO-H(F)$^*$ is a gelling agent containing agar and gelatin.

Also, as a control example, an ordinary yogurt was prepared using whole powdered milk.

<Recipe of low-fat yogurt>

| | |
|---|---|
| Milk | 28.0 (%) |
| Skimmed powdered milk | see Table 32 |
| Whole powdered milk | see Table 32 |
| Sugar | 5.0 |

(continued)

| | |
|---|---|
| Gelling agent (GEL UP‡ YO-H(F)*) | 0.6 |
| Dextrin | see Table 32 |
| Water | balance |
| Total | 100.0% |

Each of the yogurts thus prepared was evaluated in terms of (1) richness and oils and fats enriched properties, (2) mouthfeel, (3) flavor, (4) syneresis, and (5) overall evaluation. The evaluation was carried out on a scale of 1 to 10 for (1) richness and oils and fats enriched properties, (4) syneresis and (5) overall evaluation. Specifically, for (1) richness and oils and fats enriched properties, of the obtained yogurts, one which had the highest richness and oils and fats enriched properties was given a score of 10 (good), and one which had the lowest richness and oils and fats enriched properties was given a score of 1 (poor). Also, for (4) syneresis, one which had the smallest syneresis was given a score of 10 (good), and one which had the largest syneresis was given a score of 1 (poor), where syneresis was evaluated based on the amount of moisture leaking out from a yogurt in a cup tilted at 30°, which was measured after one week of preservation in a refrigerator. Also, for (5) overall evaluation, of the obtained yogurts, which were evaluated in a comprehensive manner from (1) to (4), one which was the most similar to the yogurt of the control example containing 2% of milk fat was given a score of 10 (good), and one which was the least similar to the yogurt of the control example was given a score of 1 (poor). The results are shown in Table 32.
[Table 32]

| | | Example 34-1 | | Control Example | | | Comparative Example | |
|---|---|---|---|---|---|---|---|---|
| | | | | 34-1 | 34-2 | 34-3 | 34-4 | 34-5 |
| Skimmed powdered milk | | 6.1 | 3.4 | 6.1 | 6.1 | 6.1 | 6.1 | 6.1 |
| Whole powdered milk | | - | 3.6 | - | - | - | - | - |
| Dextrin | Preparation Example 1 | 2 | - | - | - | - | - | - |
| | Existing product 1 | - | - | 2 | - | - | - | - |
| | Existing product 2 | - | - | - | 2 | - | - | - |
| | Existing product 3 | - | - | - | - | 2 | - | - |
| | Existing product 4 | - | - | - | - | - | 2 | - |
| | Existing product 5 | - | - | - | - | - | - | 2 |
| Milk solid not fat | | 8.1 | 8.1 | 8.1 | 8.1 | 8.1 | 8.1 | 8.1 |
| Milk fat content | | 1 | 2 | 1 | 1 | 1 | 1 | 1 |
| Evaluation | oils and fats enriched properties/ richness | 10 | 10 | 4 | 3 | 4 | 2 | 2 |
| | Mouthfeel | smooth | smooth | gritty | stickiness, poor melting in the mouth | slightly watery | stickiness, poor melting in the mouth | watery |
| | Flavor | good | good | starch-derived flavor | starch-derived flavor | good | starch-derived flavor | good |
| | syneresis | 9 | 10 | 6 | 5 | 3 | 5 | 2 |
| | Overall evaluation | 10 | 10 | 4 | 3 | 6 | 4 | 5 |

Yogurts contain milk as a main material, and therefore, if the milk fat content is reduced by 1%, the mouthfeel is significantly affected, resulting in a watery mouthfeel. On the other hand, in the case of the yogurt (Example 34-1) prepared using the dextrin of Preparation Example 1, even when the milk fat content was reduced by 1% or more from that of an ordinary yogurt (control example), the richness and fattiness were comparable to those of the ordinary yogurt (control example). Also, the yogurt (Example 34-1) prepared using the dextrin of Preparation Example 1 had good flavor and a yogurt-specific smooth mouthfeel. On the other hand, in the case of the low-fat yogurts (Comparative Examples 34-1 to 34-5) prepared using the existing dextrins (existing products 1 to 5), the richness and oils and fats enriched properties were not sufficient, starch-specific stickiness and grittiness and starch-derived flavor were significant in a mouthfeel and a flavor.

Also, significant syneresis would occur in yogurts having a reduced milk fat content. This syneresis failed to be prevented in the cases of the existing dextrins (existing products 1 to 5). On the other hand, by using the dextrin of Preparation Example 1, a low-fat yogurt which significantly prevents syneresis even when the milk fat content is reduced was successfully obtained.

Experimental Example 35 Preparation of low-fat yogurt (2)

Low-fat yogurts were prepared according to the following recipe.

<Recipe of low-fat yogurt>

| | |
|---|---|
| Dairy cream | 4.0 (%) |
| Milk | 5.0 |
| Skimmed powdered milk | see Table 33 |
| Whole powdered milk | see Table 33 |
| Sugar | 5.0 |
| Gelling agent (GEL UP‡ YO-H(F)*) | 0.5 |
| Dextrin (Preparation Example 2) | see Table 32 |
| Water | balance |
| Total | 100.0% |

Specifically, dairy cream, skimmed powdered milk, whole powdered milk, sugar, a gelling agent and the dextrin (Preparation Example 2) were poured into water and milk, followed by dissolution at 70°C, homogenization (150 kgf/cm$^2$), sterilization at 90°C for 10 minutes, and cooling to 40°C. Next, a culture (BIFIDUS yogurt BB536 manufactured by MORINAGA MILK INDUSTRY CO., LTD.) was added in an amount corresponding to 3% of the total amount of the preparation, followed by fermentation to pH 4.5 in a constant temperature room at 40°C. Thus, the low-fat yogurts (Examples 35-2-1 to 35-2-5) were prepared. Also, as a control example, an ordinary yogurt was prepared using whole powdered milk. Moreover, as comparative examples, yogurts (Comparative Examples 35-0-1 to 35-0-3) were prepared without using a dextrin or whole powdered milk.

The yogurts thus prepared were evaluated in terms of (1) richness and fattiness and (2) smoothness and melting in the mouth. The evaluation was carried out on a scale of 1 to 10. For (1) richness and oils and fats enriched properties, of the obtained yogurts, one which had the highest richness and oils and fats enriched properties was given a score of 10 (good), and one which had the lowest richness and oils and fats enriched properties was given a score of 1 (poor). Also, for (2) smoothness and melting in the mouth, of the obtained yogurts, one which had the smoothest mouthfeel and good melting in the mouth was given a score of 10 (good), and one which had the least smooth mouthfeel and poor melting in the mouth was given a score of 1 (poor).

The results are shown in Table 33.

[Table 33]

| | Control Example | Example 35-2 | | | | | | Comparative Example 35-0 | | |
|---|---|---|---|---|---|---|---|---|---|---|
| | | 1 | 2 | 3 | 4 | 5 | 6 | 1 | 2 | 3 |
| Skimmed powdered milk | 5.8 | 8.8 | 8.8 | 8.8 | 8.8 | 8.8 | 8.8 | 8.8 | 8.8 | 8.8 |
| Whole powdered milk | 4 | - | - | - | - | - | - | - | - | - |
| Dextrin (Preparation Example 2) | - | 1 | 1 | 1 | 1 | 1 | 1 | - | - | - |
| Glucose | - | - | - | - | - | - | - | 1 | 1 | 1 |
| Gum ghatti | - | - | 0.1 | - | - | - | - | - | - | - |
| Gum arabic | - | - | - | 0.1 | - | - | - | 0.1 | - | - |
| Tara gum | - | - | - | - | 0.1 | - | - | - | 0.1 | - |
| Guar gum | - | - | - | - | - | 0.1 | - | - | - | - |
| Tamarind seed gum | - | - | - | - | - | - | 0.1 | | | |
| Milk solid not fat | 9 | 9 | 9 | 9 | 9 | 9 | 9 | 9 | 9 | 9 |

(continued)

| | | Control Example | Example 35-2 | | | | | | Comparative Example 35-0 | | |
|---|---|---|---|---|---|---|---|---|---|---|---|
| | | | 1 | 2 | 3 | 4 | 5 | 6 | 1 | 2 | 3 |
| Milk fat content | | 3 | 2 | 2 | 2 | 2 | 2 | 2 | 2 | 2 | 2 |
| Evaluation | oils and fats enriched properties / richness | 10 | 9 | 10 | 10 | 10 | 10 | 10 | 6 | 6 | 4 |
| | Smoothness / melting in the mouth | 10 | 8 | 10 | 10 | 10 | 10 | 10 | 7 | 7 | 5 |

When the milk fat content was reduced to 2%, the richness was significantly reduced and the smooth mouthfeel was also lost, and the mouthfeel was significantly deviated from that of the ordinary yogurt (control example) whose milk fat content is 3% (Comparative Example 35-0-3). On the other hand, when the dextrin of Preparation Example 2 was used, the milk fat content was reduced to 2%, but the richness and oils and fats enriched properties were comparable to those of the ordinary yogurt (control example) whose milk fat content is 3%, and the mouthfeel was smooth (Example 35-2-1). Moreover, when gum ghatti, gum Arabic, tara gum or guar gum was used in combination with the dextrin of Preparation Example 2, low-fat yogurts which had enhanced richness and oils and fats enriched properties, a smoother mouthfeel, and good melting in the mouth were successfully obtained (Examples 35-2-2 to 35-2-5). On the other hand, the low-fat yogurts (Comparative Examples 35-0-1 and 35-0-2) which were prepared using gum arabic or tara gum in combination with glucose rather than the dextrin, had a smoother mouthfeel than that of the low-fat yogurt (35-0-3) which did not contain gum Arabic or tara gum, but its effect was not sufficient.

Experimental Example 36 Preparation of fat-free yogurt (3)

Fat-free yogurts were prepared according to a recipe described below. Specifically, skimmed powdered milk, whole powdered milk, sugar, a gelling agent and a dextrin (Preparation Example 3) were poured into water and milk, followed by dissolution at 70˚C, homogenization (150 kgf/cm$^2$) sterilization at 90˚C for 10 minutes, and cooling to 40˚C. Next, a culture (BIFIDUS yogurt BB536 manufactured by MORINAGA MILK INDUSTRY CO., LTD.) was added in an amount corresponding to 3% of the total amount of the preparation, followed by fermentation to pH 4.5 in a constant temperature room at 40˚C. The preparation was cooled to 20˚C while stirring using a stirrer. The resultant preparation was poured into a container. Thus, the fat-free yogurts were prepared (Examples 36-3-1 to 36-3-4). Also, as a control example, an ordinary yogurt was prepared using whole powdered milk. Moreover, as a comparative example, a yogurt was prepared without using a dextrin or whole powdered milk (Comparative Example 36-0).

The yogurts thus prepared were evaluated in terms of (1) richness and oils and fats enriched properties, (2) mouthfeel, (3) shape retentivity, (4) syneresis, and (5) overall evaluation. For (1) richness and oils and fats enriched properties and (4) syneresis, the evaluation was carried out on a scale of 1 to 10 according to the criteria described in Experimental Example 34. Also, for (3) shape retentivity, the evaluation was carried out on a scale of 1 to 10 as follows. A cylinder having a diameter of 3 cm and a height of 1 cm was placed on a horizontal plane, was filled with a yogurt, and was drawn and lifted directly upward, leaving the yogurt standing. After the elapse of one hour at room temperature, the yogurt was observed. One with the least spread was evaluated as a yogurt having shape retentivity. One which had the highest shape retentivity was given a score of 10 (good), and one which had the lowest shape retentivity was given a score of 1 (poor). For (5) overall evaluation, of the obtained yogurts, which were evaluated in a comprehensive manner, one which was the most similar to the yogurt of the control example containing 2% of milk fat was given a score of 10 (good), and one which was the least similar to the yogurt of the control example containing 2% of milk fat was given a score of 1 (poor).

The results are shown in Table 34.

<Recipe of fat-free yogurt>

| | |
|---|---|
| Milk | see Table 34 (%) |
| Skimmed powdered milk | see Table 34 |
| Whole powdered milk | see Table 34 |
| Sugar | 5.0 |

(continued)

| Gelling agent (GEL UP‡ YO-H(F)[*]) | 0.5 |
|---|---|
| Dextrin (Preparation Example 3) | see Table 34 |
| Water | balance |
| Total | 100.0% |

[Table 34]

| | | Example 36-3 | | | | Control Example | Comparative Example 36-0 |
|---|---|---|---|---|---|---|---|
| | | 1 | 2 | 3 | 4 | | |
| | Milk | - | - | - | - | 30 | - |
| | Skimmed powdered milk | 10 | 10 | 10 | 10 | 4.8 | 10 |
| | Whole powdered milk | - | - | - | - | 3.5 | - |
| | Dextrin (Preparation Example 3) | 0.1 | 0.5 | 5 | 8 | - | - |
| | Milk solid not fat | 9.5 | 9.5 | 9.5 | 9.5 | 9.5 | 9.5 |
| | Milk fat content | 0.1 | 0.1 | 0.1 | 0.1 | 2 | 0.1 |
| Evaluation | Richness/oils and fats enriched properties | 7 | 8 | 9 | 10 | 9 | 1 |
| | Mouthfeel | smooth, good melting in the mouth | smooth, good melting in the mouth | smooth, slightly high body | smooth, high body | smooth, good melting in the mouth | watery |
| | Shape retentivity | 7 | 8 | 10 | 10 | 8 | 3 |
| | syneresis | 5 | 7 | 10 | 10 | 10 | 1 |
| | Overall evaluation | 7 | 8 | 9 | 10 | 9 | 1 |

The yogurt (Comparative Example 36-0) having a milk fat content of 0.1% which was prepared by a conventional production method did not have richness and had a watery mouthfeel. Moreover, the shape retentivity was low, and in addition, when a spoon was inserted thereinto, significant syneresis occurred at the insertion slit. On the other hand, when the dextrin of Preparation Example 3 was used, then even if the milk fat content was as low as 0.1%, a yogurt which had sufficient richness, and a smooth mouthfeel and good melting in the mouth was successfully prepared (Example 36-3-1). Moreover, when the additive amount of the dextrin was increased, the richness, oils and fats enriched properties, and mouthfeel were able to be improved (Examples 36-3-2 to 36-3-4). These yogurts of the present invention (Examples 36-3-2 to 36-3-4) had richness and oils and fats enriched properties, shape retentivity, and a smooth mouthfeel which are similar to or more than those of the low-fat yogurt (control example) having a milk fat content 2%.

Experimental Example 37 Preparation of fat-free yogurt (2)

A fat-free yogurt was prepared according to a recipe described below. Specifically, skimmed powdered milk, sugar, a gelling agent, HM pectin and the dextrin of Preparation Example 1 were poured into water, followed by dissolution at 70°C, homogenization (150 kgf/cm$^2$), sterilization at 90°C for 10 minutes, and cooling to 40°C. Next, a culture (BIFIDUS yogurt BB536 manufactured by MORINAGA MILK INDUSTRY CO., LTD.) was added in an amount corresponding to 3% of the total amount of the preparation. Thereafter, the resultant preparation was poured into a container, followed by fermentation to pH 4.5 in a constant temperature room at 40°C. Thus, the fat-free yogurt was prepared (Example 37-1). This yogurt was fat-free, but had sufficient richness, a smooth mouthfeel and good melting in the mouth.
<Recipe of fat-free yogurt>
<Recipe of fat-free yogurt>

| | |
|---|---|
| Skimmed powdered milk | 12.0 (%) |
| Sugar | 8.0 |
| Gelling agent (GEL UP‡ YO-H*) | 0.5 |
| HM pectin | 0.2 |
| Dextrin (Preparation Example 1) | 2.0 |
| Water | balance |
| Total | 100.0% |

Experimental Example 38 Preparation of lacto-ice (another class of low-fat ice creams in Japan) (1)

Lacto-ices (Example 38-1 and Comparative Examples 38-1 to 38-5) were prepared according to a recipe described below using the dextrins of Preparation Example 1 and the existing products 1 to 5. Also, for comparison, a lacto-ice (Comparative Example 38-0, no dextrin was used) was similarly prepared using 5% of glucose (the total solid content was adjusted) in place of 5% of the dextrin.
<Recipe of lacto-ice>

| | |
|---|---|
| Dextrin | 5.0 (%) |
| Skimmed powdered milk | 8.0 |
| Sugar | 8.0 |
| Fructose-glucose syrup | 7.0 |
| Refined coconut oil | 5.0 |
| Stabilizer (SAN BEST‡ NN-303*) | 0.2 |
| Emulsifying agent (HOMOGEN‡ DM*) | 0.2 |
| Vanilla flavor NO. 93-I | 0.1 |
| Water | balance |
| Total | 100.0% |

Specifically, fructose-glucose syrup, skimmed powdered milk, sugar, a stabilizer, an emulsifying agent and a dextrin (Preparation Example 1, the existing products 1 to 5) were added to water while stirring, followed by heating while stirring. After reaching 80°C, refined coconut oil was added to the mixture, followed by dissolution with stirring while heating at the same temperature of 80°C for 10 minutes. The solution was adjusted with water so that the total amount becomes 100%. Next, the solution was homogenized using a homogenizer (150 kgf/cm$^2$) followed by cooling to 5°C and aging overnight. After the aging, the solution was subject to freezing. The frozen solution was poured into a container, followed by cooling. Thus, the lacto-ices were prepared. Note that the stabilizer (SAN BEST‡ NN-303*) is a mixture preparation of guar gum, a tamarind seed polysaccharide, locust bean gum and a carrageenan.

The lacto-ices thus obtained were evaluated in terms of (1) tissue (1: rough → 10: smooth), (2) body (1: weak → 10: strong), (3) melting in the mouth (1: poor →10: good), (4) flavor (1: poor → 10: good), and (5) overall evaluation (1: poor → 10: good). Note that the evaluation was carried out on a scale of 1 to 10 for the characteristics (1) to (5). Specifically, of the obtained lacto-ices, one which was the best was given a score of 10 (good), and one which was the worst was given a score of 1 (poor). The results are shown in Table 35.

[Table 35]

| | Dextrin | Tissue | Body | Melting in the mouth | Flavor | Overall evaluation |
|---|---|---|---|---|---|---|
| Example 38-1 | Preparation Example 1 | 10 | 9 | 8 | 9 | 10 |
| Comparative Example 38-1 | Existing product 1 | 10 | 10 | 2 | 2 | 6 |
| Comparative Example 38-2 | Existing product 2 | 7 | 3 | 3 | 2 | 4 |
| Comparative Example 38-3 | Existing product 3 | 6 | 1 | 1 | 1 | 5 |
| Comparative Example 38-4 | Existing product 4 | 4 | 4 | 4 | 3 | 4 |
| Comparative Example 38-5 | Existing product 5 | 4 | 4 | 4 | 3 | 4 |
| Comparative Example 38-0 | no use | 1 | 1 | 10 | 10 | 1 |

Experimental Example 39 Preparation of ice milk (low-fat ice creams) (1)

An ice milk (Example 39-2) was prepared according to a recipe described below using the dextrin of Preparation Example 2. Also, for comparison, an ice milk (Comparative Example 39-0) was prepared using sugar (the total solid content was the same) in place of the dextrin, and an ice milk (control example) was prepared using an increased amount of dairy cream and without using a dextrin.

[Table 36]

| <Recipe of ice milk> | | | |
|---|---|---|---|
| | Example 39-2 | Comparative Example 39-0 | Control Example |
| Sweetened whole condensed milk | 9.0 | 9.0 | 9.0 |
| Dairy cream | 8.5 | 8.5 | 9.0 |
| Skimmed powdered milk | 5.0 | 5.0 | 5.0 |
| Corn syrup | 6.0 | 6.0 | 6.0 |
| Refined coconut oil | 3.5 | 3.5 | 3.5 |
| frozen egg yolk with sugar | 0.62 | 0.62 | 0.62 |
| Sugar | 10.0 | 10.1 | 10.0 |
| Dextrin (Preparation Example 2) | 0.1 | - | - |
| Stabilizer (SAN BEST‡ NN-582*) | 0.2 | 0.2 | 0.2 |
| Emulsifier (HOMOGEN‡ DM*) | 0.25 | 0.25 | 0.25 |
| Aroma chemical (vanilla flavor NO. 93-I) | 0.15 | 0.15 | 0.15 |
| Water | balance | balance | balance |
| Total | 100.0 | 100.0 | 100.0 |
| total solid content: 34.0% milk fat: 4.6% milk solid not fat: 7.2% sweetness: 15.5 | | | |

Specifically, sweetened whole condensed milk, dairy cream, skimmed powdered milk, corn syrup, frozen egg yolk with sugar, sugar, the dextrin, a stabilizer, an emulsifying agent were added to water while stirring, followed by heating while stirring. After reaching 80˚C, refined coconut oil was added to the mixture, followed by dissolution with stirring while heating at the same temperature of 80˚C for 10 minutes. The solution was adjusted with water so that the total amount becomes 100%. Next, the solution was homogenized using a homogenizer (150 kgf/cm$^2$), followed by cooling to 5˚C and aging overnight. Next, an aroma chemical was added to the solution, followed by freezing. The frozen solution was poured into a container, followed by cooling. Thus, the ice milks were prepared (Example 39-2, Comparative Example 39-0 and the control example). Note that the stabilizer SAN BEST (SAN BEST‡ NN-582*) is a mixture of tamarind seed gum and locust bean gum.

The ice milks were tasted. As a result, the ice milk (dairy cream content: 8.5%) (Example 39-2) which was prepared using the dextrin (Preparation Example 2) had a dextrin content of as low as 0.1%, but had strong richness as compared to the ice milk (dairy cream content: 8.5%) (Comparative Example 39-0) which contained the same amount of dairy cream and did not contain a dextrin (replaced with sugar), and had richness comparable to that of the ice milk (dairy cream: 9%) of the control example having a high dairy cream content. Note that the ice milk (dairy cream content: 8.5%) (Comparative Example 39-0) which did not contain the dextrin (Preparation Example 2) had significantly low richness as compared to the ice milk (control example) having a dairy cream content of 9.0%.

Experimental Example 40 Preparation of lacto-ice (2)

A lacto-ice (Example 40-3-1) was prepared according to a recipe described below using the dextrin of Preparation Example 3, and a lacto-ice (Example 40-3-2) was prepared according to the recipe using the dextrin of Preparation Example 3 in combination with guar gum and tara gum. Also, for comparison, a lacto-ice (Comparative Example 40-0) was prepared using sugar (the total solid content was the same) in place of the dextrin, and a lacto-ice (control example) was prepared using an increased amount of refined coconut oil and without using a dextrin.

[Table 37]

| <Lacto-ice> | | | | |
|---|---|---|---|---|
| | Example 40-3 | | Comparative Example 40-0 | Control Example |
| | 1 | 2 | | |
| Sugar | 8.0 | 8.0 | 9.0 | 8.0 |
| Fructose glucose syrup | 7.0 | 7.0 | 7.0 | 7.0 |
| Corn syrup | 4.0 | 4.0 | 4.0 | 4.0 |
| Skimmed powdered milk | 8.0 | 8.0 | 8.0 | 8.0 |
| Refined coconut oil | 5.0 | 5.0 | 5.0 | 7.5 |
| Dextrin (Preparation Example 3) | 1.0 | 1.0 | - | - |
| Guar gum | - | 0.025 | - | - |
| Tara gum | - | 0.025 | - | - |
| Stabilizer (SAN BEST‡ NN-582*) | 0.15 | 0.15 | 0.15 | 0.15 |
| Emulsifier (HOMOGEN‡ DM*) | 0.2 | 0.2 | 0.2 | 0.2 |
| Aroma chemical (vanilla flavor NO. 93-I) | 0.1 | 0.1 | 0.1 | 0.1 |
| Water | balance | balance | balance | balance |
| Total amount | 100.0 | 100.0 | 100.0 | 100.0 |
| Total adjusted with water | 100.0 | 100.0 | 100.0 | 100.0 |
| total solid content: 31.8% plant fat content: 5.0% milk solid not fat: 7.6% | | | | |

Specifically, sugar, fructose-glucose syrup, corn syrup, skimmed powdered milk, the dextrin , guar gum, tara gum, a stabilizer and an emulsifying agent were added to water while stirring, followed by heating while stirring. After reaching 80˚C, refined coconut oil was added to the mixture, followed by dissolution with stirring while heating at the same temperature of 80˚C for 10 minutes. The solution was adjusted with water so that the total amount becomes 100%. The solution was homogenized using a homogenizer (150 kgf/cm$^2$), followed by cooling to 5˚C and aging overnight. Next, an aroma chemical was added to the solution, followed by freezing. The frozen solution was poured into a container, followed by cooling. Thus, the lacto-ices were prepared (Example 40-3-1 and 40-3-2, the control example and Comparative Example 40-0).

The lacto-ices were tasted. As a result, the lacto-ice (refined coconut oil: 5%) of Comparative Example 40-0 which was prepared using sugar in place of the dextrin had significantly reduced oils and fats-specific richness as compared to the lacto-ice (control example) containing 7.5% of refined coconut oil. On the other hand, Examples 40-3-1 and 40-3-2 using the dextrin of Preparation Example 3 had sufficiently high richness as compared to Comparative Example 40-0 which did not use a dextrin, and had a mouthfeel close to that of the lacto-ice of the control example containing a larger amount of refined coconut oil. Accordingly, it can be understood that an oils and fats component, such as refined coconut oil or the like, can be replaced with the dextrin of Preparation Example 3 without impairing richness. Also, the lacto-ice (Example 40-3-2) using guar gum and tara gum in combination with the dextrin had richness closer to the lacto-ice of the control example than that of the lacto-ice of Example 40-3-1.

According to the results, it was found that the dextrin used in the present invention can impart richness during a later part of the time that the lacto-ice is eaten, and guar gum and tara gum can impart richness during an earlier part of the time, and the use of these in combination can impart richness closer to oils and fats. Moreover, the resulting lacto-ices of Examples 40-3-1 and 40-3-2 had good flavor release, smooth tissue, and good melting in the mouth.

Experimental Example 41 Preparation of ice milk (2)

An ice milk (Example 40-2-1) was prepared according to a recipe described below using the dextrin of Preparation Example 2. An ice milk (Example 40-2-2) was prepared according to the recipe using guar gum in combination with the dextrin of Preparation Example 2. An ice milk (Example 40-2-3) was prepared according to the recipe using tara gum in combination with the dextrin of Preparation Example 2. Also, for comparison, an ice milk (control example) was prepared using an increased amount of dairy cream and without using a dextrin.

[Table 38]

| <Recipe of ice milk> | | | | |
|---|---|---|---|---|
| | Example 40-2 | | | Control Example |
| | 1 | 2 | 3 | |
| Dairy cream | 11.5 | 11.5 | 11.5 | 18.0 |
| Skimmed powdered milk | 7.0 | 7.0 | 7.0 | 7.0 |
| Corn syrup | 12.5 | 12.5 | 12.5 | 12.5 |
| Sugar | 10.0 | 10.0 | 10.0 | 10.0 |
| Refined coconut oil | 3.0 | 3.0 | 3.0 | 3.0 |
| Dextrin (Preparation Example 2) | 3.0 | 3.0 | 3.0 | - |
| Guar gum | - | 0.075 | - | - |
| Tara gum | - | - | 0.075 | - |
| Stabilizer(SAN BEST‡ NN-582*) | 0.15 | 0.15 | 0.15 | 0.15 |
| Emulsifier (HOMOGEN‡ DM*) | 0.25 | 0.25 | 0.25 | 0.25 |
| Aroma chemical (vanilla flavor NO. 93-I) | 0.1 | 0.1 | 0.1 | 0.1 |
| Water | balance | balance | balance | balance |
| Total | 100.0 | 100.0 | 100.0 | 100.0 |
| total solid content: 35.1% milk fat content: 5.2% milk solid not fat: 7.3% | | | | |

Specifically, dairy cream, skimmed powdered milk, corn syrup, sugar, a dextrin (Preparation Example 2), guar gum, tara gum, a stabilizer, an emulsifying agent were added to water while stirring, followed by heating while stirring. After reaching 80˚C, refined coconut oil was added to the mixture, followed by dissolution with stirring while heating at the same temperature of 80˚C for 10 minutes. The solution was adjusted with water so that the total amount becomes 100%. The solution was homogenized using a homogenizer (150 kgf/cm$^2$), followed by cooling to 5˚C and aging overnight. Next, an aroma chemical was added to the solution, followed by freezing. The frozen solution was poured into a container, followed by cooling. Thus, the ice milks were prepared (Examples 41-2-1 to 41-2-3 and the control example).

The ice milks were tasted. As a result, the ice milk (Example 41-2-1) which was prepared using the dextrin had a high dairy cream content, and had richness close to that of the control example, which is classified into ice cream. This richness was further enhanced by using guar gum or tara gum in combination with the dextrin (Examples 41-2-2 and 41-2-3), and was considerably close to that of the ice milk of the control example. Moreover, the ice milks of Examples 41-2-1 to 41-2-3 had good flavor release, smooth tissue, and good melting in the mouth.

Experimental Example 42 Preparation of lacto-ice (3)

Lacto-ices (Examples 42-1-1 to 42-1-3) were prepared according to a recipe described below using the dextrin of Preparation Example 1. Also, for comparison, lacto-ices (Comparative Examples 42-0-1 to 42-0-3 and Comparative Examples 42-1-1 and 42-1-2) were prepared without the dextrin or with the dextrin of the existing products 1 according to the recipe (see Table 39).

<Recipe of lacto-ice>

| | |
|---|---|
| Corn syrup | 8.5 (%) |
| Sugar | 8.0 |
| Refined coconut oil | 6.0 |
| Skimmed powdered milk | 5.5 |
| Sweetened whole condensed milk | 5.0 |
| Fructose-glucose syrup | 3.5 |
| Dextrin (Preparation Example 1) | Table 39 |
| Stabilizer (SAN BEST‡ NN-582*) | Table 39 |
| Emulsifying agent (HOMOGEN‡ DM*) | 0.25 |
| Aroma chemical(vanilla flavor NO. 93-I) | 0.1 |
| Water | balance |
| Total | 100.0% |

(total solid content: 32.0%, milk fat content: 0.5%, and milk solid not fat: 6.3%)

Specifically, sweetened whole condensed milk, skimmed powdered milk, corn syrup, fructose-glucose syrup, sugar, a dextrin (Preparation Example 1), a stabilizer and an emulsifying agent were added to water while stirring, followed by heating while stirring. After reaching 80˚C, refined coconut oil was added and dissolved with stirring while heating at the same temperature of 80˚C for 10 minutes while keeping the temperature at 80˚C. The solution was adjusted with water so that the total amount becomes 100%. The solution was homogenized using a homogenizer (150 kgf/cm$^2$), followed by cooling to 5˚C and aging overnight. Next, an aroma chemical was added to the solution, followed by freezing. The frozen solution was poured into a container, followed by cooling. Thus, the lacto-ices were prepared (Examples 42-1-1 to 42-1-3, Comparative Examples 42-0-1 to 42-0-3 and Comparative Examples 42-1-1 and 42-1-2).

[Table 39]

| | | Example 42-1 | | | Comparative Example 42 | | | | |
|---|---|---|---|---|---|---|---|---|---|
| | | 1 | 2 | 3 | 0-1 | 0-2 | 0-3 | 1-1 | 1-2 |
| Recipe | Dextrin (Preparation Example 1) | 5 | 8 | 10 | - | - | - | - | - |
| | Existing product 1 | - | - | - | - | - | - | 5 | 8 |
| | Stabilizer (SAN BEST‡ NN-582*) | 0.1 | 0.1 | 0.1 | 0.1 | 0.2 | 0.3 | 0.1 | 0.1 |
| Evaluation | Tissue | 8 | 9 | 10 | 1 | 6 | 8 | 7 | 8 |
| | Richness/body | 8 | 9 | 10 | 1 | 6 | 8 | 9 | 10 |
| | Flavor | 8 | 8 | 7 | 10 | 6 | 5 | 3 | 2 |
| | Overall evaluation | 10 | 9 | 9 | 3 | 5 | 6 | 5 | 4 |

The lacto-ice (Comparative Example 42-0-1) having a reduced milk solid content and milk fat content had good flavor, but significantly lacked richness. On the other hand, by adding the dextrin of Preparation Example 1, even the lacto-ices (Example 42-1-1 to 42-1-3) having a reduced milk solid content and milk fat content had sufficient richness and body. In contrast to this, when the existing product 1 (blue value: 1.42) was used in place of the dextrin of Preparation Example 1, richness was successfully imparted, but there were a gritty mouthfeel and a specific starch-derived flavor, and flavor was significantly impaired (Comparative Examples 42-1-1 and 42-1-2). Also, the lacto-ices (Comparative Examples 42-0-1 to 42-0-3) which did not contain a dextrin and contained a stabilizer which is a mixture of tamarind seed polysaccharide and locust bean gum, had richness which was increased with an increase in the amount of the stabilizer, but the effect was not sufficient, and the flavor was reduced with an increase in the amount of the stabilizer.

The lacto-ices (Examples 41-1-1 to 41-1-3) which were prepared using the dextrin of Preparation Example 1, had smooth tissue and good melting in the mouth, and in addition, good flavor release, and therefore, are considerably excellent lacto-ices. Moreover, the lacto-ices (Examples 41-1-1 to 41-1-3) were of the class lacto-ice, but had richness and body comparable to ice milk whose milk solid content is 10% or more and whose milk fat content is 3% or more.

Experimental Example 43 Preparation of ice cream

An ice cream (Example 43-2) was prepared according to a recipe described below using the dextrin of Preparation Example 2.

[Table 40]

| <Recipe of ice cream> | (%) |
|---|---|
|  | Example 43-2 |
| Sugar | 12.0 |
| Corn syrup | 7.0 |
| Skimmed concentrated milk | 18.0 |
| Dairy cream | 18.0 |
| frozen egg yolk with sugar | 1.5 |
| Dextrin 2) (Preparation Example 2) | 2.0 |
| Aroma chemical (vanilla flavor NO. 93-I) | 0.1 |
| Total adjusted with water | 100.0 |
| solid content: 35.2% milk fat: 8.1% total milk solid not fat: 8.1% | |

Specifically, sugar, corn syrup, skimmed concentrated milk, dairy cream, frozen egg yolk with sugar and the dextrin were added to water while stirring, followed by heating while stirring. After reaching 80°C, the mixture was dissolved with stirring while heating at 80°C for 10 minutes. The solution was adjusted with water so that the total amount becomes 100%. The solution was homogenized using a homogenizer (150 kgf/cm$^2$), followed by cooling to 5°C and aging overnight. Next, an aroma chemical was added to the solution, followed by freezing. The frozen solution was poured into a container, followed by cooling. Thus, the ice cream was prepared (Example 43-2). The ice cream was evaluated by tasting. As a result, the ice cream had sufficient richness. Moreover, the ice cream had good flavor release, smooth tissue, good melting in the mouth, and a feel of high quality.

Experimental Example 44 Preparation of whipped cream (1)

Whipped creams (Example 44-1 and Comparative Examples 44-1 to 44-5) were prepared according to a recipe described below using the dextrins of Preparation Example 1 and the existing products 1 to 5. Also, for comparison, a whipped cream (Comparative Example 44-0, no dextrin was used) was similarly prepared using 5% of glucose (the total solid content was adjusted) in place of 5% of the dextrin.

<Recipe of whipped cream>

Dextrin            5.0(%)

(continued)

| Coconut oil | 30.0 |
|---|---|
| Skimmed powdered milk | 4.0 |
| Sugar | 8.0 |
| Glycine | 1.0 |
| Emulsion stabilizer (HOMOGEN‡ No. 2875*) | 1.0 |
| Water | balance |
| Total | 100.0% |

Specifically, the components other than coconut oil were added to water while stirring, followed by heating to 80˚C and then dissolving with stirring for 10 minutes. Coconut oil was gradually added to the solution, followed by heating to 80˚C again and then stirring for 5 minutes. The mixture was adjusted with water so that the total amount becomes 100%. The mixture was homogenized using a homogenizer (150 kgf/cm$^2$), followed by sterilization at 93˚C. After aging overnight, the mixture was whipped while being cooled until it was stiff. Next, the whipped mixture was poured into a pastry bag, followed by freezing. Thereafter, the whipped mixture was spontaneously thawed (at room temperature for one hour). Note that the emulsion stabilizer (HOMOGEN‡ No. 2875*) is a preparation containing microcrystalline cellulose, carboxymethyl cellulose, xanthan gum and sucrose fatty acid ester.

The whipped creams thus obtained (thawed after being frozen) were evaluated in terms of (1) richness and oils and fats enriched properties, (2) mouthfeel, (3) flavor, (4) syneresis suppressing effect when thawed after being frozen, and (5) overall evaluation. For the characteristics (1), (4) and (5), the evaluation was carried out on a scale of 1 to 10. For (1) richness and oils and fats enriched properties, of the obtained whipped creams, one which had the highest richness and oils and fats enriched properties was given a score of 10 (good), and one which had the lowest richness and oils and fats enriched properties was given a score of 1 (poor). For (4) syneresis suppressing effect when thawed after being frozen, the whipped cream was extruded into a flower shape by squeezing the pastry bag after being thawed, and was then allowed to stand at room temperature for one hour, followed by evaluation of the presence or absence of syneresis (one which had the highest level of syneresis was given a score of 1 (poor), and one which had the lowest level of syneresis was given a score of 10 (good)). For (5) overall evaluation relating to the characteristics (1) to (4), of the obtained whipped creams, one which was the best was given a score of 10 (good), and one which was the worst was given a score of 1 (poor). The results are shown in Table 41.

[Table 41]

| | Dextrin | Richness oils and fats enriched properties | Mouthfeel | Flavor | Suppression of syneresis when thawed after being frozen | Overall evaluation |
|---|---|---|---|---|---|---|
| Example 44-1 | Preparation Example 1 | 10 | smooth | good | 10 | 10 |
| Comparative Example 44-1 | Existing product 1 | 5 | gritty | starch-derived flavor | 5 | 3 |
| Comparative Example 44-2 | Existing product 2 | 7 | stickines s, poor melting in the mouth | good | 5 | 4 |
| Comparative Example 44-3 | Existing product 3 | 3 | slightly gritty | starch-derived flavor | 2 | 2 |
| Comparative Example 44-4 | Existing product 4 | 6 | stickines s, poor's melting in the mouth | starch-derived flavor | 4 | 3 |

(continued)

| | Dextrin | Richness oils and fats enriched properties | Mouthfeel | Flavor | Suppression of syneresis when thawed after being frozen | Overall evaluation |
|---|---|---|---|---|---|---|
| Comparative Example 44-5 | Existing product 5 | 2 | slightly watery | good | 1 | 2 |
| Comparative Example 44-0 | no use | 1 | watery | good | 1 | 1 |

According to the results, it was found that a whipped cream (Example 44-1) which has richness and good flavor, and good shape retentivity even after being frozen and thawed, and in which syneresis is significantly suppressed, can be obtain using the dextrin of Preparation Example 1. Therefore, it was found that the dextrin of Preparation Example 1 not only has the effect of imparting oils and fats enriched properties and richness, but also prevents a mouthfeel or whipped cream tissue from being significantly altered due to freezing (suppresses denaturation due to freezing), i.e., is excellently resistant to freezing and thawing.

Experimental Example 45 Preparation of whipped cream (2)

Whipped creams having a composition described below were prepared by the method of Experimental Example 44 using, as a whipped cream stabilizer, the dextrins of Preparation Examples 1 to 3 (Preparation Example 1: 5.0%, Preparation Example 2: 1.0%, and Preparation Example 3: 8.0%), the dextrins of the existing products 1 to 6 (existing products 1 to 6: 5.0%), or native gellan gum (0.02%) or psyllium seed gum (0.3%) in place of the dextrins (spontaneous thawing: one hour). Note that the aforementioned concentrations in parentheses mean the final concentrations in the whipped creams. Also, for comparison, a whipped cream (Comparative Example 44-0) was similarly prepared without using a whipped cream stabilizer.

<Recipe of whipped cream>

| | |
|---|---|
| Coconut oil | 30.0 |
| Skimmed powdered milk | 4.0 |
| Sugar | 8.0 |
| Whipped cream stabilizer | see Table 42 |
| Emulsion stabilizer (HOMOGEN‡ No. 2875*) | 1.0 |
| Water | balance |
| Total | 100.0% |

The whipped creams thus obtained (thawed after being frozen) were evaluated in terms of (1) richness and oils and fats enriched properties, (2) mouthfeel, (3) flavor, (4) syneresis suppressing effect when thawed after being frozen, (5) shape retentivity, and (6) overall evaluation in a manner similar to that of Experimental Example 44. Note that, for (5) shape retentivity, the evaluation was carried out on a scale of 1 to 10. Specifically, when a whipped cream was extruded into a flower shape by squeezing the pastry bag and was then allowed to stand at room temperature for one hour, one whose flower shape was best maintained was given a score of 10 (good), and one whose flower shape was most deformed was given a score of 1 (poor). For (4) syneresis suppressing effect when thawed after being frozen, the whipped creams were evaluated based on the amount of released moisture (syneresis) when the whipped cream was extruded into a flower shape by squeezing the pastry bag and was then allowed to stand at room temperature for one hour. The results are shown in Table 42.
[Table 42]

| | Stabilizer for whipped cream | Richness/ oils and fats enriched properties | Mouthfeel | Flavor | Suppression of syneresis when thawed after being frozen | Shape retentivity | Overall evaluation |
|---|---|---|---|---|---|---|---|
| Example 45-1 | Dextrin Preparation Example 1 (5%) | 9 | smooth | good | 10 | 10 | 10 |
| Example 45-2 | Dextrin Preparation Example 2 (1%) | 8 | smooth | good | 9 | 9 | 9 |
| Example 45-3 | Dextrin Preparation Example 3 (8%) | 10 | smooth | good | 10 | 10 | 10 |
| Comparative Example 45-1 | Dextrin Existing product 1 (5%) | 5 | gritty | strong starch-derived flavor | 7 | 8 | 3 |
| Comparative Example 45-2 | Dextrin Existing product 2 product (5%) | 7 | stickines s, poor melting in the mouth | good | 7 | 7 | 4 |
| Comparative Example 45-3 | Dextrin Existing product 3 (5%) | 3 | slightly gritty | starch-derived flavor | 2 | 2 | 2 |
| Comparative Example 45-4 | Dextrin Existing product 4 product (5%) | 6 | stickines s, poor melting in the mouth | starch-derived flavor | 6 | 8 | 3 |
| Comparative Example 45-5 | Dextrin product 5 (5%) | 3 | watery | good | 3 | 5 | 4 |
| Comparative Example 45-6 | Dextrin product 6 (5%) | 3 | watery | good | 3 | 6 | 5 |
| Comparative Example 45-7 | Native gellan gum (0.02%) | 6 | stickines s, poor melting in the mouth | poor flavor release | 5 | 9 | 5 |
| Comparative Example 45-8 | Psyllium seed gum (0.3%) | 5 | stickines s, poor melting in the mouth | poor flavor release | 3 | 6 | 3 |

(continued)

|  | Stabilizer for whipped cream | Richness/ oils and fats enriched properties | Mouthfeel | Flavor | Suppression of syneresis when thawed after being frozen | Shape retentivity | Overall evaluation |
|---|---|---|---|---|---|---|---|
| Comparative Example 45-0 | no use | 1 | watery | good | 1 | 1 | 1 |

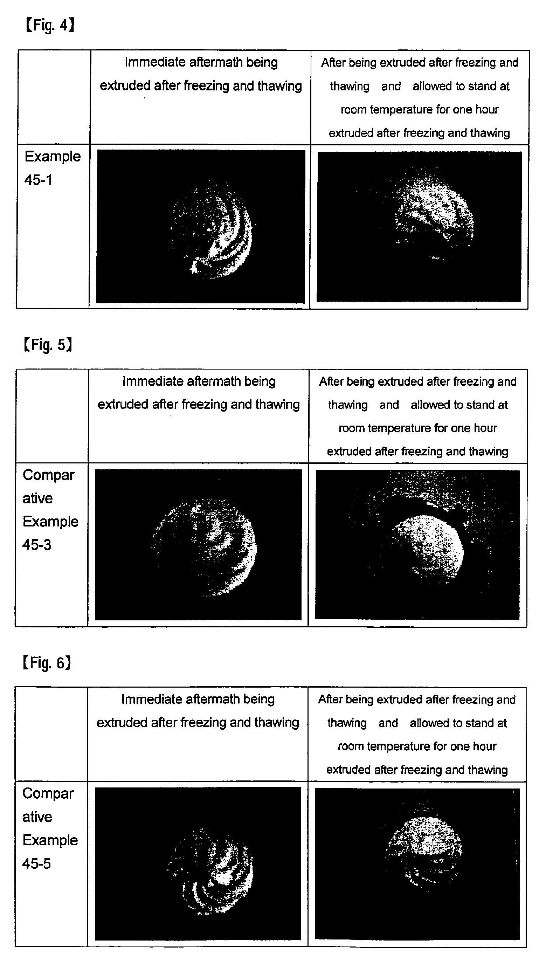

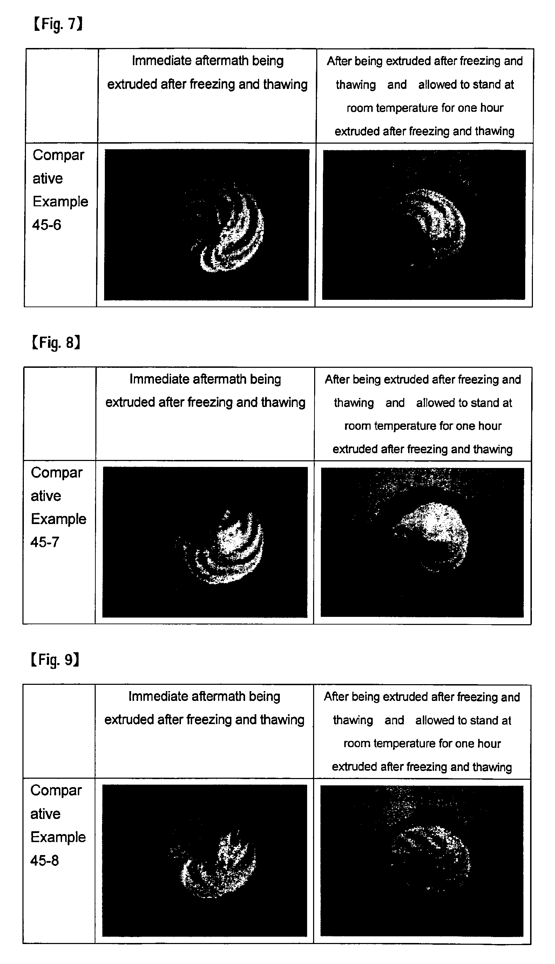

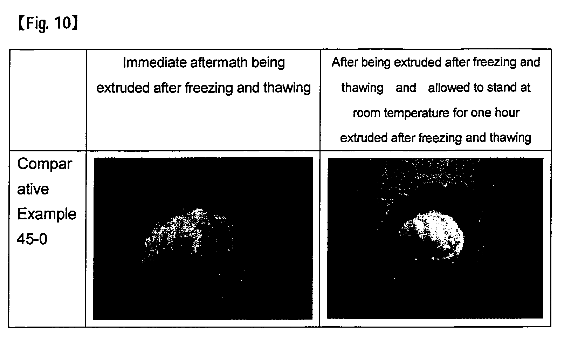

FIGS. 4 to 10 show images of the whipped creams (thawed after being frozen) of Example 45-1, Comparative Example 45-3, Comparative Example 45-5, Comparative Example 45-6, Comparative Example 45-7, Comparative Example 45-8, and Comparative Example 45-0 immediately after being extruded into a flower shape by squeezing the pastry bag and after one hour of being allowed to stand at room temperature.

According to these results, it was found that a whipped cream (Examples 45-1 to 45-3, see FIG. 4) which has good shape retentivity and in which syneresis is significantly suppressed, even after being frozen and thawed, can be prepared using the dextrin of the present invention (Preparation Examples 1 to 3). On the other hand, when whipped creams were prepared using the conventional dextrins (existing products 1 to 6), shape retentivity was already lost when it was thawed after being frozen (Comparative Example 45-3), significant syneresis occurred (Comparative Examples 45-3, 45-5 and 45-6, FIGS. 5 to 7), and the like. In addition, the whipped creams prepared using the conventional dextrins had a gritty mouthfeel, a powdery mouthfeel, starch-specific starch-derived flavor and the like, which adversely affected the taste of the whipped creams themselves. Also, when native gellan gum or psyllium seed gum was used in place of the dextrins, the syneresis after freezing and thawing failed to be suppressed, resulting in poor melting in the mouth and a heavy mouthfeel.

On the other hand, the whipped creams (Examples 45-1 to 45-3) which were prepared using the dextrins of the present invention (Preparation Examples 1 to 3), had a clear edge portion of a flower shape (shape retentivity) and significantly suppressed syneresis, i.e., held substantially the same state as that immediately after being extruded, even after being extruded into a flower shape after being frozen and thawed, and being then allowed to stand for one hour (FIG. 4). Moreover, the dextrins of the present invention successfully imparted richness and oils and fats enriched properties to a whipped cream without adversely affecting the flavor or mouthfeel of the whipped cream. As a result, a whipped cream having a feel of high quality was successfully obtained.

Experimental Example 46 Preparation of low-calorie whipped cream

Whipped creams (Examples 46-1-1 and 46-1-2, Comparative Examples 46-0-1 and 46-0-2, and a control example) were prepared according to a recipe shown in a table described below. Initially, the components other than coconut oil were added to water, followed by heating to 80°C and then dissolution with stirring for 10 minutes. Coconut oil was gradually added to the solution, followed by heating to 80°C again and then stirring for five minutes. The mixture was adjusted with water so that the total amount becomes 100%, followed by homogenization using a homogenizer (150 kgf/cm$^2$) and then sterilization at 93°C. After aging overnight, the mixture was whipped while being cooled until it was stiff. Thus, the whipped creams were prepared.

[Table 43]

|  | Example 46-1 | | Control Example | Comparative Example 46-0 | |
|---|---|---|---|---|---|
|  | 1 | 2 |  | 1 | 2 |
| Coconut oil | 25.0 | 20.0 | 30.0 | 25.0 | 20.0 |
| Skimmed powdered milk | 4.0 | 4.0 | 4.0 | 4.0 | 4.0 |
| Dextrin (Preparation Example 1) | 5.0 | 5.0 | - | - | - |
| Sugar | 8.0 | 8.0 | 8.0 | 8.0 | 8.0 |
| Emulsion stabilizer | 1.0 | 1.0 | 1.0 | 1.0 | 1.0 |

(continued)

| | Example 46-1 | | Control Example | Comparative Example 46-0 | |
|---|---|---|---|---|---|
| | 1 | 2 | | 1 | 2 |
| Water | balance | balance | balance | balance | balance |

The whipped creams thus obtained were evaluated in terms of syneresis suppressing effect when thawed after being frozen, and richness and oils and fats enriched properties. For the syneresis suppressing effect when thawed after being frozen, the whipped creams were evaluated based on the state of syneresis when the whipped cream, having been poured into the pastry bag while being in a frozen state, was extruded into a flower shape by squeezing the pastry bag and was then allowed to stand at room temperature for one hour. The results are shown in Table 44. For both the syneresis suppressing effect when thawed after being frozen and the richness and oils and fats enriched properties, the evaluation was carried out on a scale of 1 to 10 (1: poor → 10: good). Specifically, for the syneresis suppressing effect, one which had the smallest syneresis was given a score of 10 (good), and one which had the largest syneresis was given a score of 1 (poor). Also, for the richness and oils and fats enriched properties, one which had the highest richness and oils and fats enriched properties was given a score of 10 (good), and one which had the lowest richness and oils and fats enriched properties was given a score of 1 (poor). The results are shown in the following table.

[Table 44]

| | Syneresis | Richness/ oils and fats enriched properties |
|---|---|---|
| Example 46-1-1 | 10 | 10 |
| Example 46-1-2 | 9 | 9 |
| Control Example | 8 | 10 |
| Comparative Example 46-0-1 | 4 | 4 |
| Comparative Example 46-0-2 | 4 | 3 |

As can be seen from the table above, the whipped creams having a coconut oil content of 25% or less had considerably reduced richness and oils and fats enriched properties (Comparative Examples 46-0-1 and 46-0-2). In contrast to this, when the dextrin of the present invention (Preparation Example 1) was used, sufficient richness and oils and fats enriched properties were successfully imparted to the low-calorie whipped creams (Examples 45-1-1 and 45-1-2). Thus, it is possible to obtain a whipped cream which has reduced oils and fats, but have good flavor without impairing richness or oils and fats enriched properties. Moreover, whereas significant syneresis occurred when thawed after being frozen if the coconut oil content was 25% or less (Comparative Examples 46-0-1 and 46-0-2), the use of the dextrin of the present invention exhibited a significant syneresis preventing effect against syneresis which is caused by a reduction in the oils and fats content (Examples 46-1-1 and 46-1-2).

Experimental Example 47 Preparation of whipped cream (3)

Whipped creams were prepared according to a recipe shown in a table described below. Initially, the components other than coconut oil were added to water, followed by heating to 80˚C and then dissolution with stirring for 10 minutes. Coconut oil was gradually added to the solution, followed by heating to 80˚C again and then stirring for five minutes. The mixture was adjusted with water so that the total amount becomes 100%, followed by homogenization using a homogenizer (50 kgf/cm$^2$), pasteurization at 142˚C for six seconds using a UHT pasteurizer, and homogenization again using a homogenizer (200 kgf/cm$^2$). After aging overnight, the mixture was whipped while being cooled until it was stiff. An overrun after whipping and a whipping time were measured.

Note that the overrun is a value which is calculated by an expression described below, which is a measure for determining how much air is incorporated in whipped cream (i.e., how much the whipped cream is swollen).

[Expression 1]

Overrun = {(the weight of the cream before whipping (having a predetermined volume))-(the weight of the cream after whipping)}/(the weight of the cream before whipping)

Also, the whipping time means a time required for the overrun to reach the highest peak after the start of whipping the aged cream while being cooled.

Next, the resulting whipped cream was poured into a pastry bag and was frozen, followed by spontaneous thawing (one hour at room temperature). The whipped cream thus spontaneously thawed was extruded into a flower shape by squeezing the pastry bag to evaluate the whipped cream in terms of (1) syneresis suppressing effect when thawed after being frozen and (2) shape retentivity. Note that the syneresis suppressing effect when thawed after being frozen was evaluated one hour after extrusion of the whipped cream. The results are shown in Table 46 along with the overrun (%) and the whipping time. For (1) syneresis and (2) shape retentivity, the whipped creams were evaluated on a scale of 1 to 10 (1: poor → 10: good).

[Table 45]

| | | Example 47-1 | | | | | | | | | | | | | | | Comparative Example 47-0 | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 | 4 |
| Coconut oil | | 30 | 30 | 30 | 30 | 30 | 30 | 30 | 30 | 30 | 30 | 30 | 30 | 30 | 30 | 30 | 30 | 30 | 30 | 30 |
| Skimmed powdered milk | | 4 | 4 | 4 | 4 | 4 | 4 | 4 | 4 | 4 | 4 | 4 | 4 | 4 | 4 | 4 | 4 | 4 | 4 | 4 |
| Emulsifier | Dextrin (Preparation Example 1) | 5 | 5 | 5 | 5 | 5 | 5 | 5 | 5 | 5 | 5 | 5 | 5 | 5 | 5 | 5 | – | – | – | – |
| | Monoglycerol esters of fatty acids 1 | – | 0.2 | – | – | – | – | – | – | – | – | – | – | – | – | – | 0.2 | – | – | – |
| | Monoglycerol esters of fatty acids 2 | – | – | 0.2 | – | – | – | – | – | – | – | – | – | – | – | – | – | – | – | – |
| | Monoglycerol esters of fatty acids 3 | – | – | – | – | – | – | | 0.15 | 0.15 | – | – | – | – | – | – | – | – | – | – |
| | Polyglycerol esters of fatty acids 1 | – | – | – | 0.05 | 0.2 | 0.5 | – | – | – | 0.15 | 0.15 | – | – | – | – | – | 0.2 | – | – |
| | Polyglycerol esters of fatty acids 2 | – | – | – | – | – | – | 0.2 | – | – | – | – | – | – | – | – | – | – | – | – |
| | Polyglycerol esters of fatty acids 3 | – | – | – | – | – | – | – | – | – | – | – | 0.03 | 0.1 | 0.03 | 0.1 | – | – | 0.2 | – |
| HPC | | – | – | – | – | – | – | – | 0.1 | 0.03 | 0.1 | 0.03 | – | – | 0.1 | 0.03 | – | – | – | 0.1 |
| Sugar | | 8 | 8 | 8 | 8 | 8 | 8 | 8 | 8 | 8 | 8 | 8 | 8 | 8 | 8 | 8 | 8 | 8 | 8 | 8 |
| Emulsion stabilizer | | 1 | 1 | 1 | 1 | 1 | 1 | 1 | 1 | 1 | 1 | 1 | 1 | 1 | 1 | 1 | 1 | 1 | 1 | 1 |
| Water | | balance | balance | balance | balance | balance | balance | balance | balance | balance | balance | balance | balance | balance | balance | balance | balance | balance | balance | balance |
| Total | | 100 | 100 | 100 | 100 | 100 | 100 | 100 | 100 | 100 | 100 | 100 | 100 | 100 | 100 | 100 | 100 | 100 | 100 | 100 |

[Comments on Table 45]

Emulsifier

monoglycerol esters of fatty acids 1: iodine value 44-55 (monoglyceride)

monoglycerol esters of fatty acids 2: iodine value 108-120 (monoglyceride)

monoglycerol esters of fatty acids 3: iodine value 70-80 (monoglyceride)

polyglycerol esters of fatty acids 1: iodine value 16-26 (decaglycerol monooleate)

polyglycerol esters of fatty acids 2: iodine value 0-3 (pentaglycerol monooleate)

polyglycerol esters of fatty acids 3: iodine value 27-42 (decaglycerol monooleate)

[Table 46]

|  | Syneresis | Shape retentivity | Overrun (%) | Whipping time |
|---|---|---|---|---|
| Example 47-1-1 | 10 | 10 | 75 | 8 min 20 sec |
| Example 47-1-2 | 10 | 10 | 105 | 1 min 45 sec |
| Example 47-1-3 | 10 | 10 | 84 | 1 min 35 sec |
| Example 47-1-4 | 10 | 10 | 110 | 4 min 00 sec |
| Example 47-1-5 | 10 | 10 | 101 | 3 min 10 sec |
| Example 47-1-6 | 10 | 10 | 91 | 2 min 30 sec |
| Example 47-1-7 | 10 | 10 | 105 | 3 min 50 sec |
| Example 47-1-8 | 10 | 10 | 119 | 1 min 55 sec |
| Example 47-1-9 | 10 | 10 | 110 | 2 min 40 sec |
| Example 47-1-10 | 10 | 10 | 128 | 1 min 30 sec |
| Example 47-1-11 | 10 | 10 | 125 | 2 min 30 sec |
| Example 47-1-12 | 10 | 10 | 108 | 4 min 10 sec |
| Example 47-1-13 | 10 | 10 | 100 | 3 min 20 sec |

(continued)

|  | Syneresis | Shape retentivity | Overrun (%) | Whipping time |
|---|---|---|---|---|
| Example 47-1-14 | 10 | 10 | 120 | 1 min 40 sec |
| Example 47-1-15 | 10 | 10 | 121 | 1 min 50 sec |
| Comparative Example 47-0-1 | 1 | 3 | 120 | 1 min 45 sec |
| Comparative Example 47-0-2 | 1 | 2 | 110 | 2 min 00 sec |
| Comparative Example 47-0-3 | 1 | 3 | 122 | 1 min 55 sec |
| Comparative Example 47-0-4 | 1 | 2 | 121 | 1 min 55 sec |

As described above, the whipped cream (Example 47-1-1) which was prepared using the dextrin of the present invention had good shape retentivity even after freezing and thawing, and significantly suppressed syneresis. The whipped creams (Examples 47-1-2 to 47-1-14 ) which were prepared using, as a glycerol esters of fatty acids, a monoglycerol esters of fatty acids having an iodine value of 44 to 120 or a polyglycerol esters of fatty acids having an iodine value of 16 to 42, in addition to the dextrin, had a clear edge portion of a flower shape (shape retentivity) and significantly suppressed syneresis, and held substantially the same state as that immediately after being extruded, even one hour after being frozen and thawed. In addition, the whipping time was successfully significantly reduced, and an improvement in the overrun was observed. Moreover, when hydroxypropyl cellulose (HPC) was additionally used, a reduction in the whipping time and a further improvement in the overrun were observed (Examples 47-1-8 to 47-1-11 and 47-1-14 to 47-1-15). On the other hand, the whipped creams (Comparative Examples 47-0-1 to 47-0-4) which were prepared using glycerol esters of fatty acids and without using the dextrin of the present invention, lacked shape retentivity and failed to prevent syneresis.

Experimental Example 48 Preparation of gummy candy (1)

A gummy candy (Example 48-1) was prepared according to a recipe described below using the dextrin of Preparation Example 1.

<Recipe 1>

| | |
|---|---|
| Sugar | 31.0 (kg) |
| Corn syrup | 26.0 |
| Sorbitol | 7.4 |
| Dextrin (Preparation Example 1) | 20.0 |
| Water | 30.0 |

<Recipe 2>

| | |
|---|---|
| Mango puree | 2.0 (%) |
| Citric acid (anhydride) | 1.0 |
| Sucralose (20% aqueous solution) | 0.2 |
| Colorant | 0.05 |
| Aroma chemical | 0.2 |
| Water | 0.55 |

Specifically, initially, measured amounts of materials were poured into a pan according to recipe 1, followed by boils and fatsing down by heating until the total amount was 96% of the final gummy candy (100%). All the components (mango puree, etc.) of recipe 2 were poured into the mixture (total amount of 100%), followed by mixing. The mixture was poured into a molding container, followed by cooling. The food product thus obtained had smoothness and good melting in the mouth, which is a gummy candy-like mouthfeel (Example 48-1: gummy candy).

Experimental Example 49 Preparation of gummy candy (2)

Gummy candies (Example 49-1 and Comparative Examples 49-1 to 49-5) were prepared according to a recipe described below using dextrins (Preparation Example 1 and the existing products 1 to 5). Specifically, measured amounts of corn syrup, sorbitol and water were poured into a pan, and a powder mixture of sugar and a dextrin were added thereto. Next, the mixture was dissolved by boils and fatsing and was then boils and fatsed down until the total amount was 100 kg. Citric acid was added to the mixture. The mixture was poured into a starch mold, followed by drying for about 24 hours. Thus, the gummy candies were prepared (soluble solid content: about 77%). Note that the gummy candies thus prepared (Example 49-1 and Comparative Examples 49-1 to 49-5) were evaluated in terms of workability during preparation (pouring viscosity), shape retentivity, appearance (color), adhesiveness to teeth, flavor, and mouthfeel. The results are shown in Table 47.

<Recipe of gummy candy>

| | |
|---|---|
| Sugar | 30.0 (kg) |
| Corn syrup | 27.0 |
| Sorbitol | 8.0 |
| Dextrin | 20.0 |
| Citric acid (anhydride) medium grain | 1.0 |
| Water | 30.0 |

[Table 47]

| | Example 49 | Comparative Example 49 | | | | |
|---|---|---|---|---|---|---|
| | 1 | 1 | 2 | 3 | 4 | 5 |
| Dextrin | Preparat ion Example 1 | Existing product 1 | Existing product 2 | Existing product 3 | Existing product 4 | Existing product 5 |
| Workabil ity during pouring | ± | + | +++ | - | + | - |
| Shape retentiv ity | +++ | ++ | NA | - | +++ | - |
| Color | white | brown | NA | NA | slightly brown | NA |
| Adhesive ness to teeth | - | +++ | NA | NA | ++ | NA |
| Flavor | good | starch-derived flavor | NA | NA | starch-derived flavor | NA |
| Mouthfeel | fat-like smooth, sharp bite | slightly gritty, corn syrup-like, slightly softer than Preparatio n Example 1 | NA | NA | smooth, corn syrup-like, not bitten through but stretched | NA |

Evaluation described in the table above was carried out based on the following criteria.
Workability during pouring: evaluated on a scale of ->±>+>++>+++ (five levels) in order of pouring viscosity to a starch mold (lowest (most excellent workability) first)
Shape retentivity: evaluated on a scale of +++>++>+>±>-(five levels) in order of shape retentivity (best first).
Note that "NA" in the table indicates failure of preparation (i.e., evaluation was not carried out).
The viscosity during pouring is higher and the workability is slightly lower when the dextrin of the existing product 1 was used than when the dextrin of Preparation Example 1 was used. Also, the gummy candy (Comparative Example 49-1) which was prepared using the dextrin of the existing product 1, did not have sufficient shape retentivity, was changed to brown, and had starch-derived flavor and grittiness. Moreover, the gummy candy (Comparative Example 49-1) which was prepared using the dextrin of the existing product 1, had a corn syrup-like mouthfeel, and had high adhesiveness to teeth as compared to the gummy candy (Example 49-1) which was prepared using the dextrin of Preparation Example 1. When the dextrin of the existing product 2 was used, the viscosity during handling was significantly high, and therefore, it was difficult to obtain the gummy candy (Comparative Example 49-2). When the dextrins of the existing products 3 and 5 were used, the viscosity during pouring was good, and the workability was goodness, but there was a lack of shape retentivity, and therefore, a gummy candy failed to be prepared (Comparative Examples 49-3 and 49-5). When the dextrin of the existing product 4 was used, spinnability occurred during preparation, and therefore, it was difficult to boils and fats down, and the resultant gummy candy was changed to brown, and had starch-derived flavor. Moreover, the gummy candy had a corn syrup-like mouthfeel, high adhesiveness to teeth, and failed to be bitten through and was only stretched (Comparative Example 49-4). On the other hand, when the dextrin of Preparation Example 1 was used, a gummy candy which had a low viscosity (smooth) during preparation and pouring, and sufficient shape retentivity, was successfully obtained (Example 49-1). The resulting gummy candy was free from starch-derived flavor, and had good flavor, a white appearance and a fat-like smooth mouthfeel, and in addition, low adhesiveness to teeth as compared to those of the gummy candies of Comparative Examples 49-1 to 49-5. Thus, the gummy candy had a considerably high commodity value.

Experimental Example 50 Preparation of soft candy

A soft candy (Example 50-2) was prepared using the dextrin of Preparation Example 2. Specifically, a powder mixture of sugar and the dextrin was added to measured amounts of water and corn syrup, followed by boils and fatsing down until it was thoroughly dissolved. A hydrogenated oils and fats and an emulsifying agent were then added to the solution, followed by removing moisture to a predetermined amount. Thereafter, gelatin which was previously swollen by adding water was added to the mixture, followed by thorough emulsification using a horizontal kneader. A fondant base (a paste containing 20% of water and 80% of sugar, where the sugar is crystallized) was added to the mixture, followed by sugar crystallization. An acidurant was added to the mixture, followed by cooling. Thus, the soft candy (Example 50-2) was prepared. The soft candy thus prepared was hard (viscoelasticity) and had firmness (mouthfeel), and moreover, had less adhesiveness to teeth.

<Recipe of Soft Candy>

| | |
|---|---|
| Sugar | 34.6(kg) |
| Corn syrup | 36.0 |
| Dextrin (Preparation Example 2) | 10.0 |
| Water | 50.0 |
| Hydrogenated oils and fats | 7.5 |
| Emulsifying agent | 0.5 |
| Gelatin | 1.5 |
| Water | 3.0 |
| Fondant base | 10.0 |
| Acidurant | 1.0 |

Experimental Example 51 Preparation of cream-rich caramel-like gummy candy (nama-caramel-like gummy candy)

Cream-rich caramel-like gummy candies were prepared according to a recipe shown in Table 48 using a dextrin and psyllium seed gum. Specifically, psyllium was dispersed in corn syrup and water was added thereto, followed by dissolution by boils and fatsing. Next, a powder mixture of sugar, the dextrin, an emulsifying agent and sorbitol was added to the solution, which was then boils and fatsed down until it was about 87 kg. Dairy cream, unsalted butter, common salt, a caramel colorant and an aroma chemical were added to the solution, followed by mixing. The mixture was poured into a starch mold, followed by drying at room temperature until the moisture content was 20 to 25%. Finally, a surface treatment was carried out to coat a surface with a glazing agent. Thus, the cream-rich caramel-like gummy candies were prepared. On the other hand, a gummy candy was prepared in a manner similar to that described above, except that 20% of a dextrin (Preparation Example 3) was used without using psyllium seed gum. Also, a gummy candy was prepared in a manner similar to that described above, except that psyllium seed gum was used singly (no dextrin was used).
[Table 48]

| Recipe | Example 51-3 | | Comparative Example 51-0 |
|---|---|---|---|
| | 1 | 2 | |
| Sugar | 24.0 | 24.0 | 24.0 |
| Corn syrup | 23.0 | 23.0 | 23.0 |
| Sorbitol | 15.0 | 15.0 | 15.0 |
| Dextrin (Preparation Example 3) | 15.0 | 20.0 | - |
| Psyllium seed gum | 0.8 | - | 0.8 |
| Emulsifier | 0.5 | 0.5 | 0.5 |
| Cream (milk fat: 45%) | 5.0 | 5.0 | 5.0 |
| Unsalted butter | 8.0 | 8.0 | 8.0 |
| Common salt | 0.3 | 0.3 | 0.3 |
| Caramel colorant | 0.2 | 0.2 | 0.2 |
| Aroma chemical (caramel oils and fats No. 86875*) | 0.1 | 0.1 | 0.1 |
| Water | 10.0 | 10.0 | 10.0 |
| Mouthfeel | soft shape retentivity, cream-rich caramel-like smooth mouthfeel (chewable by several bites) | slight adhesiveness to teeth, but fat-like mouthfeel and chewy mouthfeel | no shape no shape retentivity, sticky in sticky in the mouth |

Experimental Example 52 Preparation of uiro-like (mochi-like) gummy candy (mochi is a Japanese rice cake)

Uiro-like (mochi-like) gummy candies (Examples 52-3-1 and 52-3-2 and Comparative Example 52-0) were prepared according to a recipe described below. Specifically, a carrageenan was dispersed in corn syrup and water was then added thereto, followed by dissolution by boils and fatsing. A powder mixture of the dextrin of Preparation Example 3 and sugar, and sorbitol were added to the solution, followed by boils and fatsing down until it was about 80 kg. Next, a sweet bean paste, an aroma chemical, a colorant and the like were added to the solution. The mixture was poured into a starch mold, followed by drying at room temperature until the moisture content was 20 to 25%. Finally, a surface treatment was carried out to coat a surface with a glazing agent. Thus, the uiro-like gummy candies were prepared. On the other hand, a gummy candy was prepared in a manner similar to that described above, except that 20% of a dextrin (Preparation Example 3) was used without using a carrageenan. Also, a gummy candy was prepared in a manner similar to that described above, except that a carrageenan was used singly (no dextrin was used).
[Table 49]

| <Recipe of uiro-like gummy candy> | | | kg |
|---|---|---|---|
| Recipe | Example 52-3-1 | Example 52-3-2 | Comparative Example 52-0 |
| Sugar | 28.0 | 28.0 | 28.0 |
| Corn syrup | 23.0 | 23.0 | 23.0 |
| Sorbitol | 15.0 | 15.0 | 15.0 |
| Dextrin(Preparation Example 3) | 10.0 | 20.0 | - |

(continued)

| <Recipe of uiro-like gummy candy> | | | kg |
|---|---|---|---|
| Recipe | Example 52-3-1 | Example 52-3-2 | Comparative Example 52-0 |
| Iota carrageenan+kappa carrageenan (GEL RICH‡ NO. 1*) | 1.0 | - | 3.0 |
| Water | 40.0 | 40.0 | 40.0 |
| Sweet bean paste | 20.0 | 20.0 | 20.0 |
| Scuralose | 0.02 | 0.02 | 0.02 |
| Colorant (SANBROWN‡ K*) | 0.07 | 0.07 | 0.07 |
| Colorant (SANRED‡ NO. 2384*) | 0.03 | 0.03 | 0.03 |
| Aroma chemical (Azuki bean flavor NO. 68901*) | 0.1 | 0.1 | 0.1 |
| Workability | good | good | high gelation temperature, high viscosious, low pouring suitability and low workability during boils and fatsing down |
| Mouthfeel | specific mochi-like mouthfeel | slight adhesiveness to teeth, but fat-like mouthfeel | viscoelasticity, but hard and crispy mouthfeel |

Experimental Example 53 Preparation of low-fat milk beverage

In order to evaluate physical properties of beverages depending on the difference between dextrins, low-fat milk beverages (Example 53-1 and Comparative Examples 53-1 to 53-5) were prepared using the aforementioned dextrins (Preparation Example 1 and the existing products 1 to 5). Specifically, a dextrin was added to and dissolved in water at 20°C, followed by mixing with skimmed concentrated milk and then homogenization at 150 kgf/cm$^2$. The mixture was poured into a container, followed by sterilization at 85°C for 30 minutes. Thus, the low-fat milk beverages were prepared. Also, as a control example, a milk beverage was prepared using an increased amount of milk fat content and without using a dextrin, where the milk fat content was 1.5%, which is similar to that of commercially available low-fat milk.

<Recipe of low-fat milk beverage>

| | |
|---|---|
| Skimmed concentrated milk | 30 (%) |
| Dextrin | 1 |
| Water | 69 |
| Total | 100% |

[Table 50]

| | | Example 53-1 | Control Example | Comparative Example 53 | | | | |
|---|---|---|---|---|---|---|---|---|
| | | | | 1 | 2 | 3 | 4 | 5 |
| Dextrin | Preparation Example 1 | 1 | - | - | - | - | - | - |
| | Existing product 1 | - | - | 1 | - | - | - | - |
| | Existing product 2 | - | - | - | 1 | - | - | - |
| | Existing product 3 | - | - | - | - | 1 | - | - |
| | Existing product 4 | - | - | - | - | - | 1 | - |
| | Existing product 5 | - | - | - | - | - | - | 1 |
| Milk solid not fat | | 8.5 | 8.5 | 8.5 | 8.5 | 8.5 | 8.5 | 8.5 |
| Milk fat content | | 0.5 | 1.5 | 0.5 | 0.5 | 0.5 | 0.5 | 0.5 |
| Evaluation | Richness/oils and fats enriched properti es | 10 | 10 | 6 | 5 | 4 | 6 | 2 |
| | Flavor | good | good | slight starch-derived flavor | slight starch-derived flavor | good | slight starch-derived flavor | good |

The milk beverages of Comparative Example 53-1 to 53-5 which were prepared using the conventional dextrins (the existing products 1 to 5) had a milk fat content of as low as 0.5% for the purpose of low fat, and therefore, had significantly reduced richness and oils and fats enriched properties as compared to the low-fat milk of the control example having a milk fat content of 1.5%. Moreover, the milk beverages (Comparative Examples 53-1, 53-2 and 53-4) which were prepared using the existing products 1, 2 and 4, had starch-derived flavor which adversely affected flavor release and flavor of the beverages. On the other hand, the low-fat milk beverage (Example 53-1) which was prepared using the dextrin of the present invention (Preparation Example 1) had richness and fattiness comparable to those of the milk beverage (control example) having a milk fat content of 1.5%. Moreover, the low-fat milk beverage of Example 53-1 did not have stickiness and had smooth melting in the mouth.

Experimental Example 54 Preparation of lactic acid beverage

Lactic acid beverages were prepared according to a recipe described below. Specifically, skimmed powdered milk and whole powdered milk were added to water in amounts corresponding to percentages shown in Table 50, followed by sterilization while stirring at 93˚C for 10 minutes, homogenization at 150 kgf/cm$^2$, and cooling to 40˚C. Next, a culture was added in an amount corresponding to 3% of the total amount, followed by fermentation to pH 4.6 (fermented milk). A solution which was previously prepared by dissolving sugar, a dextrin (Preparation Example 2, the existing product 1), pectin and glucose in water at 20˚C, was added to the fermented milk (40% of the total amount). The mixture was adjusted with lactic acid to pH 4.2, followed by homogenization (150 kgf/cm$^2$). The mixture was poured into a container. Thus, the lactic acid beverages (Example 54-2 and Comparative Example 54-1) were prepared. Also, as a control example, a lactic acid beverage was similarly prepared using whole powdered milk and without using a dextrin. Also, for comparison, a lactic acid beverage (Comparative Example 54-0) was prepared without using a dextrin or whole powdered milk.

<Recipe of lactic acid beverage>

```
Fermented milk              40.0 (%)
(recipe described elsewhere)
Sugar                       7.0
```

(continued)

| Lactic acid | proper amount (adjusted to pH 4.2) |
| --- | --- |
| Dextrin | see Table 51 |
| Glucose | see Table 51 |
| Pectin | 0.4 |
| Water | balance |
| Total | 100.0 |

[Table 51]

| | | Example 54-2 | Control Example | Comparative Example 54-1 | Comparative Example 54-0 |
| --- | --- | --- | --- | --- | --- |
| Skimmed powdered milk | | 6.9 | 2.7 | 6.9 | 6.9 |
| Whole powdered milk | | - | 5.6 | - | - |
| Dextrin | Preparation Example 2 | 0.7 | - | - | - |
| Dextrin | Existing product 1 | - | - | 0.7 | - |
| Glucose | | - | - | - | 0.7 |
| Milk solid not fat | | 6.5 | 6.5 | 6.5 | 6.5 |
| Milk fat content | | 0.1 | 1.5 | 0.1 | 0.1 |
| Evaluation | Richness/ oils and fats enriched properties | 10 | 10 | 6 | 1 |
| | Mouthfeel | smooth | smooth | powdery | watery |

The low-fat lactic acid beverage (Example 54-1) which was prepared using the dextrin of the present invention (Preparation Example 2), even when the milk fat content was reduced to 0.1%, had richness and a smooth mouthfeel which are comparable to those of the lactic acid beverage (control example) having a milk fat content of 1.5%. On the other hand, the lactic acid beverage (Comparative Example 54-1) which was prepared using the dextrin of the existing product 1 in place of the dextrin of the present invention had higher richness than that of the lactic acid beverage (Comparative Example 54-0) which did not contain a dextrin, but had a powdery mouthfeel, and therefore, had a low commodity value.

Experimental Example 55 Puree-containing fruit juice beverage

A puree-containing fruit juice beverage was prepared according to a recipe described below. Specifically, native gellan gum and a dextrin (Preparation Example 3) were added to water and fructose-glucose syrup, followed by dissolution at 80˚C for 10 minutes. Next, white peach puree, 5-fold concentrated white peach fruit juice, citric acid and a colorant were added to the solution, which was then adjusted with water so that the total amount becomes 100%. Pasteurization was then carried out by heating to 93˚C. An aroma chemical was then added to the solution. The solution was then poured into a container. Thus, the puree-containing fruit juice beverage was prepared (Example 55-3). On the other hand, for comparison, puree-containing fruit juice beverages of Comparative Example 55-1 and Comparative Example 55-0 were prepared in a manner similar to that of Example 55-3, except that the dextrin of the existing product 1 or glucose was used in place of the dextrin of Preparation Example 3.
<Recipe of puree-containing fruit juice beverage>

| Fructose-glucose syrup | 12.8 (%) |
| --- | --- |
| White peach puree | 4.0 |
| 5-fold concentrated white peach fruit juice | 5.0 |

(continued)

| | |
|---|---|
| Native gellan gum (CP KELCOGEL HT*) | 0.02 |
| Dextrin or glucose | 7.0 |
| Colorant | 0.01 |
| Citric acid | 0.17 |
| Aroma chemical | 0.1 |
| Water | balance |
| Total | 100.00 |

The white peach puree-containing beverage (Example 55-3) which was prepared using the dextrin of Preparation Example 3 had a rich feel of puree (feel of fruit), considerably good flavor, and a rich mouthfeel. On the other hand, when glucose was used in place of the dextrin, there was no effect of improving a feel of puree or flavor (Comparative Example 55-0). Also, when the existing product 1 was used, there was disadvantageously significant starch-derived flavor(Comparative Example 55-1).

Experimental Example 56 Puree-containing milk beverage

Banana milks were prepared according to a recipe described below. Specifically, whole powdered milk was added to and dissolved in water at 60˚C, followed by cooling (solution A). On other hand, a mixture of sugar, dextrin and bacterial cellulose was added to and dissolved in water at 80˚C for 10 minutes (solution B). Solution A, milk, banana puree and an aroma chemical were added to solution B, followed by homogenization at 70˚C (150 kgf/cm$^2$). Pasteurization was carried out at a temperature 90˚C. The mixture was poured into a container, followed by cooling. Thus, the banana milks (puree-containing milk beverages) were prepared.
[Table 52]

| <Recipe of Banana milk> | | |
|---|---|---|
| | Example 56-1-1 | Example 56-1-2 |
| Milk | 10 | 10 |
| Whole powdered milk | 10 | 10 |
| Sugar | 5 | 5 |
| Banana puree | 8 | 8 |
| Dextrin (Preparation Example 1) | 3 | 3 |
| bacterial cellulose (20%)-containing preparation (SAN ARTIST‡ PG*) | - | 0.1 |
| Aroma chemical | 0.1 | 0.1 |
| Water | balance | balance |
| Total | 100 | 100 |

The milk beverages (Examples 56-1-1 and 56-1-2) which contained the dextrin of the present invention (Preparation Example 1) had a good feel of puree and high richness. Typically, when a polysaccharide thickener is used so as to impart richness, polysaccharide thickener-specific stickiness often affects taste in some beverages. In the present invention, the banana milk (milk beverage) (Example 56-1-1) had good sharpness, good richness and good flavor release without imparting stickiness. Moreover, by using the bacterial cellulose preparation in combination with the dextrin, the dextrin was uniformly dispersed without precipitation, and moreover, the network structure of swollen bacterial cellulose itself is formed in the beverage. As a result, the dextrin and the bacterial cellulose can synergistically impart richness. Therefore, the banana milk (Example 55-1-2) which had improved stability and better richness was successfully obtained.

Experimental Example 57 Acidified milk beverage

An acidified milk beverage was prepared according to a recipe described below. Specifically, sugar , a water-soluble soybean polysaccharide, and a powder mixture of a dextrin, tamarind seed gum and bacterial cellulose were added to water and fructose-glucose syrup, followed by dissolution with stirring at 80°C for 10 minutes and then cooling (solution A). On the other hand, skimmed powdered milk was added to water, followed by dissolution with stirring at 60°C for 10 minutes and then cooling (solution B). Solution B and fruit juice were added to solution A, and the mixture was adjusted with a 50 %W/V citric acid (anhydride) solution to pH 4.0, followed by addition of a colorant dissolved in a small amount of hot water. Next, the mixture was heated to 80°C, and was adjusted with water so that the total amount becomes 100%, followed by homogenization (14,700 kPa=150 kgf/cm$^2$). The mixture was heated to 93°C, followed by addition of an aroma chemical and then hot-fill packaging. Thus, the acidified milk beverage was prepared (Example 57-1). The acidified milk beverage thus obtained (Example 57-1) had a sharp mouthfeel and a robust taste, i.e., is not a beverage which is conventionally obtained.

<Recipe of acidified milk beverage>

| | |
|---|---|
| Skimmed powdered milk | 1.1 (%) |
| Sugar | 2.0 |
| Fructose-glucose syrup | 8.0 |
| 5-fold concentrated transparent peach fruit juice | 0.8 |
| Water-soluble soybean polysaccharide (SM-1200*) | 0.3 |
| Dextrin (Preparation Example 1 | 0.95 |
| Tamarind seed gum | 0.02 |
| bacterial cellulose | 0.006 |
| Colorant | 0.02 |
| Citric acid | proper amount |
| Aroma chemical | 0.12 |
| Water | balance |
| Total | 100.00% |

Experimental Example 58 Preparation of pastry cream

Pastry creams (Example 58-1 and Comparative Examples 58-1 to 58-5) were prepared according to a recipe described below using the dextrins of Preparation Example 1 and the existing products 1 to 5. Also, for comparison, a pastry cream (no dextrin was used) was similarly prepared using dairy cream in an amount increased by 5% in place of 5% of the dextrin (Comparative Example 58-0-1), or using water in an amount increased by 5% in place of 5% of the dextrin (Comparative Example 58-0-2). Note that GEL UP‡ PI* is a preparation which contains locust bean gum and a carrageenan, and GEL UP‡ K-S* is a preparation which contains deacylated gellan gum.

<Recipe of pastry cream>

| | |
|---|---|
| Dextrin | 5.0 (%) |
| Dairy cream | 10.0 |
| Skimmed powdered milk | 3.0 |
| Sugar | 20.0 |
| Processed starch (FARINEX VA-70C)[4]) | 1.0 |
| Soft flour | 1.0 |
| Frozen whole egg with 20% sugar | 1.5 |
| Gelling agent (GEL UP‡ PI*) | 0.2 |
| Gelling agent (GEL UP‡ K-S*) | 0.1 |
| Whey protein (MILPRO‡ L-1*) | 1.0 |
| Glycine | 2.0 |
| Aroma chemical | 0.1 |
| Colorant | 0.1 |
| Water | balance |
| Total | 100.0% |

[4]) manufactured by Matsutani Chemical Industry Co., Ltd.

Specifically, the components other than the aroma chemical and the colorant were added to a mixture of water, dairy cream and frozen egg yolk with sugar while stirring, followed by homogenization at 8,000 rpm for five minutes. The mixture was dissolved with stirring while heating at 90°C for 10 minutes, followed by addition of the aroma chemical and the colorant. The mixture was then adjusted with water so that the total amount becomes 100%. The mixture was poured into a container, followed by cooling.

The pastry creams thus obtained were evaluated in terms of (1) richness and oils and fats enriched properties (1: absence → 10: presence), (2) mouthfeel, (3) flavor, (4) presence or absence of syneresis, and (5) overall evaluation. The results are shown in Table 53.

[Table 53]

| | Dextrin | Richnessoils and enriched properties | Mouthfeel | Flavor | Presence of syneresis | Overall evaluation |
|---|---|---|---|---|---|---|
| Example 58-1 | Preparat ion Example 1 | 10 | appropriately solid, smooth, good melting in the mouth | good | no | 10 |
| Comparative Example 58-1 | Existing product 1 | 5 | appropriately solid, and stickiness | starch-derived flavor | no | 3 |
| Comparative Example 58-2 | Existing product 2 | 3 | appropriately solid, and stickiness | starch-derived flavor | yes | 2 |
| Comparative Example 58-3 | Existing product 3 | 6 | appropriately solid, and stickiness | good | yes | 3 |
| Comparative Example 58-4 | Existing product 4 | 4 | appropriately solid, and stickiness | starch-derived flavor | yes | 2 |
| Comparative Example 58-5 | Existing product | 5 | slightly low solid, crispy | good | yes | 2 |
| Comparative Example 58-0-1 | no use | 4 | slightly low solid, crispy | good | yes | 2 |
| Comparative Example 58-0-2 | no use | 1 | low solid, crispy | good | yes | 2 |

Experimental Example 59 Preparation of foie gras-flavor food product

Food products having a foie gras flavor (Example 59-1 and Comparative Examples 59-1 to 59-5) were prepared according to a recipe described below using the dextrins of Preparation Example 1 and the existing products 1 to 5. Also, for comparison, a food product having a foie gras flavor (Comparative Example 59-0) was similarly prepared using water in an amount increased by 20% in place of 20% of the dextrin.

<Recipe of foie gras-flavor food product>

| | |
|---|---|
| Dextrin | 20.0 (%) |
| Chicken liver paste | 5.0 |
| Corn salad oil | 25.0 |
| Whey protein (MILPRO‡ LG*) | 4.0 |

(continued)

| | |
|---|---|
| Cheese powder | 1.8 |
| Chicken powder | 0.5 |
| Common salt | 0.7 |
| Sugar | 0.3 |
| Liquor | 0.5 |
| Seasoning (AMINOBASE NAG*) | 0.1 |
| Sweetener (thaumatin: NEOSANMARK‡ AG*) | 0.1 |
| Spices | 0.1 |
| Water | balance |
| Total | 100.0% |

Specifically, initially, water, liver paste and liquor were mixed and stirred, and the mixture was passed through a strainer. The other materials were then added to the mixture, followed by homogenization at 6,000 rpm for five minutes. The mixture was poured into a container, followed by retort sterilization at 121˚C for 20 minutes.

The food products thus obtained were evaluated in terms of (1) mouthfeel, (2) presence or absence of syneresis, (3) presence or absence of browning due to retort sterilization, and (4) overall evaluation. The results are show in Table 54.

[Table 54]

| | Dextrin | Mouthfeel | syneresis | Presence of color change to brown | Overall evaluation |
|---|---|---|---|---|---|
| Example 59-1 | Preparation Example 1 | appropriately solid, foie smooth, gras-like mouthfeel | no | almost no | 10 |
| Comparative Example 59-1 | Existing product 1 | gritty, stickiness mouthfeel | no | almost no | 2 |
| Comparative Example 59-2 | Existing product 2 | gritty, stickiness mouthfeel | no | almost no | 2 |
| Comparative Example 59-3 | Existing product 3 | low solid, stickiness mouthfeel | yes | yes | 1 |
| Comparative Example 59-4 | Existing product 4 | gritty, stickiness mouthfeel | no | almost no | 2 |
| Comparative Example 59-5 | Existing product 5 | stickiness mouthfeel | yes | yes | 1 |
| Comparative Example 59-0 | no use | semi-liquid mouthfeel | yes (large) | almost no | 1 |

Experimental Example 60 Preparation of ganache-like (nama-chocolate) food product

A food product (Example 60-1) having a mouthfeel of ganache was prepared according to a recipe described below using the dextrin of Preparation Example 1.

<Recipe of ganache-like food product>

| | |
|---|---|
| Defatted cocoa powder | 15.0 (%) |
| Dextrin (Preparation Example 1) | 12.0 |
| Gelatin | 0.2 |
| Locust bean gum | 0.2 |
| Sucralose | 0.003 |

| (continued) | |
|---|---|
| Aroma chemical | 0.1 |
| Water | balance |
| Total | 100.0% |

Specifically, initially, the components other than defatted cocoa powder were added to water, followed by dissolution with stirring while heating. Defatted cocoa powder was added and mixed to the solution, followed by stirring. The mixture was poured into a container, followed by retort sterilization at 121°C for 20 minutes. The food product thus obtained (Example 60-1) had no lipid content (0% : content of oils and fats), but had a mouthfeel and flavor similar to those of ganache(nama-chocolate).

Experimental Example 61 Preparation of anchovy paste

An anchovy paste (Example 61-1) was prepared according to a recipe described below using the dextrin of Preparation Example 1.
<Recipe of anchovy paste>

| | |
|---|---|
| Anchovy sauce (salt content: 15-20%) | 70.0 (parts) |
| Dextrin (Preparation Example 1) | 30.0 |

Specifically, initially, an anchovy sauce was heated to 70°C while stirring. The dextrin was added to the anchovy sauce, followed by dissolution with stirring while heating. The solution was poured into a container, followed by cooling overnight. As a result, the anchovy sauce, which is a liquid food product having a high salt concentration, was successfully changed to a paste-like food product.

Experimental Example 62 Japanese-style noodle soup

A Japanese-style noodle soup (Example 62-1) was prepared according to a recipe described below using the dextrin of Preparation Example 1.
<Recipe of Japanese-style noodle soup>

| | |
|---|---|
| 3-fold concentrated Japanese-style noodle soup | 33.0 (%) |
| Dextrin (Preparation Example 1) | 15.0 |
| Water | 52.0 |
| Total | 100.0% |

Specifically, initially, the dextrin was added to hot water at 80°C, followed by dissolution with stirring for 10 minutes. Next, a commercially available 3-fold concentrated Japanese-style noodle soup was added, followed by further stirring for five minutes. The mixture was then cooled and preserved at 5°C for three days. Also, for comparison, a Japanese-style noodle soup (Comparative Example 62-0) was similarly prepared using 15% of gelatin in place of 15% of the dextrin.
The Japanese-style noodle soups thus prepared were both in the form of gel when they were cooled, i.e., at temperature of 1 to 15°C, and therefore, can be easily transported by chilled transport while they are gel. Also, the Japanese-style noodle soups are easily changed to liquid when they are heated by a microwave oven for eating. The Japanese-style noodle soups were tasted. As a result, the Japanese-style noodle soup (Comparative Example 62-0) prepared using gelatin had a heavy mouthfeel when it was heated, and had a weak aroma. On the other hand, the Japanese-style noodle soup (Example 62-1) prepared using the dextrin of Preparation Example 1 did not have a heavy mouthfeel and had a good aroma.

Experimental Example 63 Preparation of udon (a kind of Japanese noodle) soup

An udon soup (Example 63-1) was prepared according to a recipe described below using the dextrin of Preparation Example 1.
<Recipe of udon soup>

| 3-fold concentrated udon soup | 33.0 (%) |
|---|---|
| Dextrin (Preparation Example 1) | 15.0 |
| Water | 52.0 |
| Total | 100.0% |

Specifically, initially, the dextrin was added to hot water at 80°C, followed by dissolution with stirring for 10 minutes. Next, a commercially available 3-fold concentrated udon soup was added to the solution, followed by further stirring for five minutes. The mixture was cooled and preserved at 5°C for three days. Also, for comparison, an udon soup (Comparative Example 63-0) was prepared using 15% of gelatin in place of 15% of the dextrin.

The udon soups thus prepared were both in the form of gel when they were cooled at temperature of 0 to 15°C, and therefore, can be easily transported by chilled transport while they are gel. Also, the udon soups are easily changed to liquid when they are heated by a microwave oven for eating. The udon soups were tasted. As a result, the udon soup of the comparative example had a heavy mouthfeel and a weak aroma. On the other hand, the udon soup (Example 63-1) prepared using the dextrin of Preparation Example 1 did not have a heavy mouthfeel and had a good aroma.

Experimental Example 64 Miso (a kind of Japanese seasoning) soup

A miso soup (Example 64-1) was prepared according to a recipe described below using the dextrin of Preparation Example 1.

<Recipe of miso soup>

| Miso | 11.0 (%) |
|---|---|
| Dextrin (Preparation Example 1) | 15.0 |
| Water | 74.0 |
| Total | 100.0% |

Specifically, initially, the dextrin was added to hot water at 80°C, followed by dissolution with stirring for 10 minutes. Next, miso was added, followed by further stirring for five minutes. The mixture was cooled and preserved at 5°C for three days. Also, for comparison, a miso soup (Comparative Example 64-0) was prepared similarly using 15% of gelatin in place of 15% of the dextrin.

The miso soups thus prepared are both in the form of gel during chilled transport, and are changed to liquid when heated for eating. The miso soup (Example 64-1) prepared using the dextrin of Preparation Example 1 had a better mouthfeel and aroma than those of the miso soup (Comparative Example 64-0) prepared using gelatin.

INDUSTRIAL APPLICABILITY

According to the present invention, it is possible to provide processed foods in which importance is put on the presence of fat, particularly a fatty tissue substitute useful for obtaining processed meat foods. According to the present invention, it is possible to provide emulsion-like foods which do not contain oils and fats and are not subjected to homogenization or the like, but have an appearance (emulsion-specific cloudiness and surface glossiness), a mouthfeel (smoothness or robustness), and a feel in use which are similar to those of emulsion foods which are prepared by emulsifying oils and fats. According to the present invention, it is possible to provide emulsion seasonings (emulsion foods) which have an oils and fats content reduced to 50 wt% or less, but have a viscosity, fattiness and smoothness which are similar to those of ordinary mayonnaises containing 65 to 80 wt% of oils and fats. According to the present invention, it is possible to impart milk fat-specific and oils and fats-specific richness and body and moreover a smooth mouthfeel to desserts, such as puddings (neutral puddings; acidic puddings such as fruit juice-containing puddings, cheese-containing puddings and the like), almond jellies, Bavarian creams, pastry creams, custards, mousses and the like, without the flavor being affected, even when the milk fat content and the oils and fats content are reduced. According to the present invention, it is possible to impart a milk fat-specific smooth mouthfeel and richness to yogurt, which is a kind of emulsion food, without the flavor being affected, even when the milk fat content is reduced or no milk fat is used. According to the present invention, it is possible to impart a milk fat-specific and oils and fats-specific smooth mouthfeel (melting in the mouth) and richness to frozen desserts (emulsion foods) which are made from milk, such as ice creams, ice milks, lacto-ices, ice confectioneries and the like, without the flavor being affected, even when the milk fat content and the oils and fats content are reduced or no milk fat and no oils and fats are used. According to the present invention, it is possible to provide whipped creams in which syneresis can be significantly suppressed, which is conventionally difficult to prevent in conventional whipped creams, and particularly, whipped creams in which syneresis can be significantly suppressed during refrigeration and after freezing and thawing. According to the present invention, it is possible to provide cheese-like foods having a mouthfeel and a flavor which are similar to those of ordinary cheeses even when the milk fat content is reduced. According to the present invention, it is possible to provide sugar confectioneries having a high soluble solid content, such as soft candies, caramels, nougats, gummy candies and the like, which overcome the problem that an increase in the viscosity during production leads to a reduction in the workability, and have appropriate viscoelasticity and a specific fat-like smooth mouthfeel.

Also, according to the present invention, it is possible to provide beverages which do not have stickiness and have natural richness and fattiness, and a smooth mouthfeel. Also, according to the present invention, it is possible to provide beverages which have an enhanced feel of thick puree which is not achieved in the conventional art, but do not have stickiness and have a sharp mouthfeel, and beverages having good flavor release.

BRIEF DESCRIPTION OF THE DRAWINGS

[FIG. 1] FIG. 1 shows appearances of non-emulsion mayonnaise-like seasonings prepared in Experimental Example 10. In the figure, mayonnaise-like seasonings which were prepared using dextrins of (1) Preparation Example 1, (3) an existing product 1, (4) an existing product 2, (5) an existing product 3, (6) an existing product 4, and (7) an existing product 5, and a mayonnaise-like seasoning which was prepared using (2) no dextrin, are shown.

[FIG. 2] FIG. 2 shows the result of a test on a cheese-like food (Example 22-2) prepared in Experimental Example 22 and a commercially available sliced cheese which can melt smoothly, in terms of how much they can be stretched after being heated.

[FIG. 3] FIG. 3 shows the result of a test on a commercially available sliced cheese which can melt smoothly, in terms of how much it can be stretched after being heated (Experimental Example 22).

[FIG. 4] FIG. 4 shows an image (left) of a whipped cream of Example 45-1 immediately after being extruded (after freezing and thawing) into a flower shape by squeezing a pastry bag, and an image (right) of the whipped cream after being allowed to stand at room temperature for one hour.

[FIG. 5] FIG. 5 shows an image (left) of a whipped cream of Comparative Example 45-3 immediately after being extruded (after freezing and thawing) into a flower shape by squeezing a pastry bag, and an image (right) of the whipped cream after being allowed to stand at room temperature for one hour.

[FIG. 6] FIG. 6 shows an image (left) of a whipped cream of Comparative Example 45-5 immediately after being extruded (after freezing and thawing) into a flower shape by squeezing a pastry bag, and an image (right) of the whipped cream after being allowed to stand at room temperature for one hour.

[FIG. 7] FIG. 7 shows an image (left) of a whipped cream of Comparative Example 45-6 immediately after being extruded (after freezing and thawing) into a flower shape by squeezing a pastry bag, and an image (right) of the whipped cream after being allowed to stand at room temperature for one hour.

[FIG. 8] FIG. 8 shows an image (left) of a whipped cream of Comparative Example 45-7 immediately after being extruded (after freezing and thawing) into a flower shape by squeezing a pastry bag, and an image (right) of the whipped cream after being allowed to stand at room temperature for one hour.

[FIG. 9] FIG. 9 shows an image (left) of a whipped cream of Comparative Example 45-8 immediately after being extruded (after freezing and thawing) into a flower shape by squeezing a pastry bag, and an image (right) of the whipped cream after being allowed to stand at room temperature for one hour.

[FIG. 10] FIG. 10 shows an image (left) of a whipped cream of Comparative Example 45-0 immediately after being extruded (after freezing and thawing) into a flower shape by squeezing a pastry bag, and an image (right) of the whipped cream after being allowed to stand at room temperature for one hour.

**Claims**

1. A processed food or beverage composition containing a dextrin having the following characteristic (a):

   (a) having a blue value within the range of 0.4 to 1.2 as measured under the following conditions;

   (a-1) a 1 w/v% aqueous solution of the dextrin is prepared using distilled water at 80°C, and is then cooled to 25°C;
   (a-2) 10 ml of the 1 w/v% aqueous solution of the dextrin (25°C) is mixed with 10 ml of an aqueous solution containing 20 mg of iodine and 200 mg of potassium iodide, and is then adjusted with distilled water to an amount of 100 ml of prepared solution; and
   (a-3) after the prepared solution is shaken at 25°C for 30 minutes while being shielded from light, an absorbance at 680 nm of the reaction solution is measured using a spectrophotometer at 25°C, and the measured absorbance is considered as the blue value.

2. The processed food or beverage composition according to claim 1, wherein the dextrin further has the following characteristics (b) and (c):

   (b) having a gel strength of 4 N/cm$^2$ or more as measured after being dissolved in distilled water at 80°C to prepare a 30 wt% aqueous solution of the dextrin, and then being allowed to stand at 5°C for 24 hours; and
   (c) having a viscosity of 100 mPa.s or less as measured after being dissolved in distilled water at 25°C to prepare a 30 wt% aqueous solution of the dextrin, and then being allowed to stand at 25°C for five minutes.

3. The processed food or beverage composition according to claim 2, wherein the dextrin further has the following characteristic (d),

   (d) the ratio (A/B) of the following gel strengths A and B being 2 or less:

   A: a gel strength (N/cm$^2$) as measured after being dissolved in distilled water at 80°C to prepare a 30 wt% aqueous solution of the dextrin, and then being allowed to stand at 5°C for 24 hours; and
   B: a gel strength (N/cm$^2$) as measured after being dissolved in distilled water at 25°C to prepare a 30 wt% aqueous solution of the dextrin, and then being allowed to stand at 5°C for 24 hours.

4. The processed food or beverage composition according to claim 1, which is a fatty tissue substitute.

5. The processed food or beverage composition according to claim 4, wherein the fatty tissue substitute contains 20 to 40 wt% of the dextrin.

6. The processed food or beverage composition according to claim 4, wherein the fatty tissue substitute contains a carrageenan in addition to the dextrin.

7. The processed food or beverage composition according to claim 6, wherein the carrageenan has at least one of the following characteristics (1) to (3):

   (1) being soluble in water at 50°C or less;
   (2) a 1.5 wt% aqueous solution of the carrageenan being not gelable at 25°C; and
   (3) containing more than 0 and not more than 0.1 wt% of calcium ions.

8. The processed food or beverage composition according to claim 6, wherein the processed food or beverage composition contains 1 to 10 parts by weight of the carrageenan per 100 parts by weight of the dextrin.

9. A method for preparing the fatty tissue substitute of claim 4, comprising the step of solidifying, by cooling, an aqueous solution containing any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80˚C, and is then cooled to 25˚C;

(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution; and

(a-3) after the prepared solution is shaken at 25˚C for 30 minutes while being shielded from light, an absorbance at 680 nm of the reaction solution is measured using a spectrophotometer at 25˚C, and the measured absorbance is considered as the blue value;

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours;

(c) having a viscosity of 100 mPa·s or less as measured after being dissolved in distilled water at 25˚C to prepare a 30 wt% aqueous solution of the dextrin, and then being allowed to stand at 25˚C for five minutes; and

(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours; and

B: a gel strength (N/cm$^2$) as measured after being dissolved in distilled water at 25˚C to prepare a 30 wt% aqueous solution of the dextrin, and then being allowed to stand at 5˚C for 24 hours.

10. A processed food or beverage containing the fatty tissue substitute of any one of claims 4 to 8 in place of the whole or a part of edible meat fatty tissue.

11. The processed food or beverage according to claim 10, which is any processed meat food selected from the group consisting of sausage, ham, bacon, salami, meatloaf, hamburg steak, patty, menchi katsu, croquette, meatball, tsukune, dumpling, shaomai and steamed meat bun.

12. The processed food or beverage composition according to claim 1, which is an emulsion-like food or beverage.

13. The processed food or beverage composition according to claim 12, wherein the emulsion-like food or beverage is a non-emulsion food or beverage containing, in addition to the dextrin, at least one polysaccharide selected from the group consisting of xanthan gum, guar gum, locust bean gum, tara gum, tamarind seed gum, bacterial cellulose and native gellan gum, and water.

14. The processed food or beverage composition according to claim 13, wherein the emulsion-like food or beverage is a non-emulsion food or beverage containing 5 to 30 wt% of the dextrin, 0.01 to 0.5 wt% of the total amount of at least one polysaccharide selected from the group consisting of xanthan gum, guar gum, locust bean gum, tara gum, tamarind seed gum, bacterial cellulose and native gellan gum, and 40 to 90 wt% of water.

15. The processed food or beverage composition according to claim 13, wherein the emulsion-like food or beverage is a non-emulsion food or beverage further containing at least one polysaccharide selected from the group consisting of gum ghatti and gum arabic.

16. The processed food or beverage composition according to claim 15, wherein the emulsion-like food or beverage is a non-emulsion food or beverage containing 0.05 to 5 wt% of the total amount of at least one polysaccharide selected from the group consisting of gum ghatti and gum arabic.

17. The processed food or beverage composition according to claim 12, wherein the emulsion-like food or beverage is a non-emulsion food or beverage which does not contain oils and fats, and has an appearance and a mouthfeel similar to those of any of mayonnaise, dressing, sauce, pastry cream, butter, margarine, fat spread, butter cream and cheese, which are prepared by emulsifying oils and fats.

18. A method for preparing the emulsion-like food or beverage according to claim 12, comprising the step of cooling a non-emulsion aqueous solution containing any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80˚C, and is then cooled to 25˚C;

(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution; and

(a-3) after the prepared solution is shaken at 25˚C for 30 minutes while being shielded from light, an absorbance at 680 nm of a reaction solution is measured using a spectrophotometer at 25˚C, and the measured absorbance is considered as the blue value;

(b) having a gel strength of 4 $N/cm^2$ or more as measured after being dissolved in distilled water at 80˚C to prepare a 30 wt% aqueous solution of the dextrin, and then being allowed to stand at 5˚C for 24 hours;

(c) having a viscosity of 100 mPa·s or less as measured after being dissolved in distilled water at 25˚C to prepare a 30 wt% aqueous solution of the dextrin, and then being allowed to stand at 25˚C for five minutes; and

(d) the ratio (A/B) of the following gel strengths A and B being 2 or less:

A: a gel strength ($N/cm^2$) as measured after being dissolved in distilled water at 80˚C to prepare a 30 wt% aqueous solution of the dextrin, and then being allowed to stand at 5˚C for 24 hours; and

B: a gel strength ($N/cm^2$) as measured after being dissolved in distilled water at 25˚C to prepare a 30 wt% aqueous solution of the dextrin, and then being allowed to stand at 5˚C for 24 hours.

19. The processed food or beverage composition according to claim 1, which is an emulsion food or beverage.

20. The processed food or beverage composition according to claim 19, wherein the emulsion food or beverage is at least one member selected from the group consisting of emulsion seasonings, spreads, desserts, yogurts, frozen desserts and whipped creams.

21. The processed food or beverage composition according to claim 20, which is an emulsion seasoning containing 0.1 to 20 wt% of the dextrin.

22. The processed food or beverage composition according to claim 19, wherein the emulsion food or beverage is an emulsion seasoning containing, in addition to the dextrin, at least one member selected from the group consisting of xanthan gum, guar gum, locust bean gum, tara gum, tamarind seed gum, bacterial cellulose and native gellan gum.

23. The processed food or beverage composition according to claim 19, wherein the emulsion food or beverage is a mayonnaise-like emulsion seasoning which contains 0.01 to 50 wt% of oils and fats and has an appearance and a mouthfeel similar to those of mayonnaise.

24. The processed food or beverage composition according to claim 19, wherein the emulsion food or beverage is a dressing-like emulsion seasoning containing 0.01 to 25 wt% of oils and fats.

25. The processed food or beverage composition according to 19, wherein the emulsion food or beverage is a spread containing 10 to 60 wt% of the total amount of oils and fats or milk fat.

26. The processed food or beverage composition according to 19, wherein the emulsion food or beverage is a spread containing, in addition to the dextrin, at least one polysaccharide selected from the group consisting of xanthan gum, guar gum, locust bean gum, tara gum, tamarind seed gum, bacterial cellulose, gum ghatti and native gellan gum.

27. The processed food or beverage composition according to 19, wherein the emulsion food or beverage is any dessert selected from the group consisting of puddings, almond jellies, bavarian creams, pastry creams, custards and mousses.

28. The processed food or beverage composition according to 19, wherein the emulsion food or beverage is a yogurt containing 0.05 to 10 wt% of the dextrin.

29. The processed food or beverage composition according to 19, wherein the emulsion food or beverage is a yogurt containing, in addition to the dextrin, at least one member selected from the group consisting of gum ghatti, gum arabic, tara gum, tamarind seed gum and guar gum.

30. The processed food or beverage composition according to 19, wherein the emulsion food or beverage is a frozen dessert containing, in addition to the dextrin, at least one member selected from the group consisting of guar gum, tara gum, tamarind seed gum, carrageenans, xanthan gum, native gellan gum and locust bean gum.

31. The processed food or beverage composition according to 19, wherein the emulsion food or beverage is a whipped cream containing 0.5 to 10 wt% of the dextrin.

32. The processed food or beverage composition according to 19, wherein the emulsion food or beverage is a whipped cream containing, in addition to the dextrin, at least one member selected from the group consisting of polyglycerol esters of fatty acids having an iodine value of 10 to 45, monoglycerol esters of fatty acids having an iodine value of 44 to 120, and hydroxypropyl cellulose.

33. A method for preparing the emulsion food or beverage according to 19, comprising the step of solidifying, by cooling, an aqueous solution containing any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80°C, and is then cooled to 25°C;
(a-2) 10 ml of the 1 w/v% aqueous solution of the dextrin (25°C) is mixed with 10 ml of an aqueous solution containing 20 mg of iodine and 200 mg of potassium iodide, and is then adjusted with distilled water to an amount of 100 ml of prepared solution; and
(a-3) after the prepared solution is shaken at 25°C for 30 minutes while being shielded from light, an absorbance at 680 nm of a reaction solution is measured using a spectrophotometer at 25°C, and the measured absorbance is considered as the blue value;

(b) having a gel strength of 4 N/cm$^2$ or more as measured after being dissolved in distilled water at 80°C to prepare a 30 wt% aqueous solution of the dextrin, and then being allowed to stand at 5°C for 24 hours;
(c) having a viscosity of 100 mPa·s or less as measured after being dissolved in distilled water at 25°C to prepare a 30 wt% aqueous solution of the dextrin, and then being allowed to stand at 25°C for five minutes; and
(d) the ratio (A/B) of the following gel strengths A and B being 2 or less:

A: a gel strength (N/cm$^2$) as measured after being dissolved in distilled water at 80°C to prepare a 30 wt% aqueous solution of the dextrin, and then being allowed to stand at 5°C for 24 hours; and
B: a gel strength (N/cm$^2$) as measured after being dissolved in distilled water at 25°C to prepare a 30 wt% aqueous solution of the dextrin, and then being allowed to stand at 5°C for 24 hours.

34. The processed food or beverage composition according to claim 1, which is a cheese-like food.

35. The processed food or beverage composition according to claim 34, wherein the cheese-like food contains 10 to 50 wt% of the dextrin.

36. The processed food or beverage composition according to claim 34, wherein the cheese-like food contains, in addition to the dextrin, at least one member selected from the group consisting of whey protein, methyl cellulose, curdlan and deacylated gellan gum.

37. The processed food or beverage composition according to claim 36, wherein the cheese-like food contains 0.01 to 10 wt% of the total amount of at least one member selected from the group consisting of whey protein, methyl cellulose, curdlan and deacylated gellan gum.

38. The processed food or beverage composition according to claim 34, wherein the cheese-like food further contains, in addition to the dextrin, at least one polysaccharide selected from the group consisting of carrageenans, xanthan gum, gum ghatti and native gellan gum.

39. The processed food or beverage composition according to claim 38, wherein the carrageenan has at least one of the following characteristics (1) to (3):

(1) being soluble in water at 50˚C or less;
(2) a 1.5 wt% aqueous solution of the carrageenan being not gelable at 25˚C; and
(3) containing more than 0 and not more than 0.1 wt% of calcium ions.

**40.** The processed food or beverage composition according to claim 38, wherein the content of the at least one polysaccharide selected from the group consisting of carrageenans, xanthan gum, gum ghatti and native gellan gum is 0.01 to 5 wt%.

**41.** The processed food or beverage composition according to claim 34, wherein the cheese-like food is a processed food containing no milk fat or 20 wt% or less of milk fat, and has an appearance, a flavor and a mouthfeel similar to those of cheese containing more than 20 wt% of milk fat.

**42.** A method for preparing the cheese-like food or beverage according to claim 34, comprising the step of solidifying, by cooling, an aqueous solution containing any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80˚C, and is then cooled to 25˚C;
(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution; and
(a-3) after the prepared solution is shaken at 25˚C for 30 minutes while being shielded from light, an absorbance at 680 nm of a reaction solution is measured using a spectrophotometer at 25˚C, and the measured absorbance is considered as the blue value;

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours;
(c) having a viscosity of 100 mPa·s or less as measured after being dissolved in distilled water at 25˚C to prepare a 30 wt% aqueous solution of the dextrin, and then being allowed to stand at 25˚C for five minutes; and
(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours; and
B: a gel strength (N/cm$^2$) as measured after being dissolved in distilled water at 25˚C to prepare a 30 wt% aqueous solution of the dextrin, and then being allowed to stand at 5˚C for 24 hours.

**43.** A processed food or beverage containing the cheese-like food of any one of claims 34 to 41 in place of the whole or a part of cheese.

**44.** The processed food or beverage according to claim 43, which is any food selected from the group consisting of breads, cakes, mousses, pizzas, pies, gratins, lasagnas, dorias, risottos, sauces, soups, cheese fondues, hamburgs, hamburgers, salads, pork cutlets and spreads.

**45.** The processed food or beverage composition according to claim 1, which is a sugar confectionery.

**46.** The processed food or beverage composition according to claim 45, wherein the sugar confectionery contains, in addition to the dextrin, at least one member selected from the group consisting of psyllium seed gum, carrageenans, gum ghatti and tamarind seed gum.

**47.** The processed food or beverage composition according to claim 1, which is a beverage.

**48.** The processed food or beverage composition according to 47, wherein the beverage contains bacterial cellulose in addition to the dextrin.

**49.** A method for enhancing richness of an emulsion food or beverage, comprising the step of adding, to the emulsion food or beverage, any of a dextrin having the following characteristic (a), a dextrin having the following characteristics (a) to (c), or a dextrin having the following characteristics (a) to (d):

> (a) having a blue value within the range of 0.4 to 1.2 as measured under the following conditions:
>
> > (a-1) a 1 w/v% aqueous solution of the dextrin is prepared using distilled water at 80°C, and is then cooled to 25°C;
> > (a-2) 10 ml of the 1 w/v% aqueous solution of the dextrin (25°C) is mixed with 10 ml of an aqueous solution containing 20 mg of iodine and 200 mg of potassium iodide, and is then adjusted with distilled water to an amount of 100 ml of prepared solution; and
> > (a-3) after the prepared solution is shaken at 25°C for 30 minutes while being shielded from light, an absorbance at 680 nm of a reaction solution is measured using a spectrophotometer at 25°C, and the measured absorbance is considered as the blue value;
>
> (b) having a gel strength of 4 N/cm$^2$ or more as measured after being dissolved in distilled water at 80°C to prepare a 30 wt% aqueous solution of the dextrin, and then being allowed to stand at 5°C for 24 hours;
> (c) having a viscosity of 100 mPa·s or less as measured after being dissolved in distilled water at 25°C to prepare a 30 wt% aqueous solution of the dextrin, and then being allowed to stand at 25°C for five minutes; and
> (d) the ratio (A/B) of the following gel strengths A and B being 2 or less:
>
> > A: a gel strength (N/cm$^2$) as measured after being dissolved in distilled water at 80°C to prepare a 30 wt% aqueous solution of the dextrin, and then being allowed to stand at 5°C for 24 hours; and
> > B: a gel strength (N/cm$^2$) as measured after being dissolved in distilled water at 25°C to prepare a 30 wt% aqueous solution of the dextrin, and then being allowed to stand at 5°C for 24 hours.

**50.** A method for preventing syneresis of at least one emulsion food or beverage selected from the group consisting of whipped creams, yogurts and desserts, comprising the step of adding, to the emulsion food or beverage, any of a dextrin having the following characteristic (a), a dextrin having the following characteristics (a) to (c), or a dextrin having the following characteristics (a) to (d):

> (a) having a blue value within the range of 0.4 to 1.2 as measured under the following conditions:
>
> > (a-1) a 1 w/v% aqueous solution of the dextrin is prepared using distilled water at 80°C, and is then cooled to 25°C;
> > (a-2) 10 ml of the 1 w/v% aqueous solution of the dextrin (25°C) is mixed with 10 ml of an aqueous solution containing 20 mg of iodine and 200 mg of potassium iodide, and is then adjusted with distilled water to an amount of 100 ml of prepared solution; and
> > (a-3) after the prepared solution is shaken at 25°C for 30 minutes while being shielded from light, an absorbance at 680 nm of a reaction solution is measured using a spectrophotometer at 25°C, and the measured absorbance is considered as the blue value;
>
> (b) having a gel strength of 4 N/cm$^2$ or more as measured after being dissolved in distilled water at 80°C to prepare a 30 wt% aqueous solution of the dextrin, and then being allowed to stand at 5°C for 24 hours;
> (c) having a viscosity of 100 mPa·s or less as measured after being dissolved in distilled water at 25°C to prepare a 30 wt% aqueous solution of the dextrin, and then being allowed to stand at 25°C for five minutes; and
> (d) the ratio (A/B) of the following gel strengths A and B being 2 or less:
>
> > A: a gel strength (N/cm$^2$) as measured after being dissolved in distilled water at 80°C to prepare a 30 wt% aqueous solution of the dextrin, and then being allowed to stand at 5°C for 24 hours; and
> > B: a gel strength (N/cm$^2$) as measured after being dissolved in distilled water at 25°C to prepare a 30 wt% aqueous solution of the dextrin, and then being allowed to stand at 5°C for 24 hours.

**51.** A method for enhancing robustness of fruit juice or vegetable juice of a beverage containing the fruit or vegetable juice, comprising the step of adding, to the beverage, any of a dextrin having the following characteristic (a), a dextrin having the following characteristics (a) to (c), or a dextrin having the following characteristics (a) to (d):

> (a) having a blue value within the range of 0.4 to 1.2 as measured under the following conditions:

(a-1) a 1 w/v% aqueous solution of the dextrin is prepared using distilled water at 80˚C, and is then cooled to 25˚C;

(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution; and

(a-3) after the prepared solution is shaken at 25˚C for 30 minutes while being shielded from light, an absorbance at 680 nm of a reaction solution is measured using a spectrophotometer at 25˚C, and the measured absorbance is considered as the blue value;

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours;

(c) having a viscosity of 100 mPa·s or less as measured after being dissolved in distilled water at 25˚C to prepare a 30 wt% aqueous solution of the dextrin, and then being allowed to stand at 25˚C for five minutes; and

(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours; and

B: a gel strength (N/cm$^2$) as measured after being dissolved in distilled water at 25˚C to prepare a 30 wt% aqueous solution of the dextrin, and then being allowed to stand at 5˚C for 24 hours.

52. A method for improving shape retentivity of a sugar confectionery, comprising the step of adding, to the sugar confectionery, any of a dextrin having the following characteristic (a), a dextrin having the following characteristics (a) to (c), or a dextrin having the following characteristics (a) to (d):

(a) having a blue value within the range of 0.4 to 1.2 as measured under the following conditions:

(a-1) a 1 w/v% aqueous solution of the dextrin is prepared using distilled water at 80˚C, and is then cooled to 25˚C;

(a-2) 10 ml of the 1 w/v% aqueous solution of the dextrin (25˚C) is mixed with 10 ml of an aqueous solution containing 20 mg of iodine and 200 mg of potassium iodide, and is then adjusted with distilled water to an amount of 100 ml of prepared solution; and

(a-3) after the prepared solution is shaken at 25˚C for 30 minutes while being shielded from light, an absorbance at 680 nm of a reaction solution is measured using a spectrophotometer at 25˚C, and the measured absorbance is considered as the blue value;

(b) having a gel strength of 4 N/cm$^2$ or more as measured after being dissolved in distilled water at 80˚C to prepare a 30 wt% aqueous solution of the dextrin, and then being allowed to stand at 5˚C for 24 hours;

(c) having a viscosity of 100 mPa·s or less as measured after being dissolved in distilled water at 25˚C to prepare a 30 wt% aqueous solution of the dextrin, and then being allowed to stand at 25˚C for five minutes; and

(d) the ratio (A/B) of the following gel strengths A and B being 2 or less:

A: a gel strength (N/cm$^2$) as measured after being dissolved in distilled water at 80˚C to prepare a 30 wt% aqueous solution of the dextrin, and then being allowed to stand at 5˚C for 24 hours; and

B: a gel strength (N/cm$^2$) as measured after being dissolved in distilled water at 25˚C to prepare a 30 wt% aqueous solution of the dextrin, and then being allowed to stand at 5˚C for 24 hours.

【Fig. 1】

(1) (2) (3) (4) (5) (6) (7)

【Fig. 2】

| Cheese-like food of Example 22-2 |
| --- |
| |
| Extension   20.6 cm (distance between up-dawn arrows) |

【Fig. 3】

| Commercially available sliced cheese |
| --- |
| |
| Extension   23.4 cm (distance between up-dawn arrows) |

【Fig. 4】

| | Immediate aftermath being extruded after freezing and thawing | After being extruded after freezing and thawing and allowed to stand at room temperature for one hour extruded after freezing and thawing |
|---|---|---|
| Example 45-1 | | |

【Fig. 5】

| | Immediate aftermath being extruded after freezing and thawing | After being extruded after freezing and thawing and allowed to stand at room temperature for one hour extruded after freezing and thawing |
|---|---|---|
| Comparative Example 45-3 | | |

【Fig. 6】

| | Immediate aftermath being extruded after freezing and thawing | After being extruded after freezing and thawing and allowed to stand at room temperature for one hour extruded after freezing and thawing |
|---|---|---|
| Comparative Example 45-5 | | |

【Fig. 7】

|  | Immediate aftermath being extruded after freezing and thawing | After being extruded after freezing and thawing and allowed to stand at room temperature for one hour extruded after freezing and thawing |
|---|---|---|
| Comparative Example 45-6 | | |

【Fig. 8】

|  | Immediate aftermath being extruded after freezing and thawing | After being extruded after freezing and thawing and allowed to stand at room temperature for one hour extruded after freezing and thawing |
|---|---|---|
| Comparative Example 45-7 | | |

【Fig. 9】

|  | Immediate aftermath being extruded after freezing and thawing | After being extruded after freezing and thawing and allowed to stand at room temperature for one hour extruded after freezing and thawing |
|---|---|---|
| Comparative Example 45-8 | | |

【Fig. 10】

| | Immediate aftermath being extruded after freezing and thawing | After being extruded after freezing and thawing and allowed to stand at room temperature for one hour extruded after freezing and thawing |
|---|---|---|
| Compar ative Example 45-0 | | |

**INTERNATIONAL SEARCH REPORT**

| International application No. |
| --- |
| PCT/JP2008/062023 |

A. CLASSIFICATION OF SUBJECT MATTER
*A23L1/03*(2006.01)i, *A23C20/00*(2006.01)i, *A23D7/00*(2006.01)i, *A23L1/19*
(2006.01)i, *A23L1/24*(2006.01)i, *A23L1/307*(2006.01)i, *A23L1/31*(2006.01)i

According to International Patent Classification (IPC) or to both national classification and IPC

B. FIELDS SEARCHED

Minimum documentation searched (classification system followed by classification symbols)
A23L1/03, A23C20/00, A23D7/00, A23L1/19, A23L1/24, A23L1/307, A23L1/31

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)
BIOSIS/WPI(DIALOG), JSTPlus(JDreamII), Science Direct

C. DOCUMENTS CONSIDERED TO BE RELEVANT

| Category* | Citation of document, with indication, where appropriate, of the relevant passages | Relevant to claim No. |
| --- | --- | --- |
| P,A | Kazuhiro HOSOMI et al., "Shinki Dextrin Seizai no Kaihatsu to Shokuhin eno Oyo", Foods & Food Ingredients Journal of Japan, Dec.2007, Vol.212, No.12, pages 1075 to 1079 | 1-52 |
| P,A | Kohei NAKAJIMA et al., "Inryo·Dessert no Atarashii Ugoki Inryo·Dessert Muke Shinki Hydrocolloid Sozai", Food Science, Jan.2008, Vol.50, No.2, pages 77 to 82 | 1-52 |
| A | Masanobu YOSHIYA, "Shibo Daitaihin no Tokusei to Oyo", Foods Food Ingred. J., 1992, No.154, pages 26 to 31 | 1-52 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 August, 2008 (06.08.08) | 19 August, 2008 (19.08.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/062023

C (Continuation). DOCUMENTS CONSIDERED TO BE RELEVANT

| Category* | Citation of document, with indication, where appropriate, of the relevant passages | Relevant to claim No. |
|---|---|---|
| A | US 5225219 A (United States Dept. of Agriculture, USA), 06 July, 1993 (06.07.93), (Family: none) | 1-52 |
| A | JP 05-276898 A (Dainippon Pharmaceutical Co., Ltd.), 26 October, 1993 (26.10.93), (Family: none) | 1-52 |
| A | GUZMAN-MALDONADO Horacio et al., Amylolytic Enzymes and Products Derived from Starch: A Reviews, Critical Reviews in Food Science and Nutrition, 1995, Vol.35, No.5, pp.373-403 | 1-52 |
| A | TRUDELL M.S. et al., Carbohydrate-Based Fat Substitute is an Acceptable Replacement for Margarine in Pumpkin Bar Recipe, Journal of the American Dietetic Association, 1996, Vol.96, Issue 9, Supplement 1, p.A-43 | 1-52 |
| A | WO 1997/25875 A1 (Societe des Produits Nestle S.A.), 24 July, 1997 (24.07.97), & AU 1997/11687 A        & EP 874554 A1 & NZ 324425 A        & US 6013301 A & AU 715480 B        & EP 874554 B1 & JP 2000-503208 A        & DE 69701509 A1 & ES 2144839 A | 1-52 |
| A | JP 2001-275585 A (Sanwa Kosan Kabushiki Kaisha), 09 October, 2001 (09.10.01), (Family: none) | 1-52 |
| A | EP 670368 A2 (Hayashibara Biochemical Labs., Inc.), 06 September, 1995 (06.09.95), & JP 07-236478 A        & US 5527699 A & EP 670368 A3        & US 5739024 A & US 5846808 A        & US 6107348 A & US 6242224 B1        & KR 371670 B & JP 3533239 B2        & EP 670368 B1 & DE 69533118 A1        & JP 2004-211097 A & DE 69533118 B2 | 1-52 |
| A | NAJAFI Fathi Mohsen et al., Purification and characterization of an extracellular α-amylase from Bacillus subtilis AX20, Protein Expression and Purification, 2005, Vol.41, No.2, pp.349-354, Fig.2 (A) | 1-52 |

Form PCT/ISA/210 (continuation of second sheet) (April 2007)

**INTERNATIONAL SEARCH REPORT**

International application No.

PCT/JP2008/062023

C (Continuation).   DOCUMENTS CONSIDERED TO BE RELEVANT

| Category* | Citation of document, with indication, where appropriate, of the relevant passages | Relevant to claim No. |
|---|---|---|
| A | US 5445678 A  (WHISTLER L. Roy),<br>29 August, 1995 (29.08.95),<br>& US 5580390 A1          & WO 1992/021703 A1<br>& CA 2102915 A | 1-52 |
| A | US 5651828 A  (Lafayette Applied Chemistry, Inc.),<br>29 July, 1997 (29.07.97),<br>& WO 1996/01586 A1      & AU 3760095 A | 1-52 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H08502894 PCT
- JP 2000503208 PCT
- JP H0537007 B
- JP H06105652 B
- JP H05276898 B
- JP 2001252042 A
- WO 2004045311 A
- JP H10507356 PCT
- JP S6157 A
- JP H06217691 B
- JP S6214742 B
- JP S5675060 B
- JP 2003530127 PCT
- JP H10290677 B
- JP 2007104995 A
- JP 2003250482 A
- JP 2005527214 PCT
- JP H06506825 PCT
- JP H0750994 B
- JP H08502888 PCT
- JP 2001245620 A
- JP H06225720 B
- JP 2003093006 A
- JP 2004337166 A
- JP 2004154092 A
- JP H04112747 B
- JP H02154641 B
- JP 2000116343 A
- JP 2003529381 PCT
- JP 2002330735 A
- JP 2004524849 PCT
- JP S5579397 B
- JP S61212295 B
- JP H03157402 B
- JP H09121787 B
- JP S4014174 B
- JP S6243661 B
- JP H06335365 B

### Non-patent literature cited in the description

- **Sanderson, G. R.** FOOD GELS. Elsevier Science Publishiers LTD, 1990, 204